(19) Europäisches Patentamt
European Patent Office
Office européen des brevets

(11) **EP 4 596 562 A1**

(12) **EUROPEAN PATENT APPLICATION**
published in accordance with Art. 153(4) EPC

(43) Date of publication:
**06.08.2025 Bulletin 2025/32**

(21) Application number: **23872634.3**

(22) Date of filing: **29.09.2023**

(51) International Patent Classification (IPC):
***C07F 9/6561*** *(2006.01)* ***C07F 15/04*** *(2006.01)*
***C07F 19/00*** *(2006.01)* ***C08F 4/70*** *(2006.01)*
***C08F 4/80*** *(2006.01)* ***C08F 10/00*** *(2006.01)*
***C08F 210/00*** *(2006.01)*

(52) Cooperative Patent Classification (CPC):
**C07F 9/6561; C07F 15/04; C07F 19/00; C08F 4/70; C08F 4/80; C08F 10/00; C08F 210/00**

(86) International application number:
**PCT/JP2023/035766**

(87) International publication number:
**WO 2024/071415 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.09.2022 JP 2022158695**
**30.09.2022 JP 2022158698**

(71) Applicant: **Mitsubishi Chemical Corporation**
**Tokyo 100-8251 (JP)**

(72) Inventor: **MITSUSHIGE, Yusuke**
**Yokkaichi-shi, Mie 510-0848 (JP)**

(74) Representative: **Hoffmann Eitle**
**Patent- und Rechtsanwälte PartmbB**
**Arabellastraße 30**
**81925 München (DE)**

(54) **COMPOUND, METAL COMPLEX, CATALYST COMPOSITION FOR OLEFIN POLYMERIZATION, CATALYST FOR OLEFIN POLYMERIZATION AND METHOD FOR PRODUCING OLEFIN POLYMER**

(57) An olefin polymerization catalyst composition comprising a compound represented by the following general formula (A) and a transition metal compound represented by the following general formula (E) or (F):

[Chem. 1]

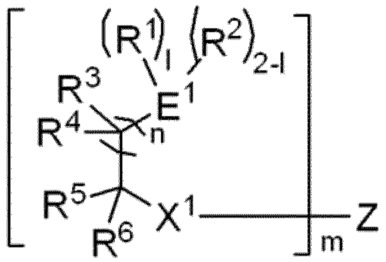

Formula (A)

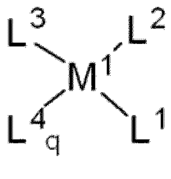

Formula (E)

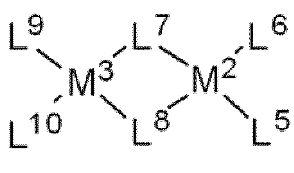

Formula (F)

EP 4 596 562 A1

(the definitions of the general formulae are as described in the DESCRIPTION.)

## Description

### Technical Field

The present invention relates to a polymerization catalyst for olefin-based polymer production. In particular, the present invention relates to a novel compound configured to be used as a ligand, a metal complex, olefin polymerization catalyst composition and olefin polymerization catalyst using the novel compound. The present invention also relates to an olefin-based polymer production method using the catalyst.

### Background Art

A copolymer of an olefin which is a non-polar monomer, such as ethylene and propylene, and a polar group-containing monomer has functions and properties that are not shared by polyethylenes and polypropylenes which are non-polar polymers. From this viewpoint, active research has been made to impart functions to polyethylenes and polypropylenes by copolymerization of ethylene or propylene and a polar group-containing monomer.

As a transition metal catalyst that can copolymerize ethylene or propylene with a polar group-containing monomer, a catalyst containing a palladium complex having an α-diimine ligand has been reported (Non-Patent Document 1). As a transition metal catalyst that can copolymerize ethylene and an acrylic acid ester, a so-called SHOP catalyst containing a nickel complex with a ligand that contains a phosphorus atom and an oxygen atom as coordinating atoms (Patent Document 1, Patent Document 2, Non-Patent Document 2, Non-Patent Document 3) and a catalyst containing a palladium complex having a phosphinosulfonic acid ligand (Patent Document 3, Non-Patent Document 4, Non-Patent Document 5) have been reported.

Patent Document 4 and Non-Patent Document 6 report that a linear, less-branched ethylene-(meth)acrylic acid ester copolymer can be obtained by use of a nickel catalyst which is obtained by reacting a ligand containing a phosphorus atom and an oxygen atom as coordinating atoms with bis-1,5-cyclooctadienenickel ($Ni(cod)_2$) as a transition metal compound. Patent Document 5 reports the copolymerization of ethylene and a polar group-containing monomer by use of a catalyst containing a nickel complex which is obtained by reacting a nickel allyl chloride dimer with a monoanionic bidentate ligand having an alkylene as a non-aromatic ligand framework and containing a phosphorus atom and an oxygen atom as coordinating atoms.

Non-Patent Document 7 reports ethylene oligomerization by use of a nickel catalyst which is obtained by reacting bis-1,5-cyclooctadienenickel with a monoanionic bidentate ligand having an alkylene as a non-aromatic ligand framework and containing a phosphorus atom and an oxygen atom as coordinating atoms.

Non-Patent Document 8 reports ethylene oligomerization by use of a nickel catalyst which is obtained by reacting a nickel complex with a monoanionic bidentate ligand having a non-aromatic framework and containing a phosphorus atom and a sulfur atom as coordinating atoms.

### Citation List

#### Patent Documents

Patent Document 1: U.S. Patent No. 4,698,403
Patent Document 2: Japanese Patent Application Laid-Open (JP-A) No. S64-14217
Patent Document 3: U.S. Unexamined Patent Application Publication No. 2007/0049712
Patent Document 4: International Publication No. WO2010/050256
Patent Document 5: International Publication No. WO2001/092342

#### Non-Patent Documents

Non-Patent Document 1: Mecking, S.; Johnson, L. K.; Wang, L.; Brookhart, M. J. Am. Chem. Soc. 1998, 120, 888-899.
Non-Patent Document 2: Ittel, S. D.; Johnson, L. K.; Brookhart, M., Chem. Rev. 2000, 100, 1169-1203.
Non-Patent Document 3: Gibson, V. C.; Tomov, A.; White, A. J. P.; Williams, D. J., Chem. Commun. 2001, 719-720.
Non-Patent Document 4: Drent, E.; van Dijk, R.; van Ginkel, R.; van Oort, B.; Pugh, R. I., Chem. Commun. 2002, 744-745.
Non-Patent Document 5: Kochi, T.; Yoshimura, K.; Nozaki, K., Dalton Trans. 2006, 25-27.

Non-Patent Document 6: Xin. B. S.; Sato, N.; Tanna, A.; Oishi, Y.; Konishi, Y.; Shimizu, F., J. Am. Chem. Soc. 2017, 139, 3611-3614.
Non-Patent Document 7: Mueller, U.; Keim, W.; Krueger, C.; Betz, P. Angew. Chem. Int. Ed. Engl. 1989, 28, 1011-1013.
Non-Patent Document 8: H. -F. Klein et al., Inorganica Chimica Acta 358 (2005) 4394-4402.

## Summary of Invention

### Technical Problem

As described above, numerous olefin polymerization catalysts are known. However, the frameworks of the ligands used in Patent Document 4 and Non-Patent Document 6 are aromatic, and there is a room for improvement in the molecular weight of a copolymer in the copolymerization with an acrylic acid ester. The catalyst of Patent Document 5 has a room for improvement in catalyst performance such as activity and molecular weight. Non-Patent Document 7 only describes that oligomers are obtained, and it does not discuss polymerization activity. While the isolation of a complex is discussed, the isolated complex does not exhibit polymerization performance. Non-Patent Document 8 only shows that the catalyst may offer a low-density polyethylene oligomer.

In such circumstances, an object of the present invention is to provide the following: a novel compound which is improved in catalyst performance such as activity and molecular weight and is configured to be used as the ligand of a catalyst that can polymerize or copolymerize olefins, especially a novel compound which is configured to be used as the ligand of a catalyst that can copolymerize an acyclic olefin and at least one kind of monomer selected from the group consisting of a polar group-containing monomer and a cyclic olefin; a metal complex, olefin polymerization catalyst composition and olefin polymerization catalyst using the novel compound; and an olefin-based polymer production method using the catalyst.

### Solution to Problem

The inventors of the present invention found such an olefin polymerization catalyst, that at least one of the activity or molecular weight is at a high level since a specific nickel compound and/or a specific palladium compound is combined with a monoanionic bidentate ligand which has an alkylene with a specific structure as a ligand framework, which contains elements of the Groups 15 and 16 of the periodic table, especially a nitrogen or phosphorus atom and an oxygen atom, as coordinating atoms, and which contains a specific substituent. Based on this finding, the inventors achieved the present invention.

That is, the first embodiment of the present invention relates to the following [1-1] to [1-16].

[1-1] A compound represented by the following general formula (A) :

[Chem. 1]

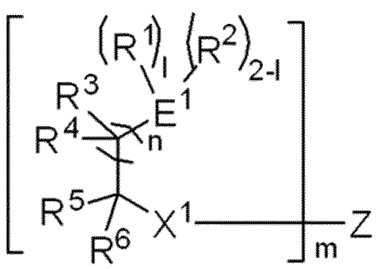

Formula (A)

[where

$X^1$ represents an oxygen atom or a sulfur atom;
$E^1$ represents a nitrogen atom, a phosphorus atom, an arsenic atom or an antimony atom;
Z represents a hydrogen atom, a leaving group or a cation having a valence of 1 or more and 4 or less;
m is an integer more than or equal to 1 and less than or equal to a valence of Z;
n is 0, 1, 2, 3 or 4, and when n is 0, $E^1$ is directly bound to a carbon atom to which $X^1$, $R^5$ and $R^6$ are bound;
$R^1$ represents a hydrocarbon group represented by the following general formula (B) or (C);
$R^2$ represents a hydrocarbon group containing 1 to 20 carbon atoms and optionally containing at least one

heteroatom, which is different from the hydrocarbon group represented by the following general formula (B) or (C); 1 is 1 or 2, and when l is 2, $R^2$ is absent;
$R^3$, $R^4$, $R^5$ and $R^6$ each independently represent an atom or group selected from the group consisting of the following (i) to (iv):

(i) a hydrogen atom
(ii) a halogen atom
(iii) a hydrocarbon group containing 1 to 30 carbon atoms and optionally containing at least one heteroatom
(iv) $OR^b$, $C(O)OR^b$, C(O)OM', $C(O)N(R^a)_2$, $C(O)R^b$, $OC(O)R^b$, $SR^b$, $S(O)_2R^b$, $S(O)R^b$, OS $(O)_2R^b$, $SF_5$, P(O) $(OR^b)_{2-y}(R^a)_y$, CN, $N(H)R^a$, $N(R^b)_2$, $Si(OR^a)_{3-x}(R^a)_x$, OSi $(OR^a)_{3-x}(R^a)_x$, $NO_2$, $S(O)_2OM'$, $P(O)(OM')_2$, P(O) $(OR^b)_2M'$ or an epoxy-containing group (where each $R^a$ independently represents a hydrogen atom or a hydrocarbon group containing 1 to 20 carbon atoms; each $R^b$ independently represents a hydrocarbon group containing 1 to 20 carbon atoms; M' represents an alkaline metal, an alkaline earth metal, an ammonium, a quaternary ammonium or a phosphonium; x represents 0, 1, 2 or 3; and y represents 0, 1 or 2); and $R^3$, $R^4$, $R^5$ and $R^6$ are optionally bound to adjacent substituents to form a 5- to 8-membered alicyclic ring or a 5- to 8-membered heterocyclic ring containing at least one heteroatom selected from the group consisting of an oxygen atom, a nitrogen atom and a sulfur atom]

[Chem. 2]

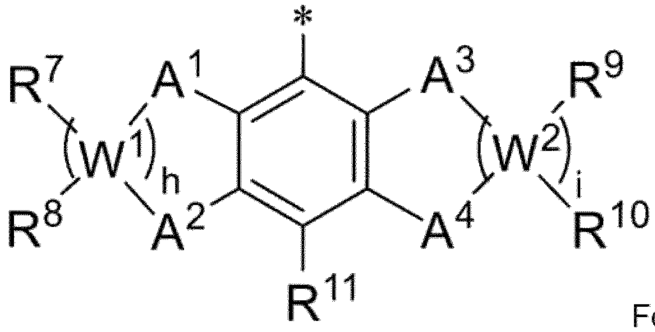

Formula (B)

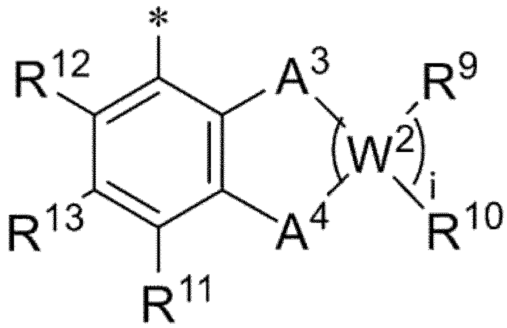

Formula (C)

[where

* represents a bond with $E^1$;
$R^7$, $R^8$, $R^9$, $R^{10}$, $R^{11}$, $R^{12}$ and $R^{13}$ each independently represent the atom or group selected from the group consisting of the above (i) to (iv) defined in the above formula (A), and $R^7$, $R^8$, $R^9$ and $R^{10}$ are optionally bound to adjacent substituents to form a 5-to 8-membered alicyclic ring, a 5- to 8-membered aromatic ring, or a 5- to 8-membered heterocyclic ring containing at least one heteroatom selected from the group consisting of an oxygen atom, a nitrogen atom and a sulfur atom;
$A^1$, $A^2$, $A^3$ and $A^4$ each independently represent an oxygen atom, a sulfur atom, $-C(R)_2-$, -S(O)-, $-S(O)_2-$, -N(R)-, -P(R)- or - P(O)(R)- (where each R independently represents a hydrogen atom or a hydrocarbon group containing 1 to 20 carbon atoms and optionally containing at least one heteroatom);
in the formula (B), at least two selected from the group consisting of $A^1$, $A^2$, $A^3$ and $A^4$ are $-C(R)_2-$;
in the formula (C), at least one selected from the group consisting of $A^3$ and $A^4$ is $-C(R)_2-$ and at least one

selected from the group consisting of $R^{12}$ and $R^{13}$ is the atom or group selected from the group consisting of the above (i) and (iii), or in the formula (C), both $A^3$ and $A^4$ are other than $-C(R)_2-$ and both $R^{12}$ and $R^{13}$ are the atom or group selected from the group consisting of the above (i) and (iii);
$W^1$ and $W^2$ each independently represent a carbon atom, a silicon atom, a nitrogen atom, a phosphorus atom, a boron atom, an oxygen atom, -P(O)- or $-S(O)_2-$, and when it is a nitrogen atom, a phosphorus atom, a boron atom or -P(O)-, $R^8$ and $R^{10}$ are absent, and when it is an oxygen atom or $-S(O)_2-$, $R^7$ and $R^8$ are absent, as well as $R^9$ and $R^{10}$;
h and i are each independently an integer from 1 to 6, and when two or more $W^1$s, $W^2$s, $R^7$s, $R^8$s, $R^9$s or $R^{10}$s are each present, they may be the same or different from each other.]

[1-2] A metal complex represented by the following general formula (D):

[Chem. 3]

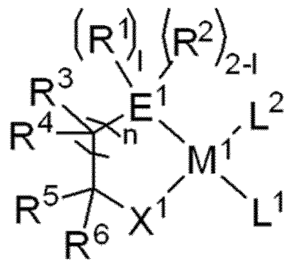

Formula (D)

[where

$X^1$ represents an oxygen atom or a sulfur atom;
$E^1$ represents a nitrogen atom, a phosphorus atom, an arsenic atom or an antimony atom;
n is 0, 1, 2, 3 or 4, and when n is 0, $E^1$ is directly bound to a carbon atom to which $X^1$, $R^5$ and $R^6$ are bound;
$R^1$ represents a hydrocarbon group represented by the following general formula (B) or (C);
$R^2$ represents a hydrocarbon group containing 1 to 20 carbon atoms and optionally containing at least one heteroatom, which is different from the hydrocarbon group represented by the following general formula (B) or (C);
l is 1 or 2, and when l is 2, $R^2$ is absent;
$R^3$, $R^4$, $R^5$ and $R^6$ each independently represent an atom or group selected from the group consisting of the following (i) to (iv):

(i) a hydrogen atom
(ii) a halogen atom
(iii) a hydrocarbon group containing 1 to 30 carbon atoms and optionally containing at least one heteroatom
(iv) $OR^b$, $C(O)OR^b$, C(O)OM', $C(O)N(R^a)_2$, $C(O)R^b$, $OC(O)R^b$, $SR^b$, $S(O)_2R^b$, $S(O)R^b$, $OS(O)_2R^b$, $SF_5$, $P(O)(OR^b)_{2-y}(R^a)_y$, CN, $N(H)R^a$, $N(R^b)_2$, $Si(OR^a)_{3-x}(R^a)_x$, $OSi(OR^a)_{3-x}(R^a)_x$, $NO_2$, $S(O)_2OM'$, $P(O)(OM')_2$, $P(O)(OR^b)_2M'$ or an epoxy-containing group (where each $R^a$ independently represents a hydrogen atom or a hydrocarbon group containing 1 to 20 carbon atoms; each $R^b$ independently represents a hydrocarbon group containing 1 to 20 carbon atoms; M' represents an alkaline metal, an alkaline earth metal, an ammonium, a quaternary ammonium or a phosphonium; x represents 0, 1, 2 or 3; and y represents 0, 1 or 2);

$R^3$, $R^4$, $R^5$ and $R^6$ are optionally bound to adjacent substituents to form a 5- to 8-membered alicyclic ring or a 5- to 8-membered heterocyclic ring containing at least one heteroatom selected from the group consisting of an oxygen atom, a nitrogen atom and a sulfur atom;
$M^1$ represents a nickel atom or a palladium atom;
$L^1$ and $L^2$ each independently represent a ligand coordinated to $M^1$; and
$L^1$ and $L^2$ are optionally bound to each other to form a ring containing $M^1$]

[Chem. 4]

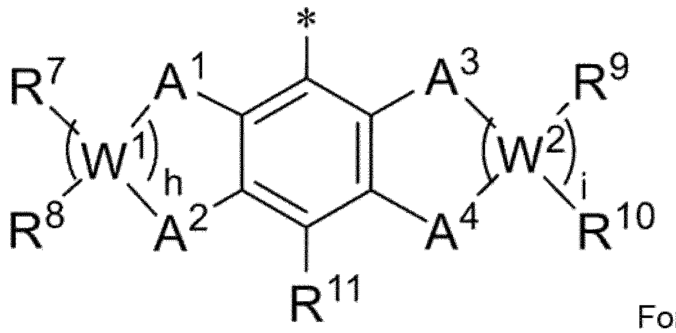

Formula (B)

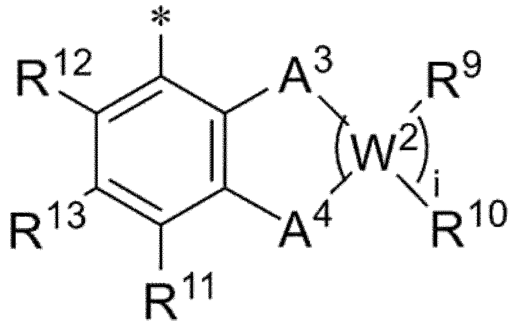

Formula (C)

[where

* represents a bond with $E^1$;
$R^7$, $R^8$, $R^9$, $R^{10}$, $R^{11}$, $R^{12}$ and $R^{13}$ each independently represent the atom or group selected from the group consisting of the above (i) to (iv) defined in the above formula (A);
$R^7$, $R^8$, $R^9$ and $R^{10}$ are optionally bound to adjacent substituents to form a 5- to 8-membered alicyclic ring, a 5- to 8-membered aromatic ring, or a 5- to 8-membered heterocyclic ring containing at least one heteroatom selected from the group consisting of an oxygen atom, a nitrogen atom and a sulfur atom;
$A^1$, $A^2$, $A^3$ and $A^4$ each independently represent an oxygen atom, a sulfur atom, $-C(R)_2-$, -S(O)-, $-S(O)_2-$, -N(R)-, -P(R)- or - P(O)(R)- (where each R independently represents a hydrogen atom or a hydrocarbon group containing 1 to 20 carbon atoms and optionally containing at least one heteroatom);
in the formula (B), at least two selected from the group consisting of $A^1$, $A^2$, $A^3$ and $A^4$ are $-C(R)_2-$;
in the formula (C), at least one selected from the group consisting of $A^3$ and $A^4$ is $-C(R)_2-$ and at least one selected from the group consisting of $R^{12}$ and $R^{13}$ is the atom or group selected from the group consisting of the above (i) and (iii), or in the formula (C), both $A^3$ and $A^4$ are other than $-C(R)_2-$ and both $R^{12}$ and $R^{13}$ are the atom or group selected from the group consisting of the above (i) and (iii);
$W^1$ and $W^2$ each independently represent a carbon atom, a silicon atom, a nitrogen atom, a phosphorus atom, a boron atom, an oxygen atom, -P(O)- or $-S(O)_2-$, and when it is a nitrogen atom, a phosphorus atom, a boron atom or -P(O)-, $R^8$ and $R^{10}$ are absent, and when it is an oxygen atom or $-S(O)_2-$, $R^7$ and $R^8$ are absent, as well as $R^9$ and $R^{10}$;
h and i are each independently an integer from 1 to 6, and when two or more $W^1$s, $W^2$s, $R^7$s, $R^8$s, $R^9$s or $R^{10}$s are each present, they may be the same or different from each other.]

[1-3] An olefin polymerization catalyst composition comprising the compound represented by the general formula (A) defined by the above [1-1] and a transition metal compound represented by the following general formula (E) or (F):

[Chem. 5]

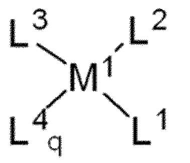

Formula (E)

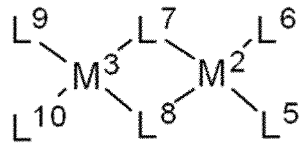

Formula (F)

[where

$M^1$ represents a nickel atom or a palladium atom;
$L^1$ and $L^2$ each independently represent a ligand coordinated to $M^L$;
$L^1$ and $L^2$ are optionally bound to each other to form a ring containing $M^1$;
$M^2$ and $M^3$ each independently represent a nickel atom or a palladium atom;
$L^3$, $L^4$, $L^5$, $L^6$, $L^9$ and $L^{10}$ each independently represent a ligand coordinated to $M^1$, $M^2$ or $M^3$, and $L^7$ and $L^8$ each independently represent a ligand coordinated to $M^2$ and $M^3$;
q is 0, 1 or 2;
$L^3$ and $L^4$ are optionally bound to each other to form a ring containing $M^1$;
$L^5$ and $L^6$ are optionally bound to each other to form a ring containing $M^2$; and
$L^9$ and $L^{10}$ are optionally bound to each other to form a ring containing $M^3$.]

[1-4] The compound according to the above [1-1], wherein at least one selected from the group consisting of $R^5$ and $R^6$ is the atom or group selected from the group consisting of the above (i), (iii) and (iv).
[1-5] The metal complex according to the above [1-2], wherein at least one selected from the group consisting of $R^5$ and $R^6$ is the atom or group selected from the group consisting of the above (i), (iii) and (iv).
[1-6] The olefin polymerization catalyst composition according to the above [1-3], wherein at least one selected from the group consisting of $R^5$ and $R^6$ is the atom or group selected from the group consisting of the above (i), (iii) and (iv).
[1-7] The compound according to the above [1-1], wherein $R^5$ is the atom or group selected from the group consisting of the above (i) and (iii), and $R^6$ is the atom or group selected from the group consisting of the above (i), the above (iii), $C(O)OR^b$, $C(O)N(R^a)_2$, $C(O)R^b$, $S(O)_2R^b$ and $P(O)(OR^b)_{2-y}(R^a)_y$ (where $R^a$, $R^b$ and y are as defined above in the above [1-1]).
[1-8] The metal complex according to the above [1-2], wherein $R^5$ is the atom or group selected from the group consisting of the above (i) and (iii), and $R^6$ is the atom or group selected from the group consisting of the above (i), the above (iii), $C(O)OR^b$, $C(O)N(R^a)_2$, $C(O)R^b$, $S(O)_2R^b$ and $P(O)(OR^b)_{2-y}(R^a)_y$ (where $R^a$, $R^b$ and y are as defined above in the above [1-2]).
[1-9] The olefin polymerization catalyst composition according to the above [1-3], wherein $R^5$ is the atom or group selected from the group consisting of the above (i) and (iii), and $R^6$ is the atom or group selected from the group consisting of the above (i), the above (iii), $C(O)OR^b$, $C(O)N(R^a)_2$, $C(O)R^b$, $S(O)_2R^b$ and $P(O)(OR^b)_{2-y}(R^a)_y$ (where $R^a$, $R^b$ and y are as defined above in the above [1-1]).
[1-10] The compound according to any one of the above [1-1], [1-4] and [1-7], wherein at least one selected from the group consisting of $R^3$ and $R^4$ is the atom or group selected from the group consisting of the above (i), (iii) and (iv).
[1-11] The metal complex according to any one of the above [1-2], [1-5] and [1-8], wherein at least one selected from the group consisting of $R^3$ and $R^4$ is the atom or group selected from the group consisting of the above (i), (iii) and (iv).
[1-12] The olefin polymerization catalyst composition according to any one of the above [1-3], [1-6] and [1-9], wherein at least one selected from the group consisting of $R^3$ and $R^4$ is the atom or group selected from the group consisting of the above (i), (iii) and (iv).
[1-13] An olefin polymerization catalyst comprising the olefin polymerization catalyst composition defined by any one of the above [1-3], [1-6], [1-9] and [1-12].
[1-14] An olefin polymerization catalyst comprising the metal complex defined by any one of the above [1-2], [1-5], [1-8] and [1-11].
[1-15] A method for producing an olefin-based polymer, wherein an olefin is polymerized or copolymerized in the

presence of the olefin polymerization catalyst defined by the above [1-13] or [1-14].
[1-16] A method for producing the olefin-based polymer defined by the above [1-15], wherein an acyclic olefin is copolymerized with at least one kind of monomer selected from the group consisting of a polar group-containing monomer and a cyclic olefin.

The second embodiment of the present invention relates to the following [2-1] to [2-16].

[2-1] A compound represented by the following general formula (A):

[Chem. 6]

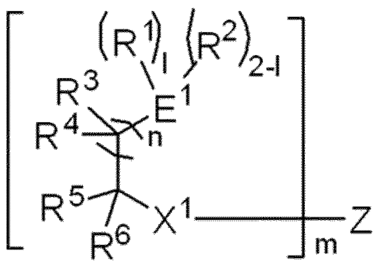

Formula (A)

[where

$X^1$ represents an oxygen atom or a sulfur atom;
$E^1$ represents a nitrogen atom, a phosphorus atom, an arsenic atom or an antimony atom;
Z represents a hydrogen atom, a leaving group or a cation having a valence of 1 or more and 4 or less;
m is an integer more than or equal to 1 and less than or equal to a valence of Z;
n is 0, 1, 2, 3 or 4, and when n is 0, $E^1$ is directly bound to a carbon atom to which $X^1$, $R^5$ and $R^6$ are bound;
$R^1$ represents a hydrocarbon group represented by the following general formula (B) or (C);
$R^2$ represents a hydrocarbon group containing 1 to 20 carbon atoms and optionally containing at least one heteroatom, which is different from the hydrocarbon group represented by the following general formula (B) or (C);
1 is 1 or 2, and when l is 2, $R^2$ is absent;
$R^3$, $R^4$, $R^5$ and $R^6$ each independently represent an atom or group selected from the group consisting of the following (i) to (iv):

(i) a hydrogen atom
(ii) a halogen atom
(iii) a hydrocarbon group containing 1 to 30 carbon atoms and optionally containing at least one heteroatom
(iv) $OR^b$, $C(O)OR^b$, C(O)OM', $C(O)N(R^a)_2$, $C(O)R^b$, $OC(O)R^b$, $SR^b$, $S(O)_2R^b$, $S(O)R^b$, $OS(O)_2R^b$, $SF_5$, $P(O)(OR^b)_{2-y}(R^a)_y$, CN, $N(H)R^a$, $N(R^b)_2$, $Si(OR^a)_{3-x}(R^a)_x$, $OSi(OR^a)_{3-x}(R^a)_x$, $NO_2$, $S(O)_2OM'$ , $P(O)(OM')_2$, $P(O)(OR^b)_2M'$ or an epoxy-containing group (where each $R^a$ independently represents a hydrogen atom or a hydrocarbon group containing 1 to 20 carbon atoms; each $R^b$ independently represents a hydrocarbon group containing 1 to 20 carbon atoms; M' represents an alkaline metal, an alkaline earth metal, an ammonium, a quaternary ammonium or a phosphonium; x represents 0, 1, 2 or 3; and y represents 0, 1 or 2); and $R^3$, $R^4$, $R^5$ and $R^6$ are optionally bound to adjacent substituents to form a 5- to 8-membered alicyclic ring or a 5- to 8-membered heterocyclic ring containing at least one heteroatom selected from the group consisting of an oxygen atom, a nitrogen atom and a sulfur atom]

[Chem. 7]

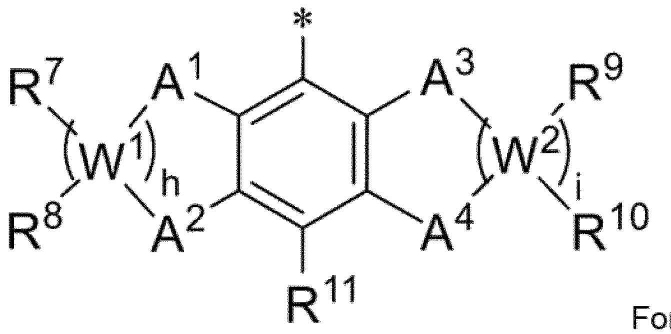

Formula (B)

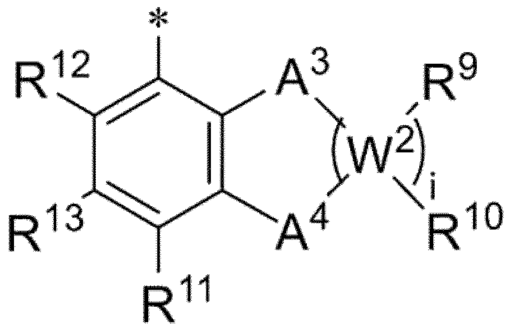

Formula (C)

[where

* represents a bond with $E^1$;
$R^7$, $R^8$, $R^9$, $R^{10}$, $R^{11}$, $R^{12}$ and $R^{13}$ each independently represent the atom or group selected from the group consisting of the above (i) to (iv) defined in the above formula (A), and $R^7$, $R^8$, $R^9$ and $R^{10}$ are optionally bound to adjacent substituents to form a 5-to 8-membered alicyclic ring, a 5- to 8-membered aromatic ring, or a 5- to 8-membered heterocyclic ring containing at least one heteroatom selected from the group consisting of an oxygen atom, a nitrogen atom and a sulfur atom;
$A^1$, $A^2$, $A^3$ and $A^4$ each independently represent an oxygen atom, a sulfur atom, $-C(R)_2-$, -S(O)-, $-S(O)_2-$, -N(R)-, -P(R)- or - P(O)(R)- (where each R independently represents a hydrogen atom or a hydrocarbon group containing 1 to 20 carbon atoms and optionally containing at least one heteroatom);
in the formula (B), at least three selected from the group consisting of $A^1$, $A^2$, $A^3$ and $A^4$ are other than $-C(R)_2-$;
in the formula (C), both $A^3$ and $A^4$ are other than $-C(R)_2-$, and at least one selected from the group consisting of $R^{12}$ and $R^{13}$ is the atom or group selected from the group consisting of the above (ii) and (iv) (except for the epoxy-containing group);
$W^1$ and $W^2$ each independently represent a carbon atom, a silicon atom, a nitrogen atom, a phosphorus atom, a boron atom, an oxygen atom, -P(O)- or $-S(O)_2-$, and when it is a nitrogen atom, a phosphorus atom, a boron atom or -P(O)-, $R^8$ and $R^{10}$ are absent, and when it is an oxygen atom or $-S(O)_2-$, $R^7$ and $R^8$ are absent, as well as $R^9$ and $R^{10}$;
h and i are each independently an integer from 1 to 6, and when two or more $W^1$s, $W^2$s, $R^7$s, $R^8$s, $R^9$s or $R^{10}$s are each present, they may be the same or different from each other.]

[2-2] A metal complex represented by the following general formula (D):

[Chem. 8]

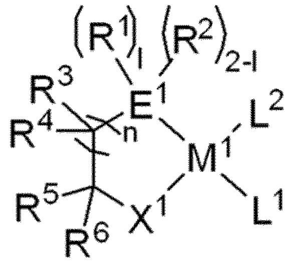

Formula (D)

[where

$X^1$ represents an oxygen atom or a sulfur atom;
$E^1$ represents a nitrogen atom, a phosphorus atom, an arsenic atom or an antimony atom;
n is 0, 1, 2, 3 or 4, and when n is 0, $E^1$ is directly bound to a carbon atom to which $X^1$, $R^5$ and $R^6$ are bound;
$R^1$ represents a hydrocarbon group represented by the following general formula (B) or (C);
$R^2$ represents a hydrocarbon group containing 1 to 20 carbon atoms and optionally containing at least one heteroatom, which is different from the hydrocarbon group represented by the following general formula (B) or (C);
l is 1 or 2, and when l is 2, $R^2$ is absent;
$R^3$, $R^4$, $R^5$ and $R^6$ each independently represent an atom or group selected from the group consisting of the following (i) to (iv):

(i) a hydrogen atom
(ii) a halogen atom
(iii) a hydrocarbon group containing 1 to 30 carbon atoms and optionally containing at least one heteroatom
(iv) $OR^b$, $C(O)OR^b$, $C(O)OM'$, $C(O)N(R^a)_2$, $C(O)R^b$, $OC(O)R^b$, $SR^b$, $S(O)_2R^b$, $S(O)R^b$, $OS(O)_2R^b$, $SF_5$, $P(O)(OR^b)_{2-y}(R^a)_y$, CN, $N(H)R^a$, $N(R^b)_2$, $Si(OR^a)_{3-x}(R^a)_x$, $OSi(OR^a)_{3-x}(R^a)_x$, $NO_2$, $S(O)_2OM'$, $P(O)(OM')_2$, $P(O)(OR^b)_2M'$ or an epoxy-containing group (where each $R^a$ independently represents a hydrogen atom or a hydrocarbon group containing 1 to 20 carbon atoms; each $R^b$ independently represents a hydrocarbon group containing 1 to 20 carbon atoms; M' represents an alkaline metal, an alkaline earth metal, an ammonium, a quaternary ammonium or a phosphonium; x represents 0, 1, 2 or 3; and y represents 0, 1 or 2);

$R^3$, $R^4$, $R^5$ and $R^6$ are optionally bound to adjacent substituents to form a 5- to 8-membered alicyclic ring or a 5- to 8-membered heterocyclic ring containing at least one heteroatom selected from the group consisting of an oxygen atom, a nitrogen atom and a sulfur atom;
$M^1$ represents a nickel atom or a palladium atom;
$L^1$ and $L^2$ each independently represent a ligand coordinated to $M^1$; and
$L^1$ and $L^2$ are optionally bound to each other to form a ring containing $M^1$]

[Chem. 9]

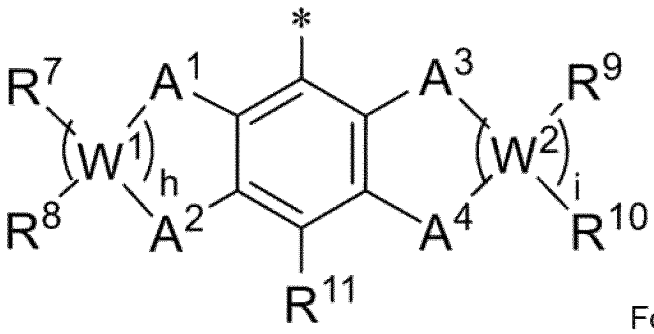

Formula (B)

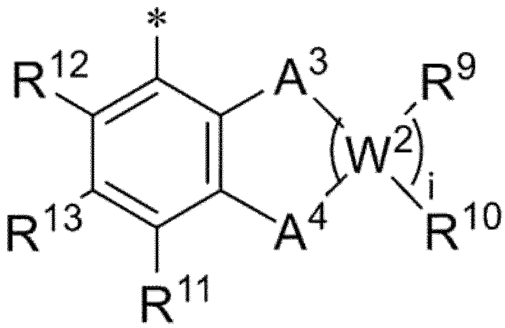

Formula (C)

[where

* represents a bond with $E^1$;
$R^7$, $R^8$, $R^9$, $R^{10}$, $R^{11}$, $R^{12}$ and $R^{13}$ each independently represent the atom or group selected from the group consisting of the above (i) to (iv) defined in the above formula (A);
$R^7$, $R^8$, $R^9$ and $R^{10}$ are optionally bound to adjacent substituents to form a 5- to 8-membered alicyclic ring, a 5- to 8-membered aromatic ring, or a 5- to 8-membered heterocyclic ring containing at least one heteroatom selected from the group consisting of an oxygen atom, a nitrogen atom and a sulfur atom;
$A^1$, $A^2$, $A^3$ and $A^4$ each independently represent an oxygen atom, a sulfur atom, $-C(R)_2-$, -S(O)-, $-S(O)_2-$, -N(R)-, -P(R)- or - P(O)(R)- (where each R independently represents a hydrogen atom or a hydrocarbon group containing 1 to 20 carbon atoms and optionally containing at least one heteroatom);
in the formula (B), at least three selected from the group consisting of $A^1$, $A^2$, $A^3$ and $A^4$ are other than $-C(R)_2-$;
in the formula (C), both $A^3$ and $A^4$ are other than $-C(R)_2-$, and at least one selected from the group consisting of $R^{12}$ and $R^{13}$ is the atom or group selected from the group consisting of the above (ii) and (iv) (except for the epoxy-containing group);
$W^1$ and $W^2$ each independently represent a carbon atom, a silicon atom, a nitrogen atom, a phosphorus atom, a boron atom, an oxygen atom, -P(O)- or $-S(O)_2-$, and when it is a nitrogen atom, a phosphorus atom, a boron atom or -P(O)-, $R^8$ and $R^{10}$ are absent, and when it is an oxygen atom or $-S(O)_2-$, $R^7$ and $R^8$ are absent, as well as $R^9$ and $R^{10}$;
h and i are each independently an integer from 1 to 6, and when two or more $W^1$s, $W^2$s, $R^7$s, $R^8$s, $R^9$s or $R^{10}$s are each present, they may be the same or different from each other.]

[2-3] An olefin polymerization catalyst composition comprising the compound represented by the general formula (A) defined by the above [2-1] and a transition metal compound represented by the following general formula (E) or (F):

[Chem. 10]

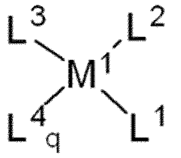

Formula (E)

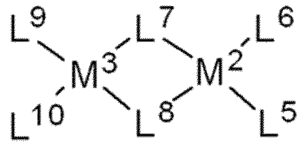

Formula (F)

[where

$M^1$ represents a nickel atom or a palladium atom;
$L^1$ and $L^2$ each independently represent a ligand coordinated to $M^1$;
$L^1$ and $L^2$ are optionally bound to each other to form a ring containing $M^1$;
$M^2$ and $M^3$ each independently represent a nickel atom or a palladium atom;
$L^3$, $L^4$, $L^5$, $L^6$, $L^9$ and $L^{10}$ each independently represent a ligand coordinated to $M^1$, $M^2$ or $M^3$, and $L^7$ and $L^8$ each independently represent a ligand coordinated to $M^2$ and $M^3$;
q is 0, 1 or 2;
$L^3$ and $L^4$ are optionally bound to each other to form a ring containing $M^1$;
$L^5$ and $L^6$ are optionally bound to each other to form a ring containing $M^2$; and
$L^9$ and $L^{10}$ are optionally bound to each other to form a ring containing $M^3$.]

[2-4] The compound according to the above [2-1], wherein at least one selected from the group consisting of $R^5$ and $R^6$ is the atom or group selected from the group consisting of the above (i), (iii) and (iv).
[2-5] The metal complex according to the above [2-2], wherein at least one selected from the group consisting of $R^5$ and $R^6$ is the atom or group selected from the group consisting of the above (i), (iii) and (iv).
[2-6] The olefin polymerization catalyst composition according to the above [2-3], wherein at least one selected from the group consisting of $R^5$ and $R^6$ is the atom or group selected from the group consisting of the above (i), (iii) and (iv).
[2-7] The compound according to the above [2-1], wherein $R^5$ is the atom or group selected from the group consisting of the above (i) and (iii), and $R^6$ is the atom or group selected from the group consisting of the above (i), the above (iii), $C(O)OR^b$, $C(O)N(R^a)_2$, $C(O)R^b$, $S(O)_2R^b$ and $P(O)(OR^b)_{2-y}(R^a)_y$ (where $R^a$, $R^b$ and y are as defined above in the above [2-1]).
[2-8] The metal complex according to the above [2-2], wherein $R^5$ is the atom or group selected from the group consisting of the above (i) and (iii), and $R^6$ is the atom or group selected from the group consisting of the above (i), the above (iii), $C(O)OR^b$, $C(O)N(R^a)_2$, $C(O)R^b$, $S(O)_2R^b$ and $P(O)(OR^b)_{2-y}(R^a)_y$ (where $R^a$, $R^b$ and y are as defined above in the above [2-2]).
[2-9] The olefin polymerization catalyst composition according to the above [2-3], wherein $R^5$ is the atom or group selected from the group consisting of the above (i) and (iii), and $R^6$ is the atom or group selected from the group consisting of the above (i), the above (iii), $C(O)OR^b$, $C(O)N(R^a)_2$, $C(O)R^b$, $S(O)_2R^b$ and $P(O)(OR^b)_{2-y}(R^a)_y$ (where $R^a$, $R^b$ and y are as defined above in the above [2-1]).
[2-10] The compound according to any one of the above [2-1], [2-4] and [2-7], wherein at least one selected from the group consisting of $R^3$ and $R^4$ is the atom or group selected from the group consisting of the above (i), (iii) and (iv).
[2-11] The metal complex according to any one of the above [2-2], [2-5] and [2-8], wherein at least one selected from the group consisting of $R^3$ and $R^4$ is the atom or group selected from the group consisting of the above (i), (iii) and (iv).
[2-12] The olefin polymerization catalyst composition according to any one of the above [2-3], [2-6] and [2-9], wherein at least one selected from the group consisting of $R^3$ and $R^4$ is the atom or group selected from the group consisting of the above (i), (iii) and (iv).
[2-13] An olefin polymerization catalyst comprising the olefin polymerization catalyst composition defined by any one of the above [2-3], [2-6], [2-9] and [2-12].
[2-14] An olefin polymerization catalyst comprising the metal complex defined by any one of the above [2-2], [2-5], [2-8] and [2-11].
[2-15] A method for producing an olefin-based polymer, wherein an olefin is polymerized or copolymerized in the

presence of the olefin polymerization catalyst defined by the above [2-13] or [2-14].

[2-16] A method for producing the olefin-based polymer defined by the above [2-15], wherein an acyclic olefin is copolymerized with at least one kind of monomer selected from the group consisting of a polar group-containing monomer and a cyclic olefin.

## Advantageous Effects of Invention

According to the present invention, there is provided a novel compound which is improved in catalyst performance such as activity and molecular weight and is configured to be used as the ligand of a catalyst that can polymerize or copolymerize olefins, especially a novel compound which is configured to be used as the ligand of a catalyst that can copolymerize an acyclic olefin and at least one kind of monomer selected from the group consisting of a polar group-containing monomer and a cyclic olefin. According to the present invention, there are also provided a metal complex, olefin polymerization catalyst composition and olefin polymerization catalyst using the novel compound, and an olefin-based polymer production method using the catalyst.

## Description of Embodiments

Hereinafter, in the sections of the first and second embodiments of the present invention, a novel compound configured to be used as a ligand, a metal complex, olefin polymerization catalyst composition and olefin polymerization catalyst using the novel compound, and an olefin-based polymer production method using the catalyst will be explained in detail.

In the present DESCRIPTION, the term "polymerization" is a general term referring to the homopolymerization of one kind of monomer and the copolymerization of several kinds of monomers. When there is no need to differentiate them, they are collectively and simply referred to as "polymerization". Also in the present DESCRIPTION, the term "(meth)acrylic acid ester" includes both acrylic ester and methacrylic ester.

Also in the present DESCRIPTION, "to" which shows a numerical range is used to describe a range in which the numerical values described before and after "to" are included as the lower limit value and the upper limit value.

Also in the present DESCRIPTION, "Ph" means phenyl; "Me" means methyl; "Et" means ethyl; "Pr" means propyl; "Bu" means butyl; "Py" means pyridyl or pyridine; "acac" means acetylacetonate; "DMP" means 2,6-dimethoxyphenyl; and "TMS" means trimethylsilyl.

For the prefix of the structural isomer of an alkyl group, "i" means "iso"; "n" means "normal"; "s" means "secondary"; and "t" means "tertiary". When there is no description of the prefix of the structural isomer of an alkyl group, it means that the alkyl group has a normal structure.

## I. First embodiment

### I-1. Compound

The compound of the first embodiment of the present invention is a compound represented by the following general formula (A).

[Chem. 11]

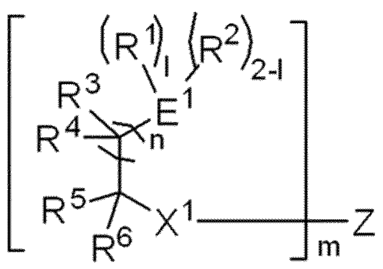

Formula (A)

[The symbols in the general formula (A) are as defined above in [1-1].]

Hereinafter, the symbols $R^1$ to $R^6$, $E^1$, $X^1$, Z, l, n and m in the general formula (A) will be described.

In the general formula (A), $X^1$ represents an oxygen atom or a sulfur atom. That is, the compound represented by the general formula (A) can be used as a ligand which has an element of the Group 16 of the periodic table as a monovalent

anionic coordinating atom. $X^1$ is preferably an oxygen atom, since a variety of compounds can be used as the ligand.

In the general formula (A), $E^1$ represents a nitrogen atom, a phosphorus atom, an arsenic atom or an antimony atom. That is, the compound represented by the general formula (A) can be used as a ligand which has an element of the Group 15 of the periodic table as a neutral coordinating atom. $E^1$ is preferably a nitrogen atom or a phosphorus atom, since a variety of compounds can be used as the ligand and the compound exhibits good coordination with a late transition metal element such as nickel and palladium.

In the general formula (A), $R^3$, $R^4$, $R^5$ and $R^6$ each independently represent an atom or group selected from the group consisting of the following (i) to (iv):

(i) a hydrogen atom
(ii) a halogen atom
(iii) a hydrocarbon group containing 1 to 30 carbon atoms and optionally containing at least one heteroatom
(iv) $OR^b$, $C(O)OR^b$, $C(O)OM'$, $C(O)N(R^a)_2$, $C(O)R^b$, $OC(O)R^b$, $SR^b$, $S(O)_2R^b$, $S(O)R^b$, $OS(O)_2R^b$, $SF_5$, $P(O)(OR^b)_{2-y}(R^a)_y$, CN, $N(H)R^a$, $N(R^b)_2$, $Si(OR^a)_{3-x}(R^a)$, $OSi(OR^a)_{3-x}(R^a)_x$, $NO_2$, $S(O)_2OM'$, $P(O)(OM')_2$, $P(O)(OR^b)_2M'$ or an epoxy-containing group (where each $R^a$ independently represents a hydrogen atom or a hydrocarbon group containing 1 to 20 carbon atoms; each $R^b$ independently represents a hydrocarbon group containing 1 to 20 carbon atoms; M' represents an alkaline metal, an alkaline earth metal, an ammonium, a quaternary ammonium or a phosphonium; x represents 0, 1, 2 or 3; and y represents 0, 1 or 2), and $R^3$, $R^4$, $R^5$ and $R^6$ are optionally bound to adjacent substituents to form a 5- to 8-membered alicyclic ring or a 5- to 8-membered heterocyclic ring containing at least one heteroatom selected from the group consisting of an oxygen atom, a nitrogen atom and a sulfur atom.

As the (ii) halogen atom, examples include a fluorine atom, a chlorine atom, a bromine atom and an iodine atom. Of them, a fluorine atom is preferred.

The (iii) hydrocarbon group containing 1 to 30 carbon atoms and optionally containing at least one heteroatom may be a hydrocarbon group or a hydrocarbon group in which at least one hydrogen atom is substituted with a heteroatom-containing substituent.

As the heteroatom in the (iii), examples include an oxygen atom, a nitrogen atom, a phosphorus atom, a sulfur atom, a silicon atom and a halogen atom. The heteroatom as the substituent may be a halogen atom. As the halogen atom, examples include those exemplified above in the (ii).

As the heteroatom-containing substituent in the (iii), examples include heteroatom-containing substituents exemplified below in the (iv). The heteroatom-containing substituent used in the (iii) may be an alkoxy group, an aryloxy group, an alkoxycarbonyl group or an acyloxy group.

As the hydrocarbon group containing 1 to 30 carbon atoms of the above (iii), examples include a linear, branched or cyclic saturated or unsaturated aliphatic hydrocarbon group, an aromatic hydrocarbon group and a combination thereof. More specifically, as the hydrocarbon group containing 1 to 30 carbon atoms, examples include a linear alkyl group containing 1 to 30 carbon atoms, a branched acyclic alkyl group containing 3 to 30 carbon atoms, an alkenyl group containing 2 to 30 carbon atoms, a cycloalkyl group containing 3 to 30 carbon atoms and optionally containing a side chain, an aryl group containing 6 to 30 carbon atoms, an arylalkyl group containing 7 to 30 carbon atoms, and an alkylaryl group containing 7 to 30 carbon atoms.

The linear alkyl group containing 1 to 30 carbon atoms may be a linear alkyl group containing 1 to 10 carbon atoms, such as a methyl group, an ethyl group, a n-propyl group, a n-butyl group, a n-pentyl group, a n-hexyl group, a n-heptyl group, a n-octyl group, a n-nonyl group and a n-decyl group, or it may be a linear alkyl group containing 1 to 4 carbon atoms.

The branched acyclic alkyl group containing 3 to 30 carbon atoms may be a branched acyclic alkyl group containing 3 to 10 carbon atoms, such as an i-propyl group, an i-butyl group, a t-butyl group, a s-butyl group, an i-pentyl group (a 3-methylbutyl group), a t-pentyl group (a 1,1-dimethylpropyl group), a s-pentyl group (a 1-methylbutyl group), a 2-methylbutyl group, a neopentyl group (a 2,2-dimethylpropyl group), a 1,2-dimethylpropyl group and an i-hexyl group (a 4-methylpentyl group), or it may be a branched acyclic alkyl group containing 3 to 8 carbon atoms.

As the alkenyl group containing 2 to 30 carbon atoms, examples include a vinyl group, an allyl group, a butenyl group, a pentenyl group, a hexenyl group, a styryl group and a cinnamyl group. The alkenyl group may be an alkenyl group containing 3 to 8 carbon atoms, such as an allyl group, a butenyl group, a pentenyl group, a hexenyl group and a styryl group, or it may be an alkenyl group containing 4 to 8 carbon atoms, such as a butenyl group, a pentenyl group, a hexenyl group and a styryl group.

The cycloalkyl group containing 3 to 30 carbon atoms and optionally containing a side chain may be a cycloalkyl group containing 3 to 10 carbon atoms and optionally containing a side chain, such as a cyclopropyl group, a cyclobutyl group, a cyclopentyl group, a 2-methylcyclopentyl group, a 3-methylcyclopentyl group, a cyclohexyl group, a 4-methylcyclohexyl group, a 4-ethylcyclohexyl group, a cyclooctyl group and a decahydronaphthyl group (a bicyclo[4,4,0]decyl group), or it may be a cycloalkyl group containing 3 to 6 carbon atoms and optionally containing a side chain.

The aryl group containing 6 to 30 carbon atoms may be an aryl group containing 6 to 18 carbon atoms, such as a phenyl group, a naphthyl group, an azulenyl group, a biphenyl group, an anthracenyl group, a terphenyl group, a phenanthrenyl group, a triphenylenyl group, a chrysenyl group, a pyrenyl group and a tetracenyl group, or it may be an aryl group containing 6 to 12 carbon atoms.

The arylalkyl group containing 7 to 30 carbon atoms may be an arylalkyl group containing 7 to 15 carbon atoms, such as a benzyl group, a phenethyl group (a 2-phenylethyl group), a 9-fluorenyl group, a naphthylmethyl group and a 1-tetralinyl group, or it may be an arylalkyl group containing 7 to 10 carbon atoms.

The alkylaryl group containing 7 to 30 carbon atoms may be an alkylaryl group containing 7 to 20 carbon atoms, such as a tolyl group, a xylyl group, an ethylphenyl group, a propylphenyl group, a butylphenyl group, a pentylphenyl group, a hexylphenyl group, a heptylphenyl group, an octylphenyl group, a nonylphenyl group, a decylphenyl group, an undecylphenyl group and a dodecylphenyl group, or it may be an alkylaryl group containing 7 to 15 carbon atoms, such as a tolyl group, a xylyl group, an ethylphenyl group, a propylphenyl group, a butylphenyl group and a pentylphenyl group.

In the above (iii), the number of the total carbon atoms of the substituents corresponding to $R^3$ to $R^6$ is preferably from 1 to 30, more preferably from 2 to 25, and still more preferably from 4 to 20.

As the above (iii), examples include (iii-A) a linear alkyl group containing 1 to 30 carbon atoms, a branched acyclic alkyl group containing 3 to 30 carbon atoms, an alkenyl group containing 2 to 30 carbon atoms, a cycloalkyl group containing 3 to 30 carbon atoms and optionally containing a side chain, an aryl group containing 6 to 30 carbon atoms, an arylalkyl group containing 7 to 30 carbon atoms, and an alkylaryl group containing 7 to 30 carbon atoms, (iii-B) a group in which one or two or more of the heteroatoms are bound to each of the groups in the (iii-A) by substitution, (iii-C) a group in which one or two or more of the heteroatom-containing substituents are bound to each of the groups in the (iii-A) by substitution, and (iii-D) a group in which one or two or more of the heteroatoms and one or two or more of the heteroatom-containing substituents are bound to each of the groups in the (iii-A) by substitution. As the (iii-C), examples include an alkyl group substituted with an alkoxy group, and an aryl group substituted with an alkoxycarbonyl group or an acyloxy group.

The (iii) hydrocarbon group containing 1 to 30 carbon atoms and optionally containing at least one heteroatom may be a trifluoromethyl group, a trichloromethyl group, a tribromomethyl group, a triiodomethyl group, a 2,4,6-triphenylphenyl group, a 2,6-diisopropylphenyl group, a 9-anthracenyl group, a pentafluoroethyl group, a pentafluorophenyl group, a phenyl group or a benzyl group, for example.

The (iv) is a heteroatom-containing substituent, and it is an atom or group selected from the group consisting of the following: $OR^b$, $C(O)OR^b$, $C(O)OM'$, $C(O)N(R^a)_2$, $C(O)R^b$, $OC(O)R^b$, $SR^b$, $S(O)_2R^b$, $S(O)R^b$, $OS(O)_2R^b$, $SF_5$, $P(O)(OR^b)_{2-y}(R^a)_y$, CN, $N(H)R^a$, $N(R^b)_2$, $Si(OR^a)_{3-x}(R^a)_xOSi(OR^a)_{3-x}(R^a)_x$, $NO_2$, $S(O)_2OM'$, $P(O)(OM')_2$, $P(O)(OR^b)_2M'$ or an epoxy-containing group (where each $R^a$ independently represents a hydrogen atom or a hydrocarbon group containing 1 to 20 carbon atoms; each $R^b$ independently represents a hydrocarbon group containing 1 to 20 carbon atoms; M' represents an alkaline metal, an alkaline earth metal, an ammonium, a quaternary ammonium or a phosphonium; x represents 0, 1, 2 or 3; and y represents 0, 1 or 2).

As the (iv), examples include a hydroxy group, a methoxy group, an ethoxy group, a n-propoxy group, an i-propoxy group, a n-butoxy group, a t-butoxy group, a phenoxy group, a p-methylphenoxy group, a p-methoxyphenoxy group, an ethoxycarbonyl group, a t-butoxycarbonyl group, a phenoxycarbonyl group, a dimethylamide group, an acetyl group, a benzoyl group, an acetoxy group, a methylthio group, an ethylthio group, a n-propylthio group, an i-propylthio group, a n-butylthio group, a t-butylthio group, a phenylthio group, a methylsulfonyl group, a phenylsulfonyl group, a methylsulfonyloxy group, a phenylsulfonyloxy group, a pentafluorosulfanyl group ($SF_5$), a dimethylphosphate group, a cyano group, an amino group ($NH_2$), a methylamino group, a dimethylamino group, a diethylamino group, a di-n-propylamino group, a cyclohexylamino group, a methylethylamino group, a methyl-n-propylamino group, a methylcyclohexylamino group, a carbazolyl group, a piperidyl group, a trimethylsilyl group, a triethylsilyl group, a dimethylphenylsilyl group, a trimethoxysilyl group, a triethoxysilyl group, a trimethylsilyloxy group, a trimethoxysiloxy group, sodium carboxylate, sodium sulfonate, potassium sulfonate, sodium phosphate and potassium phosphate.

$R^3$, $R^4$, $R^5$ and $R^6$ are optionally bound to adjacent substituents to form a 5- to 8-membered alicyclic ring or a 5-to 8-membered heterocyclic ring containing at least one heteroatom selected from the group consisting of an oxygen atom, a nitrogen atom and a sulfur atom. An aromatic ring may be included in the fused ring of the formed ring structure. The ring may be formed by 1,2-cyclopentylene, 1,2-cyclohexylene, 1-oxo-2,3-cyclopentylene, 1-oxo-2,3-cyclohexylene, 1,2-dihydroacenaphthylene and 9,10-dihydroanthracenylene, for example.

From the viewpoint of the stability of the ligand, at least one selected from the group consisting of $R^5$ and $R^6$ is preferably the atom or group selected from the group consisting of the above (i), (iii) and (iv) ; moreover, $R^5$ is preferably the atom or group selected from the group consisting of the above (i) and (iii), and $R^6$ is preferably the atom or group selected from the group consisting of the above (i), the above (iii), $C(O)OR^b$, $C(O)N(R^a)_2$, $C(O)R^b$, $S(O)_2R^b$ and $P(O)(OR^b)_{2-y}(Ra)_y$.

At least one selected from the group consisting of $R^5$ and $R^6$ adjacent to $X^1$, is particularly preferably an electron-withdrawing group, since the performance of the olefin polymerization catalyst improves. Both $R^5$ and $R^6$ adjacent to $X^1$ may be an electron-withdrawing group each. As the electron-withdrawing group, a trifluoromethyl group, a pentafluorophenyl group, a methoxycarbonyl group, a phenoxycarbonyl group, $SF_5$, a tosyl group, a mesyl group, a nitro group, a

methylcarbonyl group, a phenylcarbonyl or the like is preferably used.

From the viewpoint of synthesis difficulty and economic rationality, at least one selected from the group consisting of $R^3$ and $R^4$ may be the atom or group selected from the group consisting of the above (i), (iii) and (iv), and at least one of $R^3$ and $R^4$ may be a hydrogen atom.

n is 0, 1, 2, 3 or 4, and when n is 0, $E^1$ is directly bound to a carbon atom to which $X^1$, $R^5$ and $R^6$ are bound. The value of n relates to the number of the carbon atoms of the carbon chain connecting $E^1$ with $X^1$. From the viewpoint of the stability of the structure of the complex, n may be 0, 1 or 2. Since the ring becomes a 5-membered ring and stabilizes the structure of the complex, n is preferably 1.

In the general formula (A), $R^1$ represents a hydrocarbon group represented by the following general formula (B) or (C):

[Chem. 12]

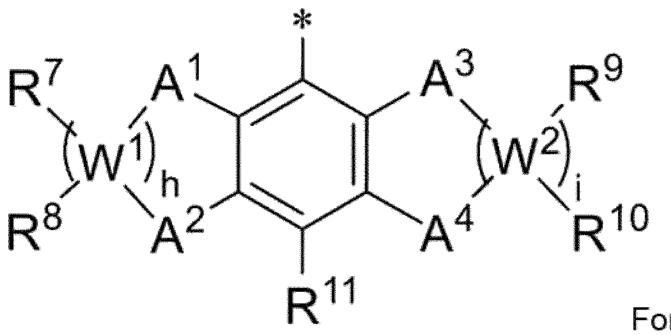

Formula (B)

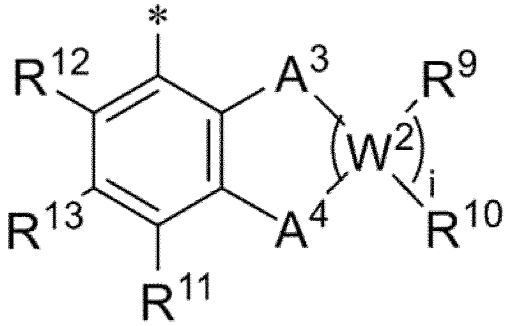

Formula (C)

[where

* represents a bond with $E^1$;

$R^7$, $R^8$, $R^9$, $R^{10}$, $R^{11}$, $R^{12}$ and $R^{13}$ each independently represent the atom or group selected from the group consisting of the above (i) to (iv) defined in the above formula (A), and $R^7$, $R^8$, $R^9$ and $R^{10}$ are optionally bound to adjacent substituents to form a 5-to 8-membered alicyclic ring, a 5- to 8-membered aromatic ring, or a 5- to 8-membered heterocyclic ring containing at least one heteroatom selected from the group consisting of an oxygen atom, a nitrogen atom and a sulfur atom;

$A^1$, $A^2$, $A^3$ and $A^4$ each independently represent an oxygen atom, a sulfur atom, $-C(R)_2-$, $-S(O)-$, $-S(O)_2-$, $-N(R)-$, $-P(R)-$ or - P(O)(R)- (where each R independently represents a hydrogen atom or a hydrocarbon group containing 1 to 20 carbon atoms and optionally containing at least one heteroatom);

in the formula (B), at least two selected from the group consisting of $A^1$, $A^2$, $A^3$ and $A^4$ are $-C(R)_2-$;

in the formula (C), at least one selected from the group consisting of $A^3$ and $A^4$ is $-C(R)_2-$ and at least one selected from the group consisting of $R^{12}$ and $R^{13}$ is the atom or group selected from the group consisting of the above (i) and (iii), or in the formula (C), both $A^3$ and $A^4$ are other than $-C(R)_2-$ and both $R^{12}$ and $R^{13}$ are the atom or group selected from the group consisting of the above (i) and (iii);

$W^1$ and $W^2$ each independently represent a carbon atom, a silicon atom, a nitrogen atom, a phosphorus atom, a boron atom, an oxygen atom, -P(O)- or $-S(O)_2-$, and when it is a nitrogen atom, a phosphorus atom, a boron atom or -P(O)-, $R^8$ and $R^{10}$ are absent, and when it is an oxygen atom or $-S(O)_2-$, $R^7$ and $R^8$ are absent, as well as $R^9$ and $R^{10}$;

h and i are each independently an integer from 1 to 6, and when two or more $W^1$s, $W^2$s, $R^7$s, $R^8$s, $R^9$s or $R^{10}$s are each

present, they may be the same or different from each other.]

In the formulae (B) and (C), $A^1$, $A^2$, $A^3$ and $A^4$ each independently represent an oxygen atom, a sulfur atom, $-C(R)_2-$, -S(O)-, $-S(O)_2-$, -N(R)-, -P(R)- or -P(O)(R)- (where each R independently represents a hydrogen atom or a hydrocarbon group containing 1 to 20 carbon atoms and optionally containing at least one heteroatom). The hydrocarbon group containing 1 to 20 carbon atoms and optionally containing at least one heteroatom as R may be the same as a hydrocarbon group containing 1 to 20 carbon atoms and optionally containing at least one heteroatom, which is included in the examples of the above (iii). From the viewpoint of synthesis difficulty and economic rationality, R may be a hydrogen atom or a hydrocarbon group containing 1 to 20 carbon atoms; R may be a hydrogen atom or a hydrocarbon group containing 1 to 10 carbon atoms; R may be a hydrogen atom or a hydrocarbon group containing 1 to 6 carbon atoms; or R may be a hydrogen atom or a hydrocarbon group containing 1 to 3 carbon atoms.

In the formulae (B) and (C), $W^1$ and $W^2$ each independently represent a carbon atom, a silicon atom, a nitrogen atom, a phosphorus atom, a boron atom, an oxygen atom, -P(O)- or $-S(O)_2-$, and when it is a nitrogen atom, a phosphorus atom, a boron atom or -P(O)-, $R^8$ and $R^{10}$ are absent, and when it is an oxygen atom or $-S(O)_2-$, $R^7$ and $R^8$ are absent, as well as $R^9$ and $R^{10}$.

In the formulae (B) and (C), from the viewpoint of the stability of the ligand, $W^1$ and $W^2$ may each independently be a carbon atom or a silicon atom, and $W^1$ and $W^2$ may each independently be a carbon atom.

In the formulae (B) and (C), $R^7$, $R^8$, $R^9$, $R^{10}$, $R^{11}$, $R^{12}$ and $R^{13}$ each independently represent the atom or group selected from the group consisting of the above (i) to (iv) defined in the above formula (A).

From the viewpoint of synthesis difficulty and economic rationality, $R^7$, $R^8$, $R^9$, $R^{10}$ and $R^{11}$ may each independently be the atom or group selected from the group consisting of the above (i), (iii) and (iv). From the viewpoint of synthesis difficulty and economic rationality, the (iii) in $R^7$, $R^8$, $R^9$, $R^{10}$ and $R^{11}$ may be an alkyl group containing 1 to 10 carbon atoms or an aryl group containing 6 to 10 carbon atoms.

$R^7$, $R^8$, $R^9$ and $R^{10}$ may each independently be bound to adjacent substituents to form, in combination with $W^1$ or $W^2$ to which they are bound, a 5- to 8-membered alicyclic ring, a 5- to 8-membered aromatic ring, or a 5- to 8-membered heterocyclic ring containing at least one heteroatom selected from the group consisting of an oxygen atom, a nitrogen atom and a sulfur atom. For example, in the case where h or i is 2 and two $W^1$s or $W^2$s are present, $R^7$, $R^8$, $R^9$ and $R^{10}$ may each independently be bound to adjacent substituents to form, in combination with the two $W^1$s or $W^2$s to which they are bound, a 5- to 8-membered alicyclic ring, a 5- to 8-membered aromatic ring, or a 5- to 8-membered heterocyclic ring.

$R^7$, $R^8$, $R^9$ and $R^{10}$ may form an alicyclic ring in combination with $W^1$ or $W^2$ to which they are bound, or they may be bound to adjacent substituents to form an alkylene group containing 4 to 7 carbon atoms. For example, adjacent $R^7$ and $R^8$ may be an alkylene group containing 5 carbon atoms to form a 6-membered ring in combination with $W^1$ to which they are bound. $R^7$, $R^8$, $R^9$ and $R^{10}$ may each independently be bound to the aryl groups of adjacent substituents to form a ring in combination with $W^1$ or $W^2$ to which they are bound. For example, adjacent $R^7$ and $R^8$ may be a biphenylene group to form a 5-membered ring in combination with $W^1$ to which they are bound. In this case, when $W^1$ is a carbon atom, a fluorenylidene is formed by $W^1$, $R^7$ and $R^8$.

Also, $R^7$, $R^8$, $R^9$ and $R^{10}$ may form an alicyclic ring in combination with two $W^1$s or $W^2$s to which they are bound, or they may be bound to adjacent substituents to form an alkylene group containing 3 to 6 carbon atoms or an alkylene group containing 3 or 4 carbon atoms to form a 5- or 6-membered ring. Also, $R^7$, $R^8$, $R^9$ and $R^{10}$ may form an aromatic ring containing 6 to 12 carbon atoms, in combination with two $W^1$s or $W^2$s to which they are bound.

Also, the ring may be a heterocyclic ring in which at least one carbon atom of the alicyclic or aromatic ring is substituted with a heteroatom selected from the group consisting of an oxygen atom, a nitrogen atom and a sulfur atom.

Also, the alicyclic, aromatic or heterocyclic ring formed by $R^7$, $R^8$, $R^9$ and $R^{10}$ may contain the atom or group selected from the group consisting of the above (ii) to (iv) defined in the above formula (A) as a substituent. The substituent may be a halogen atom.

From the viewpoint of synthesis difficulty and economic rationality, $R^{11}$ may be a hydrogen atom.

From the viewpoint of synthesis difficulty and economic rationality, $R^{12}$ and $R^{13}$ may each independently be the atom or group selected from the group consisting of the above (i), (iii) and (iv). From the viewpoint of synthesis difficulty and economic rationality, the (iii) in $R^{12}$ and $R^{13}$ may be an alkyl group containing 1 to 10 carbon atoms, an aryl group containing 6 to 10 carbon atoms, or the like. From the viewpoint of synthesis difficulty and economic rationality, the (iv) in $R^{12}$ and $R^{13}$ may be $OR^b$, $C(O)OR^b$, $C(O)N(R^a)_2$, $C(O)R^b$, $OC(O)R^b$, $SR^b$, $S(O)_2R^b$, $S(O)R^b$, $OS(O)_2R^b$, $SF_5$, $P(O)(OR^b)_{2-y}(R^a)_y$, CN, $N(H)R^a$, $N(R^b)_2$, $Si(OR^a)_{3-x}(R^a)_x$, $OSi\ (OR^a)_{3-x}(R^a)_x$, $NO_2$ or the like.

In the formulae (B) and (C), h and i are each independently an integer from 1 to 6, and when two or more $W^1$s, $W^2$s, $R^7$s, $R^8$s, $R^9$s or $R^{10}$s are each present, they may be the same or different from each other.

From the viewpoint of synthesis difficulty and economic rationality, h and i may each independently be an integer from 1 to 3, may be 1 or 2, and may be 1.

In the formula (B), at least two selected from the group consisting of $A^1$, $A^2$, $A^3$ and $A^4$ are $-C(R)_2-$.

In the formula (B), from the viewpoint of synthesis difficulty and economic rationality, those other than $-C(R)_2-$ may

be an oxygen atom, a sulfur atom or -N(R)- each, and they may be an oxygen atom each.

In the formula (B), two of $A^1$, $A^2$, $A^3$ and $A^4$ may be $-C(R)_2$-each, and two of them may be a group other than $-C(R)_2$- each. Alternatively, $A^2$ and $A^4$ may be $-C(R)_2$- each, and $A^1$ and $A^3$ may be a group other than $-C(R)_2$- each.

In the formula (C), at least one selected from the group consisting of $A^3$ and $A^4$ is $-C(R)_2$- and at least one selected from the group consisting of $R^{12}$ and $R^{13}$ is the atom or group selected from the group consisting of the above (i) and (iii), or in the formula (C), both $A^3$ and $A^4$ are other than $-C(R)_2$- and both $R^{12}$ and $R^{13}$ are the atom or group selected from the group consisting of the above (i) and (iii).

In the formula (C), from the viewpoint of synthesis difficulty and economic rationality, one other than $-C(R)_2$- may be an oxygen atom, a sulfur atom or -N(R)-, and it may be an oxygen atom.

In the formula (C), especially, one of $A^3$ and $A^4$ may be $-C(R)_2$- and the other may be other than $-C(R)_2$-, and one of $R^{12}$ and $R^{13}$ may be the (i) hydrogen atom or the (iii) hydrocarbon group containing 1 to 30 carbon atoms and optionally containing at least one heteroatom and the other may be the (iv) heteroatom-containing group. Alternatively, both $A^3$ and $A^4$ may be other than $-C(R)_2$- and both $R^{12}$ and $R^{13}$ may be the (i) hydrogen atom or the (iii) hydrocarbon group containing 1 to 30 carbon atoms and optionally containing at least one heteroatom. Alternatively, $A^3$ may be other than $-C(R)_2$-; $A^4$ may be $-C(R)_2$-; $R^{12}$ may be the (iv) heteroatom-containing group; and $R^{13}$ may be the (i) hydrogen atom or the (iii) hydrocarbon group containing 1 to 30 carbon atoms and optionally containing at least one heteroatom.

In the general formula (A), $R^2$ represents a hydrocarbon group containing 1 to 20 carbon atoms and optionally containing at least one heteroatom, which is different from the hydrocarbon group represented by the general formula (B) or (C); l is 1 or 2, and when l is 2, $R^2$ is absent.

The hydrocarbon group containing 1 to 20 carbon atoms and optionally containing at least one heteroatom as $R^2$ may be the same as a hydrocarbon group containing 1 to 20 carbon atoms and optionally containing at least one heteroatom, which is included in the examples of the above (iii).

$R^2$ may be a hydrocarbon group containing 3 to 20 carbon atoms. For example, a n-propyl group, an isopropyl group, an isobutyl group, a t-butyl group, a 3-pentyl group, a 2,6-dimethyl-4-heptyl group, a cyclopentyl group, a cyclohexyl group, a cycloheptyl group, a norbornyl group, an adamantyl group, a (1R, 2S, 5R)-2-isopropyl-5-methylcyclohexane-1-yl group (a menthyl group), a phenyl group, a 2-methoxyphenyl group, a 2,6-diethylphenyl group (DEP), a 2,6-dimethoxyphenyl group (DMP), a 2',6'-dimethoxy[1,1'-biphenyl]-2-yl group, a (1R, 2S, 5R)-2-isopropyl-5-methylcyclohexane-1-yl group or the like is preferably used.

From the viewpoint of synthesis difficulty and economic rationality, l may be 2.

In the general formula (A), Z is a hydrogen atom, a leaving group or a cation having a valence of 1 or more and 4 or less, and m is an integer more than or equal to 1 and less than or equal to a valence of Z. When m is 1, Z may be a hydrogen atom, a lithium ion, a sodium ion, a potassium ion or the like, for example. When m is 2, Z may be a magnesium ion, a calcium ion, a zinc ion or the like, for example. As the leaving group, examples include a hydrogen atom, a $R^bS(O)_2$ group (where $R^b$ represents a hydrocarbon group containing 1 to 20 carbon atoms), a $C(F)_3S(O)_2$ group, a $R^bS(O)_2$ group and a $TiOR^b$ group. As the cation, examples include an ammonium, a quaternary ammonium, a phosphonium, and metal ions of the Groups 1 to 14 of the periodic table. Of them, preferred are a hydrogen atom, $NH^{4+}$, $(R^b)_4N^+$ (where $R^b$ is as described above; four $R^b$s may be the same or different; and the same shall apply hereinafter), $(R^b)_4P^+$, $Li^+$, $Na^+$, $K^+$, $Cu^+$, $Ag^+$, $Au^+$, $Mg^{2+}$, $Ca^{2+}$ and $Al^{3+}$, and more preferred are a hydrogen atom, $(R^b)_4N^+$, $Li^+$, $Na^+$, $K^+$ and $Ag^+$.

As the compound represented by the general formula (A), examples include, but are not limited to, the following compounds.

[Chem. 13]

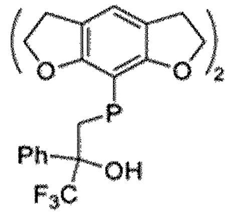
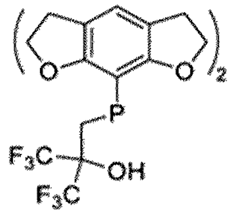
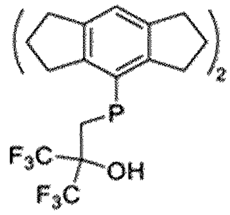

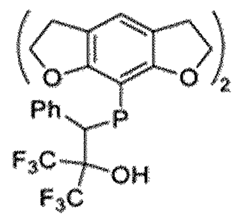
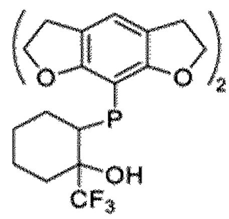
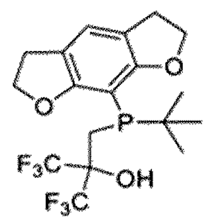
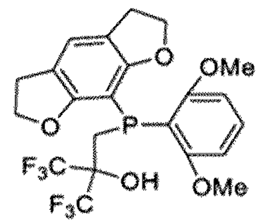

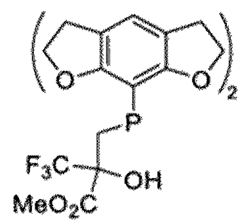
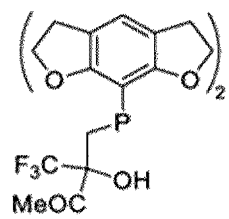
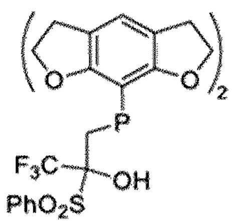
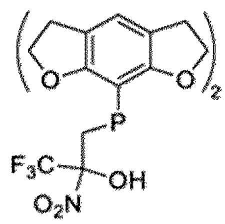

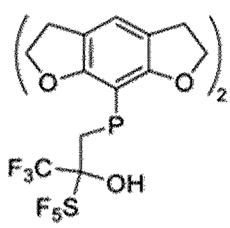
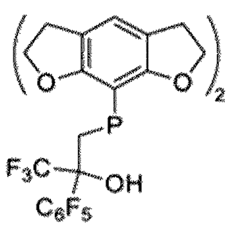
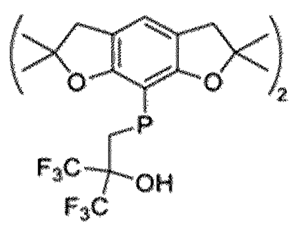

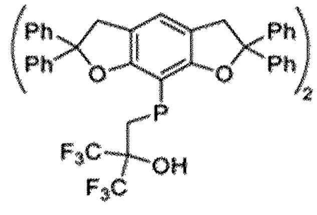
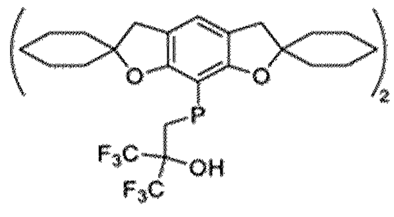
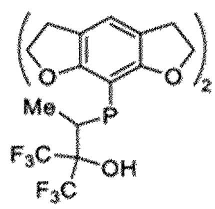
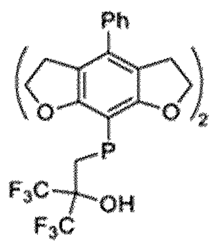

[Chem. 14]

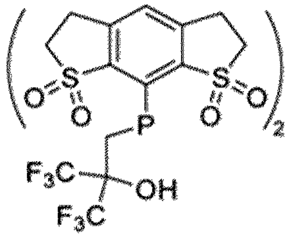
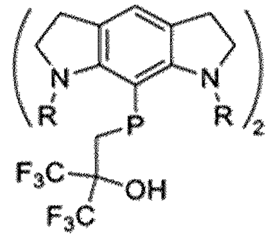
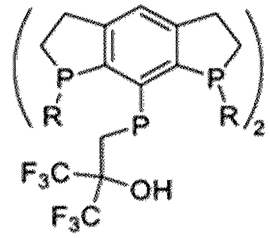
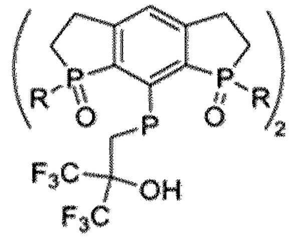

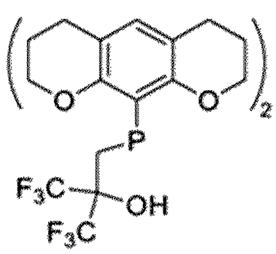
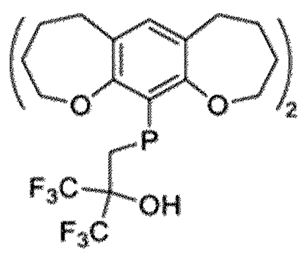
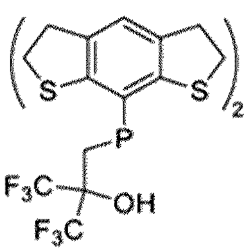
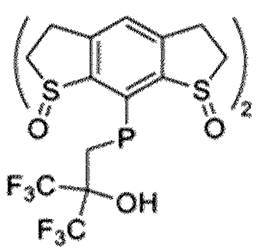

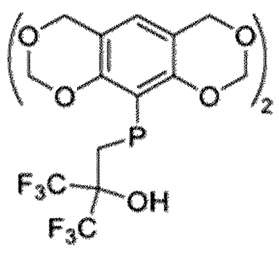
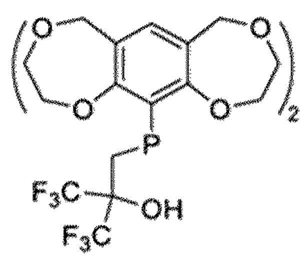

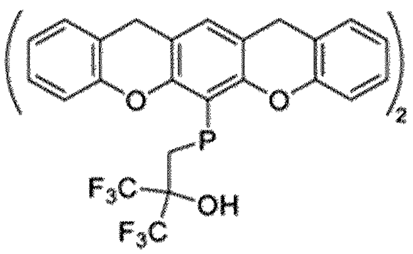
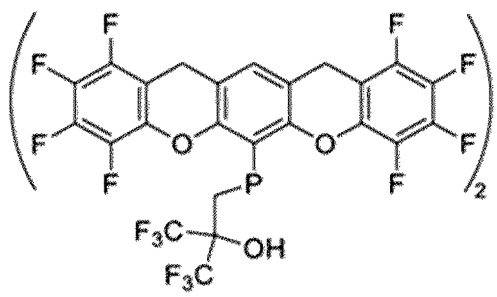

[Chem. 15]

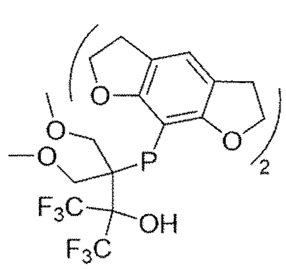 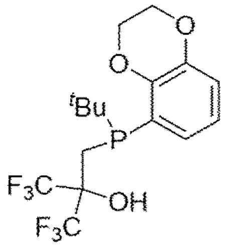 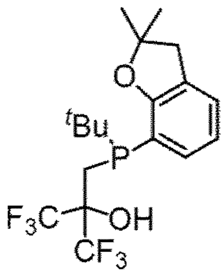 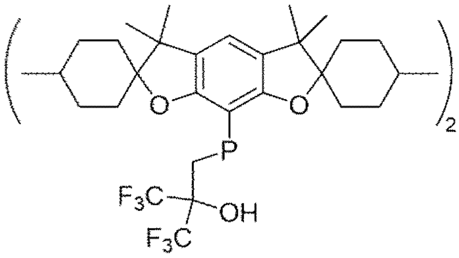

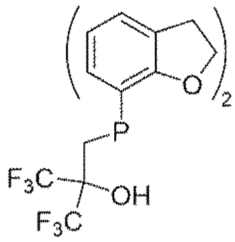 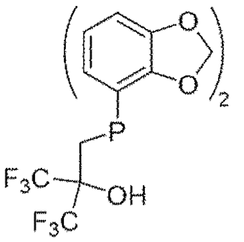 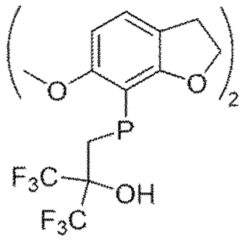 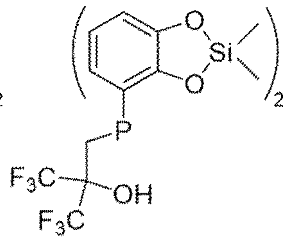

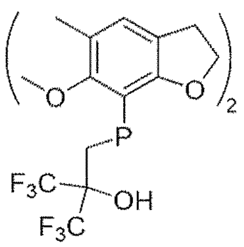 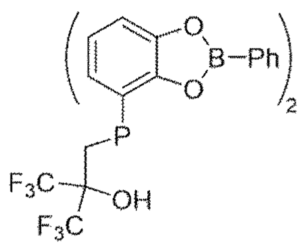 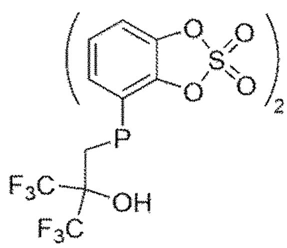 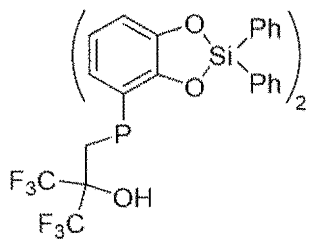

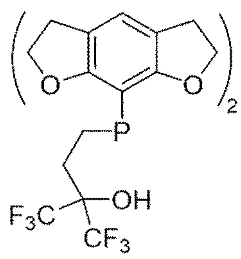 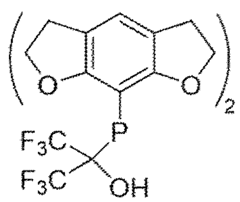 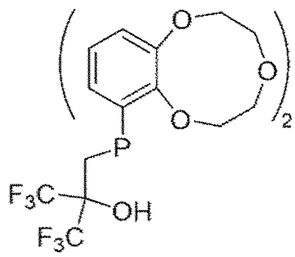 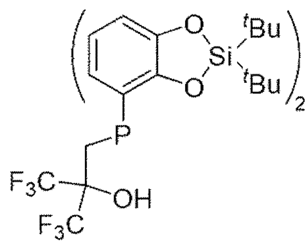

(In the formulae, R is a hydrogen atom or a hydrocarbon group containing 1 to 20 carbon atoms and optionally containing at least one heteroatom.)

The compound represented by the general formula (A) can be synthesized by a conventionally-known synthesis method. For example, the compound represented by the general formula (A) can be synthesized by reacting $E^1H(R^1)_l(R^2)_{2-l}$ or the like with an epoxy in the presence of a base or an acid. Also, the compound represented by the general formula (A) can be synthesized by reacting $E^1CH_3(R^1)_l(R^2)_{2-l}$ with a ketone in the presence of a base. For example, referable typical documents include Patent Document 5, Non-Patent Document 7, and Journal of Fluorine Chemistry 2002, 117, P121-129.

As the compound represented by $E^1H(R^1)_l(R^2)_{2-l}$, a commercially-available product can be appropriately selected and used. When such a product is not available, the compound can be synthesized by reacting a phosphine halide with a nucleophilic agent (such as organolithium and organomagnesium) to synthesize $E^1X(R^1)_l(R^2)_{2-l}$ (where X is a halogen atom) and allowing a hydride reducing agent (such as lithium aluminum hydride) to act thereon. For example, referable typical documents include JP-A No. 2021-113174.

A commercially-available product may be appropriately selected and used as a compound for introducing the substituent represented by the general formula (B) or (C) to $R^1$. When such a product is not available, the compound can be synthesized by an intermolecular or intramolecular cyclization reaction. As such a cyclization reaction, examples include a nucleophilic substitution reaction of a dihalogen molecule, a Friedel-Crafts reaction, and a cyclization reaction using a transition metal. For example, referable typical documents include RSC Advances 2014, 4, P16312-16319, Bioorg. Med. Chem. Lett. 2014, 24, P2379-2382, Chem. Eur. J. 2013, 19, P17349-17357, and Org. Biomol. Chem. 2018, 16, P8976-8983.

The compound represented by the general formula (A) functions as a ligand that is able to form a complex with the transition metal compound represented by the general formula (E) or (F) described below. Especially, the compound represented by the general formula (A) where $X^1$ is an oxygen atom and $E^1$ is a phosphorus atom, may be referred to as an alkylene linked phosphine alkoxide (ALPHA) ligand, since it has a structure in which a phosphorus is bound to an oxygen via an alkylene group.

I-2. Olefin polymerization catalyst composition

The olefin polymerization catalyst composition of the first embodiment of the present invention is an olefin polymerization catalyst composition comprising the compound represented by the general formula (A) and a transition metal compound represented by the following general formula (E) or (F):

[Chem. 16]

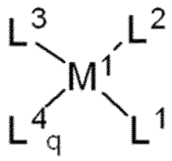

Formula (E)

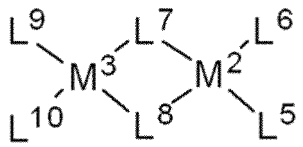

Formula (F)

[where

$M^1$, $M^2$ and $M^3$ each independently represent a nickel atom or a palladium atom; $L^1$, $L^2$, $L^3$, $L^4$, $L^5$, $L^6$, $L^9$ and $L^{10}$ each independently represent a ligand coordinated to $M^1$, $M^2$ or $M^3$, and $L^7$ and $L^8$ represent a ligand coordinated to $M^2$ and $M^3$;
q is 0, 1 or 2;
$L^1$ and $L^2$ are optionally bound to each other to form a ring containing $M^1$;
$L^3$ and $L^4$ are optionally bound to each other to form a ring containing $M^1$;
$L^5$ and $L^6$ are optionally bound to each other to form a ring containing $M^2$; and
$L^9$ and $L^{10}$ are optionally bound to each other to form a ring containing $M^3$.]

In the olefin polymerization catalyst composition of the first embodiment of the present invention, the compound represented by the general formula (A) may be the same as the above-described compound represented by the general formula (A) of the first embodiment. Accordingly, it is not described here.

In the compound represented by the general formula (A), as $R^1$, at least one hydrocarbon group represented by the general formula (B) or (C) is bound to $E^1$ such as a phosphorus atom. In the hydrocarbon group represented by the general formula (B) or (C), since the substituents $A^1$ and $A^3$, which are in the ortho-positions relative to the carbon atom bound to $E^1$ such as a phosphorus atom, form a cyclic structure, free rotation of the substituents in the ortho-positions is suppressed. On the other hand, the hydrocarbon group represented by the general formula (B) or (C) has appropriate bulkiness. When a phenyl group containing freely rotatable substituents in the two ortho-positions thereof, is bound to $E^1$ and when the compound is used as a ligand, steric hindrance in the vicinity of the transition metal, which is the active center, becomes too high; therefore, it is though that the activity of the catalyst is likely to decrease. When an unsubstituted phenyl group is bound to $E^1$ and when the compound is used as a ligand, due to poor steric hindrance in the vicinity of the transition metal, it is thought that the molecular weight of the polymer is less likely to increase. When the compound represented by the general formula (A) is used as the ligand of the transition metal compound, appropriate steric hindrance can be retained in the vicinity of the transition metal; therefore, it is thought that while keeping a high level of molecular weight, the activity of the catalyst can be increased.

Also in the compound represented by the general formula (A), since the substituents of the phenyl group bound to $E^1$ such as a phosphorus atom are substituents in each of which a heteroatom such as an oxygen atom is contained in the ring structure, it is thought that the coordination force of the heteroatom such as an oxygen atom with respect to the central metal of the catalyst is further increased; the catalyst is highly activated; and the molecular weight of the polymer thus

obtained is increased.

In the general formula (E) or (F), $M^1$, $M^2$ and $M^3$ each independently represent a nickel atom or a palladium atom. The valence of M means the formal oxidation number used in organometallic chemistry. That is, when an electron pair in a bond in which certain elements are involved is assigned to an element having greater electronegativity, the valence means a number of charge remaining on an atom of the element. Due to availability and low cost, a nickel atom is preferred.

In the general formula (E) or (F), $L^1$, $L^2$, $L^3$, $L^4$, $L^5$, $L^6$, $L^9$ and $L^{10}$ each independently represent a ligand coordinated to $M^1$, $M^2$ or $M^3$, and they represent an electron-donating ligand having a valence of -1 or a neutral electron-donating ligand.

The electron-donating ligand having a valence of -1 is an electrically negative ligand forming a $\sigma$ bond with M (the central metal), or it is a ligand that donates a $\pi$ electron delocalized on 3 or more carbon atoms. An example of a neutral electron-donating ligands is an electroneutral ligand which is able to form a coordinate bond by coordinating an unpaired electron with M. The ligand is a molecule containing an unpaired electron-containing atom. As the unpaired electron-containing atom, examples include a nitrogen atom, a phosphorus atom, an arsenic atom, an oxygen atom, a sulfur atom and a selenium atom. Examples of other neutral electron-donating ligands include a molecule such as ethylene and cyclooctadiene (cod), which forms a $\pi$-donating bond by donating a n electron, and a molecule such as dibenzylideneacetone (dba), which contains a heteroatom and an olefin both of which coordinate to a metal. As $L^1$ to $L^6$, $L^9$ and $L^{10}$, a known neutral ligand for metal complexes, such as acetonitrile, isonitrile, carbon monoxide, ethylene and tetrahydrofuran, or a $\pi$ electron-donating ligand such as allyl and cyclopentadienyl can be used. Also, a molecule represented by $E^2R'R''R'''$ or $X^2R'R''$ can be used as the ligand. In the formulae, $E^2$ represents N, P or As; $X^2$ represents O, S or Se; R', R'' and R''' are each independently a hydrogen atom, an alkyl, alicyclic, alkoxy, aryl or aryloxy group containing 1 to 30 carbon atoms and optionally being substituted, or an amino or silyl group in which at least one hydrogen atom is substituted with a hydrocarbon containing 1 to 30 carbon atoms; R' and R'' may be linked to form a heterocyclic structure; R', R'' and R ''' may be linked to form an aromatic heterocyclic structure containing $E^2$. In addition, $L^1$ and $L^2$ are, $L^3$ and $L^4$ are, $L^5$ and $L^6$ are, and $L^9$ and $L^{10}$ are optionally bound to each other to form a ring containing $M^2$ or $M^3$. When a ring is formed by the groups, the number of the members of the ring including M ranges from a 5-membered ring at a minimum up to a 10-membered ring.

$L^1$ to $L^6$, $L^9$ and $L^{10}$ may contain an electron-donating ligand having a valence of -1. From the viewpoint of ease of causing a metal complex-forming reaction, $L^1$ to $L^6$, $L^9$ and $L^{10}$ are preferably selected so that the valence of the metal complex is 1 or 2. Accordingly, the number of the electron-donating ligand having a valence of -1 in $L^1$ to $L^6$, $L^9$ and $L^{10}$ is preferably 0 to 2.

When $L^1$ to $L^6$, $L^9$ and $L^{10}$ each independently represent an electron-donating ligand having a valence of -1, it may be a hydrogen atom, a halogen atom or a hydrocarbon group containing 1 to 20 carbon atoms and optionally containing at least one heteroatom. The structure of the hydrocarbon moiety may be any of linear, branched or cyclic structures, and it may form a ring containing a heteroatom. The number of the carbon atoms is preferably from 1 to 16, and more preferably from 1 to 10.

As the electron-donating ligand having a valence of -1 in $L^1$ to $L^6$, $L^9$ and $L^{10}$, examples include a hydride group, a methyl group, an ethyl group, a n-propyl group, an isopropyl group, a n-butyl group, an isobutyl group, a neopentyl group, a n-hexyl group, a n-octyl group, a n-decyl group, a n-dodecyl group, a cyclopentyl group, a cyclohexyl group, a benzyl group, a trimethylsilylmethyl group, a phenyl group, a p-methylphenyl group, a p-fluorophenyl group, a fluoride group, a chloride group, a bromide group and an iodine group. Of these examples, preferred are a hydride group, a methyl group, a neopentyl group, a benzyl group, a trimethylsilylmethyl group, a phenyl group, a p-fluorophenyl group, a chloride group, a bromide group and an iodine group.

Besides them, each of $L^1$ to $L^6$, $L^9$ and $L^{10}$ is preferably a phosphine, a pyridine, a piperidine, an alkyl ether, an aryl ether, an alkyl aryl ether, a cyclic ether, an alkyl nitrile derivative, an aryl nitrile derivative, an alcohol, an amide, an aliphatic ester, an aromatic ester, an amine, a cyclic unsaturated hydrocarbon or the like. It is more preferably a phosphine, a pyridine, a cyclic ether, an aliphatic ester, an aromatic ester, a cyclic olefin or the like, and it is particularly preferably trialkylphosphine, triarylphosphine, pyridine, lutidine (dimethylpyridine), picoline (methylpyridine) or $R^bC(O)O^-$ (where $R^b$ is as defined above). As the case where $L^1$ and $L^2$ are, $L^3$ and $L^4$ are, $L^5$ and $L^6$ are, and $L^9$ and $L^{10}$ are optionally bound to each other to form a ring containing $M^2$ or $M^3$, examples include a cycloocta-1-enyl group, an acetylacetonate group, a tetramethylethylenediamine group and a 1,2-dimethoxyethane group, which are also preferred embodiments.

$L^7$ and $L^8$ represent a ligand coordinated to $M^2$ and $M^3$, which are bound to $M^2$ and $M^3$ in the form called "3-center 4-electron bond". The ligand as $L^7$ or $L^8$ may be, for example, a hydrogen atom, a halogen atom, a hydrocarbon group containing 1 to 4 carbon atoms, an alkoxy group containing 1 to 6 carbon atoms, a thioalkoxy group containing 1 to 6 carbon atoms, a hydrocarbon group -substituted amino group containing 1 to 6 carbon atoms, and an acetyl group. Each of $L^7$ and $L^8$ is preferably a fluoride group, a chloride group, a bromide group, an iodide group, a methyl group, an ethyl group, a propyl group, a methoxy group, a phenoxy group, a dimethylamide group, a hydride group, a thiomethoxy group, a thiophenoxy group or an acetyl group, more preferably a fluoride group, a chloride group, a bromide group, an iodine group, a methyl group, a methoxy group, a phenoxy group, a hydride group, a thiomethoxy group, a thiophenoxy group or

an acetyl group, and still more preferably a chloride group, a bromide group, an iodine group, a methoxy group, a phenoxy group or an acetyl group.

In the general formula (E), q is a value of 0, 1 or 2.

As the compound represented by the general formula (E) or (F), examples include, but are not limited to, the following compounds; moreover, examples include $Ni(CH_2C(H)CH_2)_2$, $Ni(CH_2C(Me)CH_2)_2$, $Ni(CH_2Si(Me)_3)_2(Py)_2$ (hereinafter, Py means pyridine), $Ni(CH_2Si(Me)_3)_2(Lut)_2$(hereinafter, Lut means 2,6-lutidine), $NiPh_2(Py)_2$, $NiPh_2(Lut)_2$ and $Pd(OC(O)CH_3)_2$.

These compounds are thought to form a complex with the compound represented by the general formula (A).

[Chem. 17]

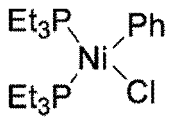 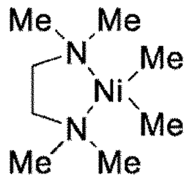 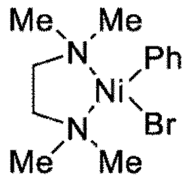 Pd(dba)$_2$ 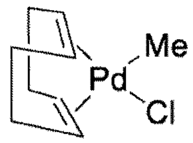

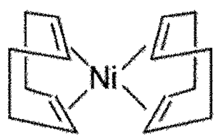 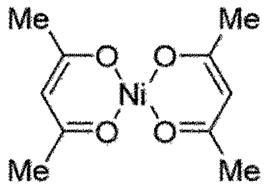

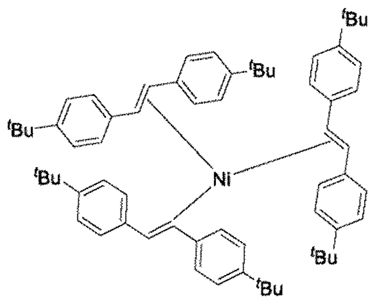

Pd$_2$(dba)$_3$ 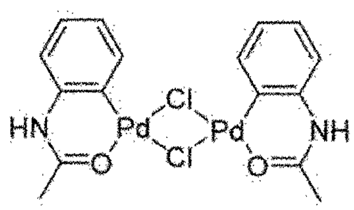

The compound represented by the general formula (A) can be used as a catalyst for olefin polymerization reaction, in the state of a composition with the transition metal compound represented by the general formula (E) or (F) or in the state of a metal complex which is a reaction product with the transition metal compound. In the olefin polymerization reaction, the product may be isolated and used as a catalyst after the compound represented by the general formula (A) is reacted with the transition metal compound represented by the general formula (E) or (F), or the product may be directly used in the polymerization reaction, without isolating the product from the reaction system or without washing the product. To react these compounds, a method known for the synthesis of a metal complex can be used. The operation is preferably entirely carried out in an inert gas. The reaction is carried out in a homogeneous solvent. As the solvent, a common hydrocarbon-based reaction solvent can be used, and it is preferably toluene. The concentration of the transition metal compound in the reaction solvent can be freely determined, as long as the upper limit is the saturation concentration. The concentration is preferably within a range of from 1 mM to 50 mM. The order of mixing the compound represented by the general formula (A) (a ligand) and the transition metal compound represented by the general formula (E) or (F) is not

limited. The solvent can be added to a mixture of the ligand and the transition metal compound, both of which are solid, or the transition metal compound can be dissolved and then added to the ligand which is solid. The mixing ratio of the ligand to the transition metal compound (the ligand : the metal) is preferably within a range of from 1:1 to 1:10. The mixing temperature can be appropriately determined within a range of from 20°C to the boiling point of the solvent. The mixing temperature is preferably within a range of from 35°C to 45°C. The mixing time is preferably determined within a range of from one minute to 24 hours, and more preferably within a range of from 10 minutes to 30 minutes. One aspect of the present invention is a method for producing an olefin polymerization catalyst, comprising the step of reacting the compound represented by the general formula (A) with the transition metal compound represented by the general formula (E) or (F).

I-3. Metal complex

In another aspect, the first embodiment of the present invention provides a metal complex represented by the following general formula (D):

[Chem. 18]

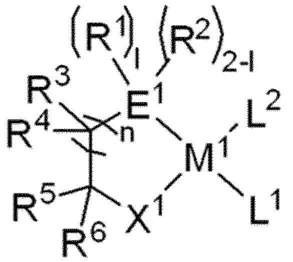

Formula (D)

[where
$X^1$, $E^1$, n, $R^1$, $R^2$, l, $R^3$, $R^4$, $R^5$ and $R^6$ are as defined in the above [1-1], that is, in the compound represented by the general formula (A) of the first embodiment, and $M^1$, $L^1$ and $L^2$ are as defined in the transition metal compound represented by the general formula (E) or (F).]

As the metal complex represented by the general formula (D), examples include the following complexes. However, they are merely examples, and the complex in the method of the present invention is not limited to the following examples.

[Chem. 19]

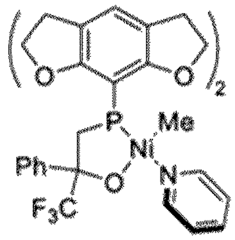
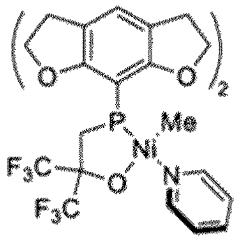
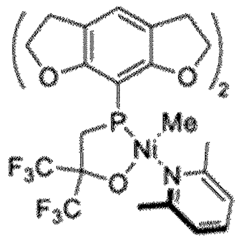
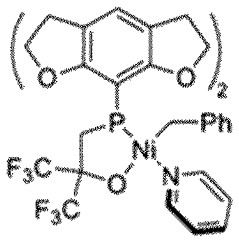

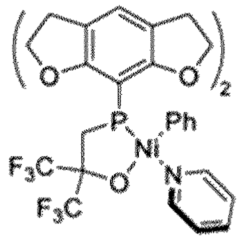
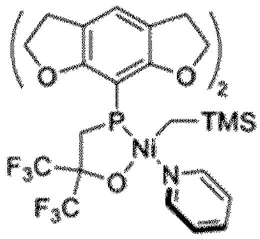
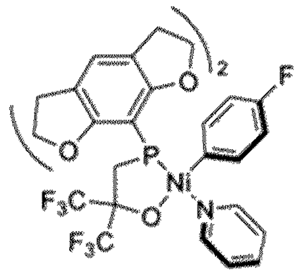
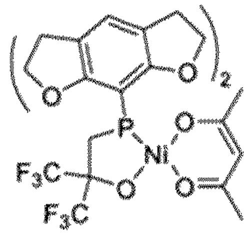

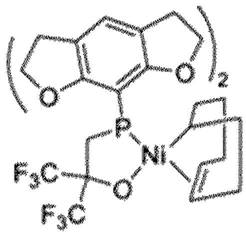
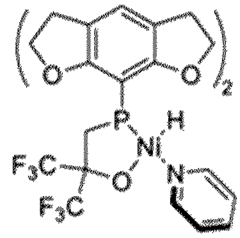
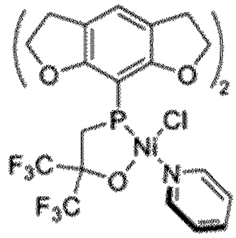
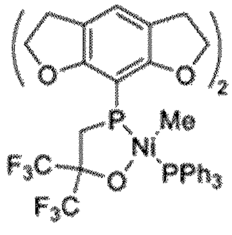

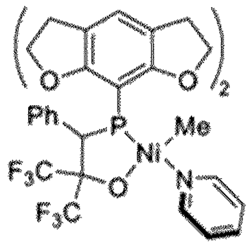
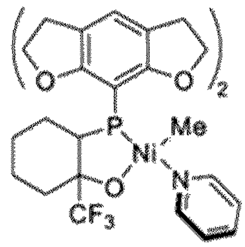
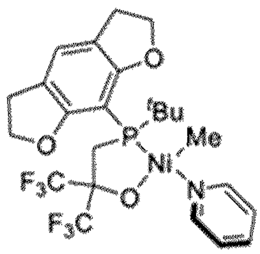
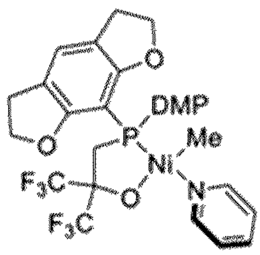

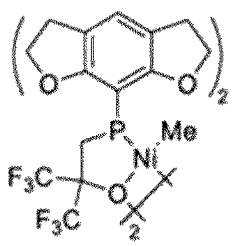
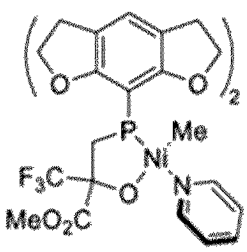
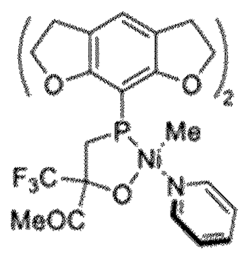
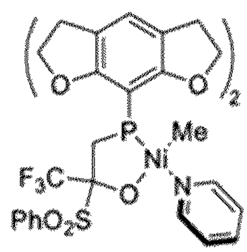

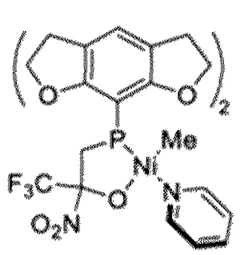
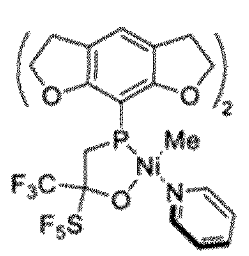
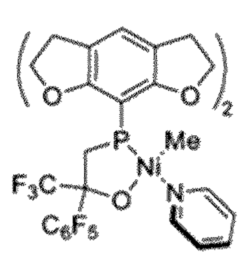
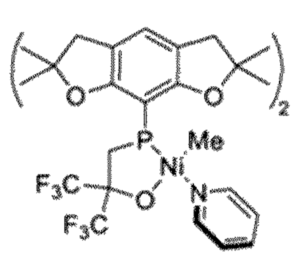

[Chem. 20]

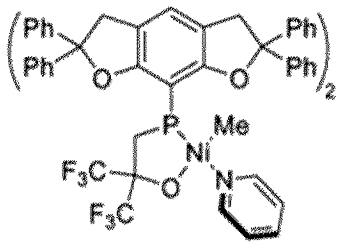
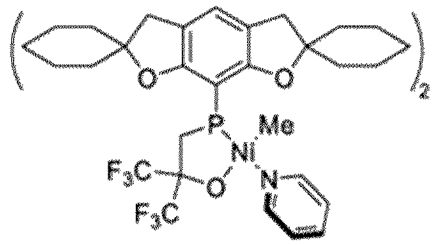
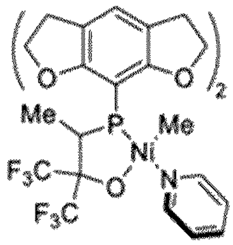

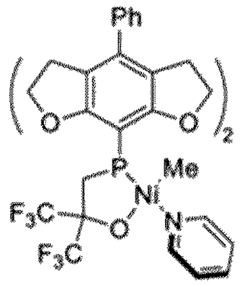
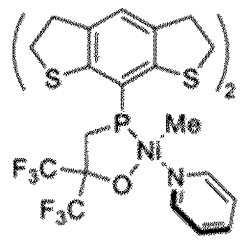
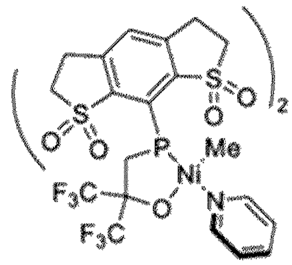
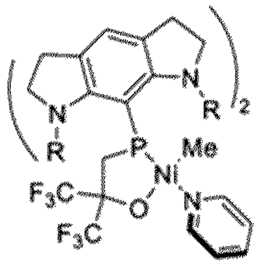

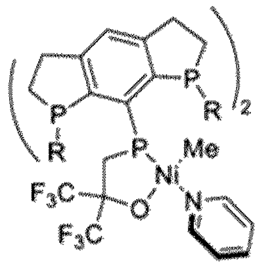
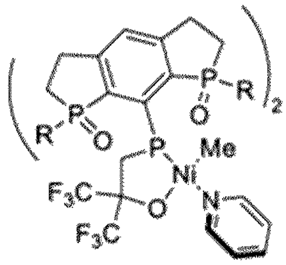
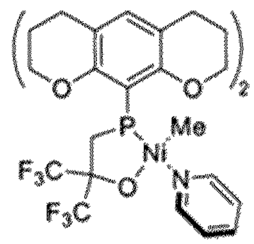
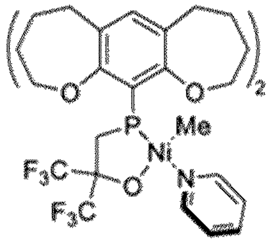

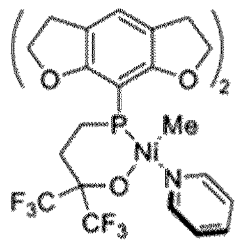
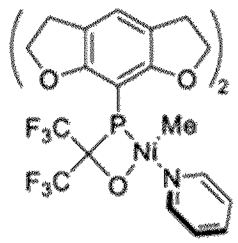
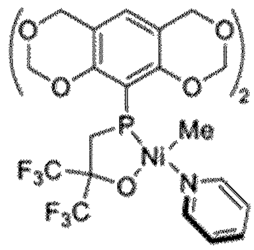
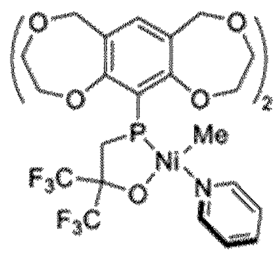

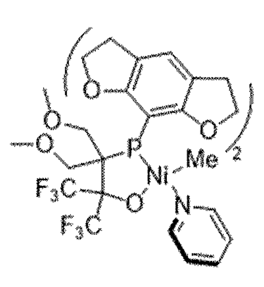
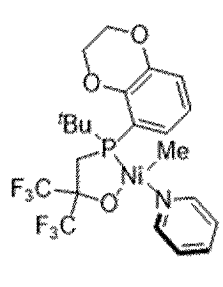
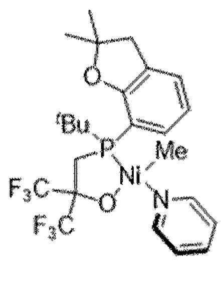
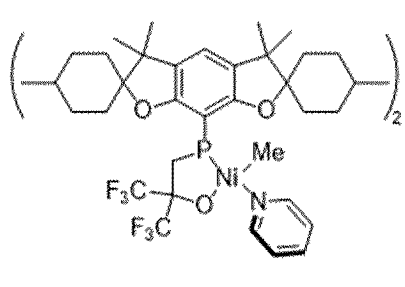

(In the formulae, R represents a hydrogen atom or a hydrocarbon group containing 1 to 20 carbon atoms.)

[Chem. 21]

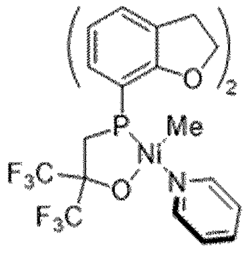
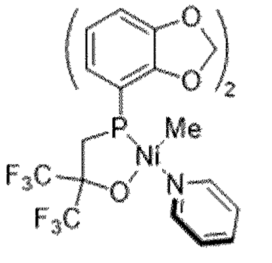
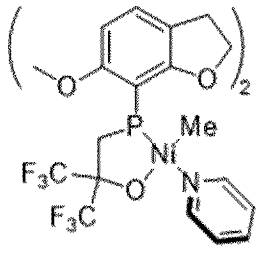
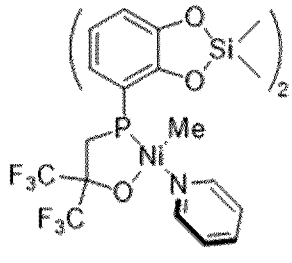
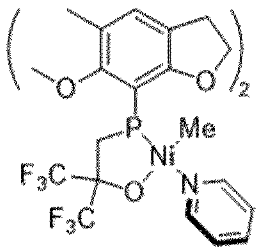
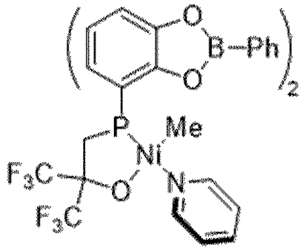
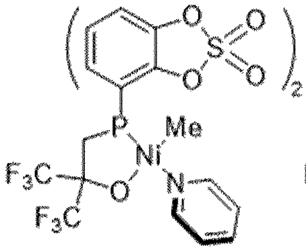
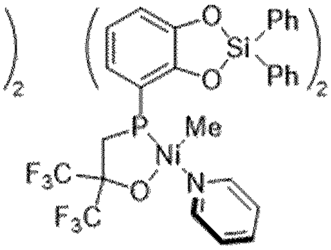
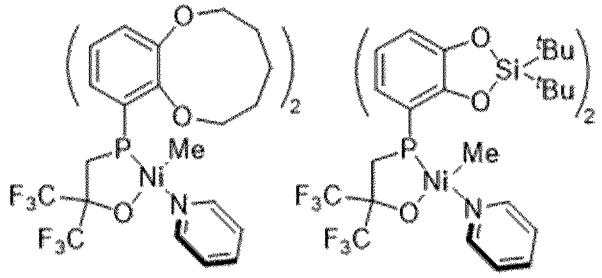
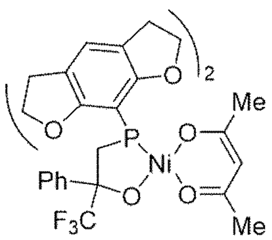
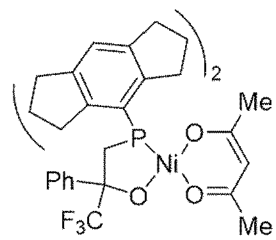
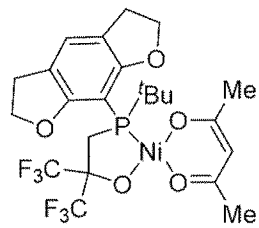
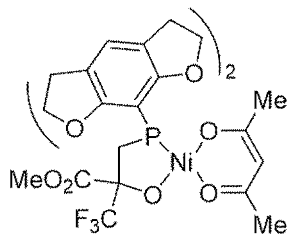
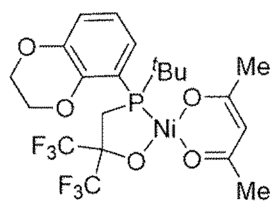
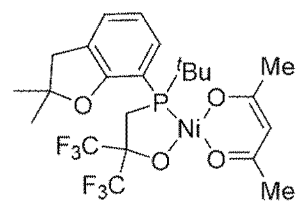
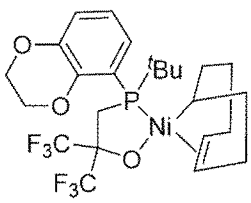
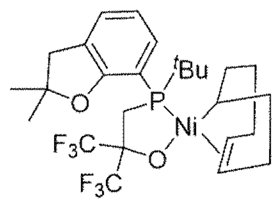
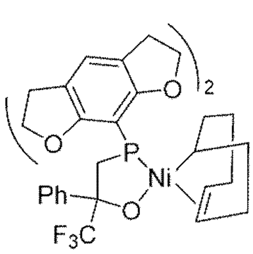
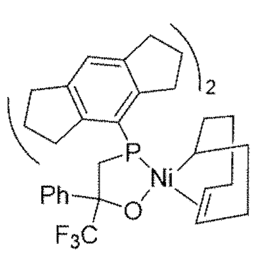
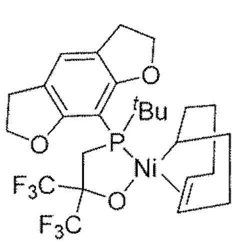
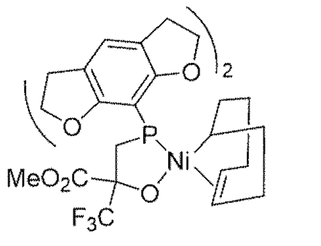

The metal complex represented by the general formula (D) of the present invention can be prepared by the method including the step of reacting the compound represented by the general formula (A) with the transition metal compound represented by the general formula (E) or (F), or it can be prepared by a known method. The metal complex represented by the general formula (D) of the present invention can be prepared based on a known complex preparation method which is appropriately modified by a person skilled in the art (e.g., making a modification to raw materials).

For example, in the production of the metal complex represented by the general formula (D), when reacting the compound represented by the general formula (A) with the transition metal compound represented by the general formula (E) or (F), a coordinating or covalent compound which will be substituted for $L^1$ or $L^2$ in the general formula (D), may coexist with them.

In the present invention, when nickel or palladium is used as M, there is a possibility that the stability of the metal complex thus produced is increased by a Lewis basic coordinating compound coexisting in the system. In this case, as long as the polymerization or copolymerization of the present invention is not inhibited by the coordinating compound, the coordinating compound may coexist with them.

As the coordinating compound used in the present invention, a hydrocarbon compound containing 1 to 20 carbon atoms and containing, as an atom that can form a coordinate bond, at least one selected from the group consisting of an oxygen atom, a nitrogen atom, a phosphorus atom, an arsenic atom, a sulfur atom and a selenium atom can be used, or a hydrocarbon compound containing a carbon-carbon unsaturated bond that can coordinate to the transition metal and optionally containing a heteroatom can be used. Also, the coordinating compound may be synonymous with the neutral electron-donating ligand out of the above-mentioned $L^1$ and so on.

The covalent compound used in the present invention is a compound that is capable of substituting the ligand derived from the transition metal compound with the electron-donating ligand having a valence of -1 out of the above-mentioned $L^1$ and so on in the metal complex represented by the general formula (D). The covalent compound may be an organometallic compound.

As the electron-donating ligand having a valence of -1, the hydrocarbon group containing 1 to 20 carbon atoms and optionally containing at least one heteroatom can be incorporated into a polymer as a polymerization reaction initiating terminal; moreover, it can largely contribute to the initial rate of the polymerization reaction. Accordingly, in the production of the metal complex represented by the general formula (D), depending on the situation, a covalent compound for introducing the hydrocarbon group containing 1 to 20 carbon atoms and optionally containing at least one heteroatom, is preferably used together.

As the covalent compound, examples include an organolithium compound. It may be $R^{14}Li$ (where $R^{14}$ is a hydrocarbon group containing 1 to 20 carbon atoms and optionally containing a heteroatom), or it may be an organolithium compound which contains a hydrocarbon group containing 1 to 10 carbon atoms and optionally containing a heteroatom. As the organolithium compound which contains a hydrocarbon group containing 1 to 10 carbon atoms, examples include methyllithium, n-butyllithium, phenyllithium, neopentyllithium, benzyllithium, trimethylsilylmethyllithium and p-fluorophenyllithium. Of them, methyllithium and phenyllithium are preferred, and methyllithium is more preferred.

I-4. Olefin polymerization catalyst

The olefin polymerization catalyst of the first embodiment of the present invention is an olefin polymerization catalyst comprising the olefin polymerization catalyst composition of the first embodiment of the present invention.

Also, the olefin polymerization catalyst of the first embodiment of the present invention is an olefin polymerization catalyst comprising the metal complex represented by the general formula (D) of the first embodiment.

In the olefin polymerization reaction, the olefin polymerization catalyst of the present invention contains a metal complex which is a product of the compound represented by the general formula (A) and the transition metal compound represented by the general formula (E) or (F), or it contains the metal complex represented by the general formula (D) (hereinafter, they may be collectively simply referred to as "metal complex catalyst").

In the olefin polymerization catalyst of the first embodiment of the present invention, the olefin polymerization catalyst composition of the first embodiment of the present invention and the metal complex represented by the general formula (D) of the first embodiment may be the same as those described above. Accordingly, they are not described here.

In the olefin polymerization catalyst of the present invention, as shown in Examples described below, the olefin polymerization catalyst composition of the present invention and the metal complex represented by the general formula (D) may be used as they are without refinement, and they may be used as the olefin polymerization catalyst.

In the olefin polymerization catalyst of the present invention, a single component or a combination of several kinds of components may be used as each of the compound represented by the general formula (A) and the transition metal compound represented by the general formula (E) or (F) in the olefin polymerization catalyst composition. Also, the metal complex represented by the general formula (D) may be contained in the olefin polymerization catalyst composition.

The metal complex represented by the general formula (D) contained in the olefin polymerization catalyst of the present invention may be one kind or may be a mixture of two or more kinds.

In the olefin polymerization catalyst of the present invention, a co-catalyst may be added in addition to the metal complex catalyst. As the co-catalyst, examples include an organometallic compound containing an element of the Group 1, 2 or 13 of the periodic table, such as a compound represented by the following general formula (1), a compound represented by the following general formula (2) and an organoaluminum oxy compound. Several kinds of these compounds may be contained in the catalyst composition.

General Formula (1): $Q(R^{20})(R^{21})R^{22}$

The compound represented by the general formula (1) is a boron or aluminum compound represented by $Q(R^{20})(R^{21})R^{22}$ (where Q is boron (B) or aluminum (Al); $R^{20}$, $R^{21}$ and $R^{22}$ each independently represent a hydrogen atom, an alkyl, alicyclic, alkoxy, aryl or aryloxy group containing 1 to 30 carbon atoms and optionally being substituted, or an amino or silyl group in which one or more hydrogen atoms are each independently substituted with a hydrocarbon containing 1 to 30 carbon atoms.)

The examples and information provided above in the descriptions of $R^3$ and so on, are applicable to $R^{20}$ to $R^{22}$. From the viewpoint of availability or ease of preparation of the compound, $R^{20}$ to $R^{22}$ are preferably a hydrocarbon group such as an alkyl group and an aryl group, or an alkyl or aryl group substituted with a halogen (especially a fluorine) such as a trifluoromethyl group and a perfluorophenyl group.

As the compound represented by the general formula (1), examples include, but are not limited to, trimethylborane, trimethoxyborane, perfluoromethylborane, triphenylborane, tris(perfluorophenyl)borane, triphenoxyborane, tris(dimethylamino)borane, tris(diphenylamino)borane, trimethylaluminum, triethylaluminum, tri(n-propyl)aluminum, tri(n-butyl)aluminum, triisobutylaluminum, tri(n-hexyl)aluminum, tri(n-octyl)aluminum, tri(n-decyl)aluminum, diethylaluminum hydride, diethylaluminum ethoxide, diethylaluminum dimethylamide and diisobutylaluminum hydride.

General Formula (2): $[C(R^{23})(R^{24})R^{25}][Q(R^{26})(R^{27})(R^{28})R^{29}]^-$

The compound represented by the general formula (2) is a salt of a carbocation and boron or aluminum, which is represented by $[C(R^{23})(R^{24})R^{25}]^+[Q(R^{26})(R^{27})(R^{28})R^{29}]^-$ (where Q is as defined by the general formula (2), and $R^{23}$ to $R^{29}$ are each independently as defined as $R^{20}$).

The examples and information provided above in the descriptions of $R^3$ and so on, are applicable to $R^{23}$ to $R^{29}$. From the viewpoint of availability or ease of preparation of the compound, $R^{23}$ to $R^{29}$ are preferably a hydrocarbon group such as an alkyl group and an aryl group. Since a carbocation is easily obtained, $R^{23}$ to $R^{29}$ are more preferably a bulky hydrocarbon group such as a t-butyl group and an aryl group.

As the compound represented by the general formula (2), examples include, but are not limited to, trityl tetramethyl borate, trityl tetrakis(perfluoromethyl)borate, trityl tetraphenyl borate, trityl tetrakis(perfluorophenyl)borate and trityl tetrakis(di(trifluoromethyl)phenyl)borate.

As the compound represented by the general formula (1) or (2), a commercially-available product can be used, or the compound represented by the general formula (1) or (2) can be obtained by a known method which is appropriately modified depending on the substituents contained in the compound.

In addition to the compound represented by the general formula (1) or (2), an organoaluminum oxy compound can be added to the olefin polymerization catalyst of the present invention. In the case of using the organoaluminum compound, examples include methylaluminoxane (MAO) and modified methylaluminoxane (MMAO), and they may be commercially-available products. From the viewpoint of availability and handleability, MMAO is preferred. MAO and MMAO may be commercially-available products, and they are not limited by grade, etc.

Besides the above-exemplified compound containing an element of the Group 13 of the periodic table, an organometallic compound which is conventionally known as a co-catalyst, such as a compound containing a metal of the Group 1 of the periodic table (e.g., an alkyllithium such as methyllithium and n-butyllithium) and a compound containing a metal of the Group 2 of the periodic table (e.g., a Grignard reagent) can be also used as the co-catalyst. The compounds may be commercially-available products, and they are not limited by grade, etc.

These co-catalysts can be used in the same condition as the metal complex catalyst. However, they are preferably used in an inert atmosphere, avoiding oxygen and moisture. In the case of using the co-catalysts, their amounts can be appropriately determined by a person skilled in the art.

The metal complex catalyst may be brought into contact with the co-catalysts not only in the preparation of the catalyst, but also in preliminary polymerization by the olefin or in the olefin polymerization.

The metal complex catalyst is preferably brought into contact with the co-catalysts in an inert gas such as nitrogen and in an inert hydrocarbon solvent such as pentane, hexane, heptane, toluene and xylene. They may be brought into contact with each other at a temperature between -20°C and the boiling point of the solvent, and they are preferably brought into contact at a temperature between room temperature and the boiling point of the solvent.

I-5. Olefin-based polymer production method

The olefin-based polymer production method of the first embodiment of the present invention is a method for producing an olefin-based polymer, wherein an olefin is polymerized or copolymerized in the presence of the olefin polymerization catalyst of the first embodiment of the present invention.

The olefin of the present invention may be an acyclic olefin or a cyclic olefin. As the olefin, examples include at least one selected from the group consisting of an acyclic olefin containing 2 to 22 carbon atoms and a cyclic olefin containing 4 to 20 carbon atoms.

The acyclic olefin of the present invention may be an α-olefin represented by the general following formula: $CH^2=CHR^{30}$, for example. In the general formula, $R^{30}$ is a hydrogen atom or a hydrocarbon group containing 1 to 20 carbon atoms, and it may contain a branch, a ring and/or an unsaturated bond. When the number of the carbon atoms of $R^{30}$ is more than 20, sufficient polymerization activity does not tend to be exerted. Accordingly, the olefin in which $R^{30}$ is a hydrogen atom or a hydrocarbon group containing 1 to 10 carbon atoms, is preferred.

As the acyclic olefin other than α-olefins, examples include 2-butene, 2-pentene and 2-hexene.

As the cyclic olefin containing 4 to 20 carbon atoms, examples include cyclobutene, cyclopentene, cyclohexene, cycloheptene, norbornene and norbornadiene.

Preferred olefins include ethylene, propylene, 1-butene, 1-pentene, 1-hexene, 1-octene, 1-decene, 3-methyl-1-butene, 4-methyl-1-pentene, vinylcyclohexene, styrene, 4-methylstyrene and norbornene. From the viewpoint of polymer production efficiency, the olefin is preferably one or more kinds selected from the group consisting of ethylene, propylene, 1-butene and norbornene, and it is more preferably ethylene. As the olefin, one kind of olefin may be used, or two or more kinds of olefins may be concurrently used.

As the polar group-containing monomer, examples include a monomer obtained by introducing a polar functional group (polar group) in an acyclic olefin and a monomer obtained by introducing a polar functional group (polar group) in a cyclic olefin. For example, the former monomer may be a monomer obtained by introducing a polar group in an α-olefin (an acyclic olefin), such as a polar group-containing monomer represented by the following general formula: $CH^2=C(R^{30})(R^{31})$. The polar group-containing monomer is preferably a (meth)acrylic acid ester, for example. In the general formula, $R^{30}$ is a hydrogen atom or a hydrocarbon group containing 1 to 10 carbon atoms, and $R^{31}$ is - $C(O)OR^{32}$ (where $R^{32}$ is a hydrocarbon group containing 1 to 20 carbon atoms), $-C(O)N(-R^{32'})_2$ (where each $R^{32'}$ is independently a hydrogen atom or a hydrocarbon group containing 1 to 20 carbon atoms), a cyano group or an optionally-substituted aryl group. Since better polymerization activity can be exerted, $R^{30}$ is preferably a hydrogen atom or a hydrocarbon group containing 1 to 3 carbon atoms, and it is more preferably a hydrogen atom or a methyl group. $R^{31}$ is not particularly limited, as long as it is the substituent described above. $R^{31}$ is preferably $-C(O)OR^{32}$ or an aryl group since there are a wide range of applications for the resulting copolymers. In this case, when the number of the carbon atoms of $R^{32}$ is more than 20, a decrease in polymerization activity tends to occur. Accordingly, $R^{32}$ is preferably a hydrocarbon group containing 1 to 12 carbon atoms, and more preferably a hydrocarbon group containing 1 to 8 carbon atoms.

Also, $R^{32}$ preferably consists of a carbon atom and a hydrogen atom. However, $R^{32}$ may include a heteroatom such as an oxygen atom, a sulfur atom, a selenium atom, a phosphorus atom, a nitrogen atom, a silicon atom, a fluorine atom and a boron atom. Among them, an oxygen atom, a silicon atom and a fluorine atom are preferred, and an oxygen atom is more preferred. The preferred ranges and examples of $R^{32'}$ when it is not a hydrogen atom, are the same as those of $R^{32}$.

As the monomer obtained by introducing a polar functional group in an acyclic or cyclic olefin other than an α-olefin, examples include a compound obtained by introducing the substituent represented by $R^{31}$ in a desired position of an exemplary compound of an acyclic or cyclic olefin other than an α-olefin.

Also, the polar group-containing monomer may be vinylene carbonate (1,3-dioxole-2-one).

The polar group-containing monomer is more preferably methyl (meth)acrylate, ethyl (meth)acrylate, n-propyl (meth)acrylate, isopropyl (meth)acrylate, n-butyl (meth)acrylate, isobutyl (meth)acrylate, t-butyl (meth)acrylate, pentyl (meth)acrylate, hexyl (meth)acrylate, cyclohexyl (meth)acrylate, octyl (meth)acrylate, 2-ethylhexyl (meth)acrylate, nonyl (meth)acrylate, decyl (meth)acrylate, dodecyl (meth)acrylate, phenyl (meth)acrylate, toluyl (meth)acrylate, benzyl (meth) acrylate, hydroxyethyl (meth)acrylate, dimethylaminoethyl (meth)acrylate, diethylaminoethyl (meth)acrylate, 2-aminoethyl (meth)acrylate, 2-methoxyethyl (meth)acrylate, 3-methoxypropyl (meth)acrylate, glycidyl (meth)acrylate, trifluoromethyl (meth)acrylate, 3,3,3,-trifluoropropyl (meth)acrylate, perfluoroethyl (meth)acrylate, (meth)acrylamide, (meth) acrylic dimethylamide, 2-hydroxybutyl methacrylate, 4-hydroxybutyl methacrylate, acrylonitrile, methyl 10-undecylenate, 4-acetoxystyrene, vinylanisole, methyl 5-norbornene-2-carboxylate, t-butyl 5-norbornene-2-carboxylate, 5-norbornene-2-methanol, 5-norbornene-2-methylamine, 5-norbornene-2-methylpivalamide, 5-norbornen-2-yl acetate or vinylene carbonate, for example. The polar group-containing monomer is still more preferably at least one selected from the group consisting of methyl acrylate, ethyl acrylate, propyl acrylate, n-butyl acrylate, isobutyl acrylate, t-butyl acrylate, methyl methacrylate, ethyl methacrylate, butyl methacrylate, t-butyl methacrylate, acrylonitrile, methyl 10-undecylenate, 4-acetoxystyrene, 4-nitrostyrene, vinylanisole, methyl 5-norbornene-2-carboxylate, t-butyl 5-norbornene-2-carboxylate, 5-norbornene-2-methylpivalamide, 5-norbornen-2-yl acetate and vinylene carbonate.

When a comonomer is used for the copolymerization with the acyclic olefin such as ethylene, as the comonomer, at least one kind of monomer selected from the group consisting of a polar group-containing monomer and a cyclic olefin, is preferably used.

The comonomer is more preferably at least one selected from the group consisting of the following, for example: t-butyl acrylate, methyl acrylate, methyl methacrylate, methyl 10-undecylenate, 4-methylstyrene, 4-acetoxystyrene, norbornene, t-butyl 5-norbornene-2-carboxylate, 9-decenyl acetate, 1,2-epoxy-9-decene and vinylene carbonate.

These monomers may be used solely or in combination of two or more kinds.

The type of the monomer can be appropriately selected according to the properties required of the obtained polymer. In some cases, a composition of two or more kinds of monomers can be copolymerized, or a composition consisting of two or more kinds of polar group-containing monomers can be copolymerized. The amount of the used monomer(s) and the ratio of the used monomer amounts can be appropriately determined according to the properties required of the obtained copolymer.

Since the olefin polymerization is carried out in the presence of the olefin polymerization catalyst of the present invention, the olefin-based polymer production method of the present invention is preferably used as a production method in which an acyclic olefin is copolymerized with at least one kind of monomer selected from the group consisting of a polar group-containing monomer and a cyclic olefin.

From the viewpoint of polymerization activity, copolymerization of the olefin and the (meth)acrylic acid ester is preferred as the copolymerization reaction of the present invention.

In the olefin-based polymer production method of the present invention, the olefin polymerization catalyst containing the metal complex catalyst is used as a catalyst for the olefin polymerization or copolymerization. Each metal complex catalysts may be an isolated catalyst or a catalyst supported on a support. Such support may be carried out in a reactor, which is used for the olefin polymerization or the copolymerization of the olefin and the (meth)acrylic ester, in the presence or absence of the monomers, or it may be carried out in a container different from the reactor.

As the support, any support can be used without departing from the scope of the present invention. In general, an inorganic oxide or a polymer support can be preferably used as the support. As the inorganic oxide, examples include $SiO_2$, $Al_2O_3$, MgO, $ZrO_2$, $TiO_2$, $B_2O_3$, CaO, ZnO, BaO, $ThO_2$ and mixtures thereof. Also, a mixed oxide such as $SiO_2$-$Al_2O_3$, $SiO_2$-$V_2O_5$, $SiO_2$-$TiO_2$, $SiO_2$-MgO and $SiO_2$-$Cr_2O_3$ can be used. Also, inorganic silicate, a polyethylene support, a polypropylene support, a polystyrene support, a polyacrylic acid support, a polymethacrylic acid support, a polyacrylic acid ester support, a polyester support, a polyamide support, a polyimide support or the like can be used as the support. The particle diameter, particle size distribution, pore volume, specific surface area and so on of these supports are not particularly limited, and any support can be used.

As the inorganic silicate, clay, clay minerals, zeolite, diatomite or the like can be used. They may be commercially-available products or naturally mined minerals. As the clay and clay minerals, examples include an allophane group such as allophane, a kaolin group such as dickite, nacrite, kaolinite and anauxite, a halloysite group such as metahalloysite and halloysite, a serpentine group such as chrysotile, lizardite and antigorite, a smectite such as montmorillonite, sauconite, beidellite, nontronite, saponite and hectorite, a vermiculite mineral such as vermiculite, a mica mineral such as illite, sericite and glauconite, attapulgite, sepiolite, palygorskite, bentonite, kibushi clay, gairome clay, hisingerite, pyrophyllite and a chlorite group. They may form a mixed layer. Synthetic products thereof include synthetic mica, synthetic hectorite, synthetic saponite, synthetic tainiolite and so on.

Of these examples, preferred are a kaolin group such as dickite, nacrite, kaolinite and anauxite, a halloysite group such as metahalloysite and halloysite, a serpentine group such as chrysotile, lizardite and antigorite, a smectite such as montmorillonite, sauconite, beidellite, nontronite, saponite and hectorite, a vermiculite mineral such as vermiculite, a mica mineral such as illite, sericite and glauconite, synthetic mica, synthetic hectorite, synthetic saponite and synthetic tainiolite, and more preferred are a smectite such as montmorillonite, sauconite, beidellite, nontronite, saponite and hectorite, a vermiculite mineral such as vermiculite, synthetic mica, synthetic hectorite, synthetic saponite and synthetic tainiolite.

The support may be used as it is, or it may be subjected to an acid treatment with hydrochloric acid, nitric acid, sulfuric acid or the like and/or a salt treatment with LiCl, NaCl, KCl, $CaCl_2$, $MgCl_2$, $Li_2SO_4$, $MgSO_4$, $ZnSO_4$, $Ti(SO_4)_2$, $Zr(SO_4)_2$, $Al_2(SO_4)_3$ or the like. The treatment may be carried out by mixing a corresponding acid and a corresponding base to form a salt in the reaction system. Also, shape control such as pulverization and granulation or a drying treatment may be carried out.

In the olefin-based polymer production method of the present invention, the polymerization reaction can be carried out in the presence or absence of a known additive, as well as the co-catalyst. The additive is preferably an additive having a function to stabilize the produced polymer. The additive is preferably a quinone derivative, a hindered phenol derivative or the like, for example.

More specifically, monomethyl ether hydroquinone, 2,6-dit-butyl-4-methylphenol (BHT), a reaction product of trimethylaluminum and BHT, a reaction product of BHT and an alkoxide of tetravalent titanium, or the like can be used.

Also, the polymerization may be carried out by use of an inorganic filler and/or an organic filler as the additive and in the presence of the filler(s), or the polymerization may be carried out by adding an ionic liquid.

In the present invention, the additive is preferably a Lewis base, for example. By selecting an appropriate Lewis base, activity, molecular weight and acrylic ester copolymerizability can be improved. With respect to the transition metal M in the catalyst component present in the polymerization system, the amount of the Lewis base is from 0.0001 equivalents to 1000 equivalents, preferably from 0.1 equivalents to 100 equivalents, and more preferably from 0.3 equivalents to 30

equivalents. The method for adding the Lewis base to the polymerization system is not particularly limited, and a desired method can be used. For example, the Lewis base may be added to the olefin polymerization catalyst of the present invention; it may be mixed with a monomer and added; or it may be added to the polymerization system separately from the catalyst component and the monomer. Also, several Lewis bases can be used in combination.

As the Lewis base, examples include an aromatic amine, an aliphatic amine, an alkyl ether, an aryl ether, an alkyl aryl ether, a cyclic ether, an alkyl nitrile, an aryl nitrile, an alcohol, an amide, an aliphatic ester, an aromatic ester, a phosphate, a phosphite, a thiophene, a thianthrene, a thiazole, an oxazole, a morpholine and a cyclic unsaturated hydrocarbon.

Of them, preferred are an aromatic amine, an aliphatic amine, a cyclic ether, an aliphatic ester and an aromatic ester. Particularly preferred are a pyridine derivative, a pyrimidine derivative, a piperidine derivative, an imidazole derivative, an aniline derivative, a piperidine derivative, a triazine derivative, a pyrrole derivative and a furan derivative.

Examples of Lewis base compounds include, but are not limited to, pyridine, pentafluoropyridine, 2,6-lutidine, 2,4-lutidine, 3,5-lutidine, pyrimidine, N,N-dimethylaminopyridine, N-methylimidazole, 2,2'-bipyridine, aniline, piperidine, 1,3,5-triazine, 2,4,6-tris(trifluoromethyl)-1,3,5-triazine, 2,4,6-tris(2-pyridyl)-s-triazine, quinoline, 8-methylquinoline, phenazine, 1,10-phenanthroline, N-methylpyrrole, 1,8-diazabicyclo-[5.4.0]-undeca-7-ene, 1,4-diazabicyclo-[2,2,2]-octane, triethylamine, benzonitrile, picoline, triphenylamine, N-methyl-2-pyrrolidone, 4-methylmorpholine, benzoxazole, benzothiazole, furan, 2,5-dimethylfuran, dibenzofuran, xanthene, 1,4-dioxane, 1,3,5-trioxane, dibenzothiophene, thianthrene, triphenylphosphonium cyclopentadienide, triphenyl phosphite, triphenyl phosphate and tripyrrolidinophosphine.

In the present invention, the polymerization form is not particularly limited. As the polymerization form, for example, solution polymerization in which all of the produced polymer is dissolved in a medium, slurry polymerization in which at least a part of the produced polymer is made into slurry in a medium, bulk polymerization in which a liquefied monomer itself is used as a medium, vapor phase polymerization which is carried out in a vaporized monomer, or high-pressure ionic polymerization in which at least a part of the produced polymer is dissolved in a monomer liquefied at high temperature and high pressure, is preferably used. The polymerization form may be any of batch polymerization, semibatch polymerization and continuous polymerization. The polymerization reaction is preferably carried out in an inert atmosphere such as a nitrogen atmosphere. The condition of use for the metal complex catalyst is not particularly limited, as long as the metal complex catalyst is used in general polymerization condition. The amount of the metal complex catalyst used is not particularly limited, as long as it is an appropriate range for use as a catalyst, it can be appropriately determined by a person skilled in the art.

In the case of using a monomer which is preferably polymerized in a liquid phase, in the present invention, the polymerization reaction is carried out in the presence or absence of a liquid such as a hydrocarbon solvent (e.g., n-butane, isobutane, n-hexane, n-heptane, toluene, xylene, cyclohexane, methylcyclohexane) and a liquefied olefin, a halogenated hydrocarbon solvent such as chlorobenzene and 1,2-dichlorobenzene, or a polar solvent such as diethyl ether, ethylene glycol dimethyl ether, tetrahydrofuran, dioxane, ethyl acetate, methyl benzoate, acetone, methyl ethyl ketone, formamide, acetonitrile, methanol, isopropyl alcohol and ethylene glycol. Also, a mixture of the liquid compositions as described herein may be used as the solvent. The liquefied olefin can be also used as a monomer subjected to bulk polymerization. Also, an ionic liquid can be used as the solvent. To obtain high polymerization activity and high molecular weight, the above-described hydrocarbon solvent or ionic liquid is more preferred.

Unreacted monomers and a medium may be separated from a produced copolymer and recycled for use. When recycling the unreacted monomers and the medium, they may be refined and reused, or they may be reused without refinement. To separate the unreacted monomers and the medium from the produced copolymer, a conventionally known method can be used. For example, a method such as filtration, centrifugal separation, solvent extraction, and reprecipitation with a poor solvent can be used.

The polymerization temperature, the polymerization pressure and the polymerization time are not particularly limited. In general, they may be optimally set in any of the following ranges, considering productivity and processing capability. That is, the polymerization temperature is generally from -20°C to 290°C, preferably from 0°C to 250°C, more preferably from 0°C to 200°C, still more preferably from 10°C to 150°C, and particularly preferably from 20°C to 100°C. The copolymerization pressure is from 0.1 MPa to 300 MPa, preferably from 0.3 MPa to 200 MPa, more preferably from 0.5 MPa to 150 MPa, still more preferably from 1.0 MPa to 100 MPa, and particularly preferably from 1.3 MPa to 50 MPa. The polymerization times can be selected from 0.1 minutes to 100 hours, preferably from 0.5 minutes to 70 hours, and still more preferably from 1 minute to 60 hours.

In the present invention, the polymerization is generally carried out in an inert atmosphere. For example, a nitrogen or argon atmosphere can be used, and a nitrogen atmosphere is preferably used. Incorporation of a small amount of oxygen or air is allowed. However, for example, in the case of using a monomer such as ethylene, which is gaseous at ordinary temperature, the polymerization can be carried out after filling the reaction system with ethylene.

The supply of the catalyst and the monomers to a polymerization reactor is not particularly limited. The method for supplying them may be selected from various kinds of supplying methods, depending on the purpose. For example, in the case of batch polymerization, the following method can be employed: predetermined amounts of monomers are supplied

to the polymerization reactor in advance, and then the catalyst is supplied thereto. In this case, an additional monomer or an additional catalyst may be supplied to the polymerization reactor.

To control the composition of the copolymer, generally, a method for controlling the composition by supplying several monomers to the reactor and changing the ratio of the supplied monomers, can be used. Other methods include a method for controlling the copolymer composition by using a difference in monomer reactivity ratio, which is due to a difference in catalyst structure, and a method for controlling the copolymer composition by using the polymerization temperature dependency of the monomer reactivity ratio. In the present invention, when an acyclic olefin is copolymerized with at least one kind of monomer selected from the group consisting of a polar group-containing monomer and a cyclic olefin, the percentage of the total content of the acyclic olefin monomer in the whole monomers subjected to the copolymerization, may be appropriately selected depending on desired properties. For example, with respect to the whole monomers (100 mol %), the lower limit value is generally 60.00 mol % or more, and it may be 70.00 mol % or more, may be 80.00 mol % or more, may be 85.00 mol % or more, and may be 90.00 mol % or more. On the other hand, the upper limit value is generally 99.90 mol % or less, and it may be 99.80 mol % or less, may be 99.70 mol % or less, may be 99.60 mol % or less, and may be 99.50 mol % or less. By controlling the percentage within the range, an affinity for coating materials, adhesive properties and so on can be imparted without impairing the original properties of polyolefin (such as heat resistance) largely, and the properties can be controlled.

The molecular weight of the polymer can be controlled by a conventionally known method. As the method, examples include, but are not limited to, the following method.

1) To control the polymerization temperature
2) To control the monomer concentration
3) To control the ligand structure in the transition metal complex
4) To use a known chain transfer agent such as hydrogen and a metalalkyl

There is no particular limitation on the weight average molecular weight (Mw) of the olefin-based polymer obtained by the olefin-based polymer production method of the present invention. The lower limit of the weight average molecular weight (Mw) of the olefin-based polymer may be 5,000 or more, or it may be 10,000 or more. On the other hand, the upper limit of the weight average molecular weight (Mw) of the olefin-based polymer may be 1,000,000 or less, or it may be 500,000 or less.

The weight average molecular weight (Mw) of the olefin-based polymer is obtained by gel permeation chromatography (GPC). In the present invention, the GPC measurement can be carried out by the method described below under "Examples".

When the olefin-based polymer obtained by the olefin-based polymer production method of the present invention is an ethylene-based polymer, the degree of methyl branching of the ethylene-based polymer, which is calculated by $^{13}C$-NMR, is not particularly limited. It may be 10 or less per 1,000 carbon atoms, or it may be 5 or less per 1,000 carbon atoms.

In the present invention, the number of methyl branches can be measured by the method described below under "Examples".

The olefin-based polymer production method of the present invention can provide an olefin polymer or copolymer with high activity. Especially, it can provide a copolymer of an acyclic olefin and at least one kind of monomer selected from the group consisting of a polar group-containing monomer and a cyclic olefin. Accordingly, the olefin-based polymer production method of the present invention can be used as a method for providing a polymer with various properties. Since the catalyst used in the method of the present invention has balanced catalytic performance, a (co)polymer with high activity and a high molecular weight can be obtained. In addition, since the catalyst used in the method of the present invention needs not to be isolated as a catalyst, it can be used for efficient synthesis of the olefin-based polymer.

## II. Second embodiment

### II-1. Compound

The compound of the second embodiment of the present invention is a compound represented by the following general formula (A).

[Chem. 22]

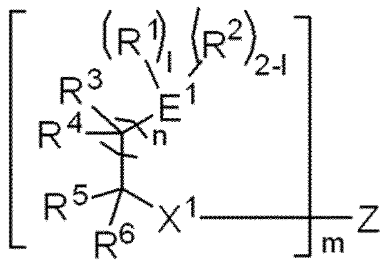

Formula (A)

[The symbols in the general formula (A) are as defined above in [2-1].]

Hereinafter, the symbols $R^1$ to $R^6$, $E^1$, $X^1$, Z, l, n and m in the general formula (A) will be described.

In the general formula (A), $X^1$ represents an oxygen atom or a sulfur atom. That is, the compound represented by the general formula (A) can be used as a ligand which has an element of the Group 16 of the periodic table as a monovalent anionic coordinating atom. $X^1$ is preferably an oxygen atom, since a variety of compounds can be used as the ligand.

In the general formula (A), $E^1$ represents a nitrogen atom, a phosphorus atom, an arsenic atom or an antimony atom. That is, the compound represented by the general formula (A) can be used as a ligand which has an element of the Group 15 of the periodic table as a neutral coordinating atom. $E^1$ is preferably a nitrogen atom or a phosphorus atom, since a variety of compounds can be used as the ligand and the compound exhibits good coordination with a late transition metal element such as nickel and palladium.

In the general formula (A), $R^3$, $R^4$, $R^5$ and $R^6$ each independently represent an atom or group selected from the group consisting of the following (i) to (iv):

(i) a hydrogen atom
(ii) a halogen atom
(iii) a hydrocarbon group containing 1 to 30 carbon atoms and optionally containing at least one heteroatom
(iv) $OR^b$, $C(O)OR^b$, $C(O)OM'$, $C(O)N(R^a)_2$, $C(O)R^b$, $OC(O)R^b$, $SR^b$, $S(O)_2R^b$, $S(O)R^b$, $OS(O)_2R^b$, $SF_5$, $P(O)(OR^b)_{2-y}(R^a)_y$, CN, $N(H)R^a$, $N(R^b)_2$, $Si(OR^a)_{3-x}(R^a)_x$, $OSi(OR^a)_{3-x}(R^a)_x$, $NO_2$, $S(O)_2OM'$, $P(O)(OM')_2$, $P(O)(OR^b)_2M'$ or an epoxy-containing group (where each $R^a$ independently represents a hydrogen atom or a hydrocarbon group containing 1 to 20 carbon atoms; each $R^b$ independently represents a hydrocarbon group containing 1 to 20 carbon atoms; M' represents an alkaline metal, an alkaline earth metal, an ammonium, a quaternary ammonium or a phosphonium; x represents 0, 1, 2 or 3; and y represents 0, 1 or 2), and $R^3$, $R^4$, $R^5$ and $R^6$ are optionally bound to adjacent substituents to form a 5- to 8-membered alicyclic ring or a 5- to 8-membered heterocyclic ring containing at least one heteroatom selected from the group consisting of an oxygen atom, a nitrogen atom and a sulfur atom.

As the (ii) halogen atom, examples include a fluorine atom, a chlorine atom, a bromine atom and an iodine atom. Of them, a fluorine atom is preferred.

The (iii) hydrocarbon group containing 1 to 30 carbon atoms and optionally containing at least one heteroatom may be a hydrocarbon group or a hydrocarbon group in which at least one hydrogen atom is substituted with a heteroatom-containing substituent.

As the heteroatom in the (iii), examples include an oxygen atom, a nitrogen atom, a phosphorus atom, a sulfur atom, a silicon atom and a halogen atom. The heteroatom as the substituent may be a halogen atom. As the halogen atom, examples include those exemplified above in the (ii).

As the heteroatom-containing substituent in the (iii), examples include heteroatom-containing substituents exemplified below in the (iv). The heteroatom-containing substituent used in the (iii) may be an alkoxy group, an aryloxy group, an alkoxycarbonyl group or an acyloxy group.

As the hydrocarbon group containing 1 to 30 carbon atoms of the above (iii), examples include a linear, branched or cyclic saturated or unsaturated aliphatic hydrocarbon group, an aromatic hydrocarbon group and a combination thereof. More specifically, as the hydrocarbon group containing 1 to 30 carbon atoms, examples include a linear alkyl group containing 1 to 30 carbon atoms, a branched acyclic alkyl group containing 3 to 30 carbon atoms, an alkenyl group containing 2 to 30 carbon atoms, a cycloalkyl group containing 3 to 30 carbon atoms and optionally containing a side chain, an aryl group containing 6 to 30 carbon atoms, an arylalkyl group containing 7 to 30 carbon atoms, and an alkylaryl group containing 7 to 30 carbon atoms.

The linear alkyl group containing 1 to 30 carbon atoms may be a linear alkyl group containing 1 to 10 carbon atoms, such as a methyl group, an ethyl group, a n-propyl group, a n-butyl group, a n-pentyl group, a n-hexyl group, a n-heptyl group, a n-octyl group, a n-nonyl group and a n-decyl group, or it may be a linear alkyl group containing 1 to 4 carbon

atoms.

The branched acyclic alkyl group containing 3 to 30 carbon atoms may be a branched acyclic alkyl group containing 3 to 10 carbon atoms, such as an i-propyl group, an i-butyl group, a t-butyl group, a s-butyl group, an i-pentyl group (a 3-methylbutyl group), a t-pentyl group (a 1,1-dimethylpropyl group), a s-pentyl group (a 1-methylbutyl group), a 2-methylbutyl group, a neopentyl group (a 2,2-dimethylpropyl group), a 1,2-dimethylpropyl group and an i-hexyl group (a 4-methylpentyl group), or it may be a branched acyclic alkyl group containing 3 to 8 carbon atoms.

As the alkenyl group containing 2 to 30 carbon atoms, examples include a vinyl group, an allyl group, a butenyl group, a pentenyl group, a hexenyl group, a styryl group and a cinnamyl group. The alkenyl group may be an alkenyl group containing 3 to 8 carbon atoms, such as an allyl group, a butenyl group, a pentenyl group, a hexenyl group and a styryl group, or it may be an alkenyl group containing 4 to 8 carbon atoms, such as a butenyl group, a pentenyl group, a hexenyl group and a styryl group.

The cycloalkyl group containing 3 to 30 carbon atoms and optionally containing a side chain may be a cycloalkyl group containing 3 to 10 carbon atoms and optionally containing a side chain, such as a cyclopropyl group, a cyclobutyl group, a cyclopentyl group, a 2-methylcyclopentyl group, a 3-methylcyclopentyl group, a cyclohexyl group, a 4-methylcyclohexyl group, a 4-ethylcyclohexyl group, a cyclooctyl group and a decahydronaphthyl group (a bicyclo[4,4,0]decyl group), or it may be a cycloalkyl group containing 3 to 6 carbon atoms and optionally containing a side chain.

The aryl group containing 6 to 30 carbon atoms may be an aryl group containing 6 to 18 carbon atoms, such as a phenyl group, a naphthyl group, an azulenyl group, a biphenyl group, an anthracenyl group, a terphenyl group, a phenanthrenyl group, a triphenylenyl group, a chrysenyl group, a pyrenyl group and a tetracenyl group, or it may be an aryl group containing 6 to 12 carbon atoms.

The arylalkyl group containing 7 to 30 carbon atoms may be an arylalkyl group containing 7 to 15 carbon atoms, such as a benzyl group, a phenethyl group (a 2-phenylethyl group), a 9-fluorenyl group, a naphthylmethyl group and a 1-tetralinyl group, or it may be an arylalkyl group containing 7 to 10 carbon atoms.

The alkylaryl group containing 7 to 30 carbon atoms may be an alkylaryl group containing 7 to 20 carbon atoms, such as a tolyl group, a xylyl group, an ethylphenyl group, a propylphenyl group, a butylphenyl group, a pentylphenyl group, a hexylphenyl group, a heptylphenyl group, an octylphenyl group, a nonylphenyl group, a decylphenyl group, an undecylphenyl group and a dodecylphenyl group, or it may be an alkylaryl group containing 7 to 15 carbon atoms, such as a tolyl group, a xylyl group, an ethylphenyl group, a propylphenyl group, a butylphenyl group and a pentylphenyl group.

In the above (iii), the number of the total carbon atoms of the substituents corresponding to $R^3$ to $R^6$ is preferably from 1 to 30, more preferably from 2 to 25, and still more preferably from 4 to 20.

As the above (iii), examples include (iii-A) a linear alkyl group containing 1 to 30 carbon atoms, a branched acyclic alkyl group containing 3 to 30 carbon atoms, an alkenyl group containing 2 to 30 carbon atoms, a cycloalkyl group containing 3 to 30 carbon atoms and optionally containing a side chain, an aryl group containing 6 to 30 carbon atoms, an arylalkyl group containing 7 to 30 carbon atoms, and an alkylaryl group containing 7 to 30 carbon atoms, (iii-B) a group in which one or two or more of the heteroatoms are bound to each of the groups in the (iii-A) by substitution, (iii-C) a group in which one or two or more of the heteroatom-containing substituents are bound to each of the groups in the (iii-A) by substitution, and (iii-D) a group in which one or two or more of the heteroatoms and one or two or more of the heteroatom-containing substituents are bound to each of the groups in the (iii-A) by substitution.

As the (iii-C), examples include an alkyl group substituted with an alkoxy group, and an aryl group substituted with an alkoxycarbonyl group or an acyloxy group.

The (iii) hydrocarbon group containing 1 to 30 carbon atoms and optionally containing at least one heteroatom may be a trifluoromethyl group, a trichloromethyl group, a tribromomethyl group, a triiodomethyl group, a 2,4,6-triphenylphenyl group, a 2,6-diisopropylphenyl group, a 9-anthracenyl group, a pentafluoroethyl group, a pentafluorophenyl group, a phenyl group or a benzyl group, for example.

The (iv) is a heteroatom-containing substituent, and it is an atom or group selected from the group consisting of the following: $OR^b$, $C(O)OR^b$, C(O)OM', $C(O)N(R^a)_2$, $C(O)R^b$, $OC(O)R^b$, $SR^b$, $S(O)_2R^b$, $S(O)R^b$, $OS(O)_2R^b$, $SF_5$, $P(O)(OR^b)_{2-y}(R^a)_y$, CN, $N(H)R^a$, $N(R^b)_2$, $Si(OR^a)_{3-x}(R^a)_x$, $OSi(OR^a)_{3-x}(R^a)_x$, $NO_2$, $S(O)_2OM'$, $P(O)(OM')_2$, $P(O)(OR^b)_2M'$ or an epoxy-containing group (where each $R^a$ independently represents a hydrogen atom or a hydrocarbon group containing 1 to 20 carbon atoms; each $R^b$ independently represents a hydrocarbon group containing 1 to 20 carbon atoms; M' represents an alkaline metal, an alkaline earth metal, an ammonium, a quaternary ammonium or a phosphonium; x represents 0, 1, 2 or 3; and y represents 0, 1 or 2).

As the (iv), examples include a hydroxy group, a methoxy group, an ethoxy group, a n-propoxy group, an i-propoxy group, a n-butoxy group, a t-butoxy group, a phenoxy group, a p-methylphenoxy group, a p-methoxyphenoxy group, an ethoxycarbonyl group, a t-butoxycarbonyl group, a phenoxycarbonyl group, a dimethylamide group, an acetyl group, a benzoyl group, an acetoxy group, a methylthio group, an ethylthio group, a n-propylthio group, an i-propylthio group, a n-butylthio group, a t-butylthio group, a phenylthio group, a methylsulfonyl group, a phenylsulfonyl group, a methylsulfonyloxy group, a phenylsulfonyloxy group, a pentafluorosulfanyl group ($SF_5$), a dimethylphosphate group, a cyano group, an amino group ($NH_2$), a methylamino group, a dimethylamino group, a diethylamino group, a di-n-propylamino group, a cyclohexylamino group, a methylethylamino group, a methyl-n-propylamino group, a methylcyclohexylamino group, a carbazolyl group, a piperidyl group, a trimethylsilyl group, a triethylsilyl group, a dimethylphenylsilyl group, a trimethoxysilyl group, a triethoxysilyl group, a trimethylsilyloxy group, a trimethoxysiloxy group, sodium carboxylate, sodium sulfonate, potassium sulfonate, sodium phosphate and potassium phosphate.

$R^3$, $R^4$, $R^5$ and $R^6$ are optionally bound to adjacent substituents to form a 5- to 8-membered alicyclic ring or a 5-to 8-membered heterocyclic ring containing at least one heteroatom selected from the group consisting of an oxygen atom, a nitrogen atom and a sulfur atom. An aromatic ring may be included in the fused ring of the formed ring structure. The ring may be formed by 1,2-cyclopentylene, 1,2-cyclohexylene, 1-oxo-2,3-cyclopentylene, 1-oxo-2,3-cyclohexylene, 1,2-dihydroacenaphthylene and 9,10-dihydroanthracenylene, for example.

From the viewpoint of the stability of the ligand, at least one selected from the group consisting of $R^5$ and $R^6$ is preferably the atom or group selected from the group consisting of the above (i), (iii) and (iv); moreover, $R^5$ is preferably the atom or group selected from the group consisting of the above (i) and (iii), and $R^6$ is preferably the atom or group selected from the group consisting of the above (i), the above (iii), $C(O)OR^b$, $C(O)N(R^a)_2$, $C(O)R^b$, $S(O)_2R^b$ and $P(O)(OR^b)_{2-y}(R^a)_y$.

At least one selected from the group consisting of $R^5$ and $R^6$ adjacent to $X^1$, is particularly preferably an electron-withdrawing group, since the performance of the olefin polymerization catalyst improves. Both $R^5$ and $R^6$ adjacent to $X^1$ may be an electron-withdrawing group each. As the electron-withdrawing group, a trifluoromethyl group, a pentafluorophenyl group, a methoxycarbonyl group, a phenoxycarbonyl group, $SF_5$, a tosyl group, a mesyl group, a nitro group, a methylcarbonyl group, a phenylcarbonyl or the like is preferably used.

From the viewpoint of synthesis difficulty and economic rationality, at least one selected from the group consisting of $R^3$ and $R^4$ may be the atom or group selected from the group consisting of the above (i), (iii) and (iv), and at least one of $R^3$ and $R^4$ may be a hydrogen atom.

n is 0, 1, 2, 3 or 4, and when n is 0, $E^1$ is directly bound to a carbon atom to which $X^1$, $R^5$ and $R^6$ are bound. The value of n relates to the number of the carbon atoms of the carbon chain connecting $E^1$ with $X^1$. From the viewpoint of the stability of the structure of the complex, n may be 0, 1 or 2. Since the ring becomes a 5-membered ring and stabilizes the structure of the complex, n is preferably 1.

In the general formula (A), $R^1$ represents a hydrocarbon group represented by the following general formula (B) or (C):

[Chem. 23]

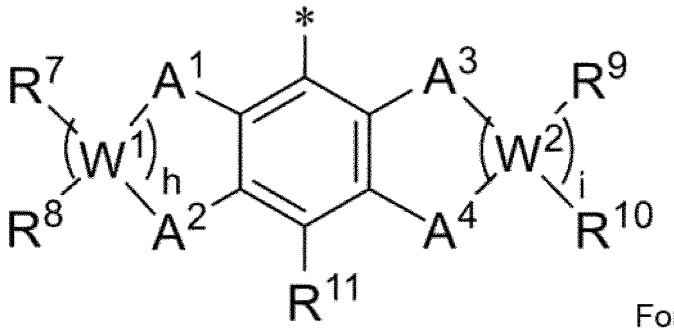

Formula (B)

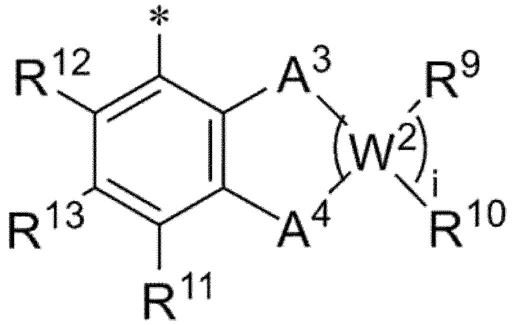

Formula (C)

[where

* represents a bond with $E^1$;

$R^7$, $R^8$, $R^9$, $R^{10}$, $R^{11}$, $R^{12}$ and $R^{13}$ each independently represent the atom or group selected from the group consisting

of the above (i) to (iv) defined in the above formula (A), and $R^7$, $R^8$, $R^9$ and $R^{10}$ are optionally bound to adjacent substituents to form a 5-to 8-membered alicyclic ring, a 5- to 8-membered aromatic ring, or a 5- to 8-membered heterocyclic ring containing at least one heteroatom selected from the group consisting of an oxygen atom, a nitrogen atom and a sulfur atom;

$A^1$, $A^2$, $A^3$ and $A^4$ each independently represent an oxygen atom, a sulfur atom, $-C(R)_2-$, -S(O)-, $-S(O)_2-$, -N(R)-, -P(R)- or - P(O)(R)- (where each R independently represents a hydrogen atom or a hydrocarbon group containing 1 to 20 carbon atoms and optionally containing at least one heteroatom);

in the formula (B), at least three selected from the group consisting of $A^1$, $A^2$, $A^3$ and $A^4$ are other than $-C(R)_2-$;

in the formula (C), both $A^3$ and $A^4$ are other than $-C(R)_2-$, and at least one selected from the group consisting of $R^{12}$ and $R^{13}$ is the atom or group selected from the group consisting of the above (ii) and (iv) (except for the epoxy-containing group);

$W^1$ and $W^2$ each independently represent a carbon atom, a silicon atom, a nitrogen atom, a phosphorus atom, a boron atom, an oxygen atom, -P(O)- or $-S(O)_2-$, and when it is a nitrogen atom, a phosphorus atom, a boron atom or -P(O)-, $R^8$ and $R^{10}$ are absent, and when it is an oxygen atom or $-S(O)_2-$, $R^7$ and $R^8$ are absent, as well as $R^9$ and $R^{10}$;

h and i are each independently an integer from 1 to 6, and when two or more $W^1$s, $W^2$s, $R^7$s, $R^8$s, $R^9$s or $R^{10}$s are each present, they may be the same or different from each other.]

In the formulae (B) and (C), $A^1$, $A^2$, $A^3$ and $A^4$ each independently represent an oxygen atom, a sulfur atom, $-C(R)_2-$, -S(O)-, $-S(O)_2-$, -N(R)-, -P (R) - or -P(O)(R)- (where each R independently represents a hydrogen atom or a hydrocarbon group containing 1 to 20 carbon atoms and optionally containing at least one heteroatom). The hydrocarbon group containing 1 to 20 carbon atoms and optionally containing at least one heteroatom as R may be the same as a hydrocarbon group containing 1 to 20 carbon atoms and optionally containing at least one heteroatom, which is included in the examples of the above (iii). From the viewpoint of synthesis difficulty and economic rationality, R may be a hydrogen atom or a hydrocarbon group containing 1 to 20 carbon atoms; R may be a hydrogen atom or a hydrocarbon group containing 1 to 10 carbon atoms; R may be a hydrogen atom or a hydrocarbon group containing 1 to 6 carbon atoms; or R may be a hydrogen atom or a hydrocarbon group containing 1 to 3 carbon atoms.

In the formulae (B) and (C), $W^1$ and $W^2$ each independently represent a carbon atom, a silicon atom, a nitrogen atom, a phosphorus atom, a boron atom, an oxygen atom, -P(O)- or $-S(O)_2-$, and when it is a nitrogen atom, a phosphorus atom, a boron atom or -P(O)-, $R^8$ and $R^{10}$ are absent, and when it is an oxygen atom or $-S(O)_2-$, $R^7$ and $R^8$ are absent, as well as $R^9$ and $R^{10}$.

In the formulae (B) and (C), from the viewpoint of the stability of the ligand, $W^1$ and $W^2$ may each independently be a carbon atom or a silicon atom, and $W^1$ and $W^2$ may each independently be a carbon atom.

In the formulae (B) and (C), $R^7$, $R^8$, $R^9$, $R^{10}$, $R^{11}$, $R^{12}$ and $R^{13}$ each independently represent the atom or group selected from the group consisting of the above (i) to (iv) defined in the above formula (A).

From the viewpoint of synthesis difficulty and economic rationality, $R^7$, $R^8$, $R^9$, $R^{10}$ and $R^{11}$ may each independently be the atom or group selected from the group consisting of the above (i) and (iii). From the viewpoint of synthesis difficulty and economic rationality, the (iii) in $R^7$, $R^8$, $R^9$, $R^{10}$ and $R^{11}$ may be an alkyl group containing 1 to 4 carbon atoms or an aryl group containing 6 to 10 carbon atoms.

$R^7$, $R^8$, $R^9$ and $R^{10}$ may each independently be bound to adjacent substituents to form, in combination with $W^1$ or $W^2$ to which they are bound, a 5- to 8-membered alicyclic ring, a 5- to 8-membered aromatic ring, or a 5- to 8-membered heterocyclic ring containing at least one heteroatom selected from the group consisting of an oxygen atom, a nitrogen atom and a sulfur atom. For example, in the case where h or i is 2 and two $W^1$s or $W^2$s are present, $R^7$, $R^8$, $R^9$ and $R^{10}$ may each independently be bound to adjacent substituents to form, in combination with the two $W^1$s or $W^2$s to which they are bound, a 5- to 8-membered alicyclic ring, a 5- to 8-membered aromatic ring, or a 5- to 8-membered heterocyclic ring.

$R^7$, $R^8$, $R^9$ and $R^{10}$ may form an alicyclic ring in combination with $W^1$ or $W^2$ to which they are bound, or they may be bound to adjacent substituents to form an alkylene group containing 4 to 7 carbon atoms. For example, adjacent $R^7$ and $R^8$ may be an alkylene group containing 5 carbon atoms to form a 6-membered ring in combination with $W^1$ to which they are bound. $R^7$, $R^8$, $R^9$ and $R^{10}$ may each independently be bound to the aryl groups of adjacent substituents to form a ring in combination with $W^1$ or $W^2$ to which they are bound. For example, adjacent $R^7$ and $R^8$ may be a biphenylene group to form a 5-membered ring in combination with $W^1$ to which they are bound. In this case, when $W^1$ is a carbon atom, a fluorenylidene is formed by $W^1$, $R^7$ and $R^8$.

Also, $R^7$, $R^8$, $R^9$ and $R^{10}$ may form an alicyclic ring in combination with two $W^1$s or $W^2$s to which they are bound, or they may be bound to adjacent substituents to form an alkylene group containing 3 to 6 carbon atoms or an alkylene group containing 3 or 4 carbon atoms to form a 5- or 6-membered ring. Also, $R^7$, $R^8$, $R^9$ and $R^{10}$ may form an aromatic ring containing 6 to 12 carbon atoms, in combination with two $W^1$s or $W^2$s to which they are bound.

Also, the ring may be a heterocyclic ring in which at least one carbon atom of the alicyclic or aromatic ring is substituted with a heteroatom selected from the group consisting of an oxygen atom, a nitrogen atom and a sulfur atom.

Also, the alicyclic, aromatic or heterocyclic ring formed by $R^7$, $R^8$, $R^9$ and $R^{10}$ may contain the atom or group

selected from the group consisting of the above (ii) to (iv) defined in the above formula (A) as a substituent. The substituent may be a halogen atom.

From the viewpoint of synthesis difficulty and economic rationality, $R^{11}$ may be a hydrogen atom.

From the viewpoint of synthesis difficulty and economic rationality, $R^{12}$ and $R^{13}$ may each independently be the atom or group selected from the group consisting of the above (i), (iii) and (iv). From the viewpoint of synthesis difficulty and economic rationality, the (iii) in $R^{12}$ and $R^{13}$ may be an alkyl group containing 1 to 10 carbon atoms, an aryl group containing 6 to 10 carbon atoms, or the like. From the viewpoint of synthesis difficulty and economic rationality, the (iv) in $R^{12}$ and $R^{13}$ may be $OR^b$, $C(O)OR^b$, $C(O)N(R^a)_2$, $C(O)R^b$, $OC(O)R^b$, $SR^b$, $S(O)_2R^b$, $S(O)R^b$, $OS(O)_2R^b$, $SF_5$, $P(O)(OR^b)_{2-y}(R^a)_y$, CN, $N(H)R^a$, $N(R^b)_2$, $Si(OR^a)_{3-x}(R^a)_x$, $OSi(OR^a)_{3-x}(R^a)_x$, $NO_2$ or the like.

In the formulae (B) and (C), h and i are each independently an integer from 1 to 6, and when two or more $W^1$s, $W^2$s, $R^7$s, $R^8$s, $R^9$s or $R^{10}$s are each present, they may be the same or different from each other.

From the viewpoint of synthesis difficulty and economic rationality, h and i may each independently be an integer from 1 to 3, may be 1 or 2, and may be 1.

In the formula (B), at least three selected from the group consisting of $A^1$, $A^2$, $A^3$ and $A^4$ are other than $-C(R)_2-$. That is, in the formula (B), at least three selected from the group consisting of $A^1$, $A^2$, $A^3$ and $A^4$ are an oxygen atom, a sulfur atom, -S(O)-, $-S(O)_2-$, -N(R)-, -P(R)- or -P(O)(R)- each.

In the formula (B), from the viewpoint of synthesis difficulty and economic rationality, those other than $-C(R)_2-$may be an oxygen atom, a sulfur atom or -N(R)- each, and they may be an oxygen atom each.

In the formula (B), especially, four of $A^1$, $A^2$, $A^3$ and $A^4$ may be a group other than $-C(R)_2-$ each, and four of them may be an oxygen atom each.

In the formula (C), both $A^3$ and $A^4$ are other than $-C(R)_2-$, and at least one selected from the group consisting of $R^{12}$ and $R^{13}$ is the atom or group selected from the group consisting of the above (ii) and (iv) (except for the epoxy-containing group). That is, in the formula (C), both $A^3$ and $A^4$ are an oxygen atom, a sulfur atom, -S(O)-, $-S(O)_2-$, -N(R)-, -P(R)- or -P(O)(R)-, and at least one selected from the group consisting of $R^{12}$ and $R^{13}$ is the atom or group selected from the group consisting of the above (ii) and (iv) (except for the epoxy-containing group).

In the formula (C), from the viewpoint of synthesis difficulty and economic rationality, one other than $-C(R)_2-$ may be an oxygen atom, a sulfur atom or -N(R)-, and it may be an oxygen atom.

When $R^{12}$ and $R^{13}$ in the formula (C) is the atom or group selected from the group consisting of the above (ii) and (iv) (except for the epoxy-containing group), from the viewpoint of activity, the atom or group may be a fluorine atom, $OR^b$, $SR^b$, $N(H)R^a$, $N(R^b)_2$ or $OSi(OR^a)_{3-x}(R^a)_x$, and it may be $OR^b$. When $R^{12}$ and $R^{13}$ is $OR^b$, it may be a methoxy group, an ethoxy group, a n-propoxy group, an i-propoxy group, a n-butoxy group, a t-butoxy group or a phenoxy group, for example.

In particular, from the viewpoint of activity, both $A^3$ and $A^4$ in the formula (C) may be an oxygen atom, a nitrogen atom, a phosphorus atom or a sulfur atom, and $R^{12}$ may be the atom or group selected from the group consisting of the above (ii) and (iv) (except for the epoxy-containing group). Also, both $A^3$ and $A^4$ in the formula (C) may be an oxygen atom, and $R^{12}$ may be the atom or group selected from the group consisting of the above (ii) and (iv) (except for the epoxy-containing group).

In the general formula (A), $R^2$ represents a hydrocarbon group containing 1 to 20 carbon atoms and optionally containing at least one heteroatom, which is different from the hydrocarbon group represented by the general formula (B) or (C); l is 1 or 2, and when l is 2, $R^2$ is absent.

The hydrocarbon group containing 1 to 20 carbon atoms and optionally containing at least one heteroatom as $R^2$ may be the same as a hydrocarbon group containing 1 to 20 carbon atoms and optionally containing at least one heteroatom, which is included in the examples of the above (iii).

$R^2$ may be a hydrocarbon group containing 3 to 20 carbon atoms. For example, a n-propyl group, an isopropyl group, an isobutyl group, a t-butyl group, a 3-pentyl group, a 2,6-dimethyl-4-heptyl group, a cyclopentyl group, a cyclohexyl group, a cycloheptyl group, a norbornyl group, an adamantyl group, a (1R, 2S, 5R)-2-isopropyl-5-methylcyclohexane-1-yl group (a menthyl group), a phenyl group, a 2-methoxyphenyl group, a 2,6-diethylphenyl group (DEP), a 2,6-dimethoxyphenyl group (DMP), a 2',6'-dimethoxy[1,1'-biphenyl]-2-yl group, a (1R, 2S, 5R)-2-isopropyl-5-methylcyclohexane-1-yl group or the like is preferably used.

From the viewpoint of synthesis difficulty and economic rationality, l may be 2.

In the general formula (A), Z is a hydrogen atom, a leaving group or a cation having a valence of 1 or more and 4 or less, and m is an integer more than or equal to 1 and less than or equal to a valence of Z. When m is 1, Z may be a hydrogen atom, a lithium ion, a sodium ion, a potassium ion or the like, for example. When m is 2, Z may be a magnesium ion, a calcium ion, a zinc ion or the like, for example. As the leaving group, examples include a hydrogen atom, a $R^bS(O)_2$ group (where $R^b$ represents a hydrocarbon group containing 1 to 20 carbon atoms), a $C(F)_3S(O)_2$ group, $R^bS(O)_2$ and a $TiOR^b$ group. As the cation, examples include an ammonium, a quaternary ammonium, a phosphonium, and metal ions of the Groups 1 to 14 of the periodic table. Of them, preferred are a hydrogen atom, $NH^{4+}$, $(R^b)_4N^+$ (where $R^b$ is as described above; four $R^b$s may be the same or different; and the same shall apply hereinafter), $(R^b)_4P^+$, $Li^+$, $Na^+$, $K^+$, $Cu^+$, $Ag^+$, $Au^+$, $Mg^{2+}$, $Ca^{2+}$ and $Al^{3+}$, and more preferred are a hydrogen atom, $(R^b)_4N^+$, $Li^+$, $Na^+$, $K^+$ and $Ag^+$.

As the compound represented by the general formula (A), examples include, but are not limited to, the following compounds.

[Chem. 24]

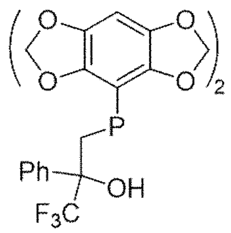
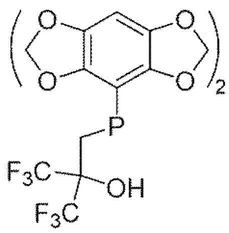
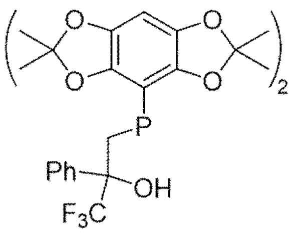
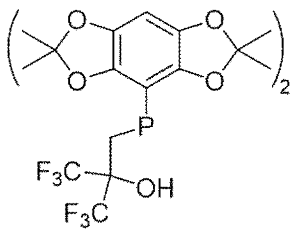
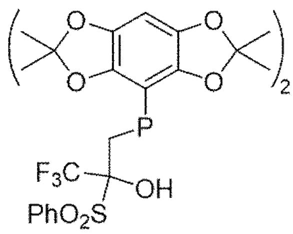
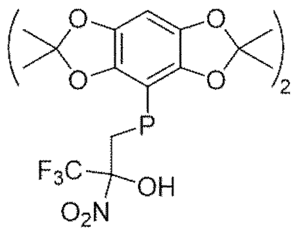
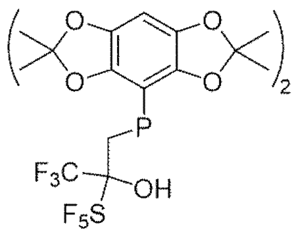
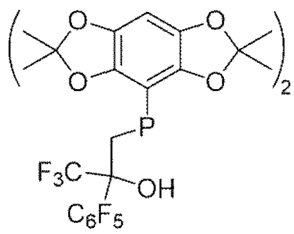
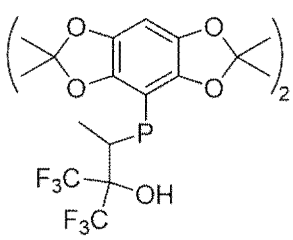
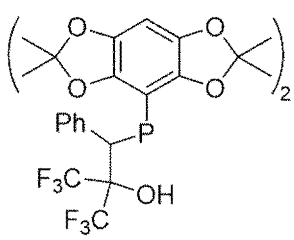
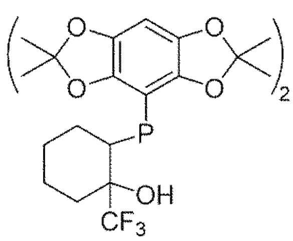
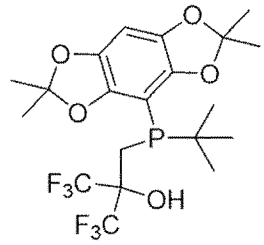
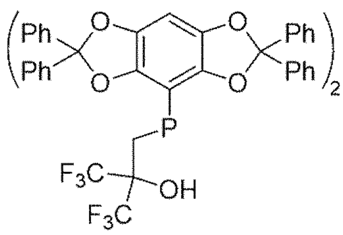
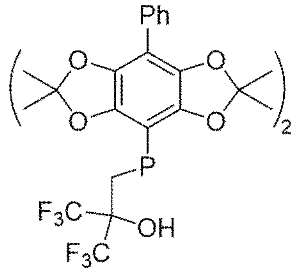
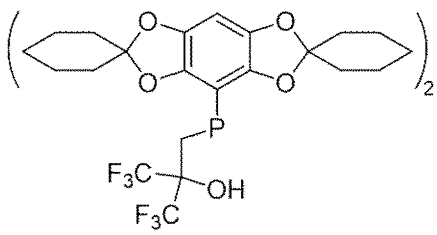
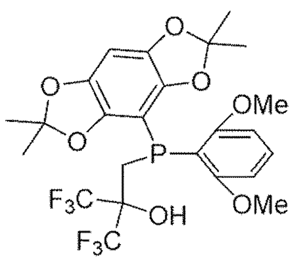
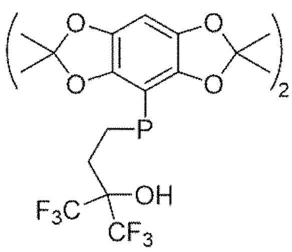
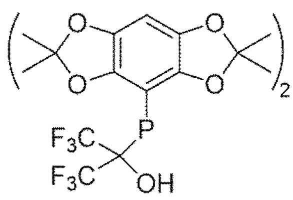
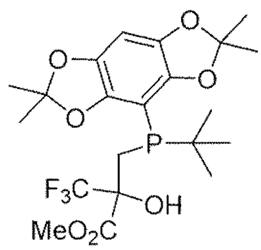
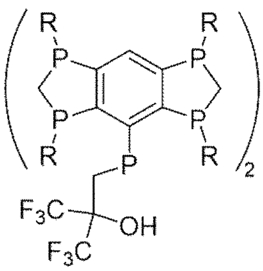
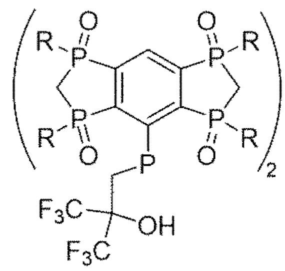
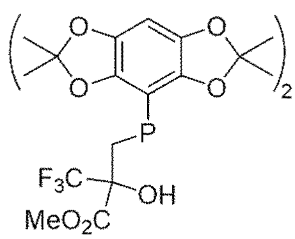
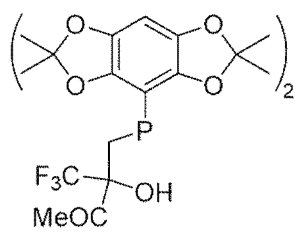

[Chem. 25]

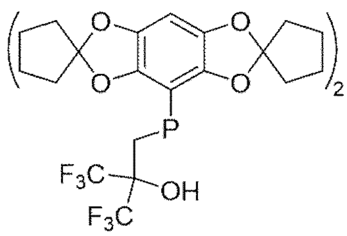
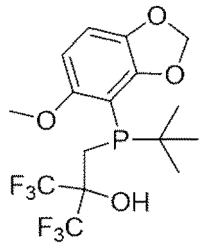
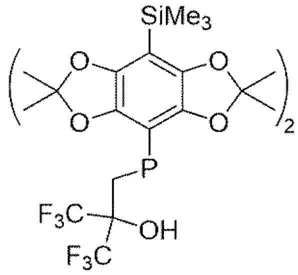
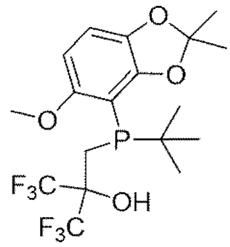
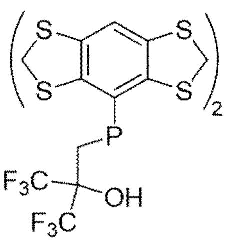
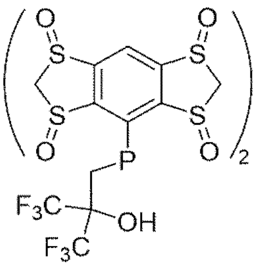
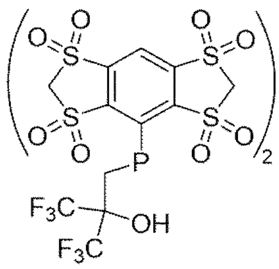
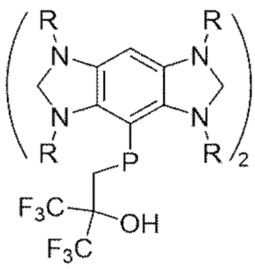
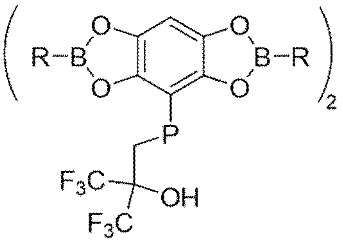
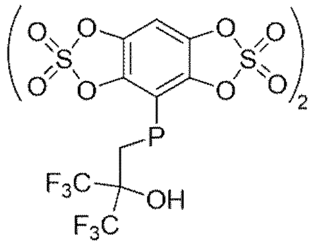
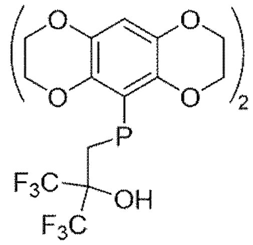
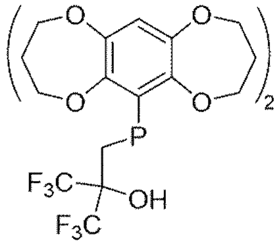
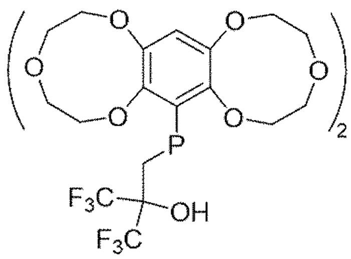
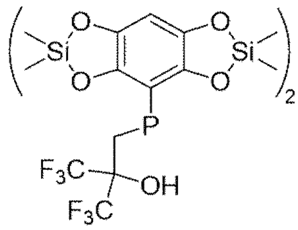
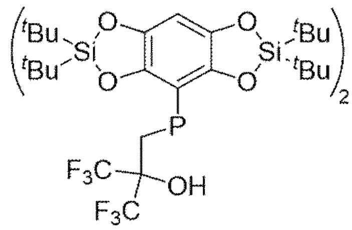
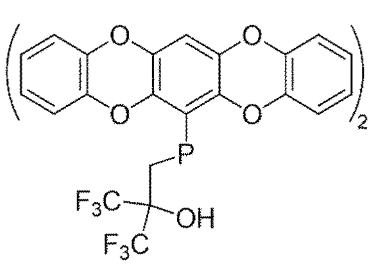
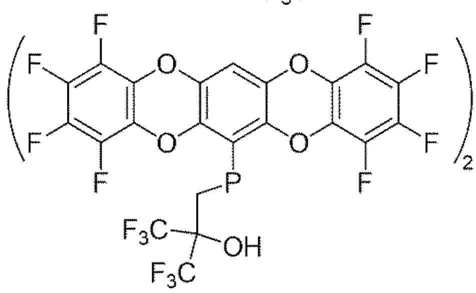
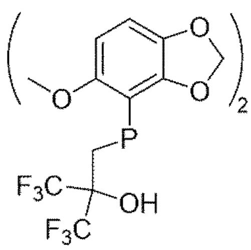
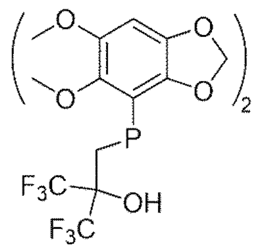
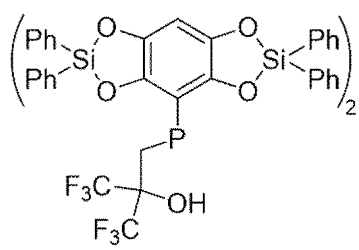

(In the formulae, R is a hydrogen atom or a hydrocarbon group containing 1 to 20 carbon atoms and optionally containing at least one heteroatom.)

The compound represented by the general formula (A) can be synthesized by a conventionally-known synthesis

method. For example, the compound represented by the general formula (A) can be synthesized by reacting $E^1H(R^1)_l(R^2)_{2-l}$ or the like with an epoxy in the presence of a base or an acid. Also, the compound represented by the general formula (A) can be synthesized by reacting $E^1CH_3(R^1)_l(R^2)_{2-l}$ with a ketone in the presence of a base. For example, referable typical documents include Patent Document 5, Non-Patent Document 7, and Journal of Fluorine Chemistry 2002, 117, P121-129.

As the compound represented by $E^1H(R^1)_l(R^2)_{2-l}$, a commercially-available product can be appropriately selected and used. When such a product is not available, the compound can be synthesized by reacting a phosphine halide with a nucleophilic agent (such as organolithium and organomagnesium) to synthesize $E^1X(R^1)_l(R^2)_{2-l}$ (where X is a halogen atom) and allowing a hydride reducing agent (such as lithium aluminum hydride) to act thereon. For example, referable typical documents include JP-A No. 2021-113174.

A commercially-available product may be appropriately selected and used as a compound for introducing the substituent represented by the general formula (B) or (C) to $R^1$. When such a product is not available, the compound can be synthesized by an intermolecular or intramolecular cyclization reaction. As such a cyclization reaction, examples include a nucleophilic substitution reaction of a dihalogen molecule, a Friedel-Crafts reaction, and a cyclization reaction using a transition metal. For example, referable typical documents include RSC Advances 2014, 4, P16312-16319, Bioorg. Med. Chem. Lett. 2014, 24, P2379-2382, Chem. Eur. J. 2013, 19, P17349-17357, and Org. Biomol. Chem. 2018, 16, P8976-8983.

The compound represented by the general formula (A) functions as a ligand that is able to form a complex with the transition metal compound represented by the general formula (E) or (F) described below. Especially, the compound represented by the general formula (A) where $X^1$ is an oxygen atom and $E^1$ is a phosphorus atom, may be referred to as an alkylene linked phosphine alkoxide (ALPHA) ligand, since it has a structure in which a phosphorus is bound to an oxygen via an alkylene group.

II-2. Olefin polymerization catalyst composition

The olefin polymerization catalyst composition of the second embodiment of the present invention is an olefin polymerization catalyst composition comprising the compound represented by the general formula (A) and a transition metal compound represented by the following general formula (E) or (F):

[Chem. 26]

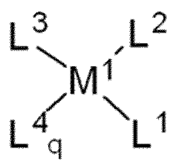

Formula (E)

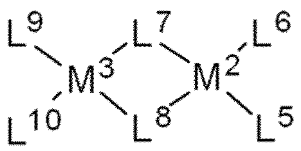

Formula (F)

[where

$M^1$, $M^2$ and $M^3$ each independently represent a nickel atom or a palladium atom; $L^1$, $L^2$, $L^3$, $L^4$, $L^5$, $L^6$, $L^9$ and $L^{10}$ each independently represent a ligand coordinated to $M^1$, $M^2$ or $M^3$, and $L^7$ and $L^8$ represent a ligand coordinated to $M^2$ and $M^3$;
q is 0, 1 or 2;
$L^1$ and $L^2$ are optionally bound to each other to form a ring containing $M^1$;
$L^3$ and $L^4$ are optionally bound to each other to form a ring containing $M^1$;
$L^5$ and $L^6$ are optionally bound to each other to form a ring containing $M^2$; and
$L^9$ and $L^{10}$ are optionally bound to each other to form a ring containing $M^3$.]

In the olefin polymerization catalyst composition of the second embodiment of the present invention, the compound represented by the general formula (A) may be the same as the above-described compound represented by the general formula (A) of the second embodiment. Accordingly, it is not described here.

In the compound represented by the general formula (A), as $R^1$, at least one hydrocarbon group represented by the general formula (B) or (C) is bound to $E^1$ such as a phosphorus atom. In the hydrocarbon group represented by the general formula (B) or (C), since the substituents $A^1$ and $A^3$, which are in the ortho-positions relative to the carbon atom bound to $E^1$ such as a phosphorus atom, form a cyclic structure, free rotation of the substituents in the ortho-positions is suppressed. On the other hand, the hydrocarbon group represented by the general formula (B) or (C) has appropriate bulkiness. When a phenyl group containing freely rotatable substituents in the two ortho-positions thereof, is bound to $E^1$ and when the compound is used as a ligand, steric hindrance in the vicinity of the transition metal, which is the active center, becomes too high; therefore, it is though that the activity of the catalyst is likely to decrease. When an unsubstituted phenyl group is bound to $E^1$ and when the compound is used as a ligand, due to poor steric hindrance in the vicinity of the transition metal, it is thought that the molecular weight of the polymer is less likely to increase. When the compound represented by the general formula (A) is used as the ligand of the transition metal compound, appropriate steric hindrance can be retained in the vicinity of the transition metal; therefore, it is thought that while keeping a high level of molecular weight, the activity of the catalyst can be increased.

Also in the compound represented by the general formula (A), since the substituents of the phenyl group bound to $E^1$ such as a phosphorus atom are substituents in each of which a heteroatom such as an oxygen atom is contained in the ring structure, it is thought that the coordination force of the heteroatom such as an oxygen atom with respect to the central metal of the catalyst is further increased; the catalyst is highly activated; and the molecular weight of the polymer thus obtained is increased.

In the general formula (E) or (F), $M^1$, $M^2$ and $M^3$ each independently represent a nickel atom or a palladium atom. The valence of the metal M means the formal oxidation number used in organometallic chemistry. That is, when an electron pair in a bond in which certain elements are involved is assigned to an element having greater electronegativity, the valence means a number of charge remaining on an atom of the element. Due to availability and low cost, a nickel atom is preferred.

In the general formula (E) or (F), $L^1$, $L^2$, $L^3$, $L^4$, $L^5$, $L^6$, $L^9$ and $L^{10}$ each independently represent a ligand coordinated to $M^1$, $M^2$ or $M^3$, and they represent an electron-donating ligand having a valence of -1 or a neutral electron-donating ligand.

The electron-donating ligand having a valence of -1 is an electrically negative ligand forming a $\sigma$ bond with M (the central metal), or it is a ligand that donates a $\pi$ electron delocalized on 3 or more carbon atoms. An example of a neutral electron-donating ligands is an electroneutral ligand which is able to form a coordinate bond by coordinating an unpaired electron with M. The ligand is a molecule containing an unpaired electron-containing atom. As the unpaired electron-containing atom, examples include a nitrogen atom, a phosphorus atom, an arsenic atom, an oxygen atom, a sulfur atom and a selenium atom. Examples of other neutral electron-donating ligands include a molecule such as ethylene and cyclooctadiene (cod), which forms a $\pi$-donating bond by donating a n electron, and a molecule such as dibenzylideneacetone (dba), which contains a heteroatom and an olefin both of which coordinate to a metal. As $L^1$ to $L^6$, $L^9$ and $L^{10}$, a known neutral ligand for metal complexes, such as acetonitrile, isonitrile, carbon monoxide, ethylene and tetrahydrofuran, or a $\pi$ electron-donating ligand such as allyl and cyclopentadienyl can be used. Also, a molecule represented by $E^2R'R''R'''$ or $X^2R'R''$ can be used as the ligand. In the formulae, $E^2$ represents N, P or As; $X^2$ represents O, S or Se; R', R" and R‴ are each independently a hydrogen atom, an alkyl, alicyclic, alkoxy, aryl or aryloxy group containing 1 to 30 carbon atoms and optionally being substituted, or an amino or silyl group in which at least one hydrogen atom is substituted with a hydrocarbon containing 1 to 30 carbon atoms; R' and R" may be linked to form a heterocyclic structure; R', R" and R‴ may be linked to form an aromatic heterocyclic structure containing $E^2$. In addition, $L^1$ and $L^2$ are, $L^3$ and $L^4$ are, $L^5$ and $L^6$ are, and $L^9$ and $L^{10}$ are optionally bound to each other to form a ring containing $M^2$ or $M^3$. When a ring is formed by the groups, the number of the members of the ring including M ranges from a 5-membered ring at a minimum up to a 10-membered ring.

$L^1$ to $L^6$, $L^9$ and $L^{10}$ may contain an electron-donating ligand having a valence of -1. From the viewpoint of ease of causing a metal complex-forming reaction, $L^1$ to $L^6$, $L^9$ and $L^{10}$ are preferably selected so that the valence of the metal complex is 1 or 2. Accordingly, the number of the electron-donating ligand having a valence of -1 in $L^1$ to $L^6$, $L^9$ and $L^{10}$ is preferably 0 to 2.

When $L^1$ to $L^6$, $L^9$ and $L^{10}$ each independently represent an electron-donating ligand having a valence of -1, it may be a hydrogen atom, a halogen atom or a hydrocarbon group containing 1 to 20 carbon atoms and optionally containing at least one heteroatom. The structure of the hydrocarbon moiety may be any of linear, branched or cyclic structures, and it may form a ring containing a heteroatom. The number of the carbon atoms is preferably from 1 to 16, and more preferably from 1 to 10.

As the electron-donating ligand having a valence of -1 in $L^1$ to $L^6$, $L^9$ and $L^{10}$, examples include a hydride group, a methyl group, an ethyl group, a n-propyl group, an isopropyl group, a n-butyl group, an isobutyl group, a neopentyl group, a n-hexyl group, a n-octyl group, a n-decyl group, a n-dodecyl group, a cyclopentyl group, a cyclohexyl group, a benzyl group, a trimethylsilylmethyl group, a phenyl group, a p-methylphenyl group, a p-fluorophenyl group, a fluoride group, a chloride group, a bromide group and an iodine group. Of these examples, preferred are a hydride group, a methyl group, a

neopentyl group, a benzyl group, a trimethylsilylmethyl group, a phenyl group, a p-fluorophenyl group, a chloride group, a bromide group and an iodine group.

Besides them, each of $L^1$ to $L^6$, $L^9$ and $L^{10}$ is preferably a phosphine, a pyridine, a piperidine, an alkyl ether, an aryl ether, an alkyl aryl ether, a cyclic ether, an alkyl nitrile derivative, an aryl nitrile derivative, an alcohol, an amide, an aliphatic ester, an aromatic ester, an amine, a cyclic unsaturated hydrocarbon or the like. It is more preferably a phosphine, a pyridine, a cyclic ether, an aliphatic ester, an aromatic ester, a cyclic olefin or the like, and it is particularly preferably trialkylphosphine, triarylphosphine, pyridine, lutidine (dimethylpyridine), picoline (methylpyridine) or $R^bC(O)O^-$ (where $R^b$ is as defined above). As the case where $L^1$ and $L^2$ are, $L^3$ and $L^4$ are, $L^5$ and $L^6$ are, and $L^9$ and $L^{10}$ are optionally bound to each other to form a ring containing $M^2$ or $M^3$, examples include a cycloocta-1-enyl group, an acetylacetonate group, a tetramethylethylenediamine group and a 1,2-dimethoxyethane group, which are also preferred embodiments.

$L^7$ and $L^8$ represent a ligand coordinated to the metal atoms $M^2$ and $M^3$, which are bound to $M^2$ and $M^3$ in the form called "3-center 4-electron bond". The ligand as $L^7$ or $L^8$ may be, for example, a hydrogen atom, a halogen atom, a hydrocarbon group containing 1 to 4 carbon atoms, an alkoxy group containing 1 to 6 carbon atoms, a thioalkoxy group containing 1 to 6 carbon atoms, a hydrocarbon group -substituted amino group containing 1 to 6 carbon atoms, and an acetyl group. Each of $L^7$ and $L^8$ is preferably a fluoride group, a chloride group, a bromide group, an iodide group, a methyl group, an ethyl group, a propyl group, a methoxy group, a phenoxy group, a dimethylamide group, a hydride group, a thiomethoxy group, a thiophenoxy group or an acetyl group, more preferably a fluoride group, a chloride group, a bromide group, an iodine group, a methyl group, a methoxy group, a phenoxy group, a hydride group, a thiomethoxy group, a thiophenoxy group or an acetyl group, and still more preferably a chloride group, a bromide group, an iodine group, a methoxy group, a phenoxy group or an acetyl group.

In the general formula (E), q is a value of 0, 1 or 2.

As the compound represented by the general formula (E) or (F), examples include, but are not limited to, the following compounds; moreover, examples include $Ni(CH_2C(H)CH_2)_2$, $Ni(CH_2C(Me)CH_2)_2$, $Ni(CH_2Si(Me)_3)_2(Py)_2$ (hereinafter, Py means pyridine), $Ni(CH_2Si(Me)_3)_2(Lut)_2$(hereinafter, Lut means 2,6-lutidine), $NiPh_2(Py)_2$, $NiPh_2(Lut)_2$ and $Pd(OC(O)CH_3)_2$.

These compounds are thought to form a complex with the compound represented by the general formula (A).

[Chem. 27]

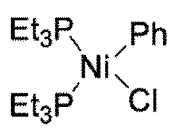

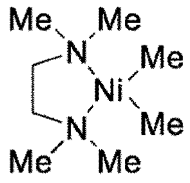

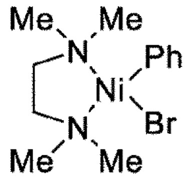

Pd(dba)$_2$

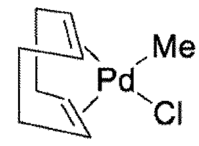

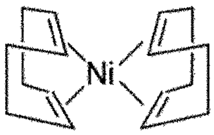

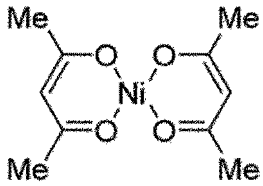

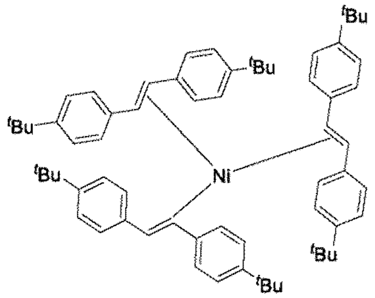

Pd$_2$(dba)$_3$

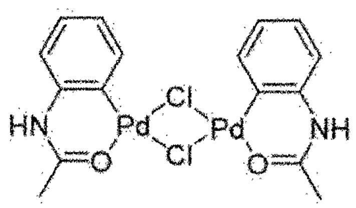

The compound represented by the general formula (A) can be used as a catalyst for olefin polymerization reaction, in the state of a composition with the transition metal compound represented by the general formula (E) or (F) or in the state of a metal complex which is a reaction product with the transition metal compound. In the olefin polymerization reaction, the product may be isolated and used as a catalyst after the compound represented by the general formula (A) is reacted with the transition metal compound represented by the general formula (E) or (F), or the product may be directly used in the polymerization reaction, without isolating the product from the reaction system or without washing the product. To react these compounds, a method known for the synthesis of a metal complex can be used. The operation is preferably entirely carried out in an inert gas. The reaction is carried out in a homogeneous solvent. As the solvent, a common hydrocarbon-based reaction solvent can be used, and it is preferably toluene. The concentration of the transition metal compound in the reaction solvent can be freely determined, as long as the upper limit is the saturation concentration. The concentration is preferably within a range of from 1 mM to 50 mM. The order of mixing the compound represented by the general formula (A) (a ligand) and the transition metal compound represented by the general formula (E) or (F) is not limited. The solvent can be added to a mixture of the ligand and the transition metal compound, both of which are solid, or the transition metal compound can be dissolved and then added to the ligand which is solid. The mixing ratio of the ligand to the transition metal compound (the ligand : the metal) is preferably within a range of from 1:1 to 1:10. The mixing temperature can be appropriately determined within a range of from 20°C to the boiling point of the solvent. The mixing temperature is preferably within a range of from 35°C to 45°C. The mixing time is preferably determined within a range of from one minute to 24 hours, and more preferably within a range of from 10 minutes to 30 minutes. One aspect of the present invention is a method for producing an olefin polymerization catalyst, comprising the step of reacting the compound represented by the general formula (A) with the transition metal compound represented by the general formula (E) or (F).

II-3. Metal complex

In another aspect, the second embodiment of the present invention provides a metal complex represented by the following general formula (D):

[Chem. 28]

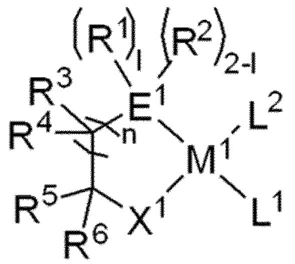

Formula (D)

[where

$X^1$, $E^1$, n, $R^1$, $R^2$, l, $R^3$, $R^4$, $R^5$ and $R^6$ are as defined in the above [2-1], that is, in the compound represented by the general formula (A) of the second embodiment, and $M^1$, $L^1$ and $L^2$ are as defined in the transition metal compound represented by the general formula (E) or (F).]

As the metal complex represented by the general formula (D), examples include the following complexes. However, they are merely examples, and the complex in the method of the present invention is not limited to the following examples.

[Chem. 29]

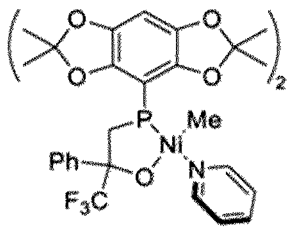
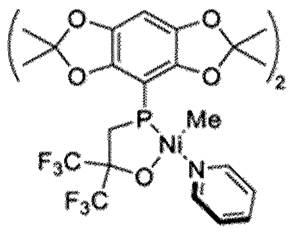
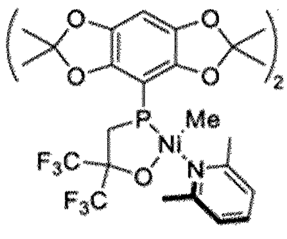
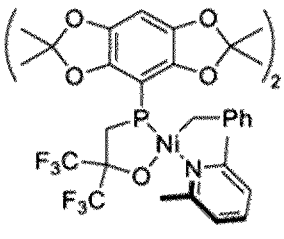
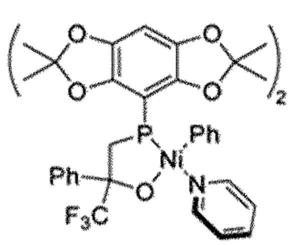
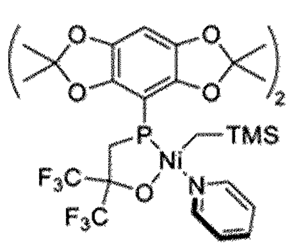
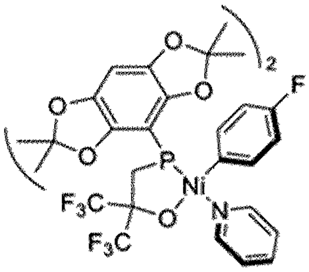
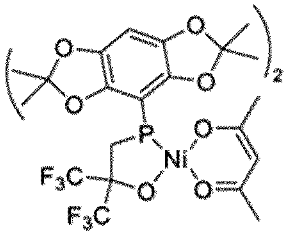
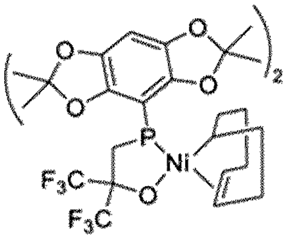
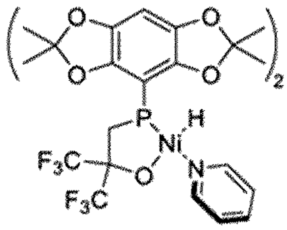
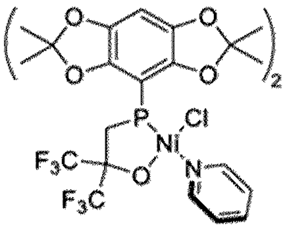
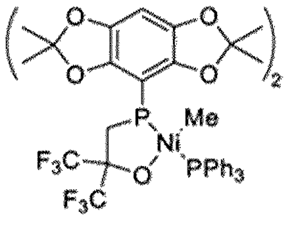
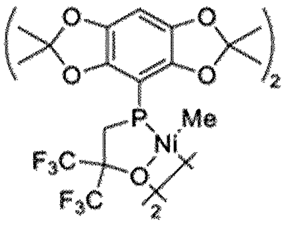
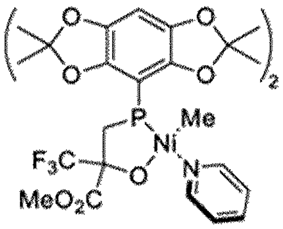
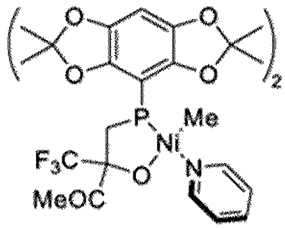
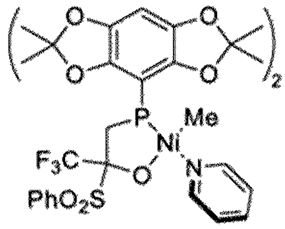
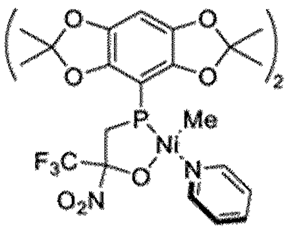
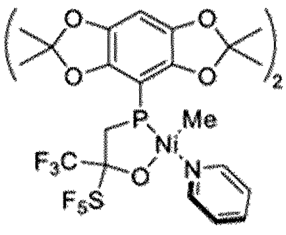
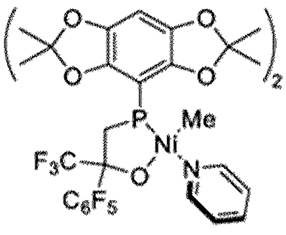
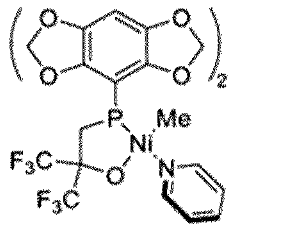

[Chem. 30]

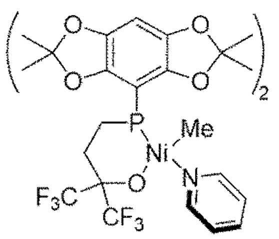 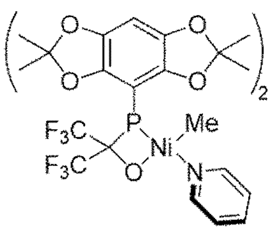 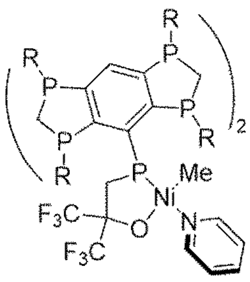 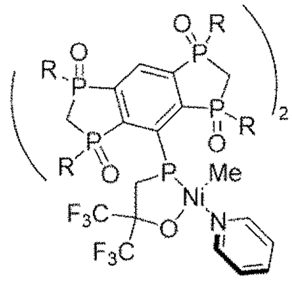

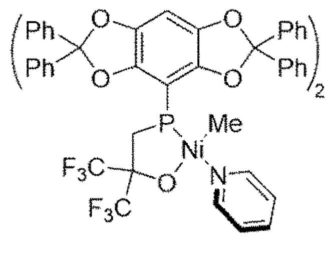 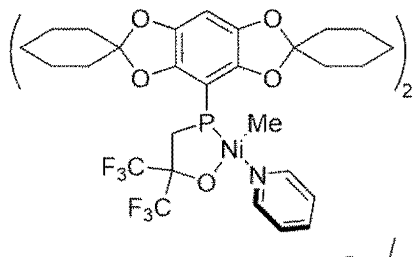 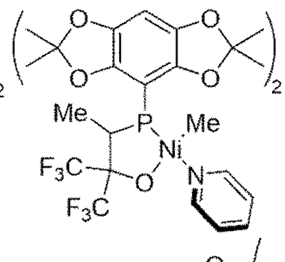

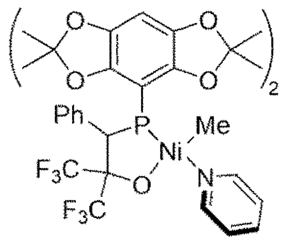 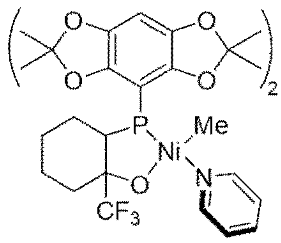 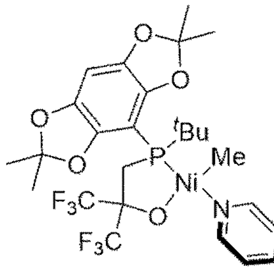 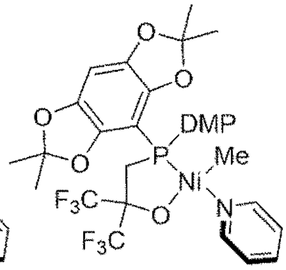

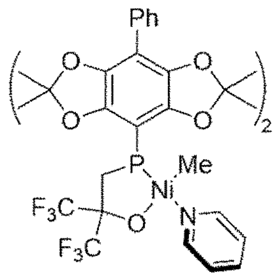 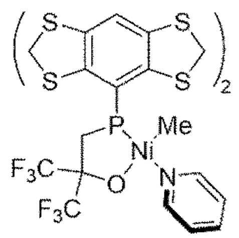 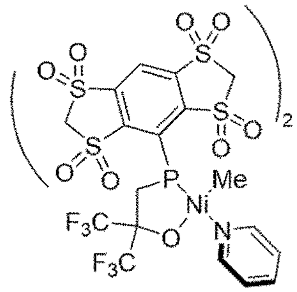 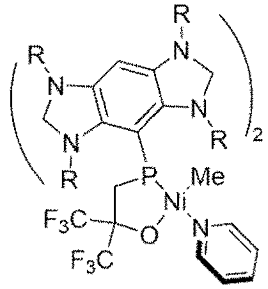

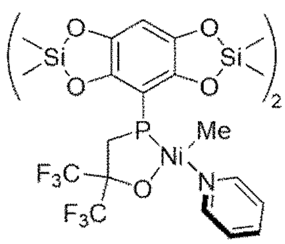 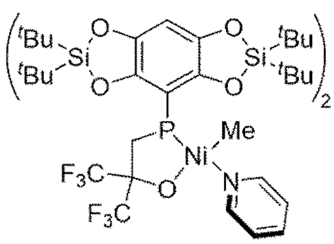 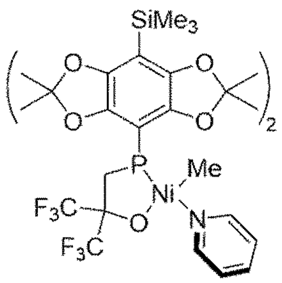

[Chem. 31]

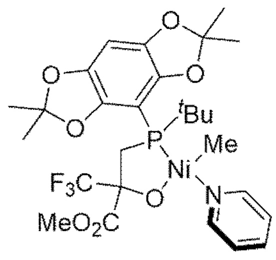
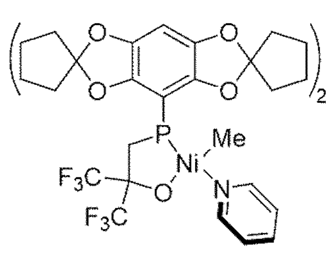
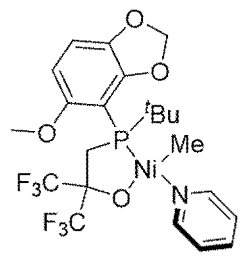
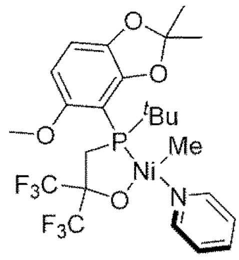

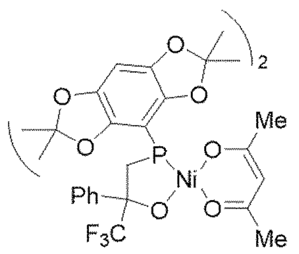
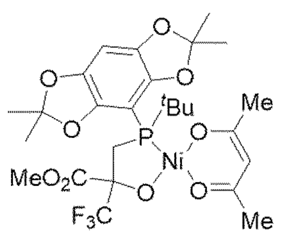
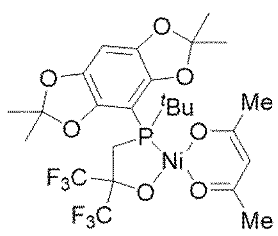
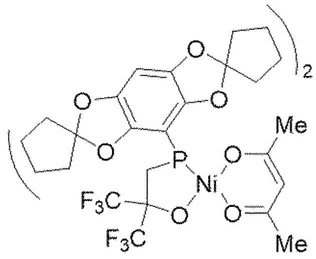

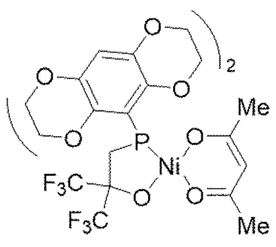
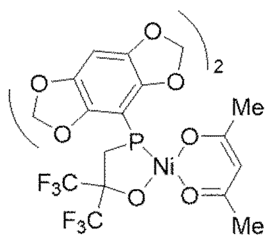
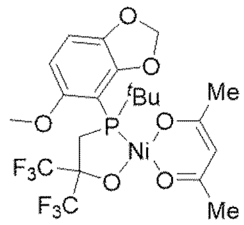
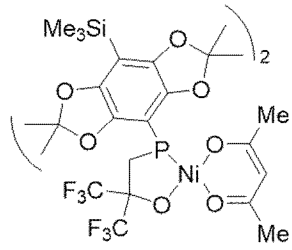

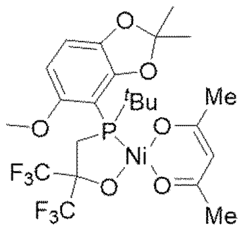
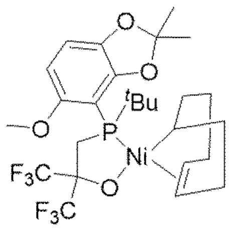

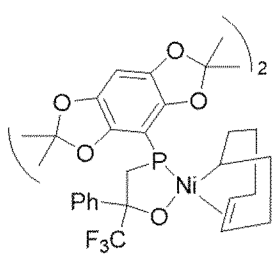
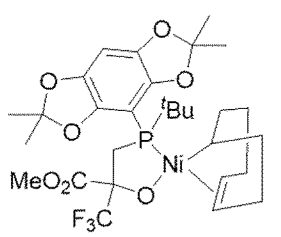
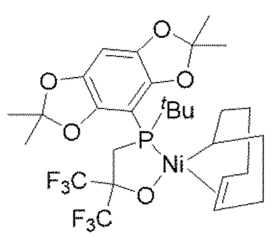
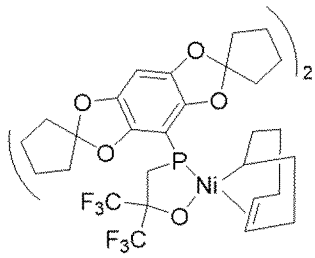

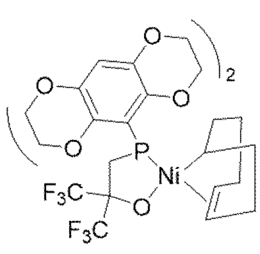
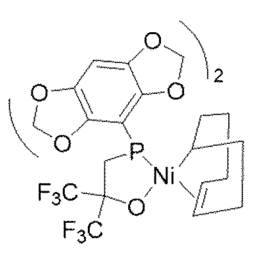
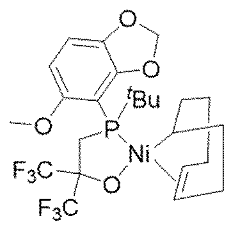
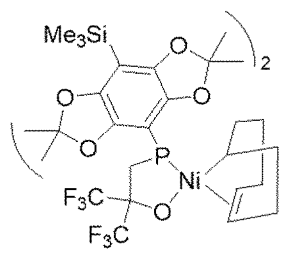

[Chem. 32]

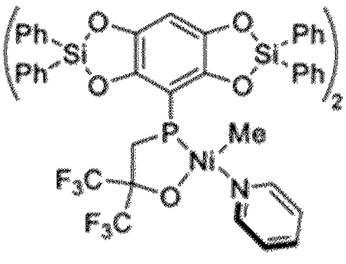
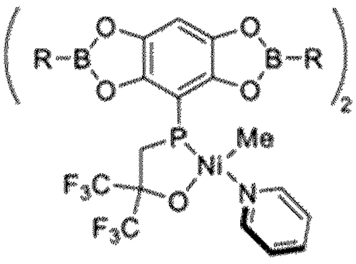
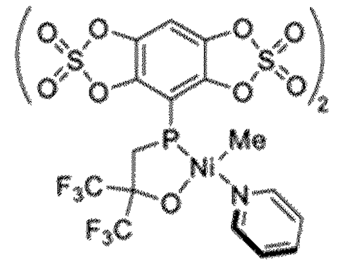

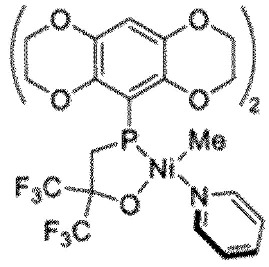
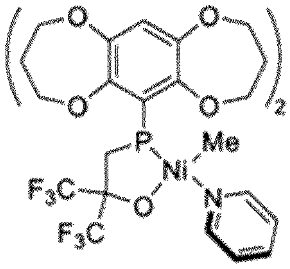
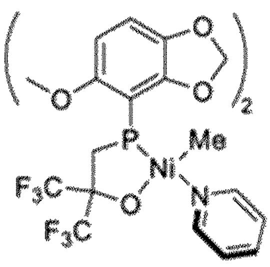
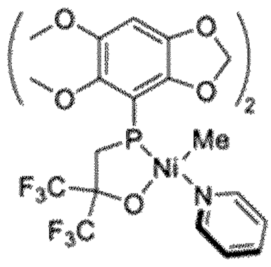

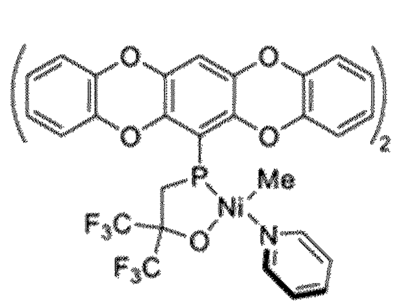
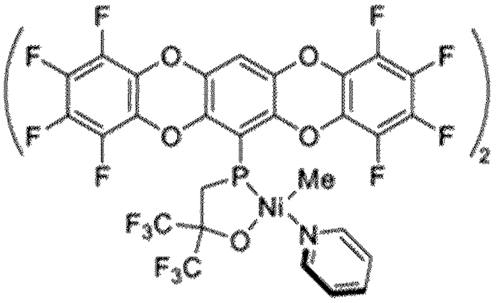

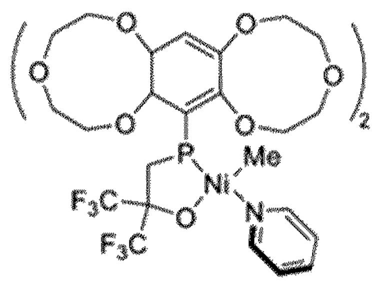

(In the formulae, R represents a hydrogen atom or a hydrocarbon group containing 1 to 20 carbon atoms)

The metal complex represented by the general formula (D) of the present invention can be prepared by the method including the step of reacting the compound represented by the general formula (A) with the transition metal compound represented by the general formula (E) or (F), or it can be prepared by a known method. The metal complex represented by the general formula (D) of the present invention can be prepared based on a known complex preparation method which is appropriately modified by a person skilled in the art (e.g., making a modification to raw materials).

For example, in the production of the metal complex represented by the general formula (D), when reacting the compound represented by the general formula (A) with the transition metal compound represented by the general formula (E) or (F), a coordinating or covalent compound which will be substituted for $L^1$ or $L^2$ in the general formula (D), may coexist with them.

In the present invention, when nickel or palladium is used as M, there is a possibility that the stability of the metal complex thus produced is increased by a Lewis basic coordinating compound coexisting in the system. In this case, as long as the polymerization or copolymerization of the present invention is not inhibited by the coordinating compound, the coordinating compound may coexist with them.

As the coordinating compound used in the present invention, a hydrocarbon compound containing 1 to 20 carbon atoms and containing, as an atom that can form a coordinate bond, at least one selected from the group consisting of an oxygen atom, a nitrogen atom, a phosphorus atom, an arsenic atom, a sulfur atom and a selenium atom can be used, or a hydrocarbon compound containing a carbon-carbon unsaturated bond that can coordinate to the transition metal and

optionally containing a heteroatom can be used. Also, the coordinating compound may be synonymous with the neutral electron-donating ligand out of the above-mentioned $L^1$ and so on.

The covalent compound used in the present invention is a compound that is capable of substituting the ligand derived from the transition metal compound with the electron-donating ligand having a valence of -1 out of the above-mentioned $L^1$ and so on in the metal complex represented by the general formula (D). The covalent compound may be an organometallic compound. As the electron-donating ligand having a valence of -1, the hydrocarbon group containing 1 to 20 carbon atoms and optionally containing at least one heteroatom can be incorporated into a polymer as a polymerization reaction initiating terminal; moreover, it can largely contribute to the initial rate of the polymerization reaction. Accordingly, in the production of the metal complex represented by the general formula (D), depending on the situation, a covalent compound for introducing the hydrocarbon group containing 1 to 20 carbon atoms and optionally containing at least one heteroatom, is preferably used together.

As the covalent compound, examples include an organolithium compound. It may be $R^{14}Li$ (where $R^{14}$ is a hydrocarbon group containing 1 to 20 carbon atoms and optionally containing a heteroatom), or it may be an organolithium compound which contains a hydrocarbon group containing 1 to 10 carbon atoms and optionally containing a heteroatom. As the organolithium compound which contains a hydrocarbon group containing 1 to 10 carbon atoms, examples include methyllithium, n-butyllithium, phenyllithium, neopentyllithium, benzyllithium, trimethylsilylmethyllithium and p-fluorophenyllithium. Of them, methyllithium and phenyllithium are preferred, and methyllithium is more preferred.

II-4. Olefin polymerization catalyst

The olefin polymerization catalyst of the second embodiment of the present invention is an olefin polymerization catalyst comprising the olefin polymerization catalyst composition of the second embodiment of the present invention.

Also, the olefin polymerization catalyst of the second embodiment of the present invention is an olefin polymerization catalyst comprising the metal complex represented by the general formula (D) of the second embodiment.

In the olefin polymerization reaction, the olefin polymerization catalyst of the present invention contains a metal complex which is a product of the compound represented by the general formula (A) and the transition metal compound represented by the general formula (E) or (F), or it contains the metal complex represented by the general formula (D) (hereinafter, they may be collectively simply referred to as "metal complex catalyst").

In the olefin polymerization catalyst of the second embodiment of the present invention, the olefin polymerization catalyst composition of the second embodiment of the present invention and the metal complex represented by the general formula (D) of the second embodiment may be the same as those described above. Accordingly, they are not described here.

In the olefin polymerization catalyst of the present invention, as shown in Examples described below, the olefin polymerization catalyst composition of the present invention and the metal complex represented by the general formula (D) may be used as they are without refinement, and they may be used as the olefin polymerization catalyst.

In the olefin polymerization catalyst of the present invention, a single component or a combination of several kinds of components may be used as each of the compound represented by the general formula (A) and the transition metal compound represented by the general formula (E) or (F) in the olefin polymerization catalyst composition. Also, the metal complex represented by the general formula (D) may be contained in the olefin polymerization catalyst composition.

The metal complex represented by the general formula (D) contained in the olefin polymerization catalyst of the present invention may be one kind or may be a mixture of two or more kinds.

In the olefin polymerization catalyst of the present invention, a co-catalyst may be added in addition to the metal complex catalyst. As the co-catalyst, examples include an organometallic compound containing an element of the Group 1, 2 or 13 of the periodic table, such as a compound represented by the following general formula (1), a compound represented by the following general formula (2) and an organoaluminum oxy compound. Several kinds of these compounds may be contained in the catalyst composition.

General Formula (1): $Q(R^{20})(R^{21})R^{22}$

The compound represented by the general formula (1) is a boron or aluminum compound represented by $Q(R^{20})(R^{21})R^{22}$ (where Q is boron (B) or aluminum (Al); $R^{20}$, $R^{21}$ and $R^{22}$ each independently represent a hydrogen atom, an alkyl, alicyclic, alkoxy, aryl or aryloxy group containing 1 to 30 carbon atoms and optionally being substituted, or an amino or silyl group in which one or more hydrogen atoms are each independently substituted with a hydrocarbon containing 1 to 30 carbon atoms.)

The examples and information provided above in the descriptions of $R^3$ and so on, are applicable to $R^{20}$ to $R^{22}$. From the viewpoint of availability or ease of preparation of the compound, $R^{20}$ to $R^{22}$ are preferably a hydrocarbon group such as an alkyl group and an aryl group, or an alkyl or aryl group substituted with a halogen (especially a fluorine) such as a trifluoromethyl group and a perfluorophenyl group.

As the compound represented by the general formula (1), examples include, but are not limited to, trimethylborane, trimethoxyborane, perfluoromethylborane, triphenylborane, tris(perfluorophenyl)borane, triphenoxyborane, tris(dimethylamino)borane, tris(diphenylamino)borane, trimethylaluminum, triethylaluminum, tri(n-propyl)aluminum, tri(n-butyl)aluminum, triisobutylaluminum, tri(n-hexyl)aluminum, tri(n-octyl)aluminum, tri(n-decyl)aluminum, diethylaluminum hydride, diethylaluminum ethoxide, diethylaluminum dimethylamide and diisobutylaluminum hydride.

General Formula (2) : $[C(R^{23})(R^{24})R^{25+}[Q(R^{26})(R^{27})(R^{28})R^{29}]^-$

The compound represented by the general formula (2) is a salt of a carbocation and boron or aluminum, which is represented by $[C(R^{23})(R^{24})R^{25}]^+[Q(R^{26})(R^{27})(R^{28})R^{29}]^-$ (where Q is as defined by the general formula (2), and $R^{23}$ to $R^{29}$ are each independently as defined as $R^{20}$).

The examples and information provided above in the descriptions of $R^3$ and so on, are applicable to $R^{23}$ to $R^{29}$. From the viewpoint of availability or ease of preparation of the compound, $R^{23}$ to $R^{29}$ are preferably a hydrocarbon group such as an alkyl group and an aryl group. Since a carbocation is easily obtained, $R^{23}$ to $R^{29}$ are more preferably a bulky hydrocarbon group such as a t-butyl group and an aryl group.

As the compound represented by the general formula (2), examples include, but are not limited to, trityl tetramethyl borate, trityl tetrakis(perfluoromethyl)borate, trityl tetraphenyl borate, trityl tetrakis(perfluorophenyl)borate and trityl tetrakis(di(trifluoromethyl)phenyl)borate.

As the compound represented by the general formula (1) or (2), a commercially-available product can be used, or the compound represented by the general formula (1) or (2) can be obtained by a known method which is appropriately modified depending on the substituents contained in the compound.

In addition to the compound represented by the general formula (1) or (2), an organoaluminum oxy compound can be added to the olefin polymerization catalyst of the present invention. In the case of using the organoaluminum compound, examples include methylaluminoxane (MAO) and modified methylaluminoxane (MMAO), and they may be commercially-available products. From the viewpoint of availability and handleability, MMAO is preferred. MAO and MMAO may be commercially-available products, and they are not limited by grade, etc.

Besides the above-exemplified compound containing an element of the Group 13 of the periodic table, an organometallic compound which is conventionally known as a co-catalyst, such as a compound containing a metal of the Group 1 of the periodic table (e.g., an alkyllithium such as methyllithium and n-butyllithium) and a compound containing a metal of the Group 2 of the periodic table (e.g., a Grignard reagent) can be also used as the co-catalyst. The compounds may be commercially-available products, and they are not limited by grade, etc.

These co-catalysts can be used in the same condition as the metal complex catalyst. However, they are preferably used in an inert atmosphere, avoiding oxygen and moisture. In the case of using the co-catalysts, their amounts can be appropriately determined by a person skilled in the art.

The metal complex catalyst may be brought into contact with the co-catalysts not only in the preparation of the catalyst, but also in preliminary polymerization by the olefin or in the olefin polymerization.

The metal complex catalyst is preferably brought into contact with the co-catalysts in an inert gas such as nitrogen and in an inert hydrocarbon solvent such as pentane, hexane, heptane, toluene and xylene. They may be brought into contact with each other at a temperature between -20°C and the boiling point of the solvent, and they are preferably brought into contact at a temperature between room temperature and the boiling point of the solvent.

II-5. Olefin-based polymer production method

The olefin-based polymer production method of the second embodiment of the present invention is a method for producing an olefin-based polymer, wherein an olefin is polymerized or copolymerized in the presence of the olefin polymerization catalyst of the second embodiment of the present invention.

The olefin of the present invention may be an acyclic olefin or a cyclic olefin. As the olefin, examples include at least one selected from the group consisting of an acyclic olefin containing 2 to 22 carbon atoms and a cyclic olefin containing 4 to 20 carbon atoms.

The acyclic olefin of the present invention may be an $\alpha$-olefin represented by the general following formula: $CH^2=CHR^{30}$, for example. In the general formula, $R^{30}$ is a hydrogen atom or a hydrocarbon group containing 1 to 20 carbon atoms, and it may contain a branch, a ring and/or an unsaturated bond. When the number of the carbon atoms of $R^{30}$ is more than 20, sufficient polymerization activity does not tend to be exerted. Accordingly, the olefin in which $R^{30}$ is a hydrogen atom or a hydrocarbon group containing 1 to 10 carbon atoms, is preferred.

As the acyclic olefin other than $\alpha$-olefins, examples include 2-butene, 2-pentene and 2-hexene.

As the cyclic olefin containing 4 to 20 carbon atoms, examples include cyclobutene, cyclopentene, cyclohexene, cycloheptene, norbornene and norbornadiene.

Preferred olefins include ethylene, propylene, 1-butene, 1-pentene, 1-hexene, 1-octene, 1-decene, 3-methyl-1-butene, 4-methyl-1-pentene, vinylcyclohexene, styrene, 4-methylstyrene and norbornene. From the viewpoint of polymer production efficiency, the olefin is preferably one or more kinds selected from the group consisting of ethylene, propylene, 1-butene and norbornene, and it is more preferably ethylene. As the olefin, one kind of olefin may be used, or two or more kinds of olefins may be concurrently used.

As the polar group-containing monomer, examples include a monomer obtained by introducing a polar functional group (polar group) in an acyclic olefin and a monomer obtained by introducing a polar functional group (polar group) in a cyclic olefin. For example, the former monomer may be a monomer obtained by introducing a polar group in an α-olefin (an acyclic olefin), such as a polar group-containing monomer represented by the following general formula: $CH^2=C(R^{30})(R^{31})$. The polar group-containing monomer is preferably a (meth)acrylic acid ester, for example. In the general formula, $R^{30}$ is a hydrogen atom or a hydrocarbon group containing 1 to 10 carbon atoms, and $R^{31}$ is - $C(O)OR^{32}$ (where $R^{32}$ is a hydrocarbon group containing 1 to 20 carbon atoms), $-C(O)N(-R^{32'})_2$ (where each $R^{32'}$ is independently a hydrogen atom or a hydrocarbon group containing 1 to 20 carbon atoms), a cyano group or an optionally-substituted aryl group. Since better polymerization activity can be exerted, $R^{30}$ is preferably a hydrogen atom or a hydrocarbon group containing 1 to 3 carbon atoms, and it is more preferably a hydrogen atom or a methyl group. $R^{31}$ is not particularly limited, as long as it is the substituent described above. $R^{31}$ is preferably $-C(O)OR^{32}$ or an aryl group since there are a wide range of applications for the resulting copolymers. In this case, when the number of the carbon atoms of $R^{32}$ is more than 20, a decrease in polymerization activity tends to occur. Accordingly, $R^{32}$ is preferably a hydrocarbon group containing 1 to 12 carbon atoms, and more preferably a hydrocarbon group containing 1 to 8 carbon atoms.

Also, $R^{32}$ preferably consists of a carbon atom and a hydrogen atom. However, $R^{32}$ may include a heteroatom such as an oxygen atom, a sulfur atom, a selenium atom, a phosphorus atom, a nitrogen atom, a silicon atom, a fluorine atom and a boron atom. Among them, an oxygen atom, a silicon atom and a fluorine atom are preferred, and an oxygen atom is more preferred. The preferred ranges and examples of $R^{32'}$ when it is not a hydrogen atom, are the same as those of $R^{32}$.

As the monomer obtained by introducing a polar functional group in an acyclic or cyclic olefin other than an α-olefin, examples include a compound obtained by introducing the substituent represented by $R^{31}$ in a desired position of an exemplary compound of an acyclic or cyclic olefin other than an α-olefin.

Also, the polar group-containing monomer may be vinylene carbonate (1,3-dioxole-2-one).

The polar group-containing monomer is more preferably methyl (meth)acrylate, ethyl (meth)acrylate, n-propyl (meth)acrylate, isopropyl (meth)acrylate, n-butyl (meth)acrylate, isobutyl (meth)acrylate, t-butyl (meth)acrylate, pentyl (meth)acrylate, hexyl (meth)acrylate, cyclohexyl (meth)acrylate, octyl (meth)acrylate, 2-ethylhexyl (meth)acrylate, nonyl (meth)acrylate, decyl (meth)acrylate, dodecyl (meth)acrylate, phenyl (meth)acrylate, toluyl (meth)acrylate, benzyl (meth) acrylate, hydroxyethyl (meth)acrylate, dimethylaminoethyl (meth)acrylate, diethylaminoethyl (meth)acrylate, 2-aminoethyl (meth)acrylate, 2-methoxyethyl (meth)acrylate, 3-methoxypropyl (meth)acrylate, glycidyl (meth)acrylate, trifluoromethyl (meth)acrylate, 3,3,3,-trifluoropropyl (meth)acrylate, perfluoroethyl (meth)acrylate, (meth)acrylamide, (meth) acrylic dimethylamide, 2-hydroxybutyl methacrylate, 4-hydroxybutyl methacrylate, acrylonitrile, methyl 10-undecylenate, 4-acetoxystyrene, vinylanisole, methyl 5-norbornene-2-carboxylate, t-butyl 5-norbornene-2-carboxylate, 5-norbornene-2-methanol, 5-norbornene-2-methylamine, 5-norbornene-2-methylpivalamide, 5-norbornen-2-yl acetate or vinylene carbonate, for example. The polar group-containing monomer is still more preferably at least one selected from the group consisting of methyl acrylate, ethyl acrylate, propyl acrylate, n-butyl acrylate, isobutyl acrylate, t-butyl acrylate, methyl methacrylate, ethyl methacrylate, butyl methacrylate, t-butyl methacrylate, acrylonitrile, methyl 10-undecylenate, 4-acetoxystyrene, 4-nitrostyrene, vinylanisole, methyl 5-norbornene-2-carboxylate, t-butyl 5-norbornene-2-carboxylate, 5-norbornene-2-methylpivalamide, 5-norbornen-2-yl acetate and vinylene carbonate.

When a comonomer is used for the copolymerization with the acyclic olefin such as ethylene, as the comonomer, at least one kind of monomer selected from the group consisting of a polar group-containing monomer and a cyclic olefin, is preferably used.

The comonomer is more preferably at least one selected from the group consisting of the following, for example: t-butyl acrylate, methyl acrylate, methyl methacrylate, methyl 10-undecylenate, 4-methylstyrene, 4-acetoxystyrene, norbornene, t-butyl 5-norbornene-2-carboxylate, 9-decenyl acetate, 1,2-epoxy-9-decene and vinylene carbonate.

These monomers may be used solely or in combination of two or more kinds.

The type of the monomer can be appropriately selected according to the properties required of the obtained polymer. In some cases, a composition of two or more kinds of monomers can be copolymerized, or a composition consisting of two or more kinds of polar group-containing monomers can be copolymerized. The amount of the used monomer(s) and the ratio of the used monomer amounts can be appropriately determined according to the properties required of the obtained copolymer.

Since the olefin polymerization is carried out in the presence of the olefin polymerization catalyst of the present invention, the olefin-based polymer production method of the present invention is preferably used as a production method in which an acyclic olefin is copolymerized with at least one kind of monomer selected from the group consisting of a polar group-containing monomer and a cyclic olefin.

From the viewpoint of polymerization activity, copolymerization of the olefin and the (meth)acrylic acid ester is preferred as the copolymerization reaction of the present invention.

In the olefin-based polymer production method of the present invention, the olefin polymerization catalyst containing the metal complex catalyst is used as a catalyst for the olefin polymerization or copolymerization. Each metal complex catalysts may be an isolated catalyst or a catalyst supported on a support. Such support may be carried out in a reactor, which is used for the olefin polymerization or the copolymerization of the olefin and the (meth)acrylic ester, in the presence or absence of the monomers, or it may be carried out in a container different from the reactor.

As the support, any support can be used without departing from the scope of the present invention. In general, an inorganic oxide or a polymer support can be preferably used as the support. As the inorganic oxide, examples include $SiO_2$, $Al_2O_3$, MgO, $ZrO_2$, $TiO_2$, $B_2O_3$, CaO, ZnO, BaO, $ThO_2$, and mixtures thereof. Also, a mixed oxide such as $SiO_2$-$Al_2O_3$, $SiO_2$-$V_2O_5$, $SiO_2$-$TiO_2$, $SiO_2$-MgO and $SiO_2$-$Cr_2O_3$ can be used. Also, inorganic silicate, a polyethylene support, a polypropylene support, a polystyrene support, a polyacrylic acid support, a polymethacrylic acid support, a polyacrylic acid ester support, a polyester support, a polyamide support, a polyimide support or the like can be used as the support. The particle diameter, particle size distribution, pore volume, specific surface area and so on of these supports are not particularly limited, and any support can be used.

As the inorganic silicate, clay, clay minerals, zeolite, diatomite or the like can be used. They may be commercially-available products or naturally mined minerals. As the clay and clay minerals, examples include an allophane group such as allophane, a kaolin group such as dickite, nacrite, kaolinite and anauxite, a halloysite group such as metahalloysite and halloysite, a serpentine group such as chrysotile, lizardite and antigorite, a smectite such as montmorillonite, sauconite, beidellite, nontronite, saponite and hectorite, a vermiculite mineral such as vermiculite, a mica mineral such as illite, sericite and glauconite, attapulgite, sepiolite, palygorskite, bentonite, kibushi clay, gairome clay, hisingerite, pyrophyllite and a chlorite group. They may form a mixed layer. Synthetic products thereof include synthetic mica, synthetic hectorite, synthetic saponite, synthetic tainiolite and so on.

Of these examples, preferred are a kaolin group such as dickite, nacrite, kaolinite and anauxite, a halloysite group such as metahalloysite and halloysite, a serpentine group such as chrysotile, lizardite and antigorite, a smectite such as montmorillonite, sauconite, beidellite, nontronite, saponite and hectorite, a vermiculite mineral such as vermiculite, a mica mineral such as illite, sericite and glauconite, synthetic mica, synthetic hectorite, synthetic saponite and synthetic tainiolite, and more preferred are a smectite such as montmorillonite, sauconite, beidellite, nontronite, saponite and hectorite, a vermiculite mineral such as vermiculite, synthetic mica, synthetic hectorite, synthetic saponite and synthetic tainiolite.

The support may be used as it is, or it may be subjected to an acid treatment with hydrochloric acid, nitric acid, sulfuric acid or the like and/or a salt treatment with LiCl, NaCl, KCl, $CaCl_2$, $MgCl_2$, $Li_2SO_4$, $MgSO_4$, $ZnSO_4$, $Ti(SO_4)_2$, $Zr(SO_4)_2$, $Al_2(SO_4)_3$ or the like. The treatment may be carried out by mixing a corresponding acid and a corresponding base to form a salt in the reaction system. Also, shape control such as pulverization and granulation or a drying treatment may be carried out.

In the olefin-based polymer production method of the present invention, the polymerization reaction can be carried out in the presence or absence of a known additive, as well as the co-catalyst. The additive is preferably an additive having a function to stabilize the produced polymer. The additive is preferably a quinone derivative, a hindered phenol derivative or the like, for example.

More specifically, monomethyl ether hydroquinone, 2,6-dit-butyl-4-methylphenol (BHT), a reaction product of trimethylaluminum and BHT, a reaction product of BHT and an alkoxide of tetravalent titanium, or the like can be used.

Also, the polymerization may be carried out by use of an inorganic filler and/or an organic filler as the additive and in the presence of the filler(s), or the polymerization may be carried out by adding an ionic liquid.

In the present invention, the additive is preferably a Lewis base, for example. By selecting an appropriate Lewis base, activity, molecular weight and acrylic ester copolymerizability can be improved. With respect to the transition metal M in the catalyst component present in the polymerization system, the amount of the Lewis base is from 0.0001 equivalents to 1000 equivalents, preferably from 0.1 equivalents to 100 equivalents, and more preferably from 0.3 equivalents to 30 equivalents. The method for adding the Lewis base to the polymerization system is not particularly limited, and a desired method can be used. For example, the Lewis base may be added to the olefin polymerization catalyst of the present invention; it may be mixed with a monomer and added; or it may be added to the polymerization system separately from the catalyst component and the monomer. Also, several Lewis bases can be used in combination.

As the Lewis base, examples include an aromatic amine, an aliphatic amine, an alkyl ether, an aryl ether, an alkyl aryl ether, a cyclic ether, an alkyl nitrile, an aryl nitrile, an alcohol, an amide, an aliphatic ester, an aromatic ester, a phosphate, a phosphite, a thiophene, a thianthrene, a thiazole, an oxazole, a morpholine and a cyclic unsaturated hydrocarbon.

Of them, preferred are an aromatic amine, an aliphatic amine, a cyclic ether, an aliphatic ester and an aromatic ester. Particularly preferred are a pyridine derivative, a pyrimidine derivative, a piperidine derivative, an imidazole derivative, an aniline derivative, a piperidine derivative, a triazine derivative, a pyrrole derivative and a furan derivative.

Examples of Lewis base compounds include, but are not limited to, pyridine, pentafluoropyridine, 2,6-lutidine,

2,4-lutidine, 3,5-lutidine, pyrimidine, N, N-dimethylaminopyridine, N-methylimidazole, 2,2'-bipyridine, aniline, piperidine, 1,3,5-triazine, 2,4,6-tris(trifluoromethyl)-1,3,5-triazine, 2,4,6-tris(2-pyridyl)-s-triazine, quinoline, 8-methylquinoline, phenazine, 1,10-phenanthroline, N-methylpyrrole, 1,8-diazabicyclo-[5.4.0]-undeca-7-ene, 1,4-diazabicyclo-[2,2,2]-octane, triethylamine, benzonitrile, picoline, triphenylamine, N-methyl-2-pyrrolidone, 4-methylmorpholine, benzoxazole, benzothiazole, furan, 2,5-dimethylfuran, dibenzofuran, xanthene, 1,4-dioxane, 1,3,5-trioxane, dibenzothiophene, thianthrene, triphenylphosphonium cyclopentadienide, triphenyl phosphite, triphenyl phosphate and tripyrrolidinophosphine.

In the present invention, the polymerization form is not particularly limited. As the polymerization form, for example, solution polymerization in which all of the produced polymer is dissolved in a medium, slurry polymerization in which at least a part of the produced polymer is made into slurry in a medium, bulk polymerization in which a liquefied monomer itself is used as a medium, vapor phase polymerization which is carried out in a vaporized monomer, or high-pressure ionic polymerization in which at least a part of the produced polymer is dissolved in a monomer liquefied at high temperature and high pressure, is preferably used. The polymerization form may be any of batch polymerization, semibatch polymerization and continuous polymerization. The polymerization reaction is preferably carried out in an inert atmosphere such as a nitrogen atmosphere. The condition of use for the metal complex catalyst is not particularly limited, as long as the metal complex catalyst is used in general polymerization condition. The amount of the metal complex catalyst used is not particularly limited, as long as it is an appropriate range for use as a catalyst, it can be appropriately determined by a person skilled in the art.

In the case of using a monomer which is preferably polymerized in a liquid phase, in the present invention, the polymerization reaction is carried out in the presence or absence of a liquid such as a hydrocarbon solvent (e.g., n-butane, isobutane, n-hexane, n-heptane, toluene, xylene, cyclohexane, methylcyclohexane) and a liquefied olefin, a halogenated hydrocarbon solvent such as chlorobenzene and 1,2-dichlorobenzene, or a polar solvent such as diethyl ether, ethylene glycol dimethyl ether, tetrahydrofuran, dioxane, ethyl acetate, methyl benzoate, acetone, methyl ethyl ketone, formamide, acetonitrile, methanol, isopropyl alcohol and ethylene glycol. Also, a mixture of the liquid compositions as described herein may be used as the solvent. The liquefied olefin can be also used as a monomer subjected to bulk polymerization. Also, an ionic liquid can be used as the solvent. To obtain high polymerization activity and high molecular weight, the above-described hydrocarbon solvent or ionic liquid is more preferred.

Unreacted monomers and a medium may be separated from a produced copolymer and recycled for use. When recycling the unreacted monomers and the medium, they may be refined and reused, or they may be reused without refinement. To separate the unreacted monomers and the medium from the produced copolymer, a conventionally known method can be used. For example, a method such as filtration, centrifugal separation, solvent extraction, and reprecipitation with a poor solvent can be used.

The polymerization temperature, the polymerization pressure and the polymerization time are not particularly limited. In general, they may be optimally set in any of the following ranges, considering productivity and processing capability. That is, the polymerization temperature is generally from -20°C to 290°C, preferably from 0°C to 250°C, more preferably from 0°C to 200°C, still more preferably from 10°C to 150°C, and particularly preferably from 20°C to 100°C. The copolymerization pressure is from 0.1 MPa to 300 MPa, preferably from 0.3 MPa to 200 MPa, more preferably from 0.5 MPa to 150 MPa, still more preferably from 1.0 MPa to 100 MPa, and particularly preferably from 1.3 MPa to 50 MPa. The polymerization times can be selected from 0.1 minutes to 100 hours, preferably from 0.5 minutes to 70 hours, and still more preferably from 1 minute to 60 hours.

In the present invention, the polymerization is generally carried out in an inert atmosphere. For example, a nitrogen or argon atmosphere can be used, and a nitrogen atmosphere is preferably used. Incorporation of a small amount of oxygen or air is allowed. However, for example, in the case of using a monomer such as ethylene, which is gaseous at ordinary temperature, the polymerization can be carried out after filling the reaction system with ethylene.

The supply of the catalyst and the monomers to a polymerization reactor is not particularly limited. The method for supplying them may be selected from various kinds of supplying methods, depending on the purpose. For example, in the case of batch polymerization, the following method can be employed: predetermined amounts of monomers are supplied to the polymerization reactor in advance, and then the catalyst is supplied thereto. In this case, an additional monomer or an additional catalyst may be supplied to the polymerization reactor.

To control the composition of the copolymer, generally, a method for controlling the composition by supplying several monomers to the reactor and changing the ratio of the supplied monomers, can be used. Other methods include a method for controlling the copolymer composition by using a difference in monomer reactivity ratio, which is due to a difference in catalyst structure, and a method for controlling the copolymer composition by using the polymerization temperature dependency of the monomer reactivity ratio. In the present invention, when an acyclic olefin is copolymerized with at least one kind of monomer selected from the group consisting of a polar group-containing monomer and a cyclic olefin, the percentage of the total content of the acyclic olefin monomer in the whole monomers subjected to the copolymerization, may be appropriately selected depending on desired properties. For example, with respect to the whole monomers (100 mol %), the lower limit value is generally 60.00 mol % or more, and it may be 70.00 mol % or more, may be 80.00 mol % or more, may be 85.00 mol % or more, and may be 90.00 mol % or more. On the other hand, the upper

limit value is generally 99.90 mol % or less, and it may be 99.80 mol % or less, may be 99.70 mol % or less, may be 99.60 mol % or less, and may be 99.50 mol % or less. By controlling the percentage within the range, an affinity for coating materials, adhesive properties and so on can be imparted without impairing the original properties of polyolefin (such as heat resistance) largely, and the properties can be controlled.

The molecular weight of the polymer can be controlled by a conventionally known method. As the method, examples include, but are not limited to, the following method.

1) To control the polymerization temperature
2) To control the monomer concentration
3) To control the ligand structure in the transition metal complex
4) To use a known chain transfer agent such as hydrogen and a metalalkyl

There is no particular limitation on the weight average molecular weight (Mw) of the olefin-based polymer obtained by the olefin-based polymer production method of the present invention. The lower limit of the weight average molecular weight (Mw) of the olefin-based polymer may be 5,000 or more, or it may be 10,000 or more. On the other hand, the upper limit of the weight average molecular weight (Mw) of the olefin-based polymer may be 1,000,000 or less, or it may be 500,000 or less.

The weight average molecular weight (Mw) of the olefin-based polymer is obtained by gel permeation chromatography (GPC). In the present invention, the GPC measurement can be carried out by the method described below under "Examples".

When the olefin-based polymer obtained by the olefin-based polymer production method of the present invention is an ethylene-based polymer, the degree of methyl branching of the ethylene-based polymer, which is calculated by $^{13}$C-NMR, is not particularly limited. It may be 10 or less per 1,000 carbon atoms, or it may be 5 or less per 1,000 carbon atoms.

In the present invention, the number of methyl branches can be measured by the method described below under "Examples".

The olefin-based polymer production method of the present invention can provide an olefin polymer or copolymer with high activity. Especially, it can provide a copolymer of an acyclic olefin and at least one kind of monomer selected from the group consisting of a polar group-containing monomer and a cyclic olefin. Accordingly, the olefin-based polymer production method of the present invention can be used as a method for providing a polymer with various properties. Since the catalyst used in the method of the present invention has balanced catalytic performance, a (co)polymer with high activity and a high molecular weight can be obtained. In addition, since the catalyst used in the method of the present invention needs not to be isolated as a catalyst, it can be used for efficient synthesis of the olefin-based polymer.

Examples

Hereinafter, the present invention will be described in detail, with reference to examples and comparative examples. The present invention is not limited to the following examples, however. In the following examples, unless otherwise noted, synthesis of ligands and metal complexes and polymerization reaction were carried out in a nitrogen or argon atmosphere. Abbreviations used in the following examples are as described below.

tBA: t-Butyl acrylate
MA: Methyl acrylate
VC: Vinylene carbonate
NB: Norbornene
TNOA: Tri-n-octylaluminum
MU: Methyl 10-undecylenate

[Structure analysis method in synthesis examples]

The structures of compounds disclosed in synthesis examples were analyzed by $^{1}$H-0335NMR, $^{13}$C-NMR, $^{19}$F-NMR and $^{31}$P{$^{1}$H}-NMR, using the following NMR devices: JNM-ECS400 manufactured by JEOL Ltd., Avance 400 manufactured by Bruker Corporation, and Avance 500 manufactured by Bruker Corporation. The detailed measurement method is as follows.

[Sample preparation]

First, 5 mg to 20 mg of a sample was dissolved in 0.6 mL of deuterated chloroform ($CDCl_3$) free of tetramethylsilane, 0.6 mL of deuterated chloroform containing 0.03% (v/v) of tetramethylsilane, 0.6 mL of deuterated toluene

($C_6D_5CD_3$) containing 0.03% (v/v) of tetramethylsilane, or 0.6 mL of dimethylsulfoxide (DMSO)-$d_6$ free of tetramethylsilane. The solution was put in an NMR sample tube (inner diameter 5 mm).

[$^1$H-NMR measurement condition]

Probe: Probe (diameter 5 mm)
Sample temperature: Room temperature
Pulse angle: 45°
Pulse interval: 2.8 Seconds
Accumulation times: 8
Chemical shift: In the case of using deuterated chloroform as a solvent, the chemical shift of the proton signal of tetramethylsilane was set to 0 ppm, or the chemical shift of the proton signal of chloroform was set to 7.26 ppm, and it was used as a chemical shift standard for the chemical shift of other proton signals. In the case of using deuterated toluene as a solvent, the chemical shift of the proton signal of tetramethylsilane was set to 0 ppm, and it was used as a chemical shift standard for the chemical shift of other proton signals. In the case of using dimethylsulfoxide-$d_6$ as a solvent, the chemical shift of the proton signal of dimethylsulfoxide-$d^5$ was set to 2.50 ppm, and it was used as a chemical shift standard for the chemical shift of other proton signals.

[$^{19}$F-NMR]

Probe: Probe (diameter 5 mm)
Sample temperature: Room temperature
Pulse angle: 45°
Pulse interval: 1.8 Seconds
Accumulation times: 8
Chemical shift: The chemical shift of the signal of $CFCl_3$ as an external standard was set to 0 ppm, and it was used as a chemical shift standard for the chemical shift of other fluorine signals.

[$^{31}$P{$^1$H}-NMR]

Probe: Probe (diameter 5 mm)
Sample temperature: Room temperature
Pulse angle: 30°
Pulse interval: 0.5 Seconds
Accumulation times: 64 to 256
Chemical shift: The chemical shift of the signal of 85% phosphoric acid aqueous solution as an external standard was set to 0 ppm, and it was used as a chemical shift standard for the chemical shift of other phosphorus signals.

[Polymer structure analysis method]

The structures of polymers obtained under Examples were determined by $^1$H-NMR and $^{13}$C-NMR analyses using the following NMR device: Bruker Biospin AV400. The detailed measurement method is as follows.

[Sample preparation]

First, 100 mg to 500 mg of a sample, 2.4 ml of a mixed solution of o-dichlorobenzene (ODCB) and deuterated benzene bromide ($C_6D_5Br$) (volume ratio: ODCB/$C_6D_5Br$ at 3/1) and hexamethyldisiloxane (a chemical shift standard substance) were put in an NMR sample tube (inner diameter 10 mm) and uniformly dissolved with a block heater at 150°C.

[$^1$H-NMR measurement condition]

Probe: Cryoprobe (diameter 10 mm)
Sample temperature: 120°C
Pulse angle: 4.5°
Pulse interval: 2 Seconds
Accumulation times: 256 to 1024
Chemical shift: The chemical shift of the proton signal of hexamethyldisiloxane was set to 0.09 ppm, and it was used as a chemical shift standard for the chemical shift of other proton signals.

[$^{13}$C-NMR measurement condition]

<Ethylene/tBA>
<Ethylene/MA>
<Propylene/MU>
Probe: Cryoprobe (diameter 10 mm)
Sample temperature: 120°C
Pulse angle: 90°
Pulse interval: 51.5 Seconds
Accumulation times: 256 to 768
Decoupling condition: Inverse gated decoupling method
Chemical shift: The chemical shift of the $^{13}$C signal of hexamethyldisiloxane was set to 1.98 ppm, and it was used as a chemical shift standard for the chemical shift of other $^{13}$C signals.

<Ethylene (E) homopolymer>

Probe: Cryoprobe (diameter 10 mm)
Sample temperature: 120°C
Pulse angle: 45°
Pulse interval: 27.5 Seconds
Accumulation times: 768 to 1024
Decoupling condition: Broadband decoupling method
Chemical shift: The chemical shift of the $^{13}$C signal of hexamethyldisiloxane was set to 1.98 ppm, and it was used as a chemical shift standard for the chemical shift of other $^{13}$C signals.

<Ethylene (E)/NB copolymer>

<Propylene (P) homopolymer>

Probe: Cryoprobe (diameter 10 mm)
Sample temperature: 120°C
Pulse angle: 45°
Pulse interval: 38.5 Seconds
Accumulation times: 256 to 512
Decoupling condition: Broadband decoupling method
Chemical shift: The chemical shift of the $^{13}$C signal of hexamethyldisiloxane was set to 1.98 ppm, and it was used as a chemical shift standard for the chemical shift of other $^{13}$C signals.

<Ethylene(E)/VC copolymer>

Probe: Cryoprobe (diameter 10 mm)
Sample temperature: 120°C

Pulse angle: 90°
Pulse interval: 51.5 Seconds
Accumulation times: 512
Decoupling condition: Inverse gated decoupling method
Chemical shift: The chemical shift of the $^{13}C$ signal of hexamethyldisiloxane was set to 1.98 ppm, and it was used as a chemical shift standard for the chemical shift of other $^{13}C$ signals.

[Comonomer calculation method]

In the following formulae, "I" indicates integrated intensity, and the subscript digits of "I" indicate the range of chemical shift. For example, "$I_{80.0\text{-}2.0}$" means the integrated intensity of a signal detected between 80.0 ppm and 2.0 ppm.

<Ethylene(E)/tBA copolymer>

Using the signals in a $^{13}C$-NMR spectrum, the content of tBA was calculated by the following formula.

$$\text{tBA content (mol \%)} = I_{(tBA)} \times 100 / (I_{(E)} + I_{(tBA)})$$

In this formula, $I_{(tBA)}$ and $I_{(E)}$ are amounts calculated by the following formulae.

$$I_{(tBA)} = I_{79.5\text{-}79.0}$$

$$I_{(E)} = (I_{180.0\text{-}136.0} + I_{120.0\text{-}100.0} + I_{80.0\text{-}2.0} - I_{(tBA)} \times 7) / 2$$

<Ethylene (E)/MA copolymer>

$$\text{MA content (mol \%)} = I_{(MA)} \times 100 / (I_{(E)} + I_{(MA)})$$

In this formula, $I_{(MA)}$ and $I_{(E)}$ are amounts calculated by the following formulae.

$$I_{(MA)} = I_{51.5\text{-}50.5}$$

$$I_{(E)} = (I_{180.0\text{-}136.0} + I_{120.0\text{-}100.0} + I_{55.0\text{-}2.0} - I_{(MA)} \times 4) / 2$$

<Ethylene (E)/NB copolymer>

Using the signals in a $^{13}C$-NMR spectrum, the content of NB was calculated by the following formula.

$$\text{NB content (mol \%)} = I_{(NB)} \times 100 / (I_{(E)} + I_{(NB)})$$

In this formula, $I_{(NB)}$ and $I_{(E)}$ are amounts calculated by the following formulae.

$$I_{(NB)} = I_{48.3\text{-}41.3} / 4$$

$$I_{(E)} = (I_{180.0\text{-}136.0} + I_{120.0\text{-}100.0} + I_{55.0\text{-}2.0} - I_{(NB)} \times 7) / 2$$

<Ethylene (E)/VC copolymer>

Using the signals detected between 77.7 ppm and 80.2 ppm in a $^{13}C$-NMR spectrum, the content of a polar group-containing monomer was calculated by the following formula.

VC (closed ring) amount (mol %) = $I_{(VC)} \times 100 / [I_{(VC)} + I_{(E)}]$

In this formula, $I_{(VC)}$ and $I_{(E)}$ are amounts calculated by the following formulae.

$$I_{(VC)} = (I_{78.8-80.2} + I_{77.7-78.2}) / 2$$

$$I_{(E)} = (I_{2.0-120.0} + I_{135.0-200.0} - I_{(VC)} \times 3) / 2$$

<Propylene/MU copolymer>

Using the signals in a $^{13}$C-NMR spectrum, the content of MU was calculated by the following formula.

$$\text{MU content (mol \%)} = I_{(MU)} \times 100 / (I_{(P)} + I_{(MU)})$$

In this formula, $I_{(MU)}$ and $I_{(P)}$ are amounts calculated by the following formulae.

$$I_{(MU)} = I_{50.8-50.6}$$

$$I_{(P)} = (I_{180.0-136.0} + I_{120.0-100.0} + I_{55.0-2.0} - I_{(MU)} \times 12) / 3$$

[Calculation of residual MU amount]

Using the signals in a $^{13}$C-NMR spectrum, the amount of residual MU was calculated by the following formula.

$$\text{Residual MU amount (mol \%)} = I_{(MU\ monomer)} \times 100 / (I_{(P)} + I_{(MU)})$$

In this formula, $I_{(MU\ monomer)}$ and $I_{(P)}$ are amounts calculated by the following formulae.

$$I_{(MU\ monomer)} = I_{114.3-114.1}$$

$$I_{(P)} = (I_{180.0-136.0} + I_{120.0-100.0} + I_{55.0-2.0} - I_{(MU)} \times 12) / 3$$

Branching structure can be determined by the $^{13}$C-NMR spectrum of tertiary carbon atom. For example, as for methyl branching, the number of methyl branches per 1,000 carbon atoms was calculated by the following formula using $I_{B1}$, which is a value obtained by dividing, by 3, the sum of the integrated intensities of the signals in a $^{13}$C-NMR spectrum for the following carbons: the integrated intensity of the signal detected between 20.0 ppm and 19.8 ppm for methyl carbon (corresponding to v in the chemical structural formula shown below) and the integrated intensity of the signal detected between 37.6 ppm and 37.3 ppm for methylene carbon(corresponding to x in the chemical structural formula shown below).

$$\text{Number of methyl branches (per 1,000 carbon atoms)} = I_{B1} \times 1000 / I_{total}$$

In this formula, $I_{B1}$ and $I_{total}$ are amounts calculated by the following formulae.

$$I_{B1} = (I_{20.0-19.8} + I_{37.6-37.3}) / 3$$

$$I_{total} = I_{180.0-136.0} + I_{120.0-100.0} + I_{80.0-2.0}$$

[Chem. 33]

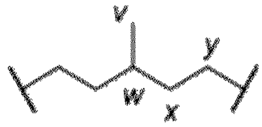

[Stereoregularity in propylene polymerization]

Similarly, the structure of the stereoregularity of polypropylene can be analyzed by quantitative $^{13}$C-NMR. For example, in a $^{13}$C-NMR spectrum, three peaks between 21.1 ppm and 22.4 ppm correspond to mm; three peaks between 20.3 ppm and 21.1 ppm correspond to mr; and three peaks between 19.4 ppm and 20.3 ppm correspond to rr. By calculating the integral ratio between them, the ratio between mm, mr and rr can be obtained.

[Number average molecular weight and weight average molecular weight]

A number average molecular weight and a weight average molecular weight were calculated by size exclusion chromatography in which polystyrene was used as a standard substance for molecular weight. Details of the GPC measurement method are as follows.

Device: GPC (PL-GPC220) manufactured by Agilent Technologies
Detector: IR detector
Column: AT-806MS (three sets in series) manufactured by Showa Denko K.K.
Mobile phase solvent: ODCB
Measurement temperature: 140°C
Flow rate: 1.0 mL/min
Injected amount: 0.3 mL

[Sample preparation]

A sample solution (1 mg/mL) was prepared by dissolving a sample at 140°C for one hour, using ODCB containing 0.24 mg/mL of TMP (2,3,6-trimethylphenol).

A retention capacity obtained by GPC was converted into a molecular weight by use of a calibration curve created preliminarily with standard polystyrenes (PS). The standard polystyrenes used herein were the following products manufactured by Tosoh Corporation: F380, F288, F128, F80, F40, F20, F10, F4, F1, A5000, A2500 and A1000. A calibration curve was created by use of a standard polystyrene solution in which the standard polystyrenes were dissolved in ODCB containing 0.24 mg/mL of TMP so that they were 0.5 mg/mL each. The calibration curve used a cubic equation obtained by approximation by the least-squares method. A viscosity equation used for the conversion into the molecular weight, i.e., $[n] = K \times M^{\alpha}$, used the following numerical values.

PS: $K = 1.38 \times 10^{-4}$, $\alpha = 0.700$
PP: $K = 1.03 \times 10^{-4}$, $\alpha = 0.780$
PE: $K = 3.92 \times 10^{-4}$, $\alpha = 0.733$

Catalytic activity was calculated by the following formula.

Catalytic activity (kg/mol/h)
= Yield (kg) of the obtained polymer / {Amount of substance (mol) of the used ligand × Reaction time (h)}

<Example I series: First embodiment of the present invention>

(Synthesis Example I-1: Synthesis of AL-29)

(1) Synthesis of 2,3,5,6-tetrahydrobenzo[1,2-b:5,4-b']difuran

Based on the descriptions in Tetrahedron, 2005, 61, 4805-4810, a compound represented by the following chemical formula was synthesized.

[Chem. 34]

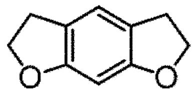

(2)Synthesis of bis(2,3,5,6-tetrahydrobenzo[1,2-b:5,4-b']difuran-8-yl)chlorophosphine

First, 2,3,5,6-tetrahydrobenzo[1,2-b:5,4-b']difuran (5 g, 30.8 mmol, 1 eq) was dissolved in 400 mL of diethyl ether. A solution thus produced was cooled to -78°C; n-BuLi (37 mmol, 1.2 eq) was added thereto; and the mixture was stirred at -78°C for 30 minutes. Then, the temperature of a reaction solution thus obtained was increased to 0°C, and the reaction solution was stirred for 4 hours, thereby obtaining a yellow suspension.

The suspension was cooled to -78°C, and $PCl_3$ (2.12 g, 15.4 mmol, 0.5 eq) was added thereto at once. After the temperature of the mixture was increased to 20°C, the mixture was stirred for 12 hours, thereby obtaining a yellow solution. The yellow solution was dried by evaporation, thereby obtaining 12 g of a mixture containing a target product. The obtained mixture was used in the subsequent synthesis, without refinement.

$^{31}P\{^1H\}$ NMR (162 MHz, $CDCl_3$) $\delta$ : 49.4 (s, integral ratio: about 20% intensity), -4.3 (s, integral ratio: about 80%)

[Chem. 35]

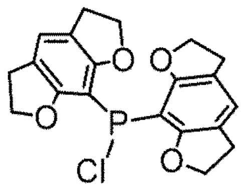

(3) Synthesis of bis(2,3,5,6-tetrahydrobenzo[1,2-b:5,4-b']difuran-8-yl)phosphine

First, bis(2,3,5,6-tetrahydrobenzo[1,2-b:5,4-b']difuran-8-yl)chlorophosphine (6 g, 15.4 mmol, 1 eq) was dissolved in 100 mL of tetrahydrofuran. A solution thus produced was cooled to 0°C; lithium aluminum hydride (1.17 g, 30.9 mmol, 2 eq) was added thereto; and the mixture was stirred at 20°C for 2 hours, thereby obtaining a colorless suspension. Ethyl acetate was added (50 mL $\times$ 4) to the suspension to terminate the reaction, and a suspension thus obtained was dried by evaporation, thereby obtaining a colorless solid. The solid was refined by silica gel chromatography (the petroleum ether/ethyl acetate/dichloromethane ratio of the developing solvent was 4/1/1) in air, thereby obtaining 4.5 g (12.7 mmol, yield 82% at a material purity of 100%) of a target compound.

$^1H$ NMR (400 MHz, $CDCl_3$) $\delta$: 6.87 (s, 2H), 5.23 (d, J = 237 Hz, 1H), 4.55 (t, J = 8.6 Hz, 8H), 3.06 (t, J = 8.6 Hz, 8H)
$^{31}P\{^1H\}$ NMR (162 MHz, $CDCl_3$) $\delta$: -128.0 (s)

[Chem. 36]

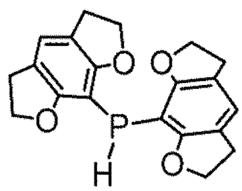

(4) Synthesis of AL-29

First, 500 mg (1.4 mmol) of the synthesized bis(2,3,5,6-tetrahydrobenzo[1,2-b:5,4-b']difuran-8-yl)phosphine was weighed out and put in a Schlenk flask. Next, 18 mL of tetrahydrofuran was added thereto. After a solution thus produced was cooled to -78°C, 0.98 mL (1.6 mmol) of n-BuLi was slowly added thereto in a dropwise manner. After the dropwise addition was completed, the mixture was stirred at -78°C for 1 hour and 10 minutes. Then, the temperature of the mixture was increased to 0°C, and 265 mg (1.4 mmol) of $\alpha$-(trifluoromethyl)styrene oxide dissolved in 4.7 mL of tetrahydrofuran, was slowly added thereto. The mixture was stirred at room temperature for 2 hours and 30 minutes, and it was further stirred at 60°C for 2 hours and 10 minutes. Then, the solvent was completely removed from the mixture by distillation, and 23 mL of tetrahydrofuran was added to the residue. After a solution thus produced was cooled to 0°C, 0.85 mL (1.7 mmol) of a solution of hydrogen chloride in diethyl ether (hereinafter, it may be referred to as "hydrochloric ether solution") was slowly added thereto in a dropwise manner. After a solution thus obtained was stirred at 0°C for 30 minutes, it was washed by adding 14 mL of deaerated water, and an organic layer was separated. An operation to add 8 mL of diethyl ether to an aqueous layer and extract an organic layer was repeated three times. The extracted organic layers were collected and dried with sodium sulfate. Then, the sodium sulfate was removed therefrom by use of a glass filter. After the filtrate was dried by evaporation, a solid thus obtained was refined by silica gel column chromatography (the hexane/acetone ratio of the developing solvent was changed from 5/1 to 3/1 and then 1/1) in air, thereby obtaining 189 mg of a solid. The purity of AL-29, which was determined by $^{31}$P-NMR, was 97%.

$^1$H NMR (400 MHz, $CDCl_3$) $\delta$: 7.50-7.48 (m, 2H), 7.23-7.19 (m, 3H), 6.86 (s, 2H), 5.02 (brs, 1H), 4.52-4.46 (m, 6H), 4.38-4.31 (m, 2H), 3.86 (dd, J = 15.3, 3.6 Hz, 1H), 3.04-2.95 (m, 9H)
$^{19}$F NMR (376 MHz, $CDCl_3$) $\delta$: -80.4 (s)
$^{31}$P{$^1$H} NMR (162 MHz, $CDCl_3$) $\delta$: -64.9 (s)

[Chem. 37]

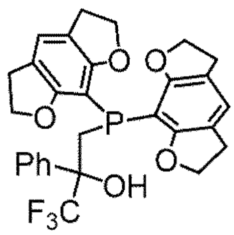

**AL-29**

(Synthesis Example I-2: Synthesis of AL-36)

First, 500 mg (1.4 mmol) of bis(2,3,5,6-tetrahydrobenzo[1,2-b:5,4-b']difuran-8-yl)phosphine was weighed out and put in a Schlenk flask. Next, 18 mL of tetrahydrofuran was added thereto. After a solution thus produced was cooled to -78°C, 0.98 mL (1.6 mmol) of n-BuLi was slowly added thereto in a dropwise manner. After the dropwise addition was completed, the mixture was stirred at -78°C for 2 hours. Then, the temperature of the mixture was increased to 0°C, and 0.15 mL (1.4 mmol) of 2,2-bis(trifluoromethyl)oxirane dissolved in 4.7 mL of tetrahydrofuran, was slowly added thereto. The mixture was stirred at room temperature for 1 hour and 30 minutes and then cooled to 0°C. Next, 0.85 mL (1.7 mmol) of a hydrochloric ether solution was slowly added thereto in a dropwise manner. After the mixture was stirred at 0°C for 30 minutes, it was washed by adding 14 mL of deaerated water, and an organic layer was separated. An operation to add 8 mL of diethyl ether to an aqueous layer and extract an organic layer was repeated three times. The extracted organic layers were collected and dried with sodium sulfate. Then, the sodium sulfate was removed therefrom by use of a glass filter. After the filtrate was dried by evaporation, a solid thus obtained was refined by silica gel column chromatography (the hexane/acetone ratio of the developing solvent was changed from 5/1 to 3/1) in air, thereby obtaining 426 mg of a solid. The purity of AL-36, which was determined by $^{31}$P-NMR, was 99% or more.

$^1$H NMR (400 MHz, $CDCl_3$) $\delta$: 6.92 (s, 2H), 5.48 (d, J = 3.7 Hz, 1H), 4.56-4.46 (m, 8H), 3.15 (s, 2H), 3.05 (t, J = 8.8 Hz, 8H)
$^{19}$F NMR (376 MHz, $CDCl_3$) $\delta$: -77.1 (d, J = 22.0 Hz)
$^{31}$P{$^1$H} NMR (162 MHz, $CDCl_3$) $\delta$: -65.3 (septet, J = 22.5 Hz)

[Chem. 38]

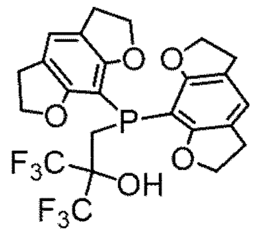

**AL-36**

(Synthesis Example I-3: Synthesis of AL-36/NiMePy)

First, 85 mg (0.19 mmol) of dichlorotetrapyridine nickel(II) was weighed out and put in a Schlenk flask. Next, 1.8 mL of toluene and 0.2 mL of tetrahydrofuran were added thereto. After a solution thus produced was cooled to 0°C, 80 μL (0.99 mmol) of pyridine and 0.35 mL (0.38 mmol) of methyllithium were slowly added thereto in a dropwise manner, thereby obtaining a transition metal compound solution. Meanwhile, a solution of AL-36 was obtained by adding 0.6 mL of toluene to 100 mg of AL-36 (0.19 mmol) contained in a Schlenk flask. The AL-36 solution was added to the transition metal compound solution. The Schlenk flask in which AL-36 was contained, was washed twice with 0.2 mL of toluene, and the washing solution was also added to the transition metal compound solution. The mixture was stirred at 40°C for 2 hours and 20 minutes. Then, the solvent was completely removed therefrom by distillation. The residue thus obtained was mixed with 10 mL of toluene, and the mixture was subjected to Celite filtration. The solvent of the filtrate was removed therefrom by distillation, and the residue thus obtained was washed twice with 1 mL of hexane and washed once with 2 mL of hexane. The residue was dried by evaporation, thereby obtaining 52 mg of a solid. The purity of AL-36/NiMePy, which was determined by $^{31}$P-NMR, was 99% or more.

The AL-36/NiMePy was a metal complex having the following structure.

$^{1}$H NMR (400 MHz, $C_6D_5CD_3$) δ: 8.90 (br, 2H), 6.77 (br, 1H), 6.64 (s, 2H), 6.47 (br, 2H), 4.11 (t, J = 8.7 Hz, 8H), 4.00 (d, J = 12.5 Hz, 2H), 2.54 (t, J = 8.6 Hz, 8H), -0.47 (d, J = 6.3 Hz, 3H)
$^{19}$F NMR (376 MHz, $C_6D_5CD_3$) δ: -77.1 (s)
$^{31}$P{$^{1}$H} NMR (162 MHz, $C_6D_5CD_3$) δ : 5.2 (s)

[Chem. 39]

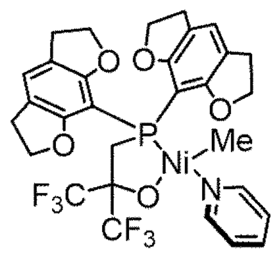

**AL-36/NiMePy**

(Synthesis Example I-4: Synthesis of AL-52)

(1) Synthesis of 4-bromo-1,2,3,5,6,7-hexahydro-s-indacene

First, 1,2,3,5,6,7-hexahydro-s-indacene-4-amine (10 g, 57.7 mmol) was dissolved in a 48% hydrogen bromide aqueous solution (40 mL). The solution was cooled to 0°C, and sodium nitrite (4.38 g, 63.5 mmol) was very slowly added thereto. The mixture was stirred for 2 hours, while keeping the reaction temperature within a range of from 0°C to 5°C, thereby obtaining a solution of diazonium salt. Then, the obtained solution was added to a mixture of copper bromide (11.6 g, 80.8 mmol) and a 48% hydrogen bromide aqueous solution (35 mL). The mixture was stirred at 100°C for 18 hours, thereby obtaining a black solution. From the mixture, an organic substance was extracted three times with dichloromethane. Organic layers were collected, washed with a potassium hydroxide aqueous solution (1 M), washed with water,

and then dried with magnesium sulfate. The solvent was removed therefrom by distillation, thereby obtaining a brown solid. The obtained solid was refined by silica gel column chromatography (developing solvent: petroleum ether 100%), thereby obtaining a target product in the form of a white solid (4.0 g, 17 mmol).

$^1$H NMR ($CDCl_3$, 500 MHz) δ: 7.53 (d, J = 2.0 Hz, 1H), 3.28-3.15 (m, 8H), 2.36 (quintet, J = 7.0 Hz, 4H)

[Chem. 40]

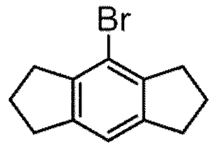

(2) Synthesis of ethoxybis(1,2,3,5,6,7-hexahydro-s-indacene-4-yl)phosphine

A solution (17 mL) of 4-bromo-1,2,3,5,6,7-hexahydro-s-indacene (4 g, 17 mmol) in tetrahydrofuran was slowly added to magnesium (615 mg, 25.3 mmol) in a dropwise manner at 20°C. The mixture was stirred at 20°C for 2 hours, thereby obtaining an off-white suspension. Then, a solution (10 mL) of ethyl dichlorophosphite (1.18 g, 8.00 mmol) in tetrahydrofuran was cooled to -78°C, and the obtained off-white suspension (16.0 mL) was added thereto in a dropwise manner at -78°C. The temperature of the mixture was slowly increased to 20°C, and the mixture was stirred for 18 hours, thereby obtaining a yellow solution. $^{31}P\{^1H\}$ NMR (162 MHz, $CDCl_3$) δ: 112.2 (s, integral ratio 19%)

[Chem. 41]

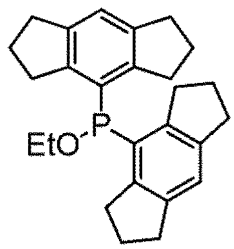

(3) Synthesis of ethoxybis(1,2,3,5,6,7-hexahydro-s-indacene-4-yl)phosphine borane

First, ethoxybis(1,2,3,5,6,7-hexahydro-s-indacene-4-yl)phosphine (3.12 g) was dissolved in toluene (10 mL), and dimethyl sulfide borane (10 M, 3.99 mL, 39.9 mmol) was added thereto in a dropwise manner for 3 minutes at 20°C. A solution thus produced was stirred at 20°C for 6 hours, thereby obtaining a light yellow solution. The obtained mixture was cooled to 0°C, and water (10 mL) was added thereto in a dropwise manner, while keeping the reaction temperature within a range of from 0°C to 10°C. The mixture thus produced was stirred for 0.5 hours. From the mixture, an organic layer was extracted three times with ethyl acetate (100 mL). The extracted organic layers were collected, washed with saturated brine, and then dried with sodium sulfate. Then, the solvent was removed therefrom by distillation, thereby obtaining a crude product. The crude product was refined by silica gel column chromatography (the petroleum ether/ethyl acetate ratio of the developing solvent was 10/1), thereby obtaining a white solid (1.5 g, 3.7 mmol). $^1$H NMR ($CDCl_3$, 400 MHz) δ: 7.21 (s, 2H), 3.94 (dq, J = 7.2, 7.2 Hz, 2H), 2.85-2.75 (m, 16H), 1.99-1.92 (m, 8H), 1.27 (t, J = 6.8 Hz, 3H), 1.50-0.50 (br)

$^{31}P\{^1H\}$ NMR ($CDCl_3$, 162 MHz) δ: 108.4-108.0 (m, integral ratio 85%)

[Chem. 42]

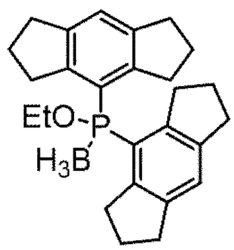

(4) Synthesis of bis(1,2,3,5,6,7-hexahydro-s-indacene-4-yl)phosphine borane

First, ethoxybis(1,2,3,5,6,7-hexahydro-s-indacene-4-yl)phosphine borane (1.25 g) and naphthalene (39.6 mg, 309 μmol) were dissolved in tetrahydrofuran (10 mL), and sodium (156 mg, 6.80 mmol) was added thereto at 20°C. The mixture was stirred for 18 hours at 20°C, thereby obtaining a red-brown solution. The red-brown solution was cooled to 0°C, and water (236 mg, 13.1 mmol) was added thereto in a dropwise manner. A white suspension thus obtained was stirred for 0.5 hours. From the mixture, an organic layer was extracted three times with dichloromethane (20 mL). The extracted organic layers were collected, washed with a saturated ammonium chloride aqueous solution (30 mL), washed with saturated brine (20 mL), and then dehydrated with sodium sulfate. Then, the solvent was removed therefrom by distillation, thereby obtaining a yellow solid. The obtained solid was refined by silica gel column chromatography (the petroleum ether/dichloromethane ratio of the developing solvent was 1/1), thereby obtaining a white solid (0.7 g, 2.0 mmol).

$^{1}$H NMR ($CDCl_3$, 500 MHz) δ: 7.19 (s, 2H), 6.47 (dq, J = 379, 7.5 Hz, 1H), 2.93-2.80 (m, 16H), 2.10-1.95 (m, 8H), 1.45-0.50 (br)
$^{31}$P{$^{1}$H} NMR ($CDCl_3$, 202 MHz) δ: -20.3-(-21.0) (br)

[Chem. 43]

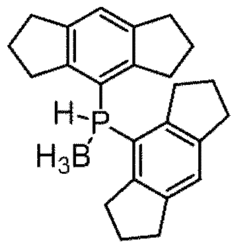

(5) Synthesis of bis(1,2,3,5,6,7-hexahydro-s-indacene-4-yl)phosphine

First, bis(1,2,3,5,6,7-hexahydro-s-indacene-4-yl)phosphine borane (2.5 g, 6.94 mmol) was dissolved at 20°C in a solution (10 mL) of hydrogen chloride in dioxane, and the mixture was stirred for 12 hours, thereby obtaining a white suspension. The solvent was removed therefrom by distillation; the residue was dissolved in dichloromethane (about 100 mL); and the mixture was washed once with a saturated sodium hydrogen carbonate aqueous solution (50 mL) and then washed twice with saturated brine (50 mL). Then, the mixture was dehydrated with sodium sulfate, and the solvent was removed therefrom by distillation, thereby obtaining a crude product in the form of a yellow solid. The crude product was refined by silica gel column chromatography (the dichloromethane/petroleum ether ratio of the developing solvent was 1/2), thereby obtaining a white solid (0.9 g, 2.6 mmol).

$^{1}$H NMR ($CDCl_3$, 400 MHz) δ: 7.06 (s, 2H), 2.85 (t, J = 7.4 Hz, 8H), 2.73 (t, J = 7.4 Hz, 8H), 2.15-1.95 (m, 8H)
$^{31}$P{$^{1}$H} NMR ($CDCl_3$, 162 MHz) δ: -85.0 (s)

[Chem. 44]

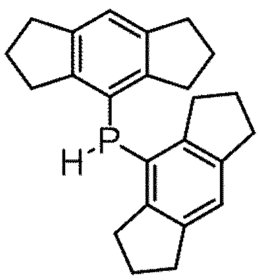

(6) Synthesis of AL-52

First, 300 mg (0.87 mmol) of the synthesized bis(1,2,3,5,6,7-hexahydro-s-indacene-4-yl)phosphine was

weighed out and put in a Schlenk flask. Next, 11 mL of tetrahydrofuran was added thereto. After a solution thus produced was cooled to -78°C, 0.60 mL (0.96 mmol) of n-BuLi was slowly added thereto in a dropwise manner. After the dropwise addition was completed, the mixture was stirred at -78°C for 1 hour and 40 minutes. Then, the temperature of the mixture was increased to 0°C, and 164 mg (0.87 mmol) of α-(trifluoromethyl)styrene oxide dissolved in 2.8 mL of tetrahydrofuran, was slowly added thereto. The inside of a container in which the α-(trifluoromethyl)styrene oxide was contained, was washed twice with 0.6 mL of tetrahydrofuran, and the washing solution was also added to the Schlenk flask. The mixture was stirred at room temperature for one hour. Then, the solvent was completely removed from the mixture by distillation, and 15 mL of tetrahydrofuran was added to the residue. After a solution thus produced was cooled to 0°C, 1.0 mL (1.0 mmol) of a hydrochloric ether solution was slowly added thereto in a dropwise manner. After the mixture was stirred at 0°C for 30 minutes, it was washed by adding 9 mL of water, and an organic layer was separated. Next, operations described below were all carried out in air. First, an operation to add 5 mL of diethyl ether to an aqueous layer and extract an organic layer was repeated three times. The extracted organic layers were collected and dried with sodium sulfate. Then, the sodium sulfate was removed therefrom by use of a glass filter. After the filtrate was dried by evaporation, a solid thus obtained was refined three times by silica gel column chromatography (the hexane/acetone ratio of the developing solvent was 40/1 (the first time) and 20/1 (the second time and the third time)), thereby obtaining 83 mg of a solid. The purity of AL-52, which was determined by $^{31}P$ NMR, was 94%.

$^{1}H$ NMR (400 MHz, $CDCl_3$) δ: 7.35 (d, J = 7.2 Hz, 2H), 7.24-7.14 (m, 3H), 7.06 (s, 1H), 6.95 (s, 1H), 3.48 (dd, J = 14.2, 2.6 Hz, 1H), 3.35 (d, J = 14.4 Hz, 1H), 3.31 (d, J = 9.6 Hz, 1H), 2.77 (t, J = 7.6 Hz, 4H), 2.73-2.58 (m, 10H), 2.39-2.32 (m, 2H), 1.98-1.76 (m, 8H)
$^{19}F$ NMR (376 MHz, $CDCl_3$) δ: -81.0 (s)
$^{31}P\{^{1}H\}$ NMR (162 MHz, $CDCl_3$) δ: -40.1 (s)

[Chem. 45]

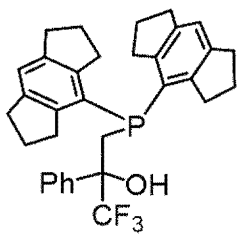

**AL-52**

(Synthesis Example I-5: Synthesis of AL-61)

(1) Synthesis of tert-butyl(2,3,5,6-tetrahydrobenzo[1,2-b:5,4-b']difuran-8-yl)phosphine borane

A solution (100 m) of 2,3,5,6-tetrahydrobenzo[1,2-b:5,4-b']difuran (4 g, 25 mmol) in diethyl ether was cooled to 0°C, and n-butyllithium (2.5 M, 10.9 mL, 27.3 mmol) was added thereto. The mixture was stirred at 20°C for 3 hours, thereby producing a mixture. A solution (20 mL) of tert-butyldichlorophosphine (4.31 g, 27.1 mmol) in tetrahydrofuran was cooled to -78°C, and the obtained mixture was added to the solution. The mixed solution was stirred at 20°C for 16 hours, thereby obtaining a white suspension of tert-butyl(2,3,5,6-tetrahydrobenzo[1,2-b:5,4-b']difuran-8-yl)phosphine chloride.
$^{31}P\{^{1}H\}$ NMR (202 MHz, $CDCl_3$) δ: 33.6 (s, integral ratio 91%)

Dimethyl sulfide borane (10 M, 7.40 mL, 74.0 mmol) was added at 0°C to the white suspension. The mixture was stirred at 20°C for 16 hours, thereby obtaining a colorless solution.
$^{31}P\{^{1}H\}$ NMR (162 MHz, $CDCl_3$) δ: 114.4-114.1 (m)

The colorless solution was cooled to 0°C, and lithium aluminum hydride (1 M, 36.9 mL, 36.9 mmol) was added thereto. The mixture was stirred at 20°C for 16 hours, thereby obtaining a white suspension. To the obtained mixture, deaerated water (1.5 mL), a deaerated 15% sodium hydroxide aqueous solution (1.5 mL) and then deaerated water (4.5 mL) were slowly added. The mixture was stirred at room temperature for 30 minutes and then filtered. The filtrate was concentrated, thereby obtaining a white oily substance. The oily substance was refined by silica gel column chromatography (the petroleum ether/ethyl acetate ratio of the developing solvent was 10/1), thereby obtaining a target product in the form of a white solid (4.42 g, 16.7 mmol). $^{1}H$ NMR (400 MHz, $CDCl_3$) δ: 7.06 (s, 1H), 5.43 (dq, J = 377, 7.0 Hz, 1H), 4.67-4.54 (m, 4H), 3.12 (t, J = 8.6 Hz, 4H), 1.22 (d, J = 15.2 Hz, 9H), 1.02-0.20 (br, 3H)
$^{31}P\{^{1}H\}$ NMR (162 MHz, $CDCl_3$) δ: 1.3-0.9 (br)

[Chem. 46]

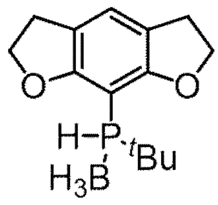

(2) Synthesis of AL-61

First, 300 mg (1.14 mmol) of the synthesized tert-butyl(2,3,5,6-tetrahydrobenzo[1,2-b:5,4-b']difuran-8-yl)phosphine borane was weighed out and put in a Schlenk flask. Next, 10 mL of tetrahydrofuran was added thereto. After a solution thus produced was cooled to -78°C, 2.45 mL (1.47 mmol) of a solution of 0.6 M potassium hexamethyldisilazide in toluene was slowly added thereto in a dropwise manner. After the dropwise addition was completed, the temperature of the mixture was increased to 0°C, and 10 mL of tetrahydrofuran was added thereto. The mixture was stirred at 0°C for one hour, and 0.140 mL (1.28 mmol) of 2,2-bis(trifluoromethyl)oxirane was slowly added thereto. After the mixture was stirred at room temperature for 2 hours, it was cooled to 0°C, and 0.87 M hydrochloric acid (3.4 mmol) was slowly added thereto in a dropwise manner. From the mixture, a generated product was extracted three times with 5 mL of diethyl ether, and organic layers were collected and washed with 5 mL of water. The organic layers were dried with sodium sulfate, and the sodium sulfate was removed by filtration with absorbent cotton. After the filtrate was dried by evaporation, a solid thus obtained was refined by silica gel column chromatography (the hexane/dichloromethane ratio of the developing solvent was 2/1) in air, thereby obtaining 384 mg of a solid.

Next, 299 mg (0.675 mmol) of the obtained solid was mixed with 91 mg (0.81 mmol) of 1,4-diazabicyclo[2.2.2] octane dissolved in 5 mL of toluene. After the temperature of the mixture was increased to 60°C, the mixture was stirred for one and a half hours. A solution thus obtained was refined by silica gel column chromatography (the hexane/acetone ratio of the developing solvent was 5/1) in nitrogen, thereby obtaining 234 mg of a solid. The solid was further purified by silica gel column chromatography (the hexane/acetone ratio of the developing solvent was 5/1), thereby obtaining 118 mg of a solid. The purity of AL-61, which was determined by $^{31}P\{1H\}$ NMR, was 97%.

$^1H$ NMR (400 MHz, $CDCl_3$) δ: 7.02 (s, 1H), 4.61-4.51 (m, 5H), 3.76 (dd, J = 16.0 Hz, 3.2 Hz, 1H), 3.10 (t, J = 8.6 Hz, 4H), 2.06 (d, J = 16.0 Hz, 1H), 1.09 (d, J = 13.7 Hz, 9H)
$^{19}F$ NMR (376 MHz, $CDCl_3$) δ: -77.1 (q, J = 11.7 Hz), -77.5 (dq, J = 11.7, 11.7 Hz)
$^{31}P\{^1H\}$ NMR (162 MHz, $CDCl_3$) δ: -30.2 (septet, J = 13.8 Hz)

[Chem. 47]

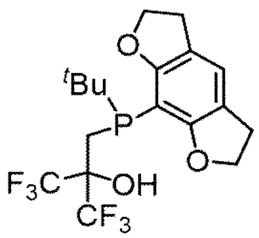

**AL-61**

(Synthesis Example I-6: Synthesis of AL-62)

First, 407 mg (1.2 mmol) of bis(2,3,5,6-tetrahydrobenzo[1,2-b:5,4-b']difuran-8-yl)phosphine was weighed out and put in a Schlenk flask. Next, 15 mL of tetrahydrofuran was added thereto. After a solution thus produced was cooled to -78°C, 0.84 mL (1.3 mmol) of n-BuLi was slowly added thereto in a dropwise manner. After the dropwise addition was completed, the mixture was stirred at -78°C for one hour. Then, the temperature of the mixture was increased to 0°C, and 145 mg (0.85 mmol) of methyl-2-(trifluoromethyl)-2-oxiranecarboxylate dissolved in 2.8 mL of tetrahydrofuran, was slowly added thereto. The inside of a container in which the methyl-2-(trifluoromethyl)-2-oxiranecarboxylate was contained, was washed twice with 0.3 mL of tetrahydrofuran, and the washing solution was also added to the Schlenk flask. The mixture was stirred at room temperature for 1 hour and 40 minutes. Then, the mixture was cooled to 0°C, and 1.4 mL (1.4 mmol) of a hydrochloric ether solution was slowly added thereto in a dropwise manner. After the mixture was stirred at 0°C for 2 hours,

it was washed by adding 8.4 mL of water, and an organic layer was separated. Next, operations described below were all carried out in air. First, an operation to add 5 mL of diethyl ether to an aqueous layer and extract an organic layer was repeated two times, and an operation to add 6 mL of diethyl ether to an aqueous layer and extract an organic layer was carried out one time. The organic layers were collected and dried with sodium sulfate. Then, the sodium sulfate was removed therefrom by use of a glass filter. After the filtrate was dried by evaporation, a solid thus obtained was refined by silica gel column chromatography (the hexane/acetone ratio of the developing solvent was changed from 10/1 to 5/1 and then 2/1), thereby obtaining 202 mg of a solid. The purity of AL-62, which was determined by $^{31}$P-NMR, was 99% or more.

$^{1}$H NMR (400 MHz, $CDCl_3$) δ: 6.89 (d, J = 13.2 Hz, 2H), 4.68 (d, J = 0.8 Hz, 1H), 4.58-4.45 (m, 8H), 3.71 (s, 3H), 3.68 (dd, J = 15.2, 2.8 Hz, 1H), 3.06-3.00 (m, 8H), 2,92 (d, J = 14.8 Hz, 1H) $^{19}$F NMR (376 MHz, $CDCl_3$) δ: -79.0 (br) $^{31}$P{$^{1}$H} NMR (162 MHz, $CDCl_3$) δ: -61.6-(-61.8) (m)

[Chem. 48]

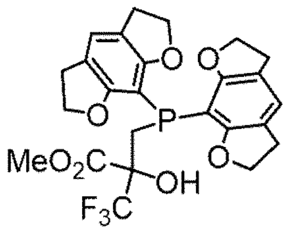

**AL-62**

(Synthesis Example I-7: Synthesis of AL-68)

(1) Synthesis of 5-bromo-2,3-dihydro-1,4-benzodioxan

First, 3-bromo-1,2-benzenediol (10 g, 52.9 mmol) and 1,2-dibromoethane (19.9 g, 106 mmol) were dissolved in N,N-dimethylformamide (100 mL). To the solution, potassium carbonate (21.9 g, 159 mmol) and potassium fluoride (1.54 g, 26.5 mmol) were added. The mixture was stirred at 135°C for 2 hours, thereby obtaining a yellow suspension. The obtained mixture was added to water (200 mL), and an organic layer was extracted three times with ethyl acetate (200 mL). The extracted organic layers were collected, washed three times with water (300 mL) and then washed two times with saturated brine (100 mL). The organic layers were dried with anhydrous sodium sulfate and then filtered. The filtrate was concentrated, thereby obtaining a residue. The residue was refined by silica gel column chromatography (the petroleum ether/ethyl acetate ratio of the developing solvent was changed from 100/0 to 20/1), thereby obtaining 11.2 g (52.2 mmol) of a target product in the form of a yellow oily substance.
$^{1}$H NMR (400 MHz, $CDCl_3$) δ: 7.10 (dd, J = 8.0, 1.6 Hz, 1H), 6.84 (dd, J = 8.0, 1.2 Hz, 1H), 6. 73 (dd, J = 8.0, 8.0 Hz, 1H), 4.38-4.36 (m, 2H), 4.28-4.26 (m, 2H)

[Chem. 49]

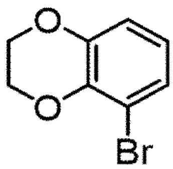

(2) Synthesis of tert-butyl(2,3-dihydro-1,4-benzodioxan-5-yl)phosphine borane

First, n-butyllithium (2.5 M, 14.5 mL, 36.2 mmol) was slowly added to a solution (50 mL) at -78°C of 5-bromo-2,3-dihydro-1,4-benzodioxan (6.5 g, 30 mmol) in tetrahydrofuran. The mixture was stirred at -78°C for one hour, and a solution (10 mL) of tert-butyldichlorophosphine (7.21 g, 45.3 mmol) in tetrahydrofuran was quickly added thereto at -78°C. The mixture was stirred at room temperature for 2 hours, thereby obtaining a yellow solution. The solvent was removed therefrom by distillation, thereby obtaining tert-butyl(2,3-dihydro-1,4-benzodioxan-5-yl)chlorophosphine as a crude product, which was in the form of a light yellow oily substance (15.6 g).

To a solution (40 mL) of the oily substance (7.5 g) in tetrahydrofuran, lithium aluminum hydride (2.5 M, 17.4 mL, 43.5 mmol) was slowly added. Then, the mixture was stirred at room temperature for 2 hours, thereby obtaining a yellow

solution. To the obtained mixture, dimethyl sulfide borane (10 M, 4.35 mL, 43.5 mmol) was added at 0°C. Then, the mixture was stirred at room temperature for 4 hours, thereby obtaining a yellow solution. To the mixture (the yellow solution), hydrochloric acid (1 N, 10 mL) was slowly added. An organic layer was extracted three times with ethyl acetate (150 mL), and the extracted organic layers were collected, washed with saturated brine (100 mL), and dried with sodium sulfate. Then, the sodium sulfate was removed therefrom by filtration, and the filtrate was concentrated, thereby obtaining a crude product. The crude product was refined by silica gel column chromatography (the petroleum ether/ethyl acetate ratio of the developing solvent was changed from 40/1 to 10/1), thereby obtaining a white solid (1.1 g, 4.6 mmol).

$^1$H NMR (400 MHz, $CDCl_3$) δ: 7.28-7.26 (m, 1H), 7.02 (dd, J = 8.0, 1.5 Hz, 1H), 6.95 (ddd, 7.5, 7.5, 2.5 Hz, 1H), 5.56 (dq, J = 380, 7.0 Hz, 1H), 4.35-4.23 (m, 4H), 1.19 (d, J = 15.0 Hz, 9H), 1.03-0.33 (br, 3H)
$^{31}$P{$^1$H} NMR (202 MHz, $CDCl_3$) δ: 2.4-2.1 (m)

[Chem. 50]

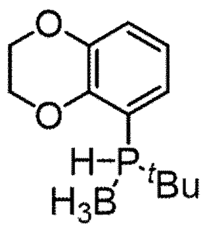

(3) Synthesis of AL-68

First, 250 mg (1.1 mmol) of the synthesized tert-butyl(2,3-dihydro-1,4-benzodioxan-5-yl)phosphine borane was weighed out and put in a Schlenk flask. Next, 11 mL of tetrahydrofuran was added thereto. A solution thus produced was cooled to -78°C, and 1.9 mL (1.2 mmol) of a solution of potassium hexamethyldisilazane in toluene was slowly added thereto in a dropwise manner. After the dropwise addition was completed, the mixture was stirred at -78°C for one hour. Then, the temperature of the mixture was increased to 0°C, and 0.11 mL (1.1 mmol) of 2,2-bis(trifluoromethyl)oxirane dissolved in 3.5 mL of tetrahydrofuran, was slowly added thereto. The inside of a container in which the 2,2-bis(trifluoromethyl)oxirane was contained, was washed twice with 0.5 mL of tetrahydrofuran, and the washing solution was also added to the Schlenk flask. The mixture was stirred at room temperature for one hour. Then, the solvent was completely removed from the mixture by distillation. A solid thus obtained was refined by silica gel column chromatography (the hexane/ dichloromethane ratio of the developing solvent was 5/1) in air, thereby obtaining 323 mg of a solid.

Next, 5 mL of methanol was added to 323 mg of the solid, and the mixture was stirred at 60°C for 8 hours. Then, the solvent was removed therefrom by distillation, thereby obtaining 229 mg of a solid. The purity of AL-68, which was determined by $^{31}$P-NMR, was 98%.

$^1$H NMR (400 MHz, $CDCl_3$) δ: 6.99 (ddd, J = 7.7, 7.7, 1.9 Hz, 1H), 6.93 (dd, J = 8.2, 1.8 Hz, 1H), 6.87 (dd, J = 7.8, 7.8 Hz, 1H), 4.33-4.24 (m, 5H), 3.06 (dd, J = 16.0, 1.8 Hz, 1H), 2.15 (d, J = 16.0 Hz, 1H), 1.06 (d, J = 13.6 Hz, 9H)
$^{19}$F NMR (376 MHz, $CDCl_3$) δ: -76.8 (q, J = 14.5 Hz), -77.8 (q, J = 11.3 Hz)
$^{31}$P{$^1$H} NMR (162 MHz, $CDCl_3$) δ: -25.3 (s)

[Chem. 51]

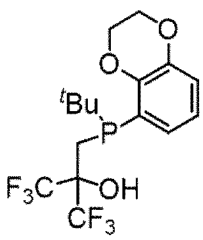

**AL-68**

(Synthesis Example I-8: Synthesis of AL-69

(1) Synthesis of 7-bromo-2,3-dihydro-2,2-dimethylbenzofuran

Based on the descriptions in Organic Letters, 2011, 13, 4974-4976, a compound represented by the following chemical formula was synthesized.

[Chem. 52]

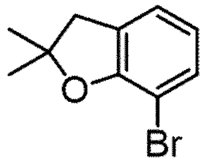

(2) Synthesis of tert-butyl(2,3-dihydro-2,2-dimethylbenzofuran-7-yl)phosphine borane

A solution (30 mL) of 7-bromo-2,3-dihydro-2,2-dimethylbenzofuran (6.5 g, 28.6 mmol) in tetrahydrofuran was cooled to -78°C, and n-butyllithium (2.5 M, 12.6 mL, 31.5 mmol) was added thereto. The mixture was stirred at -78°C for 3 hours, and a solution (6 mL) of tert-butyldichlorophosphine (5.01 g, 31.5 mmol) in tetrahydrofuran was added thereto. The mixture was stirred at 20°C for one hour, thereby obtaining a colorless solution. The solution was concentrated, thereby obtaining tert-butyl(2,3-dihydro-2,2-dimethylbenzofuran-7-yl)chlorophosphine as a crude product, which was in the form of a white solid.

$^{31}P\{^1H\}$ NMR (162 MHz, $CDCl_3$) δ : 99.0 (s, integral ratio 98%)

A solution (30 mL) of the white solid (7.75 g, 28.6 mmol) in tetrahydrofuran was cooled to 0°C, and dimethyl sulfide borane (10 M, 5.73 mL, 57.3 mmol) was added thereto. The mixture was stirred at room temperature for 16 hours, thereby obtaining tert-butyl(2,3-dihydro-2,2-dimethylbenzofuran-7-yl)chlorophosphine borane in the form of a white suspension.

$^{31}P\{^1H\}$ NMR (162 MHz, $CDCl_3$) δ: 119.2-118.9 (m, integral ratio 78%)

The white suspension was cooled to 0°C, and lithium aluminum hydride (2.5 M, 17.2 mL, 43 mmol) was added thereto. The mixture was stirred at 20°C for 16 hours, thereby obtaining a colorless solution. Water (0.5 mL), a 15% sodium hydroxide aqueous solution (0.5 mL) and then water (1.5 mL) were slowly added thereto. The mixture was stirred at room temperature for 30 minutes and then filtered. The filtrate was concentrated, thereby obtaining a colorless oily substance. The oily substance was refined by silica gel column chromatography (the petroleum ether/ethyl acetate ratio of the developing solvent was 50/1), thereby obtaining a target product in the form of a white solid (3.2 g).

$^1H$ NMR (400 MHz, $CDCl_3$) δ: 7.46 (dd, J = 10.4, 8.0 Hz, 1H), 7.26 (d, J = 7.4 Hz, 1H), 6.91 (ddd, J = 7.4 Hz, 7.4 Hz, 1.8 Hz, 1H), 5.44 (dq, J = 377, 6.8 Hz, 1H), 3.06 (s, 2H), 1.50 (s, 3H), 1.46 (s, 3H), 1.19 (d, J = 15.2 Hz, 9H), 0.97-0.20 (br, 3H)

$^{31}P\{^1H\}$ NMR (162 MHz, $CDCl_3$) δ : 4.6-4.2 (m)

[Chem. 53]

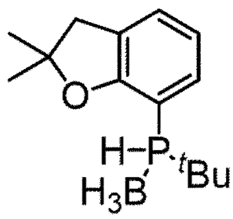

(3) Synthesis of AL-69

First, 250 mg (1.0 mmol) of the synthesized tert-butyl(2,3-dihydro-2,2-dimethylbenzofuran-7-yl)phosphine borane was weighed out and put in a Schlenk flask. Next, 13 mL of tetrahydrofuran was added thereto. After a solution thus produced was cooled to -78°C, 1.8 mL (1.1 mmol) of a solution of potassium hexamethyldisilazane in toluene was slowly added thereto in a dropwise manner. After the dropwise addition was completed, the mixture was stirred at -78°C for one hour. Then, the temperature of the mixture was increased to 0°C, and 0.11 mL (1.0 mmol) of 2,2-bis(trifluoromethyl) oxirane dissolved in 3.3 mL of tetrahydrofuran, was slowly added thereto. The inside of a container in which the 2,2-bis(trifluoromethyl)oxirane was contained, was washed twice with 0.5 mL of tetrahydrofuran, and the washing solution was also added to the Schlenk flask. The mixture was stirred at room temperature for one hour. Then, the solvent was removed

from the mixture by distillation. A solid thus obtained was refined by silica gel column chromatography (the hexane/dichloromethane ratio of the developing solvent was 5/1) in air, thereby obtaining 192 mg of a solid.

Next, 3 mL of methanol was added to 192 mg of the solid, and the mixture was stirred at 60°C for 7 hours. Then, the solvent was removed therefrom by distillation, thereby obtaining 146 mg of a solid. The purity of AL-69, which was determined by $^{31}$P-NMR, was 98%.

$^{1}$H NMR (400 MHz, $CDCl_3$) δ: 7.27-7.20 (m, 1H), 7.20-7.14 (m, 1H), 6.83 (ddd, J = 7.6, 7.6, 0.8 Hz, 1H), 4.56 (d, J = 8.0 Hz, 1H), 3.50 (dd, J = 15.8, 3.4 Hz, 1H), 3.01 (s, 2H), 2.09 (d, J = 16.0 Hz, 1H), 1.47 (s, 3H), 1.46 (s, 3H), 1.06 (d, J = 13.6 Hz, 9H) $^{19}$F NMR (376 MHz, $CDCl_3$) δ: -77.1-(-77.3) (m)

$^{31}$P{$^{1}$H} NMR (162 MHz, $CDCl_3$) δ: -15.3 (septet, J = 14.2 Hz)

[Chem. 54]

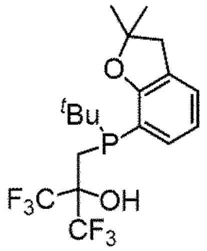

**AL-69**

[Comparative Synthesis Example 1] (Synthesis of AL-2al)

With reference to International Publication No. WO2001/092342 (pages 51 and 52), AL-2al represented by the following chemical formula was synthesized. Comparative Example 1 used a complex having a purity of 90%, which was determined by $^{31}$P{$^{1}$H}-NMR. Comparative Example 2 used a complex having a purity of 76%, which was determined by $^{31}$P{$^{1}$H}-NMR.

[Chem. 55]

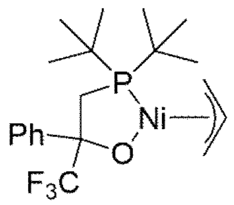

(AL−2al)

Autoclaves used in the following polymerization experiments were dried sufficiently and subjected to a nitrogen purge before use.

[Example I-1]

First, 68.8 mg (0.25 mmol) of $Ni(cod)_2$ was weighed out, put in a flask and dissolved in 25 mL of toluene. Also, 10.5 mg (0.019 mmol) of AL-29 obtained in Synthesis Example I-1 was weighed out and put in another flask. Then, 20 mL of the solution of $Ni(cod)_2$ in toluene was weighed out and put in the flask containing AL-29. A catalyst composition was thus produced in the solution, and the solution was heated in a water bath at 40°C and stirred for 15 minutes, thereby obtaining a catalyst composition solution (hereinafter, it is referred to as "catalyst solution". AL-29 concentration: about 1 mM).

Next, 1000 mL of toluene was put in a 2.4 L autoclave, and the temperature inside of the autoclave was increased to 90°C. Then, nitrogen was added to the autoclave so as to obtain an autoclave internal pressure of 0.5 MPa. Then, ethylene was added to the autoclave so as to obtain an autoclave internal pressure of 3.0 MPa. Then, 5.0 mL of the catalyst solution was injected into a catalyst cylinder and then added to the autoclave by high-pressure nitrogen. This point of time was determined as reaction starting time. After a lapse of one minute from the start of the reaction, the ethylene was depressurized, and 10 mL of a solution (0.2 M) of 1,2-butanediol in toluene was added to terminate the reaction. The temperature of the autoclave was returned to room temperature, and 1000 mL of acetone was added thereto. A solid thus precipitated was recovered by filtration, washed twice with 100 mL of acetone, and dried under reduced pressure. A

polymer thus obtained was 31.6 g.

[Example I-2]

First, 25 mL of a catalyst solution (AL-29 concentration: about 4 mM) was prepared in the same manner as Example I-1, except for the following: the amount of $Ni(cod)_2$ was changed to 302.4 mg (1.1 mmol); the amount of toluene was changed to 27.5 mL; the amount of AL-29 was changed to 54.3 mg (0.10 mmol); and the amount of the solution of $Ni(cod)_2$ in toluene, which was added to AL-29, was changed to 25 mL.

Next, 940 mL of toluene (hereinafter, it is referred to as "toluene-1") was put in a 2.4 L autoclave. Then, 2.9 mL (20 mmol) of tBA (hereinafter, it is referred to as "comonomer and its addition amount-1") was injected into a catalyst cylinder and then added to the autoclave by high-pressure nitrogen. The catalyst cylinder was washed with 10 mL of toluene, and the washing solution was added to the autoclave by high-pressure nitrogen. Then, 1.0 mL of a solution (0.1 M) of TNOA in toluene was added to the catalyst cylinder, and then it was added to the autoclave by high-pressure nitrogen. The catalyst cylinder was washed with 10 mL of toluene, and the washing solution was added to the autoclave by high-pressure nitrogen. The temperature inside of the autoclave was increased to 90°C, and nitrogen was added to the autoclave so as to obtain an autoclave internal pressure of 0.5 MPa (hereinafter, it is referred to as "nitrogen pressure-1"). Then, ethylene was added to the autoclave so as to obtain an autoclave internal pressure of 3.0 MPa (hereinafter, it is referred to as "ethylene pressure-1"). Then, 5 mL of the catalyst solution (hereinafter, it is referred to as "initial catalyst-1") was added to the catalyst cylinder, and then it was added to the autoclave by high-pressure nitrogen. This point of time was determined as reaction starting time.

After a lapse of 3 minutes from the start of the reaction, the catalyst cylinder was washed with 10 mL of toluene, and the washing solution was added to the autoclave by high-pressure nitrogen (hereinafter, it is referred to as "initial washing and its time-1"). After a lapse of 9 minutes from the start of the reaction, 9 mL of the catalyst solution was added to the catalyst cylinder, and then it was added to the autoclave by high-pressure nitrogen. In addition, after a lapse of 13 minutes from the start of the reaction, 9 mL of the catalyst solution was added to the catalyst cylinder, and then it was added to the autoclave by high-pressure nitrogen. After a lapse of 16 minutes from the start of the reaction, the catalyst cylinder was washed with 10 mL of toluene, and the washing solution was added to the autoclave by high-pressure nitrogen (hereinafter, it is referred to as "catalyst addition-1"). After a lapse of 52 minutes from the start of the reaction (hereinafter, it is referred to as "reaction time-1"), 10 mL of a solution (0.2 M) of 1,2-butanediol in toluene was added by high-pressure nitrogen to terminate the reaction, and the ethylene was depressurized.

Refining method: The temperature of the autoclave was returned to room temperature, and 1000 mL of acetone was added thereto. A solid thus precipitated was recovered by filtration, washed twice with 1000 mL of acetone, and dried under reduced pressure. A polymer thus obtained was 28.7 g.

[Example I-3]

First, 6 mL of a catalyst solution (AL-29 concentration: about 4 mM) was prepared in the same manner as Example I-1, except for the following: the amount of $Ni(cod)_2$ was changed to 88.2 mg (0.32 mmol); the amount of toluene was changed to 8 mL; the amount of AL-29 was changed to 13.2 mg (0.024 mmol); and the amount of the solution of $Ni(cod)_2$ in toluene, which was added to AL-29, was changed to 6 mL.

Next, 90 mL of toluene (hereinafter, it is referred to as "toluene-2") was put in a 0.2 L autoclave. Then, 0.75 mL (5.2 mmol) of tBA (hereinafter, it is referred to as "comonomer and its addition amount-2") and 0.6 mL of a solution (0.1 M) of TNOA in toluene (hereinafter, it is referred to as "TNOA addition amount-2") were added through the reagent inlet of the autoclave. The temperature inside of the autoclave was increased to 90°C, and nitrogen was added to the autoclave so as to obtain an autoclave internal pressure of 0.5 MPa (hereinafter, it is referred to as "nitrogen pressure-2"). Then, ethylene was added to the autoclave so as to obtain an autoclave internal pressure of 3.0 MPa (hereinafter, it is referred to as "ethylene pressure-2"). Then, 3 mL of the catalyst solution (hereinafter, it is referred to as "initial catalyst-2") was injected into the catalyst cylinder and then added to the autoclave by high-pressure nitrogen. This point of time was determined as reaction starting time. After a lapse of 4 minutes from the start of the reaction, the catalyst cylinder was washed with 3 mL of toluene, and the washing solution was added to the autoclave by high-pressure nitrogen (hereinafter, it is referred to as "initial washing and its time-2"). After a lapse of 30 minutes from the start of the reaction, 0.1 mL of tBA (0.7 mmol) was put in the catalyst cylinder; 1 mL of toluene was very slowly added thereto; and then the solution was added to the autoclave by high-pressure nitrogen. After a lapse of 31 minutes from the start of the reaction, the catalyst cylinder was washed with 3 mL of toluene, and the washing solution was added to the autoclave by high-pressure nitrogen. After a lapse of 60 minutes from the start of the reaction (hereinafter, it is referred to as "reaction time-2"), 3 mL of a solution (0.2 M) of 1,2-butanediol in toluene (hereinafter, it is referred to as "reaction terminator") was added by high-pressure nitrogen to terminate the reaction, and the ethylene was depressurized.

Refining method: The temperature of the autoclave was returned to room temperature, and 100 mL of acetone

was added thereto. A solid thus precipitated was recovered by filtration, washed twice with 100 mL of acetone, and dried under reduced pressure. A polymer thus obtained was 0.70 g.

[Example I-4]

First, 22 mL of a catalyst solution (AL-29 concentration: about 1 mM) was prepared in the same manner as Example I-1, except for the following: the amount of $Ni(cod)_2$ was changed to 69.2 mg (0.25 mmol); the amount of AL-29 was changed to 11.8 mg (0.022 mmol); and the amount of the solution of $Ni(cod)_2$ in toluene, which was added to AL-29, was changed to 22 mL.
Next, a polymerization operation was carried out in the same manner as Example I-3, except for the following: the catalyst solution prepared above was used; the catalyst addition was carried out as described below; and the polymerization condition was changed as follows. As a result, 0.46 g of a polymer was obtained.
Toluene-2: 88 mL
Comonomer and its addition amount-2: A solution of norbornene in toluene (0.318 g/g, 3.89 g, 13 mmol) was added. Then, no comonomer was added.

TNOA addition amount-2: Not added
Nitrogen pressure-2: 0.2 MPa
Ethylene pressure-2: 0.8 MPa (Inner pressure 1.0 MPa)

Initial catalyst-2: First, 1 mL of the catalyst solution was injected. Next, 2 mL of toluene was added very slowly, and then it was added to the autoclave by high-pressure nitrogen.

Initial washing and its time-2: None

Catalyst addition: After a lapse of 10 minutes from the start of the reaction, 1 mL of the catalyst solution was added to the catalyst cylinder, and then it was added to the autoclave by high-pressure nitrogen. After a lapse of 15 minutes from the start of the reaction, the catalyst cylinder was washed with 3 mL of toluene, and the washing solution was added to the autoclave by high-pressure nitrogen.

Reaction time-2: 30 Minutes

[Example I-5]

First, 22 mL of a catalyst solution (AL-29 concentration: about 1 mM) was prepared in the same manner as Example I-1, except for the following: the amount of $Ni(cod)_2$ was changed to 68.7 mg (0.25 mmol); the amount of AL-29 was changed to 12.0 mg (0.022 mmol); and the amount of the solution of $Ni(cod)_2$ in toluene, which was added to AL-29, was changed to 22 mL.
Next, a polymerization operation was carried out in the same manner as Example I-3, except for the following: the catalyst solution prepared above was used; the catalyst addition was carried out as described below; and the polymerization condition was changed as follows. As a result, 0.80 g of a polymer was obtained.

Toluene-2: 88 mL
Comonomer and its addition amount-2: Vinylene carbonate (1.3 mL, 21 mmol) was added. Then, no comonomer was added.
TNOA addition amount-2: 0.1 mL (0.010 mmol)
Nitrogen pressure-2: Not applied
Ethylene pressure-2: 2.5 MPa

Initial washing and its time-2: Washed with 3 mL of toluene after a lapse of 2 minutes from the start of the reaction.
Catalyst addition: After a lapse of 7 minutes and 18 minutes from the start of the reaction, 2 mL and 3 mL of the catalyst solution were injected into the catalyst cylinder and then added to the autoclave by high-pressure nitrogen, respectively. After a lapse of 11 minutes and 20 minutes from the start of the reaction, the catalyst cylinder was washed with 3 mL of toluene each, and the washing solution was added to the autoclave by high-pressure nitrogen each.

Reaction time-2: 35 Minutes

Refining method: The polymer was precipitated with 100 mL of acetone. Then, 100 mL of acetone and 1 mL of a

10 wt. % hydrochloric acid aqueous solution were added to the polymer, and the polymer was stored overnight in a refrigerator. Then, the polymer was washed twice with 100 mL of acetone.

[Example I-6]

First, 22 mL of a catalyst solution (AL-36 concentration: about 1 mM) was prepared in the same manner as Example I-1, except for the following: the amount of $Ni(cod)_2$ was changed to 68.9 mg (0.25 mmol); 11.6 mg (0.022 mmol) of AL-36 obtained in Synthesis Example I-2, was used instead of AL-29; and the amount of the solution of $Ni(cod)_2$ in toluene, which was added to AL-36, was changed to 22 mL.

Next, a polymerization operation was carried out in the same manner as Example I-3, except for the following: the catalyst solution prepared above was used; the catalyst addition was carried out as described below; and the polymerization condition was changed as follows. As a result, 1.52 g of a polymer was obtained.

Toluene-2: 93 mL

Comonomer and its addition amount-2: tBA (0.3 mL, 2.1 mmol) was added. Then, no comonomer was added.

TNOA addition amount-2: 0.1 mL (0.010 mmol)

Initial catalyst-2: First, 0.5 mL of the catalyst solution was injected. Next, 3 mL of toluene was added very slowly, and then it was added to the autoclave by high-pressure nitrogen.

Initial washing and its time-2: None

Catalyst addition: After a lapse of 5 minutes from the start of the reaction, 0.5 mL of the catalyst solution was injected into the catalyst cylinder. In addition, 3 mL of toluene was added very slowly and then added to the autoclave by high-pressure nitrogen.

[Example I-7]

First, 2 mL of a solution (AL-36 concentration: about 10 mM) was prepared in the same manner as Example I-6, except for the following: the amount of $Ni(cod)_2$ was changed to 11.2 mg (0.04 mmol); the amount of toluene was changed to 4 mL; the amount of AL-36 was changed to 10.6 mg (0.02 mmol); and the amount of the solution of $Ni(cod)_2$ in toluene, which was added to AL-36, was changed to 2 mL. Then, 18 mL of toluene was added to the solution, thereby preparing 20 mL of a catalyst solution (AL-36 concentration: about 1 mM).

Next, a polymerization operation was carried out in the same manner as Example I-3, except for the following: the catalyst solution prepared above was used; the catalyst addition was carried out as described below; and the polymerization condition was changed as follows. As a result, 1.80 g of a polymer was obtained.

Toluene-2: 93 mL

Comonomer and its addition amount-2: tBA (0.3 mL, 2.1 mmol) was added. Then, no comonomer was added.

TNOA addition amount-2: 0.1 mL (0.010 mmol)

Initial catalyst-2: First, 1 mL of the catalyst solution was injected. Next, 2 mL of toluene was added very slowly, and then it was added to the autoclave by high-pressure nitrogen.

Initial washing and its time-2: None

Catalyst addition: After a lapse of 6 minutes and 17 minutes from the start of the reaction, 2 mL of the catalyst solution was injected into the catalyst cylinder and then added to the autoclave by high-pressure nitrogen each. After a lapse of 32 minutes from the start of the reaction, the catalyst cylinder was washed with 3 mL of toluene, and the washing solution was added to the autoclave by high-pressure nitrogen.

[Example I-8]

First, 4 mL of a solution (AL-36 concentration: about 5 mM) was prepared in the same manner as Example I-6, except for the following: 10.2 mg (0.04 mmol) of $Ni(acac)_2$ was used instead of $Ni(cod)_2$; the amount of toluene was changed to 8 mL; the amount of AL-36 was changed to 10.6 mg (0.02 mmol); and the amount of the solution of the metal compound in toluene, which was added to AL-36, was changed to 4 mL. Then, 16 mL of toluene was added to the solution, thereby preparing 20 mL of a catalyst solution (AL-36 concentration: about 1 mM).

Next, a polymerization operation was carried out in the same manner as Example I-3, except for the following: the catalyst solution prepared above was used; the catalyst addition was carried out as described below; and the polymerization condition was changed as follows. As a result, 2.10 g of a polymer was obtained.

Toluene-2: 93 mL

Comonomer and its addition amount-2: tBA (0.3 mL, 2.1 mmol) was added. Then, no comonomer was added.

TNOA addition amount-2: 0.2 mL (0.020 mmol)

Initial catalyst-2: First, 1 mL of the catalyst solution was injected. Next, 2 mL of toluene was added very slowly, and then it was added to the autoclave by high-pressure nitrogen.

Initial washing and its time-2: None

Catalyst addition: After a lapse of 6 minutes and 19 minutes from the start of the reaction, 3 mL and 2 mL of the catalyst solution were injected into the catalyst cylinder and then added to the autoclave by high-pressure nitrogen, respectively. After a lapse of 22 minutes from the start of the reaction, the catalyst cylinder was washed with 3 mL of toluene, and the washing solution was added to the autoclave by high-pressure nitrogen.

[Example I-9]

First, 6 mL of a catalyst solution (AL-36 concentration: about 5 mM) was prepared in the same manner as Example I-6, except for the following: 10.2 mg (0.04 mmol) of $Ni(acac)_2$ was used instead of $Ni(cod)_2$; the amount of toluene was changed to 8 mL; the amount of AL-36 was changed to 16.1 mg (0.03 mmol); and the amount of the solution of the metal compound in toluene, which was added to AL-36, was changed to 6 mL.

Next, a polymerization operation was carried out in the same manner as Example I-2, except for the following: the catalyst solution prepared above was used, and the polymerization condition was changed as follows. As a result, 6.62 g of a polymer was obtained.

Toluene-1: 950 mL

Initial catalyst-1: First, 4 mL of the catalyst solution was injected. Next, 8 mL of toluene was added very slowly, and then it was added to the autoclave by high-pressure nitrogen.

Initial washing and its time-1: After a lapse of 5 minutes from the start of the reaction, the catalyst cylinder was washed with 10 mL of toluene.

Catalyst addition-1: No additional catalyst

Reaction time-1: 60 Minutes

[Example I-10]

First, 16.5 mg (0.024 mmol) of AL-36/NiMePy obtained in Synthesis Example I-3, was weighed out. Next, 12 mL of toluene was added thereto, thereby preparing a metal complex solution (hereinafter, it is referred to as "catalyst solution") (AL-36 concentration: about 2 mM).

Next, a polymerization operation was carried out in the same manner as Example I-2, except for the following: the catalyst solution prepared above was used, and the polymerization condition was changed as follows. As a result, 12.3 g of a polymer was obtained.

Toluene-1: 950 mL

Comonomer and its addition amount-1: First, tBA (2.9 mL, 20 mmol) was injected into a catalyst cylinder. Next, 9 mL of toluene was added very slowly. Then, the solution was added to the autoclave by high-pressure nitrogen. Washing of the catalyst cylinder was not carried out.

TNOA addition amount-1: First, 1.0 mL (0.10 mmol) of TNOA was injected into the catalyst cylinder. Next, 10 mL of toluene was added very slowly. Then, the solution was added to the autoclave by high-pressure nitrogen.

Initial catalyst-1: First, 2 mL of the catalyst solution was injected. Next, 10 mL of toluene was added very slowly,

and then it was added to the autoclave by high-pressure nitrogen.

Initial washing and its time-1: After a lapse of 2 minutes from the start of the reaction, the catalyst cylinder was washed with 10 mL of toluene.

Catalyst addition-1: After a lapse of 17 minutes from the start of the reaction, 3 mL of the catalyst solution was injected into the catalyst cylinder and then added to the autoclave by high-pressure nitrogen. After a lapse of 19 minutes from the start of the reaction, the catalyst cylinder was washed with 10 mL of toluene, and the washing solution was added to the autoclave by high-pressure nitrogen.

Reaction time-1: 60 Minutes

[Example I-11]

First, 8 mL of a catalyst solution (AL-36 concentration: about 2.5 mM) was prepared in the same manner as Example I-6, except for the following: the amount of $Ni(cod)_2$ was changed to 69.3 mg (0.25 mmol); the amount of toluene was changed to 10 mL; the amount of AL-36 was changed to 10.5 mg (0.02 mmol); and the amount of the solution of $Ni(cod)_2$ in toluene, which was added to AL-36, was changed to 8 mL.

Next, a polymerization operation was carried out in the same manner as Example I-3, except for the following: the catalyst solution prepared above was used, and the polymerization condition was changed as follows. As a result, 1.16 g of a polymer was obtained.

Toluene-2: 93 mL

Comonomer and its addition amount-2: tBA (1.2 mL, 8.3 mmol) was added. Then, no comonomer was added.

TNOA addition amount-2: 0.25 mL (0.025 mmol)
Initial catalyst-2: Catalyst solution 2 mL

Initial washing and its time-2: After a lapse of 3 minutes from the start of the reaction, the catalyst cylinder was washed with 3 mL of toluene.

Refining method: The polymer was precipitated with 100 mL of acetone. Then, 100 mL of acetone and 1 mL of a hydrochloric acid aqueous solution (10 wt. %) were added to the polymer, and the polymer was stored overnight in a refrigerator. Then, the polymer was washed twice with 100 mL of acetone.

[Example I-12]

First, 7 mL of a catalyst solution (AL-36 concentration: about 4 mM) was prepared in the same manner as Example I-6, except for the following: the amount of $Ni(cod)_2$ was changed to 99.5 mg (0.36 mmol); the amount of toluene was changed to 9 mL; the amount of AL-36 was changed to 14.9 mg (0.028 mmol); and the amount of the solution of $Ni(cod)_2$ in toluene, which was added to AL-36, was changed to 7 mL.

Next, a polymerization operation was carried out in the same manner as Example I-3, except for the following: the catalyst solution prepared above was used, and the polymerization condition was changed as follows. As a result, 0.54 g of a polymer was obtained.

Toluene-2: 93 mL

Comonomer and its addition amount-2: MA (0.3 mL, 3.3 mmol) was added. Then, no comonomer was added.

TNOA addition amount-2: 1.0 mL (0.10 mmol)
Initial catalyst-2: Catalyst solution 2.5 mL

Initial washing and its time-2: After a lapse of 2 minutes from the start of the reaction, the catalyst cylinder was washed with 3 mL of toluene.

Reaction terminator: Instead of the solution of 1,2-butanediol in toluene, 1.0 mL of a solution (2 M) of deuterated acetic acid in toluene was added.

[Example I-13]

First, 22 mL of a catalyst solution (AL-36 concentration: about 1 mM) was prepared in the same manner as

Example I-6, except for the following: the amount of $Ni(cod)_2$ was changed to 69.0 mg (0.25 mmol); the amount of AL-36 was changed to 12.0 mg (0.022 mmol); and the amount of the solution of $Ni(cod)_2$ in toluene, which was added to AL-36, was changed to 22 mL.

Next, a polymerization operation was carried out in the same manner as Example I-3, except for the following: the catalyst solution prepared above was used; the catalyst addition was carried out as described below; and the polymerization condition was changed as follows. As a result, 1.57 g of a polymer was obtained.

Toluene-2: 88 mL

Comonomer and its addition amount-2: A solution of norbornene in toluene (about 4.6 mL, 0.318 g/g, 4.23 g, 14 mmol) was added. Then, no comonomer was added.

TNOA addition amount-2: Not added
Nitrogen pressure-2: 0.2 MPa
Ethylene pressure-2: 0.8 MPa (Inner pressure 1.0 MPa)

Initial catalyst-2: First, 1 mL of the catalyst solution was injected. Next, 2 mL of toluene was added very slowly, and then it was added to the autoclave by high-pressure nitrogen.

Initial washing and its time-2: None

Catalyst addition: After a lapse of 6 minutes, 8 minutes and 14 minutes from the start of the reaction, 2 mL of the catalyst solution was injected into the catalyst cylinder and then added to the autoclave by high-pressure nitrogen each. In addition, after a lapse of 20 minutes from the start of the reaction, 3 mL of the catalyst solution was injected into the catalyst cylinder and then added to the autoclave by high-pressure nitrogen. After a lapse of 15 minutes and 22 minutes from the start of the reaction, the catalyst cylinder was washed with 3 mL of toluene each, and the washing solution was added to the autoclave by high-pressure nitrogen each.

Reaction time-2: 37 Minutes

[Example I-14]

First, 22 mL of a catalyst solution (AL-36 concentration: about 1 mM) was prepared in the same manner as Example I-6, except for the following: the amount of AL-36 was changed to 11.7 mg (0.022 mmol), and the amount of the solution of $Ni(cod)_2$ in toluene, which was added to AL-36, was changed to 22 mL.

Next, a polymerization operation was carried out in the same manner as Example I-3, except for the following: the catalyst solution prepared above was used, and the polymerization condition was changed as follows. As a result, 1.16 g of a polymer was obtained.

Toluene-2: 94 mL

Comonomer and its addition amount-2: Vinylene carbonate (1.3 mL, 21 mmol) was added. Then, no comonomer was added.

TNOA addition amount-2: 0.1 mL (0.010 mmol)
Nitrogen pressure-2: 0 MPa
Ethylene pressure-2: 2.5 MPa
Initial catalyst-2: Catalyst solution 1 mL

Catalyst addition: After a lapse of 11 minutes from the start of the reaction, 1 mL of the catalyst solution was injected into the catalyst cylinder and then added to the autoclave by high-pressure nitrogen. After a lapse of 14 minutes from the start of the reaction, the catalyst cylinder was washed with 3 mL of toluene, and the washing solution was added to the autoclave by high-pressure nitrogen.

Reaction time-2: 30 Minutes

[Example I-15]

First, 20 mL of a catalyst solution (AL-52 concentration: about 1 mM) was prepared in the same manner as Example I-1, except for the following: the amount of $Ni(cod)_2$ was changed to 66.2 mg (0.24 mmol); the amount of toluene was changed to 24 mL; 10.8 mg (0.020 mmol) of AL-52 obtained in Synthesis Example I-4, was used instead of AL-29; and the amount of the solution of $Ni(cod)_2$ in toluene, which was added to AL-52, was changed to 20 mL.
Next, 1000 mL of toluene was put in a 2.4 L autoclave, and the temperature inside of the autoclave was increased to 90°C. Then, nitrogen was added to the autoclave so as to obtain an autoclave internal pressure of 0.5 MPa. Then, ethylene was added to the autoclave so as to obtain an autoclave internal pressure of 3.0 MPa. Then, 1.0 mL of the catalyst solution was injected into a catalyst cylinder. Next, 10 mL of toluene was added thereto very slowly and left to stand. The resulting solution was added to the autoclave by high-pressure nitrogen. This point of time was determined as reaction starting time. After a lapse of 4 minutes from the start of the reaction, the catalyst cylinder was washed with 10 mL of toluene, and the washing solution was added to the autoclave by high-pressure nitrogen. After a lapse of 5 minutes from the start of the reaction, 10 mL of a solution (0.2 M) of 1,2-butanediol in toluene was added to terminate the reaction, and the ethylene was depressurized. The temperature of the autoclave was returned to room temperature, and 1000 mL of acetone was added thereto. A solid thus precipitated was recovered by filtration, washed twice with 1000 mL of acetone, and dried under reduced pressure. A polymer thus obtained was 14.6 g.

[Example I-16]

First, 4 mL of a catalyst solution (AL-61 concentration: about 10 mM) was prepared in the same manner as Example I-1, except for the following: 15.4 mg (0.060 mmol) of $Ni(acac)_2$ was used instead of $Ni(cod)_2$; the amount of toluene was changed to 6 mL; 17.0 mg (0.040 mmol) of AL-61, which was obtained in Synthesis Example I-5, was used instead of AL-29; and the amount of the solution of $Ni(acac)_2$ in toluene, which was added to AL-61, was changed to 4 mL.
Next, a polymerization operation was carried out in the same manner as Example I-3, except for the following: the catalyst solution prepared above was used; the catalyst addition was carried out as described below; and the polymerization condition was changed as follows. As a result, 2.78 g of a polymer was obtained.

Toluene-2: 94 mL

Comonomer and its addition amount-2: MA (0.3 mL, 3.3 mmol) was added. Then, no comonomer was added.

TNOA addition amount-2: 1.0 mL (0.10 mmol)
Nitrogen pressure-2: 0.5 MPa
Ethylene pressure-2: 2.5 MPa
Initial catalyst-2: Catalyst solution 1 mL

Catalyst addition: After a lapse of 9 minutes from the start of the reaction, 1 mL of the catalyst solution was injected into the catalyst cylinder and then added to the autoclave by high-pressure nitrogen.
Initial washing and its time-2: After a lapse of 15 minutes from the start of the reaction, the catalyst cylinder was washed with 3 mL of toluene.

Reaction time: 36 Minutes

Reaction terminator: Instead of the solution of 1,2-butanediol in toluene, 0.5 mL of a solution (2 M) of deuterated acetic acid in toluene was added.

[Example I-17]

First, 4 mL of a catalyst solution (AL-62 concentration: about 10 mM) was prepared in the same manner as Example I-1, except for the following: 15.8 mg (0.060 mmol) of $Ni(acac)_2$ was used instead of $Ni(cod)_2$; the amount of toluene was changed to 6 mL; 20.9 mg (0.040 mmol) of AL-62, which was obtained in Synthesis Example I-6, was used instead of AL-29; and the amount of the solution of $Ni(acac)_2$ in toluene, which was added to AL-62, was changed to 4 mL.
Next, a polymerization operation was carried out in the same manner as Example I-3, except for the following: the catalyst solution prepared above was used, and the polymerization condition was changed as follows. As a result, 0.38 g of a polymer was obtained.

Toluene-2: 92 mL

Comonomer and its addition amount-2: MA (0.9 mL, 10 mmol) was added. Then, no comonomer was added.

TNOA addition amount-2: 1.5 mL (0.15 mmol)
Nitrogen pressure-2: 0.5 MPa
Ethylene pressure-2: 2.5 MPa

Initial washing and its time-2: After a lapse of 2 minutes from the start of the reaction, the catalyst cylinder was washed with 3 mL of toluene.

Reaction terminator: Instead of the solution of 1,2-butanediol in toluene, 1.5 mL of a solution (2 M) of deuterated acetic acid in toluene was added.

[Example I-18]

First, 4 mL of a catalyst solution (AL-68 concentration: about 10 mM) was prepared in the same manner as Example I-1, except for the following: 15.4 mg (0.060 mmol) of $Ni(acac)_2$ was used instead of $Ni(cod)_2$; the amount of toluene was changed to 6 mL; 16.7 mg (0.040 mmol) of AL-68, which was obtained in Synthesis Example I-7, was used instead of AL-29; and the amount of the solution of $Ni(acac)_2$ in toluene, which was added to AL-68, was changed to 4 mL.

Next, a polymerization operation was carried out in the same manner as Example I-3, except for the following: the catalyst solution prepared above was used, and the polymerization condition was changed as follows. As a result, 0.98 g of a polymer was obtained.

Toluene-2: 93 mL

Comonomer and its addition amount-2: MA (0.3 mL, 3.3 mmol) was added. Then, no comonomer was added.

TNOA addition amount-2: 1.0 mL (0.10 mmol)
Nitrogen pressure-2: 0.5 MPa
Ethylene pressure-2: 2.5 MPa
Initial catalyst-2: Catalyst solution 1 mL

Initial washing and its time-2: After a lapse of 2 minutes from the start of the reaction, the catalyst cylinder was washed with 3 mL of toluene.

Reaction terminator: Instead of the solution of 1,2-butanediol in toluene, 1.0 mL of a solution (2 M) of deuterated acetic acid in toluene was added.

[Example I-19]

First, 7 mL of a catalyst solution (AL-69 concentration: about 10 mM) was prepared in the same manner as Example I-1, except for the following: 22.8 mg (0.090 mmol) of $Ni(acac)_2$ was used instead of $Ni(cod)_2$; the amount of toluene was changed to 9 mL; 29.1 mg (0.070 mmol) of AL-69, which was obtained in Synthesis Example I-8, was used instead of AL-29; and the amount of the solution of $Ni(acac)_2$ in toluene, which was added to AL-69, was changed to 7 mL.

Next, a polymerization operation was carried out in the same manner as Example I-3, except for the following: the catalyst solution prepared above was used, and the polymerization condition was changed as follows. As a result, 2.36 g of a polymer was obtained.

Toluene-2: 93 mL

Comonomer and its addition amount-2: MA (0.3 mL, 3.3 mmol) was added. Then, no comonomer was added.

TNOA addition amount-2: 1.5 mL (0.15 mmol)
Nitrogen pressure-2: 0.5 MPa
Ethylene pressure-2: 2.5 MPa

Initial washing and its time-2: After a lapse of 2 minutes from the start of the reaction, the catalyst cylinder was washed with 3 mL of toluene.

Reaction time: 32 Minutes

[Example I-20]

First, 4 mL of a catalyst solution (AL-61 concentration: about 10 mM) was prepared in the same manner as Example I-1, except for the following: the amount of $Ni(cod)_2$ was changed to 16.7 mg (0.060 mmol); the amount of toluene was changed to 6 mL; 17.2 mg (0.040 mmol) of AL-61, which was obtained in Synthesis Example I-5, was used instead of AL-29; and the amount of the solution of $Ni(cod)_2$ in toluene, which was added to AL-61, was changed to 4 mL.

Next, 50 mL of toluene (hereinafter, it is referred to as "toluene-3") was put in a 0.2 L autoclave. The temperature inside of the autoclave was increased to 50°C. Then, 25 g of propylene was added. Next, 2 mL of the catalyst solution (hereinafter, it is referred to as "initial catalyst-3") was injected into the catalyst cylinder and then added to the autoclave by high-pressure nitrogen. This point of time was determined as reaction starting time. After a lapse of 2 minutes from the start of the reaction, the catalyst cylinder was washed with 3 mL of toluene, and the washing solution was added to the autoclave by high-pressure nitrogen (hereinafter, it is referred to as "initial washing and its time-3"). After a lapse of 60 minutes from the start of the reaction, 3 mL of a solution (0.2 M) of 1,2-butanediol in toluene was added to terminate the reaction, and the propylene was depressurized. The toluene solution was recovered and concentrated, thereby obtaining a yellow oily polymer. The obtained oily polymer was dissolved in 10 mL of heptane, and 100 mg of ISOLUTE (registered trademark) SCX-2 (manufactured by Biotage Japan Ltd.) was added thereto. The mixture thus obtained was stirred at 80°C for one hour. The SCX-2 was removed therefrom by filtration, and the filtrate was concentrated by an evaporator, thereby obtaining a colorless and transparent polymer. The polymer was vacuum-dried at 80°C for at least 3 hours, thereby obtaining 4.97 g of a polymer.

[Example I-21]

First, 4 mL of a catalyst solution (AL-68 concentration: about 10 mM) was prepared in the same manner as Example I-1, except for the following: the amount of $Ni(cod)_2$ was changed to 16.7 mg (0.060 mmol); the amount of toluene was changed to 6 mL; 16.3 mg (0.040 mmol) of AL-68, which was obtained in Synthesis Example I-7, was used instead of AL-29; and the amount of the solution of $Ni(cod)_2$ in toluene, which was added to AL-68, was changed to 4 mL.

Next, a polymerization operation was carried out in the same manner as Example I-20, except for the following: the catalyst solution prepared above was used, and the catalyst addition was carried out as described below. As a result, 3.23 g of a polymer was obtained.

Catalyst addition: After a lapse of 12 minutes from the start of the reaction, 1.2 mL of the catalyst solution was injected into the catalyst cylinder and then added to the autoclave by high-pressure nitrogen. After a lapse of 14 minutes from the start of the reaction, the catalyst cylinder was washed with 3 mL of toluene, and the washing solution was added to the autoclave by high-pressure nitrogen.

[Example I-22]

First, 7 mL of a catalyst solution (AL-68 concentration: about 10 mM) was prepared in the same manner as Example I-1, except for the following: the amount of $Ni(cod)_2$ was changed to 25.0 mg (0.090 mmol); the amount of toluene was changed to 9 mL; 28.7 mg (0.070 mmol) of AL-68, which was obtained in Synthesis Example I-7, was used instead of AL-29; and the amount of the solution of $Ni(cod)_2$ in toluene, which was added to AL-68, was changed to 7 mL.

Next, 43 mL of toluene was put in a 0.2 L autoclave. Then, 1.1 mL (4.9 mmol) of MU and 0.6 mL of a solution (0.1 M) of $Al(OiPr)_3$ in toluene were added through a reagent inlet. Then, 25 g of propylene was added. The temperature inside of the autoclave was increased to 50°C. Next, 3 mL of the catalyst solution was injected into the catalyst cylinder and then added to the autoclave by high-pressure nitrogen. This point of time was determined as reaction starting time. After a lapse of 2 minutes from the start of the reaction, the catalyst cylinder was washed with 3 mL of toluene, and the washing solution was added to the autoclave by high-pressure nitrogen. After a lapse of 20 minutes from the start of the reaction, 3 mL of the catalyst solution was injected into the catalyst cylinder and then added to the autoclave by high-pressure nitrogen. After a lapse of 22 minutes from the start of the reaction, the catalyst cylinder was washed with 3 mL of toluene, and the washing solution was added to the autoclave by high-pressure nitrogen. After a lapse of 60 minutes from the start of the reaction, 3 mL of a solution (0.2 M) of 1,2-butanediol in toluene was added to terminate the reaction, and the propylene was depressurized. The toluene solution was recovered and concentrated, thereby obtaining a yellow oily liquid. Then, 10 mL of heptane was added to the oily liquid, and 100 mg of ISOLUTE (registered trademark) SCX-2 (manufactured by Biotage Japan Ltd.) was added thereto. The mixture thus obtained was stirred at 80°C for one hour. The SCX-2 was removed therefrom by filtration, and the filtrate was concentrated by an evaporator, thereby obtaining a colorless and transparent liquid. The obtained liquid was heated to 120°C and vacuum-dried for 15 minutes, thereby obtaining a polymer. Next, the obtained polymer was heated to 150°C and vacuum-dried for 50 minutes, thereby obtaining 3.45 g of a polymer (residual

MU amount: 2.4 mol %).

[Example I-23]

First, 4 mL of a catalyst solution (AL-69 concentration: about 10 mM) was prepared in the same manner as Example I-1, except for the following: the amount of $Ni(cod)_2$ was changed to 16.7 mg (0.060 mmol); the amount of toluene was changed to 6 mL; 16.8 mg (0.040 mmol) of AL-69, which was obtained in Synthesis Example I-8, was used instead of AL-29; and the amount of the solution of $Ni(cod)_2$ in toluene, which was added to AL-69, was changed to 4 mL.
Next, a polymerization operation was carried out in the same manner as Example I-20, except for the following: the catalyst solution prepared above was used; the catalyst addition was carried out as described below; and the polymerization condition was changed as follows. As a result, 3.74 g of a polymer was obtained.

Initial catalyst-3: 1 mL

Initial washing and its time-3: After a lapse of 3 minutes from the start of the reaction, the catalyst cylinder was washed with 3 mL of toluene, and the washing solution was added to the autoclave by high-pressure nitrogen.
Catalyst addition: After a lapse of 7 minutes from the start of the reaction, 1.5 mL of the catalyst solution was injected into the catalyst cylinder and then added to the autoclave by high-pressure nitrogen. After a lapse of 8 minutes from the start of the reaction, the catalyst cylinder was washed with 3 mL of toluene, and the washing solution was added to the autoclave by high-pressure nitrogen.

[Comparative Example 1]

First, 92.6 mg (0.18 mmol) of tris(pentafluorophenyl)borane was weighed out, put in a flask, mixed with 6 mL of toluene and dissolved. Also, 13.0 mg (0.03 mmol) of AL-2al was weighed out, put in another flask and mixed with 5 mL of the solution of tris(pentafluorophenyl)borane in toluene. This solution was stirred at room temperature for 30 minutes, thereby preparing a catalyst solution (6 mM).
Next, 92 mL of toluene was put in a 0.2 L autoclave, and the temperature inside of the autoclave was increased to 90°C. Then, nitrogen was added to the autoclave so as to obtain an autoclave internal pressure of 0.5 MPa. Then, ethylene was added to the autoclave so as to obtain an autoclave internal pressure of 3.0 MPa. Then, 0.5 mL of the catalyst solution and 2.5 mL of toluene were added to a catalyst cylinder and then added to the autoclave by 3.3 MPa of nitrogen. This point of time was determined as reaction starting time. After a lapse of 5 minutes and 12 minutes from the start of the reaction, 1.0 mL and 2.5 mL of the catalyst solution were added, respectively. After a lapse of 16 minutes from the start of the reaction, the catalyst cylinder was washed with 3 mL of toluene, and the washing solution was added to the autoclave. After a lapse of 60 minutes from the start of the reaction, a solution (0.2 M) of 1,2-butanediol in toluene was added to terminate the reaction, and the ethylene was depressurized. The temperature of the autoclave was returned to room temperature, and acetone (100 mL) was added thereto. A solid thus precipitated was recovered by filtration, washed with acetone (100 mL × 2), and dried under reduced pressure. A polymer thus obtained was 0.57 g.

[Comparative Example 2]

A catalyst solution (10 mM) was prepared in the same manner as Comparative Example 1, except for the following: the amount of tris(pentafluorophenyl)borane was changed to 383.5 mg (0.75 mmol); the amount of toluene was changed to 15 mL; the amount of AL-2al was changed to 25.9 mg (0.06 mmol); and the amount of the solution of tris(pentafluorophenyl)borane in toluene was changed to 6 mL.
Next, 91 mL of toluene and 0.3 mL (2.1 mmol) of tBA were put in a 0.2 L autoclave. Also, 100 μL of a solution (0.1 M) of TNOA in toluene was added thereto, and the temperature inside of the autoclave was increased to 90°C.
Then, nitrogen was added to the autoclave so as to obtain an autoclave internal pressure of 0.5 MPa. Then, ethylene was added to the autoclave so as to obtain an autoclave internal pressure of 3.0 MPa. Then, 2.5 mL of the catalyst solution was added to a catalyst cylinder, and then it was added to the autoclave by 3.3 MPa of nitrogen. This point of time was determined as reaction starting time. After a lapse of 3 minutes from the start of the reaction, 2.5 mL of the catalyst solution was added. After a lapse of 6 minutes from the start of the reaction, the catalyst cylinder was washed with 3 mL of toluene, and the washing solution was added to the autoclave. After a lapse of 60 minutes from the start of the reaction, a solution (0.2 M) of 1,2-butanediol in toluene was added to terminate the reaction, and the ethylene was depressurized. The temperature of the autoclave was returned to room temperature, and acetone (100 mL) was added thereto. A solid thus precipitated was recovered by filtration, washed with acetone (100 mL × 2), and dried under reduced pressure. A polymer thus obtained was 0.016 g.

[Comparative Example 3]

First, 384.0 mg (0.75 mmol) of tris(pentafluorophenyl)borane was weighed out, put in a flask, mixed with 15 mL of toluene and dissolved. Also, 26.0 mg (0.06 mmol) of AL-2al was weighed out, put in another flask and mixed with 6 mL of the solution of tris(pentafluorophenyl)borane in toluene. This solution was stirred at room temperature for 30 minutes, thereby preparing a catalyst solution (10 mM).

Next, 50 mL of toluene and 25 g of propylene were put in a 0.2 L autoclave. The temperature inside of the autoclave was increased to 50°C. Next, 2.5 mL of the catalyst solution was injected into the catalyst cylinder and then added to the autoclave by high-pressure nitrogen. This point of time was determined as reaction starting time. After a lapse of 4 minutes from the start of the reaction, the catalyst cylinder was washed with 3 mL of toluene, and the washing solution was added to the autoclave by high-pressure nitrogen. After a lapse of 8 minutes from the start of the reaction, 2.5 mL of the catalyst solution was injected into the catalyst cylinder and then added to the autoclave by high-pressure nitrogen. After a lapse of 10 minutes from the start of the reaction, the catalyst cylinder was washed with 3 mL of toluene, and the washing solution was added to the autoclave by high-pressure nitrogen. After a lapse of 60 minutes from the start of the reaction, 3 mL of a solution (0.2 M) of 1,2-butanediol in toluene was added to terminate the reaction, and the propylene was depressurized. The temperature of the autoclave was returned to room temperature, and the toluene was removed therefrom by distillation, thereby obtaining an oily polypropylene. The obtained polypropylene was refined by silica gel column chromatography (developing solvent: hexane 100%) in air. An oily substance thus obtained was dried under reduced pressure, thereby obtaining 0.021 g of a polypropylene.

The polymerization conditions of Examples I-1 to I-19 are shown in Table 1, and the results thus obtained are shown in Table 2. The polymerization conditions of Examples I-20 to I-23 are shown in Table 3, and the results thus obtained are shown in Table 4. The polymerization conditions of Comparative Examples 1 to 3 are shown in Table 5, and the results thus obtained are shown in Table 6 or 7. In the following tables, "n.m." means "not measured" (i.e., a sufficient amount of sample for measurement was not obtained).

[Table 1]

Table 1

| Example | Ligand | | Transition metal compound | Catalyst composition or metal complex | Ethylene | Comonomer | | TNOA | Temperature | Time |
|---|---|---|---|---|---|---|---|---|---|---|
| | Type | mmol | mmol | | MPa | Type | mmol | mmol | °C | min |
| I-1 | AL-29 | 0.005 | 0.050 | AL-29/Ni(cod)$_2$ | 2.5 | - | - | - | 90 | 1 |
| I-2 | AL-29 | 0.092 | 0.920 | AL-29/Ni(cod)$_2$ | 2.5 | tBA | 20 | 0.10 | 90 | 52 |
| I-3 | AL-29 | 0.012 | 0.120 | AL-29/Ni(cod)$_2$ | 2.5 | tBA | 5.9 | 0.060 | 90 | 60 |
| I-4 | AL-29 | 0.002 | 0.020 | AL-29/Ni(cod)$_2$ | 0.8 | NB | 13 | - | 90 | 30 |
| I-5 | AL-29 | 0.008 | 0.080 | AL-29/Ni(cod)$_2$ | 2.5 | VC | 21 | 0.010 | 90 | 35 |
| I-6 | AL-36 | 0.001 | 0.010 | AL-36/Ni(cod)$_2$ | 2.5 | tBA | 2.1 | 0.010 | 90 | 60 |
| I-7 | AL-36 | 0.005 | 0.005 | AL-36/Ni(cod)$_2$ | 2.5 | tBA | 2.1 | 0.010 | 90 | 60 |
| I-8 | AL-36 | 0.006 | 0.006 | AL-36/Ni(acac)$_2$ | 2.5 | tBA | 2.1 | 0.020 | 90 | 60 |
| I-9 | AL-36 | 0.020 | 0.020 | AL-36/Ni(acac)$_2$ | 2.5 | tBA | 20 | 0.10 | 90 | 60 |
| I-10 | AL-36 | 0.010 | 0.010 | AL-36/NiMePy | 2.5 | tBA | 20 | 0.10 | 90 | 60 |
| I-11 | AL-36 | 0.005 | 0.050 | AL-36/Ni(cod)$_2$ | 2.5 | tBA | 8.3 | 0.025 | 90 | 60 |
| I-12 | AL-36 | 0.010 | 0.100 | AL-36/Ni(cod)$_2$ | 2.5 | MA | 3.3 | 0.10 | 90 | 60 |
| I-13 | AL-36 | 0.010 | 0.100 | AL-36/Ni(cod)$_2$ | 0.8 | NB | 14 | - | 90 | 37 |
| I-14 | AL-36 | 0.002 | 0.020 | AL-36/Ni(cod)$_2$ | 2.5 | VC | 21 | 0.010 | 90 | 30 |
| I-15 | AL-52 | 0.001 | 0.010 | AL-52/Ni(cod)$_2$ | 2.5 | - | - | - | 90 | 5 |
| I-16 | AL-61 | 0.020 | 0.020 | AL-61/Ni(acac)$_2$ | 2.5 | MA | 3.3 | 0.10 | 90 | 36 |
| I-17 | AL-62 | 0.030 | 0.030 | AL-62/Ni(acac)$_2$ | 2.5 | MA | 10 | 0.15 | 90 | 60 |
| I-18 | AL-68 | 0.010 | 0.010 | AL-68/Ni(acac)$_2$ | 2.5 | MA | 3.3 | 0.10 | 90 | 60 |
| I-19 | AL-69 | 0.030 | 0.030 | AL-69/Ni(acac)$_2$ | 2.5 | MA | 3.3 | 0.15 | 90 | 32 |

[Table 2]

Table 2

| Example | Ligand | Polymer yield | Activity | Mw | Mw/Mn | Methyl branching | Comonomer content |
|---|---|---|---|---|---|---|---|
| | | g | kg/mol/h | $\times 10^3$ | | Number of methyl branches per 1000 carbon atoms | mol % |
| I-1 | AL-29 | 31.6 | 379200 | 103 | 2.6 | 2.2 | - |
| I-2 | AL-29 | 28.7 | 360 | 188 | 2.0 | 0.7 | 1.0 |
| I-3 | AL-29 | 0.70 | 58 | 103 | 3.2 | 0.5 | 3.1 |
| I-4 | AL-29 | 0.46 | 460 | 113 | 1.9 | 0.9 | 4.4 |
| I-5 | AL-29 | 0.80 | 170 | 173 | 2.1 | 0.6 | 2.9 |
| I-6 | AL-36 | 1.52 | 1520 | 74 | 2.3 | 0.7 | 0.8 |
| I-7 | AL-36 | 1.80 | 360 | 63 | 2.1 | 0.8 | 0.7 |
| I-8 | AL-36 | 2.10 | 350 | 65 | 1.8 | 0.7 | 0.7 |
| I-9 | AL-36 | 6.62 | 330 | 73 | 1.8 | 0.8 | 0.7 |
| I-10 | AL-36 | 12.3 | 1230 | 68 | 1.9 | 0.8 | 0.8 |
| I-11 | AL-36 | 1.16 | 230 | 112 | 4.6 | 0.6 | 3.0 |
| I-12 | AL-36 | 0.54 | 54 | 24 | 2.4 | 0.8 | 2.2 |
| I-13 | AL-36 | 1.57 | 250 | 58 | 2.0 | 0.5 | 8.4 |
| I-14 | AL-36 | 1.80 | 1800 | 71 | 1.9 | 0.7 | 1.4 |
| I-15 | AL-52 | 14.6 | 170000 | 913 | 4.3 | 0.6 | - |
| I-16 | AL-61 | 2.78 | 230 | 4.1 | 1.8 | 1.5 | 1.2 |
| I-17 | AL-62 | 0.38 | 13 | 18 | 4.7 | 1.5 | 4.0 |
| I-18 | AL-68 | 0.98 | 95 | 3.5 | 1.8 | 0.4 | 1.2 |
| 1-19 | AL-69 | 2.36 | 150 | 5.1 | 1.9 | 0.1 | 0.9 |

[Table 3]

Table 3

| Example | Ligand | | Transition metal compound | Catalyst composition or metal complex | Propylene | Comonomer | | Temperature | Time |
|---|---|---|---|---|---|---|---|---|---|
| | Type | mmol | mmol | | g | Type | mmol | °C | min |
| I-20 | AL-61 | 0.020 | 0.020 | AL-61/Ni(cod)$_2$ | 25 | - | - | 50 | 60 |
| I-21 | AL-68 | 0.032 | 0.032 | AL-68/Ni(cod)$_2$ | 25 | - | - | 50 | 60 |
| I-22 | AL-68 | 0.060 | 0.060 | AL-68/Ni(cod)$_2$ | 25 | MU | 4.9 | 50 | 60 |
| I-23 | AL-69 | 0.025 | 0.025 | AL-69/Ni(cod)$_2$ | 25 | - | - | 50 | 60 |

[Table 4]

Table 4

| Example | Ligand | Polymer vield | Activity | Mw | Mw/Mn | Comonomer content | Regularity | | |
|---|---|---|---|---|---|---|---|---|---|
| | | g | kg/mol/h | $\times 10^3$ | | mol % | mm | mr | rr |
| I-20 | AL-61 | 4.97 | 250 | 1.1 | 1.5 | - | 36 | 39 | 25 |
| I-21 | AL-68 | 3.23 | 100 | 1.6 | 1.7 | - | 40 | 39 | 21 |
| I-22 | AL-68 | 3.45 | 57 | 1.8 | 1.9 | 2.9 | 41 | 39 | 20 |
| I-23 | AL-69 | 3.74 | 150 | 2.1 | 1.7 | - | 35 | 42 | 23 |

[Table 5]

Table 5

| Comparative Example | Metal complex | | $B(C_6F_5)_3$ | Ethylene | Propylene | Comonomer | | Temperature | Time |
|---|---|---|---|---|---|---|---|---|---|
| | Type | mmol | mmol | MPa | g | Type | mmol | min | min |
| 1 | AL-2al | 0.024 | 0.12 | 2.5 | - | - | - | 90 | 60 |
| 2 | AL-2al | 0.05 | 0.25 | 2.5 | - | tBA | 2.1 | 90 | 60 |
| 3 | AL-2al | 0.05 | 0.25 | - | 25 | - | - | 50 | 60 |

[Table 6]

| Type 6 | | | | | | |
|---|---|---|---|---|---|---|
| Comparative Example | Metal complex | Polymer yield | Activity | Mw | Mw/Mn | Comonomer content |
| | | g | kg/mol/h | $\times 10^3$ | | mol % |
| 1 | AL-2al | 0.57 | 24 | 53 | 8.8 | - |
| 2 | AL-2al | 0.016 | 0.3 | n.m. | n.m. | n.m. |

[Table 7]

Table 7

| Comparative Example | Metal complex | Polymer yield | Activity | Mw | Mw/Mn | Regularity | | |
|---|---|---|---|---|---|---|---|---|
| | | g | kg/mol/h | $\times 10^3$ | | mm | mr | rr |
| 3 | AL-2al | 0.021 | 0.4 | n.m. | n.m. | n.m. | n.m. | n.m. |

A comparison between the examples of the first embodiment of the present invention and the comparative examples, revealed the following: the novel compound configured to be used as the ligand of the first embodiment of the present invention, the metal complex, olefin polymerization catalyst composition and olefin polymerization catalyst using the novel compound, and the olefin-based polymer production method using the catalyst, can be used for polymerization or copolymerization of olefins while achieving improved catalytic performance such as activity and molecular weight, and they can be used for, especially, copolymerization of an acyclic olefin and at least one kind of monomer selected from the group consisting of a polar group-containing monomer and a cyclic olefin.

<Example II series: Second embodiment of the present invention>

(Synthesis Example II-1: Synthesis of AL-39)

(1) Synthesis of 2,2,6,6-tetramethylbenzo[1,2-d:5,4-d']bis([1,3]dioxole)

Based on the descriptions in Bioorg. Med. Chem. Lett. 2014, 24, 2379-2382, a compound represented by the following chemical formula was synthesized.

[Chem. 56]

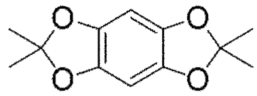

(2) Synthesis of bis(2,2,6,6-tetramethylbenzo[1,2-d:5,4-d']bis([1,3]dioxole)-4-yl)chlorophosphine

First, 2,2,6,6-tetramethylbenzo[1,2-d:5,4-d']bis([1,3]dioxole) (5 g, 22.5 mmol, 1 eq) was dissolved in 50 mL of tetrahydrofuran. A solution thus produced was cooled to 0°C; n-BuLi (24.8 mmol, 1.1 eq) was slowly added thereto; and the mixture was stirred at 20°C for 2.5 hours, thereby obtaining a yellow solution. The solution was cooled to -78°C, and $PCl_3$ (1.39 g, 10.1 mmol, 0.45 eq) was added thereto at once. After the temperature of the mixture was increased to 20°C, the mixture was stirred for 1.5 hours, thereby obtaining a yellow suspension. The suspension was dried, thereby obtaining 5.72 g of a mixture containing a yellow viscous target product. The obtained mixture was used in the subsequent synthesis, without refinement. $^{31}P\{^1H\}$ NMR (162 MHz, $CDCl_3$) δ: 46.3 (integral ratio: 100%)

[Chem. 57]

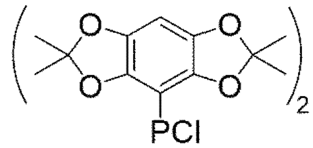

(3) Synthesis of bis(2,2,6,6-tetramethylbenzo[1,2-d:5,4-d']bis([1,3]dioxole)-4-yl)phosphine

First, bis(2,2,6,6-tetramethylbenzo[1,2-d:5,4-d']bis([1,3]dioxole)-4-yl)chlorophosphine (5.72 g, 11.2 mmol, 1 eq) was dissolved in 50 mL of tetrahydrofuran. A solution thus produced was cooled to 0°C; lithium aluminum hydride (0.64 g, 16.9 mmol, 1.5 eq) was added thereto; and the mixture was stirred at 20°C for 12 hours, thereby obtaining a colorless suspension. The suspension was cooled to 0°C. Next, 0.6 mL of water, 0.6 mL of a 10% sodium hydroxide aqueous solution, and 1.8 mL of water were added thereto in this order. The mixture thus produced was stirred at room temperature for 30 minutes, and the reaction was terminated. The mixture was filtered, and the filtrate was dried by evaporation, thereby obtaining a colorless solid. Then, 30 mL of water was added to the obtained solid. A generated product was extracted three times with dichloromethane (30 mL). Organic layers were collected and dried with sodium sulfate. Then, a solid was removed therefrom by filtration, and the filtrate was concentrated, thereby obtaining a yellow crude product. The crude product was refined by silica gel chromatography (the petroleum ether/ethyl acetate ratio of the developing solvent was 20/1) and then washed with 10 mL of hexane, thereby obtaining 3.1 g (6.5 mmol, 58%) of a target compound in the form of a colorless solid.

$^1H$ NMR (400 MHz, $CDCl_3$) δ: 6.26 (s, 2H), 5.15 (d, J = 235 Hz, 1H), 1.57 (s, 24H)
$^{31}P\{^1H\}$ NMR (162 MHz, $CDCl_3$) δ: -126.8 (s)

[Chem. 58]

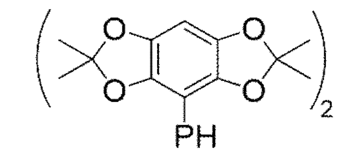

(4) Synthesis of AL-39

First, 300 mg (0.63 mmol) of the bis(2,2,6,6-tetramethylbenzo[1,2-d:5,4-d']bis([1,3]dioxole)-4-yl)phosphine was weighed out and put in a Schlenk flask. Next, 8 mL of tetrahydrofuran was added thereto. After a solution thus produced was cooled to 0°C, 0.44 mL (0.69 mmol) of n-BuLi was slowly added thereto in a dropwise manner. After the dropwise addition was completed, the mixture was stirred at room temperature for 1 hour and 10 minutes. Then, the mixture was cooled to 0°C, and 119 mg (0.63 mmol) of $\alpha$-(trifluoromethyl)styrene oxide dissolved in 2.1 mL of tetrahydrofuran, was slowly added thereto. After the mixture was stirred at room temperature for 3 hours, it was cooled to 0°C, and 0.76 mL (0.76 mmol) of a solution of hydrogen chloride in diethyl ether (hereinafter, it may be referred to as "hydrochloric ether solution") was slowly added thereto in a dropwise manner. After the mixture was stirred at 0°C for one hour, the solvent was removed therefrom by distillation. A solid thus obtained was refined by silica gel column chromatography (the hexane/tetrahydrofuran/triethylamine ratio of the developing solvent was changed from 100/5/1 to 100/10/1) in air. After the refinement, 157 mg of a solid was obtained by recrystallization with 1 mL of tetrahydrofuran and 10 mL of hexane. The purity of AL-39, which was determined by $^{31}$P NMR, was 99% or more.

$^{1}$H NMR (400 MHz, $CDCl_3$) $\delta$: 7.56 (d, J = 7.4 Hz, 2H), 7.34-7.31 (m, 3H), 6.27 (s, 1H), 6.24 (s, 1H), 4.66 (s, 1H), 4.02 (dd, J = 15.4, 4.7 Hz, 1H), 2.85 (d, J = 15.6 Hz, 1H), 1.59 (s, 6H), 1.58 (s, 6H), 1.51 (s, 6H), 1.44 (s, 6H)
$^{19}$F NMR (376 MHz, $CDCl_3$) $\delta$: -80.7 (br)
$^{31}$P{$^{1}$H} NMR (162 MHz, $CDCl_3$) $\delta$: -61.2 (q, J = 5.2 Hz)

[Chem. 59]

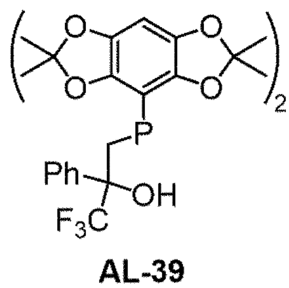

**AL-39**

(Synthesis Example II-2: Synthesis of AL-40)

First, 400 mg (0.84 mmol) of bis (2, 2, 6, 6-tetramethylbenzo[1,2-d:5,4-d']bis([1,3]dioxole)-4-yl)phosphine was weighed out and put in a Schlenk flask. Next, 11 mL of tetrahydrofuran was added thereto. After a solution thus produced was cooled to -78°C, 0.58 mL (0.92 mmol) of n-BuLi was slowly added thereto in a dropwise manner. After the dropwise addition was completed, the mixture was stirred at -78°C for one hour. Then, the temperature of the mixture was increased to 0°C, and 92 $\mu$L (0.84 mmol) of 2,2-bis(trifluoromethyl)oxirane dissolved in 2.8 mL of tetrahydrofuran, was slowly added thereto. After the mixture was stirred at room temperature for 1 hour, the solvent was removed therefrom by distillation. The residue was mixed with 14 mL of tetrahydrofuran and then cooled to 0°C. Next, 1.0 mL (1.0 mmol) of a hydrochloric ether solution was slowly added thereto in a dropwise manner. After the mixture was stirred at 0°C for one hour, it was washed by adding 8 mL of water in air, and an organic layer was separated. An operation to add 4 mL of diethyl ether to an aqueous layer and extract an organic layer was repeated three times. The extracted organic layers were collected and dried with sodium sulfate. Then, the sodium sulfate was removed therefrom by filtration. After the filtrate was dried by evaporation, a solid thus obtained was refined by silica gel column chromatography (the hexane/acetone ratio of the developing solvent was 10/1) in air, thereby obtaining 242 mg of a solid. The purity of AL-40, which was determined by $^{31}$P NMR, was 99% or more.

$^1H$ NMR (400 MHz, $CDCl_3$) δ: 6.30 (s, 2H), 4.76 (d, J = 3.4 Hz, 1H), 3.25 (brs, 2H), 1.58 (s, 12H), 1.55 (s, 12H)
$^{19}F$ NMR (376 MHz, $CDCl_3$) δ: -77.0 (d, J = 22.0 Hz)
$^{31}P\{^1H\}$ NMR (162 MHz, $CDCl_3$) δ: -62.1 (septet, J = 22.9 Hz)

[Chem. 60]

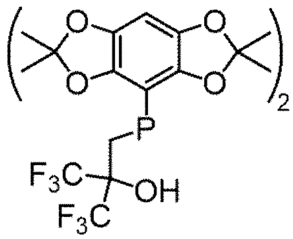

**AL-40**

(Synthesis Example II-3: Synthesis of AL-58)

(1) Synthesis of tert-butyl(2,2,6,6-tetramethylbenzo[1,2-d:5,4-d']bis([1,3]dioxole)-4-yl)phosphine borane

A solution (20 mL) of 2,2,6,6-tetramethylbenzo[1,2-d:5,4-d']bis([1,3]dioxole) (2 g, 9 mmol, 1 eq) in tetrahydrofuran was cooled to 0°C, and n-BuLi (2.5 M, 4.0 mL, 1.1 eq) was added thereto. The obtained mixture was stirred at 20°C for 2 hours. The mixture was added to a solution (10 mL) of tert-butyldichlorophosphine (1.72 g, 10.8 mmol, 1.2 eq) in tetrahydrofuran, which was cooled to -78°C. The mixture was stirred at 20°C for 12 hours, thereby obtaining a yellow suspension. The suspension was cooled to 0°C, and dimethyl sulfide borane (10 M, 2.7 mL, 3 eq) was added thereto. The obtained mixture was stirred at 20°C for 12 hours, thereby obtaining a light yellow solution. The solution was cooled to 0°C, and lithium aluminum hydride(2.5 M, 10.8 mL, 27.0 mmol) was added thereto. The obtained mixture was stirred at 20°C for 12 hours, thereby obtaining a yellow solution. The reaction mixture was poured into 100 mL of water and stirred well. Then, an organic layer was extracted with dichloromethane (50 mL × 2). The extracted organic layers were collected, washed with saturated brine (50 mL), and dried with sodium sulfate. Then, the sodium sulfate was removed therefrom by filtration, and the filtrate was concentrated under reduced pressure, thereby obtaining a crude product. The synthesis of the crude product was repeated several times, thereby obtaining 3.73 g of a crude product. Using 15 mL of petroleum ether, the crude product was pulverized and washed at 20°C for 30 minutes, thereby obtaining 3.26 g (10.1 mmol) of a target product in the form of a white solid.
$^1H$ NMR (400 MHz, $CDCl_3$) δ: 6.42 (s, 1H), 5.32 (dq, J = 375, 7.2 Hz, 1H), 1.65 (s, 6H), 1.64 (s, 6H), 1.25 (d, J = 15.5 Hz, 9H)
$^{31}P$ NMR (162 MHz, $CDCl_3$) δ: 3.6 (br).

[Chem. 61]

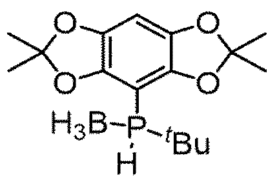

(2) Synthesis of AL-58

First, 69 mg (0.20 mmol) of tetrabutylammonium hydrogen sulfate was mixed with 10.0 g of a 5% sodium hypochlorite aqueous solution (13.0 mmol). The mixture was cooled to 0°C and mixed with 1.09 g (6.49 mmol) of methyl 2-(trifluoromethyl)acrylate. The mixture was stirred at 0°C for 3 hours. From the mixture, a generated product was extracted three times with 5 mL of diethyl ether, and organic layers were collected and washed with water. From the washing water, a generated product was extracted twice with 3 mL of diethyl ether. To the emulsified aqueous layer, 5 mL of diethyl ether and 5 mL of water were added, and they were cooled overnight at -15°C. After the organic layers were all dried with sodium sulfate, the dried layers were filtered, and the filtrate was concentrated at room temperature under a reduced pressure of from 74 mmHg to 17 mmHg. Next, 8 mL of diethyl ether was added thereto. In addition, the mixture was dried with sodium sulfate and filtered, and the filtrate was concentrated under a slightly reduced pressure, thereby obtaining 391

mg of an epoxide in the form of a colorless liquid.

First, 300 mg (0.925 mmol) of the tert-butyl(2,2,6,6-tetramethylbenzo[1,2-d:5,4-d']bis([1,3]dioxole)-4-yl)phosphine borane synthesized in the above (1) was weighed out and put in a Schlenk flask. Next, 8 mL of tetrahydrofuran was added thereto. After a solution thus produced was cooled to -78°C, 1.88 mL (1.13 mmol) of a solution of 0.6 M potassium hexamethyldisilazide in toluene was slowly added thereto in a dropwise manner. After the dropwise addition was completed, the temperature of the mixture was increased to 0°C, and a mixture of 1.6 mL of THF and 155 mg of the epoxide synthesized above, which was in the form of a colorless liquid, was slowly added thereto. After the mixture was stirred at room temperature for 3 hours, it was cooled to 0°C. Then, 0.87 M hydrochloric acid (3.5 mmol) was slowly added thereto in a dropwise manner. From the mixture, a generated product was extracted three times with 5 mL of diethyl ether, and organic layers were collected and washed with 5 mL of water. The organic layers were dried with sodium sulfate, and the sodium sulfate was removed by filtration with absorbent cotton. After the filtrate was dried by evaporation, a solid thus obtained was refined by silica gel column chromatography (the hexane/dichloromethane ratio of the developing solvent was changed from 1/2 to 1/3) in air, thereby obtaining 216 mg of a white solid.

Next, 201 mg (0.407 mmol) of the obtained solid and 55 mg (0.49 mmol) of 1,4-diazabicyclo[2.2.2]octane were dissolved in 3.5 mL of toluene. After the temperature of a solution thus obtained was increased to 60°C, it was stirred for one and a half hours. Then, the solution was refined by silica gel column chromatography (the hexane/acetone ratio of the developing solvent was 3/1) in nitrogen, thereby obtaining 180 mg of a solid. A diastereomer ratio determined by $^1$H NMR was 1:0.3.

$^1$H NMR (400 MHz, $CDCl_3$) δ: 6.33 (s, 1H), 3.92 (s, 3H), 3.76 (dd, J = 14.8, 4.4 Hz, 1H), 3.44 (s, 1H), 2.05 (d, J = 14.6 Hz, 1H), 1.66 (s, 6H), 1.59 (s, 6H), 1.09 (d, J = 13.2 Hz, 9H)
$^{19}$F NMR (376 MHz, $CDCl_3$) δ: -79.1 (br)
$^{31}$P{$^1$H} NMR (162 MHz, $CDCl_3$) δ: -18.2 (q, J = 5.5 Hz) Diastereomer
$^1$H NMR (400 MHz, $CDCl_3$) δ: 6.35 (s, 1H), 4.07 (br, 1H), 3.73 (s, 3H), 3.43 (dd, J = 14.8, 4.0 Hz, 1H), 2.00 (dd, J = 14.8, 1.4 Hz, 1H), 1.65 (s, 6H), 1.62 (s, 6H), 1.11 (d, J = 13.7 Hz, 9H) $^{19}$F NMR (376 MHz, $CDCl_3$) δ: -78.8 (s)
$^{31}$P{$^1$H} NMR (162 MHz, $CDCl_3$) δ: -21.7 (s)

[Chem. 62]

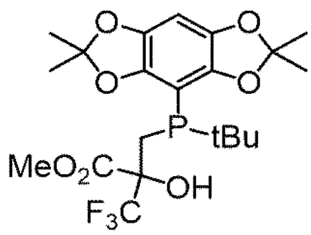

**AL-58**

(Synthesis Example II-4: Synthesis of AL-59)

First, 296 mg (0.913 mmol) of tert-butyl(2,2,6,6-tetramethylbenzo[1,2-d:5,4-d']bis([1,3]dioxole)-4-yl)phosphine borane, which was synthesized in the same manner as (1) in Synthesis Example II-3, was weighed out and put in a Schlenk flask. Next, 10 mL of tetrahydrofuran was added thereto. After a solution thus produced was cooled to -78°C, 2.0 mL (1.2 mmol) of a solution of 0.6 M potassium hexamethyldisilazide in toluene was slowly added thereto in a dropwise manner. After the dropwise addition was completed, the temperature of the mixture was increased to 0°C, and then the mixture was stirred for one hour. To the mixture, 0.133 mL (1.22 mmol) of 2,2-bis(trifluoromethyl)oxirane was slowly added. After the temperature of the mixture was increased to room temperature, the mixture was stirred for 2 hours and then cooled to 0°C. Next, 4 mL (3.48 mmol) of 0.87 M hydrochloric acid was slowly added thereto in a dropwise manner. From the mixture, a generated product was extracted three times with 5 mL of diethyl ether, and organic layers were collected and washed with 5 mL of water. The collected organic layers were dried with sodium sulfate, and the sodium sulfate was removed by filtration with absorbent cotton. After the filtrate was dried by evaporation, a solid thus obtained was refined by silica gel column chromatography (the hexane/dichloromethane ratio of the developing solvent was 2/1) in air, thereby obtaining 283 mg of a white solid.

Next, 200 mg (0.397 mmol) of the obtained solid was mixed with 54 mg (0.48 mmol) of 1,4-diazabicyclo[2.2.2] octane dissolved in 3.5 mL of toluene. After the temperature of the mixture was increased to 60°C, the mixture was stirred for one and a half hours. Then, a solution thus obtained was refined by silica gel column chromatography (the hexane/acetone ratio of the developing solvent was 5/1) in nitrogen, thereby obtaining 234 mg of a solid. The purity of

AL-59, which was determined by $^{31}P\{1H\}$ NMR, was 100%.

$^{1}H$ NMR (400 MHz, $CDCl_3$) δ: 6.38 (s, 1H), 4.26 (d, J = 8.7 Hz, 1H), 3.63 (dd, J = 16.0, 3.2 Hz, 1H), 2.03 (d, J = 16.0 Hz, 1H), 1.65 (s, 6H), 1.61 (s, 6H), 1.13 (d, J = 14.2 Hz, 9H)
$^{19}F$ NMR (376 MHz, $CDCl_3$) δ: -76.7 (dq, J = 10.9, 10.9 Hz), -77.7 (dq, J = 10.9, 10.9 Hz)
$^{31}P\{^{1}H\}$ NMR (162 MHz, $CDCl_3$) δ: -30.2 (m)

[Chem. 63]

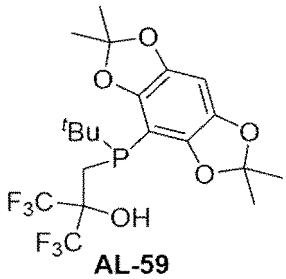

**AL-59**

(Synthesis Example II-5: Synthesis of AL-63)

(1) Synthesis of 1,2,4,5-tetrahydroxybenzene

Sodium dithionite (37.28 g, 214.14 mmol, 46.60 mL, 2 eq) and hydrochloric acid (12 M, 49.07 mL, 5.5 eq) were added to a solution of 2,5-dihydroxy-1,4-benzoquinone (15 g, 107.7 mmol, 1 eq) in 200 mL of water. A solution thus obtained was stirred at 20°C for 30 minutes, thereby obtaining a white suspension. This suspension was filtered, and 200 mL of ethyl acetate was added twice to the filtrate, thereby obtaining a brown solution. The obtained organic layer was washed twice with 200 mL of water. Sodium sulfate was added thereto to dry the organic layer. Then, the solid was removed therefrom by filtration, and the filtrate was concentrated, thereby obtaining 14 g of a brown residual solid. The obtained compound was used in the subsequent synthesis, without refinement.
$^{1}H$ NMR (500 MHz, dimethylsulfoxide-$d_6$) δ: 7.93 (brs, 4H), 6.20 (s, 2H)

[Chem. 64]

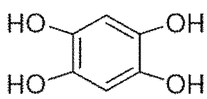

(2) Synthesis of dispiro[cyclopentane-1,2'-benzo[1,2-d:4,5-d']bis([1,3]dioxole)-6',1"-cyclopentane]

First, 1,2,4,5-tetrahydroxybenzene (8 g, 56 mmol, 1 eq) was dissolved in 80 mL of dichloromethane. To a solution thus produced, cyclopentanone (18.94 g, 225.2 mmol, 19.9 mL, 4 eq) and dichlorodimethylsilane (14.53 g, 112.6 mmol, 13.6 mL, 2 eq) were added. The mixture was stirred at 20°C for 12 hours, thereby obtaining a brown solution. The solution was concentrated, mixed with 10 mL of heptane, and then stirred for 3 minutes. Then, a solution thus produced was filtered, and 1.5 mL of acetone was added to the filtrate. The mixture was refluxed, cooled to -10°C and then recrystallized, thereby obtaining a black solid crude product. The solid was refined by silica gel column chromatography (the petroleum ether/dichloromethane ratio of the developing solvent was 10/1), thereby obtaining a white solid (5 g, 18 mmol).
$^{1}H$ NMR (400 MHz, $CDCl_3$) δ: 6.34 (s, 2H), 2.09-2.05 (m, 8H), 1.83-1.79 (m, 8H)

[Chem. 65]

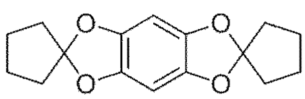

(3) Synthesis of bis(dispiro[cyclopentane-1,2'-benzo[1,2-d:4,5-d']bis([1,3]dioxole)-6',1"-cyclopentane]-4'-yl)phosphine

First, dispiro[cyclopentane-1,2'-benzo[1,2-d:4,5-d']bis([1,3]dioxole)-6[1],1"-cyclopentane] (1 g, 3.7 mmol, 1 eq) was dissolved in 15 mL of tetrahydrofuran. A solution thus produced was cooled to 0°C; n-BuLi (2.5 M, 1.60 mL, 4.0 mmol, 1.1 eq) was slowly added thereto; and the mixture was stirred at 20°C for 2.5 hours, thereby obtaining a yellow solution. The solution was cooled to -78°C, and $PCl_3$ (225 mg, 1.64 mmol, 143 μL, 0.45 eq) was added thereto. After the temperature of the mixture was increased to 20°C, the mixture was stirred for 1.5 hours, thereby obtaining a yellow suspension. The yellow suspension was dried by evaporation, thereby obtaining 1.12 g of a yellow viscous compound.

The obtained yellow viscous compound was dissolved in 15 mL of tetrahydrofuran. A solution thus obtained was cooled to 0°C, and lithium aluminum hydride (2.5 M, 1.1 mL, 2.8 mmol) was slowly added thereto. The mixture was stirred at 20°C for 12 hours, thereby obtaining a brown suspension. The suspension was cooled to 0°C. Next, 0.6 mL of water, 0.6 mL of a 10% sodium hydroxide aqueous solution, and 1.8 mL of water were added thereto in this order. The mixture thus produced was stirred at room temperature for 30 minutes. The mixture was filtered, and the filtrate was dried by evaporation, thereby obtaining a white solid. Then, 30 mL of water was added to the white solid. An organic substance thus produced was extracted with dichloromethane (30 mL × 3). Organic layers were collected and dried with sodium sulfate. Then, the solid was removed therefrom by filtration, and the filtrate was concentrated, thereby obtaining a crude product in the form of a yellow solid. The crude product was refined by silica gel chromatography (the petroleum ether/ethyl acetate ratio of the developing solvent was 20/1) and then washed with 10 mL of hexane, thereby obtaining 0.16 g (0.28 mmol) of a target compound in the form of a white solid.

$^1H$ NMR (400 MHz, $CDCl_3$) δ: 6.28 (s, 2H), 5.19 (d, J = 234 Hz, 1H), 1.99 (br, 16H), 1.76 (br, 16H)
$^{31}P\{^1H\}$ NMR (162 MHz, $CDCl_3$) δ: -125.2 (s)

[Chem. 66]

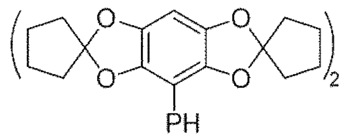

(4) Synthesis of AL-63

First, 300 mg (0.52 mmol) of the bis(dispiro[cyclopentane-1,2'-benzo[1,2-d:4,5-d']bis([1,3]dioxole)-6',1"-cyclopentane]-4'-yl)phosphine synthesized in the above (3) was weighed out and put in a Schlenk flask. Next, 6.8 mL of tetrahydrofuran was added thereto. After a solution thus produced was cooled to - 78°C, 0.38 mL (0.57 mmol) of n-BuLi was slowly added thereto in a dropwise manner. After the dropwise addition was completed, the mixture was stirred at -78°C for 1 hour and 20 minutes. Then, the temperature of the mixture was increased to 0°C, and 57 μL (0.52 mmol) of 2,2-bis(trifluoromethyl)oxirane dissolved in 1.3 mL of tetrahydrofuran, was slowly added thereto. The inside of a container in which the 2,2-bis(trifluoromethyl)oxirane was contained, was washed twice with 0.2 mL of tetrahydrofuran, and the washing solution was also added to the Schlenk flask. The mixture was stirred at room temperature for 2 hours and 40 minutes. Then, the solvent was removed from the mixture by distillation. After 8 mL of tetrahydrofuran was added to the residue, the residue was cooled to 0°C, and 0.62 mL (0.62 mmol) of a hydrochloric ether solution was slowly added thereto in a dropwise manner. After the mixture was stirred at 0°C for 15 minutes, it was washed by adding 5 mL of water in air, and an organic layer was separated. Next, operations described below were all carried out in air. First, an operation to add 3 mL of diethyl ether to an aqueous layer and extract an organic layer was repeated three times. The extracted organic layers were collected and dried with sodium sulfate. Then, the sodium sulfate was removed therefrom by filtration. After the filtrate was dried by evaporation, a solid thus obtained was refined by silica gel column chromatography (the hexane/acetone ratio of the developing solvent was 10/1), thereby obtaining 120 mg of a solid. The purity of AL-63, which was defined by $^{31}P$ NMR, was 97%.

$^1H$ NMR (400 MHz, $CDCl_3$) δ: 6.32 (s, 2H), 4.67 (s, 1H), 3.25 (s, 2H), 2.01-1.92 (m, 16H), 1.77-1.73 (m, 16H)
$^{19}F$ NMR (376 MHz, $CDCl_3$) δ: -76.9 (d, J = 22.2 Hz)
$^{31}P\{^1H\}$ NMR (162 MHz, $CDCl_3$) δ: -62.2 (septet, J = 22.0 Hz)

[Chem. 67]

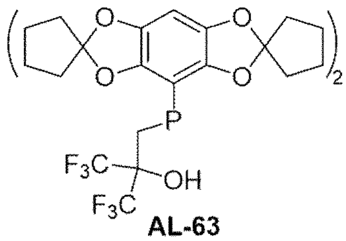

**AL-63**

(Synthesis Example II-6: Synthesis of AL-64)

(1) Synthesis of 2,3,7,8-tetrahydrobenzo[1,2-b:4,5-b']bis([1,4]dioxin

First, 1,2,4,5-tetrahydroxybenzene (8 g, 56 mmol, 1 eq) and 1,2-dibromoethane (42.30 g, 225.2 mmol, 17.0 mL, 4 eq) were dissolved in 500 mL of dimethylformamide. To a solution thus produced, potassium carbonate (31.12 g, 225.2 mmol, 4 eq) was added. The mixture was stirred at 90°C for 12 hours, thereby obtaining a brown suspension. After the end of a reaction was confirmed by $^1$H-NMR, the reaction solution was mixed with 500 mL of water and then filtered, thereby obtaining a crude product. The crude product was dissolved in 200 mL of methanol; 450 mL of toluene was added thereto; and then the mixture was dried, thereby obtaining 19 g of a gray compound.
$^1$H NMR (400 MHz, $CDCl_3$) δ: 6.42 (s, 2H), 4.20 (s, 8H)

[Chem. 68]

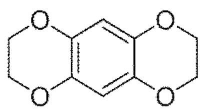

(2) Synthesis of bis(2,3,7,8-tetrahydrobenzo[1,2-b:4,5-b']bis([1,4]dioxin)-5-yl)phosphine

First, 2,3,7,8-tetrahydrobenzo[1,2-b:4,5-b']bis([1,4]dioxin (4.4 g, 23 mmol) was dissolved in 100 mL of tetrahydrofuran. A solution thus produced was cooled to 0°C; n-BuLi (2.5 M, 9.5 mL, 23.8 mmol) was added thereto; and the mixture was stirred at 0°C for one hour, thereby obtaining a yellow suspension. The suspension was added to a solution (10 mL) of (diethylamino)dichlorophosphine (1.58 g, 9.08 mmol) in toluene, which was cooled to 0°C. The mixture was stirred at 0°C for one hour, thereby obtaining a yellow suspension. To the suspension, a solution (4 M, 20 mL) of hydrogen chloride in dioxane was added at 0°C, and the mixture was stirred at 20°C for one hour, thereby obtaining a yellow suspension. The yellow suspension was dried by evaporation, thereby obtaining 4.11 g of a yellow solid.

The obtained yellow solid was dissolved in 80 mL of tetrahydrofuran. A solution thus obtained was cooled to 0°C, and lithium aluminum hydride (2.5 M, 7.3 mL, 18.3 mmol) was slowly added thereto. The mixture was stirred at 20°C for 12 hours, thereby obtaining a brown suspension. The suspension was cooled to 0°C again. Next, 0.7 mL of water, 0.7 mL of a 10% sodium hydroxide aqueous solution, and 2.1 mL of water were added thereto in this order. The mixture thus produced was stirred at room temperature for 30 minutes. The mixture was filtered, and the filtrate was dried by evaporation, thereby obtaining a white solid. Then, 80 mL of water was added to the white solid. An organic substance was extracted with dichloromethane (40 mL × 3). Organic layers were collected and dried with sodium sulfate. Then, the solid was removed therefrom by filtration, and the filtrate was concentrated, thereby obtaining a crude product in the form of a yellow solid. The crude product was refined by silica gel chromatography (the petroleum ether/ethyl acetate ratio of the developing solvent was changed from 10/1 to 5/1), and the refined product was pulverized and washed with 10 mL of hexane, thereby obtaining 1.03 g (2.46 mmol) of a target compound in the form of a white solid.

$^1$H NMR (500 MHz, $CDCl_3$) δ: 6.36 (s, 2H), 5.40 (d, J = 243 Hz, 1H), 4.14 (s, 16H)
$^{31}P\{^1H\}$ NMR (202 MHz, $CDCl_3$) δ: -132.3 (s)

[Chem. 69]

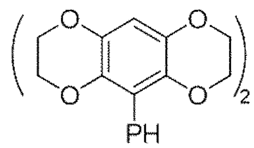

(3) Synthesis of AL-64

First, 250 mg (0.60 mmol) of the bis(2,3,7,8-tetrahydrobenzo[1,2-b:4,5-b']bis([1,4]dioxin)-5-yl)phosphine synthesized in the above (2) was weighed out and put in a Schlenk flask. Next, 8 mL of tetrahydrofuran was added thereto. After a solution thus produced was cooled to -78°C, 0.43 mL (0.66 mmol) of n-BuLi was slowly added thereto in a dropwise manner. After the dropwise addition was completed, the mixture was stirred at -78°C for 45 minutes. Then, the temperature of the mixture was increased to 0°C, and 65 μL (0.60 mmol) of 2,2-bis(trifluoromethyl)oxirane dissolved in 2.0 mL of tetrahydrofuran, was slowly added thereto. The inside of a container in which the 2,2-bis(trifluoromethyl)oxirane was contained, was washed twice with 0.2 mL of tetrahydrofuran, and the washing solution was also added to the Schlenk flask. The obtained mixture was stirred at room temperature for 1 hour and 40 minutes. Then, the mixture was cooled to 0°C, and 0.72 mL (0.72 mmol) of a hydrochloric ether solution was slowly added thereto in a dropwise manner. After the mixture was stirred at 0°C for 40 minutes, it was washed by adding 5.7 mL of water in air, and an organic layer was separated. Next, operations described below were all carried out in air. First, an operation to add 3 mL of diethyl ether to an aqueous layer and extract an organic layer was repeated three times. The extracted organic layers were collected and dried with sodium sulfate. Then, the sodium sulfate was removed therefrom by filtration. After the filtrate was dried by evaporation, a solid thus obtained was refined by silica gel column chromatography (the hexane/acetone ratio of the developing solvent was changed from 10/1 to 5/1, 4/1 and then 2/1), thereby obtaining 131 mg of a solid. The purity of AL-64, which was determined by $^{31}$P-NMR, was 98%.

$^{1}$H NMR (400 MHz, $CDCl_3$) δ: 6.41 (s, 2H), 5.09 (d, J = 5.2 Hz, 1H) 4.15-4.08 (m, 16H), 3.21 (s, 2H)
$^{19}$F NMR (376 MHz, $CDCl_3$) δ: -77.3 (d, J = 22.2 Hz)
$^{31}$P{$^{1}$H} NMR (162 MHz, $CDCl_3$) δ: -59.5 (septet, J = 21.1 Hz)

[Chem. 70]

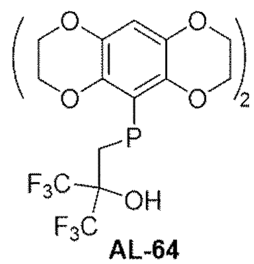

**AL-64**

(Synthesis Example II-7: Synthesis of AL-66)

(1) Synthesis of benzo[1,2-d:4,5-d']bis([1,3]dioxole)

Potassium carbonate (62.2 g, 450 mmol) and dibromomethane (31.6 mL, 78.3 g, 450 mmol) were added at 25°C or less to a solution (50 mL) of 1,2,4,5-tetrahydroxybenzene (8 g, 56 mmol) in dimethylformamide. The mixture was stirred at 100°C for 16 hours, thereby obtaining a red suspension. The suspension was added to water (150 mL), and an organic layer was extracted with ethyl acetate (150 mL × 3). The extracted organic layers were collected, washed with 150 mL of saturated brine, and then dried with sodium sulfate. The sodium sulfate was removed therefrom by filtration, and the filtrate was concentrated, thereby obtaining a crude product. The crude product was refined by silica gel chromatography (the petroleum ether/ethyl acetate ratio of the developing solvent was 10/1), thereby obtaining 0.8 g (4.8 mmol) of a target product in the form of a yellow solid. $^{1}$H NMR (400 MHz, $CDCl_3$) δ: 6.50 (s, 2H), 5.88 (s, 4H)

[Chem. 71]

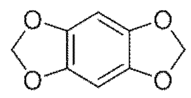

(2) Synthesis of bis(benzo[1,2-d:4,5-d]bis([1,3]dioxole)-4-yl)-N,N-diethylaminophosphine

First, benzo[1,2-d:4,5-d']bis([1,3]dioxole) (2 g, 12 mmol, 1 eq) was dissolved in 20 mL of tetrahydrofuran. A solution thus produced was cooled to 0°C; n-BuLi (2.5 M, 5.3 mL, 13.3 mmol, 1.1 eq) was slowly added thereto; the temperature of the mixture was slowly increased to 20°C; and then the mixture was stirred for 2 hours, thereby obtaining a yellow solution. After the solution was cooled to 0°C, (diethylamino)dichlorophosphine (942 mg, 5.41 mmol, 0.45 eq) dissolved in 10 mL of tetrahydrofuran, was added thereto. The mixture was stirred at 0°C for one hour, thereby obtaining a yellow solution. The solution was dried, thereby obtaining 2.61 g of a crude product in the form of a yellow solid. The obtained solid was used in the subsequent synthesis, without refinement. $^{31}P\{^1H\}$ NMR (162 MHz, $CDCl_3$) δ: 21.6 (s, integral ratio 100%)

[Chem. 72]

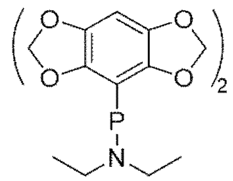

(3) Synthesis of bis(benzo[1,2-d:4,5-d']bis([1,3]dioxole)-4-yl)chlorophosphine

First, the crude product (2.61 g) obtained in the above (2) was dissolved in 40 mL of toluene. A solution thus produced was cooled to 0°C; a solution (4 M, 20 mL) of hydrogen chloride in dioxane was added thereto; and the mixture was stirred at 20°C for one hour, thereby obtaining a yellow solution. The obtained solution was used in the subsequent synthesis, without refinement.
$^{31}P\{^1H\}$ NMR (162 MHz, $CDCl_3$) δ: 41.9 (s, integral ratio 44%)

[Chem. 73]

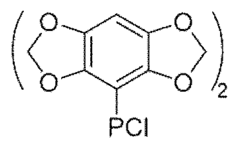

(4) Synthesis of bis(benzo[1,2-d:4,5-d']bis([1,3]dioxole)-4-yl) phosphine

The solvent of the yellow solution obtained in the above (3) was changed to 30 mL of tetrahydrofuran. A solution thus produced was cooled to 0°C; lithium aluminum hydride (2.5 M, 3.6 mL, 9.0 mmol) was added thereto; and the mixture was slowly stirred at 20°C for 12 hours, thereby obtaining a yellow solution. The yellow solution was cooled to 0°C. Next, 0.4 mL of water, 0.4 mL of a 10% sodium hydroxide aqueous solution, and 1.2 mL of water were added thereto in this order. The mixture thus produced was stirred at 20°C for 30 minutes. The mixture was filtered, and the filtrate was dried by evaporation, thereby obtaining a yellow solid. The obtained solid was refined by silica gel chromatography (the petroleum ether/dichloromethane ratio of the developing solvent was changed from at 5/1 to 1/1 and then 0/1), thereby obtaining 0.22 g of a target compound in the form of a white solid.

$^1H$ NMR (400 MHz, $CDCl_3$) δ: 6.47 (s, 2H), 5.89 (s, 8H), 5.26 (d, J = 235 Hz, 1H)
$^{31}P\{^1H\}$ NMR (162 MHz, $CDCl_3$) δ: -126.0 (s)

[Chem. 74]

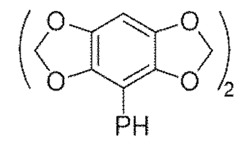

(5) Synthesis of AL-66

First, 200 mg (0.55 mmol) of the (benzo[1,2-d:4,5-d']bis[1,3]dioxole)-4-yl) phosphine synthesized in the above (4) was weighed out and put in a Schlenk flask. Next, 7.3 mL of tetrahydrofuran was added thereto. After a solution thus produced was cooled to -78°C, 1.0 mL (0.61 mmol) of a solution of potassium hexamethyldisilazane in toluene was slowly added thereto in a dropwise manner. After the dropwise addition was completed, the mixture was stirred at -78°C for 45 minutes. Then, the temperature of the mixture was increased to 0°C, and 60 μL (0.55 mmol) of 2,2-bis(trifluoromethyl) oxirane dissolved in 1.8 mL of tetrahydrofuran, was slowly added thereto. The inside of a container in which the 2,2-bis(trifluoromethyl)oxirane was contained, was washed twice with 0.3 mL of tetrahydrofuran, and the washing solution was also added to the Schlenk flask. The mixture was stirred at room temperature for 1 hour and 30 minutes. The solvent was removed therefrom by distillation. The residue was mixed with 9.7 mL of tetrahydrofuran. Then, the mixture was cooled to 0°C, and 0.66 mL (0.66 mmol) of a hydrochloric ether solution was slowly added thereto in a dropwise manner. After the mixture was stirred at 0°C for one hour, and it was washed by adding 5.2 mL of water in air, and an organic layer was separated. Next, operations described below were all carried out in air. First, an operation to add 2.6 mL of diethyl ether to an aqueous layer and extract an organic layer was repeated three times. The organic layers were collected and dried with sodium sulfate. Then, the sodium sulfate was removed therefrom by filtration. After the filtrate was dried by evaporation, a solid thus obtained was refined by silica gel column chromatography (the hexane/acetone ratio of the developing solvent was changed from 10/1 to 5/1), thereby obtaining 136 mg of a solid. The purity of AL-66, which was defined by $^{31}$P-NMR, was 99% or more.

$^{1}$H NMR (400 MHz, $CDCl_3$) δ: 6.50 (s, 2H), 5.86 (d, J = 1.2 Hz, 4H), 5.84 (d, J = 1.6 Hz, 4H), 4.10 (d, J = 2.8 Hz, 1H), 3.24 (d, J = 1.6 Hz, 2H)
$^{19}$F NMR (376 MHz, $CDCl_3$) δ: -77.1 (d, J = 22.2 Hz)
$^{31}$P{$^{1}$H} NMR (162 MHz, $CDCl_3$) δ: -64.7 (septet, J = 20.6 Hz)

[Chem. 75]

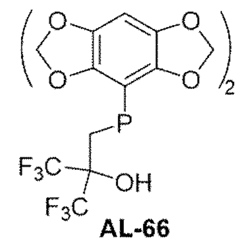

**AL-66**

(Synthesis Example II-8: Synthesis of AL-40/NiArPy)

First, 393 mg (1.4 mmol) of $Ni(cod)_2$ was weighed out and put in a Schlenk flask. Next, 6 mL of toluene was added thereto. To the solution, 0.21 mL (1.4 mmol) of tetramethylethylenediamine and 0.16 mL (1.4 mmol) of 4-bromofluorobenzene were added, and the mixture was stirred at room temperature for 3 hours. Then, an operation to separate supernatant therefrom and wash the residue with 2 mL of hexane, was repeated three times. After the washing, the solvent was removed therefrom by distillation, thereby obtaining a solid (solid 1).

Next, 92 mg (0.14 mmol) of AL-40 was weight out and put in a Schlenk flask. Then, 5.3 mL of tetrahydrofuran was added thereto. The solution was cooled to 0°C, and 79 μL (0.15 mmol) of a solution of sodium hexamethyldisilazane in tetrahydrofuran was slowly added thereto. The mixture was stirred at room temperature for one hour. Then, the solvent was completely removed therefrom by distillation. The residue thus obtained was mixed with 1.9 mL of tetrahydrofuran, thereby obtaining a sodium solution of AL-40.

Next, 70 mg (0.20 mmol) of the solid 1 was weight out and put in a Schlenk flask. Then, 1.0 mL of tetrahydrofuran was added thereto, thereby obtaining a transition metal compound solution. At room temperature, the sodium solution of

AL-40 was added to the transition metal compound solution. The Schlenk flask in which the sodium solution of AL-40 was contained, was washed twice with 0.2 mL of tetrahydrofuran, and the washing solution was added to the transition metal compound solution. The mixture was stirred at room temperature for 2 hours and 30 minutes and then subjected to Celite filtration. After the filtration, the solvent was removed from the filtrate by distillation, and the residue was washed 8 times with 2 mL of hexane. The residue was completely dried, thereby obtaining 98 mg of a solid (solid 2).

Next, 71 mg of the solid 2 was weight out and put in a Schlenk flask. Then, 3.2 mL of tetrahydrofuran was added thereto. To a solution thus produced, 13 μL (0.16 mmol) of pyridine was added, and the mixture was stirred at room temperature for one hour and then subjected to Celite filtration. After the filtration, the solvent was removed from the filtrate by distillation, thereby obtaining 42 mg of a solid. The purity of AL-40/NiArPy, which was defined by $^{31}$P-NMR, was 99% or more. $^1$H NMR (400 MHz, $C_6D_5CD_3$) δ: 8.57 (br, 2H), 7.57 (dd, J = 8.0, 6.8 Hz, 2H), 6.73 (t, J = 7.6 Hz, 1H), 6.64 (dd, J = 9.2 Hz, 2H), 6.40 (br, 2H), 6.30 (s, 2H), 3.95 (d, J = 12.4 Hz, 2H), 1.43 (s, 12H), 1.32 (s, 12H)

$^{19}$F NMR (376 MHz, $C_6D_5CD_3$) δ: -77.8 (s), -124.0 (t, J = 13.7 Hz)
$^{31}$P{$^1$H} NMR (162 MHz, $C_6D_5CD_3$) δ: 4.4 (s)

[Chem. 76]

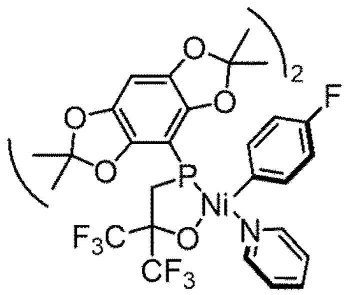

**AL-40/NiArPy**

(Synthesis Example II-9: Synthesis of AL-70)

(1) Synthesis of 5-methoxy-1,3-benzodioxole

Potassium carbonate (5.00 g, 36.2 mmol) was added to a solution (5 mL) of sesamol (1 g, 7.2 mmol) in acetone. The mixture was stirred at 80°C for one hour. To the mixture, methyl iodide (0.9 mL, 2.06 g, 14.5 mmol) was added in a dropwise manner, and the mixture was stirred at 80°C for 12 hours, thereby obtaining a white suspension. The suspension was cooled to room temperature and then filtered. The filtrate was concentrated, thereby obtaining a yellow oily substance. The oily substance was refined by silica gel chromatography (the petroleum ether/ethyl acetate ratio of the developing solvent was 10/1), thereby obtaining 1 g (6.6 mmol) of a target product in the form of a colorless liquid.
$^1$H NMR (400 MHz, $CDCl_3$) δ: 6.72 (d, J = 8.4 Hz, 1H), 6.50 (d, J = 2.4 Hz, 1H), 6.33 (dd, J = 8.4, 2.4 Hz, 1H), 5.92 (s, 2H), 3.76 (s, 3H)

[Chem. 77]

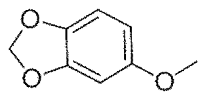

(2) Synthesis of tert-butyl(5-methoxy-1,3-benzodioxole-4-yl)chlorophosphine

First, 5-methoxy-1,3-benzodioxole (5.3 g, 35 mmol, 1 eq) was dissolved in 40 mL of tetrahydrofuran. A solution thus produced was cooled to -78°C; n-BuLi (2.5 M, 15.3 mL, 38.3 mmol, 1.1 eq) was added thereto; and then the mixture was stirred at -78°C for 2 hours. To the mixture thus produced, tert-butyldichlorophosphine (6.09 g, 38.3 mmol, 1.1 eq) dissolved in 5 mL of tetrahydrofuran, was quickly added. The mixture was stirred at 25°C for one hour, thereby obtaining a white suspension. The suspension was dried, thereby obtaining a crude product. The obtained crude product was used in the subsequent synthesis, without refinement.
$^{31}$P{$^1$H} NMR (162 MHz, $CDCl_3$) δ: 100.6 (s, integral value 69%)

[Chem. 78]

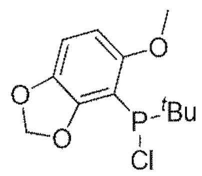

(3) Synthesis of tert-butyl(5-methoxy-1,3-benzodioxole-4-yl)phosphine

First, 30 mL of tetrahydrofuran was added to the tert-butyl(5-methoxy-1,3-benzodioxole-4-yl)chlorophosphine (9.57 g) obtained in the above (2). A suspension thus produced was cooled to 0°C; lithium aluminum hydride (2.5 M, 13 mL, 32.5 mmol) was added thereto; and the mixture was stirred at 25°C for 16 hours, thereby obtaining a white suspension. The suspension was used in the subsequent synthesis, without refinement.
$^{31}P\{^{1}H\}$ NMR (162 MHz, $CDCl_3$) δ: -56.9 (s, integral ratio 76%)

[Chem. 79]

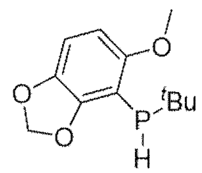

(4) Synthesis of tert-butyl(5-methoxy-1,3-benzodioxole-4-yl)phosphine borane

The white suspension obtained in the above (3) was cooled to 0°C; a boran dimethyl sulfide complex (10 M, 4.74 mL, 2 eq) was added thereto; and the mixture was stirred at 25°C for 16 hours, thereby obtaining a colorless solution. To the solution, 1.5 mL of water, 1.5 mL of a 10% sodium hydroxide aqueous solution, and 4.5 mL of water were slowly added in this order. The mixture thus produced was stirred at room temperature for 30 minutes. The mixture was filtered, and the filtrate was dried by evaporation, thereby obtaining a colorless liquid. The liquid was refined by silica gel chromatography (the petroleum ether/ethyl acetate ratio of the developing solvent was 20/1), thereby obtaining 2.8 g (11.0 mmol) of a target compound in the form of a white solid.

$^{1}H$ NMR (400 MHz, $CDCl_3$) δ: 6.84 (d, J = 8.4 Hz, 1H), 6.33 (dd, J = 8.4, 3.2 Hz, 1H), 5.98 (dd, J = 10.4 Hz, 1.2 Hz, 2H), 5.48 (d, J = 386 Hz, 1H), 3.79 (s, 3H), 1.23 (d, J = 15.6 Hz, 9H), 1.10-0.17 (br, 3H)
$^{31}P\{^{1}H\}$ NMR (162 MHz, $CDCl_3$) δ: 6.0-(-5.0) (br)

[Chem. 80]

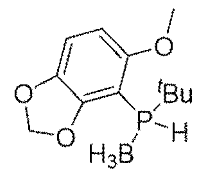

(5) Synthesis of AL-70

First, 250 mg (0.98 mmol) of the tert-butyl(5-methoxy-1,3-benzodioxole-4-yl) phosphine borane obtained in the above (4) was weighed out and put in a Schlenk flask. Next, 13 mL of tetrahydrofuran was added thereto. A solution thus produced was cooled to -78°C, and 1.8 mL (1.1 mmol) of a solution of potassium hexamethyldisilazane in toluene was slowly added thereto in a dropwise manner. After the dropwise addition was completed, the mixture was stirred at -78°C for one hour. Then, the temperature of the mixture was increased to 0°C, and 0.11 mL (0.98 mmol) of 2,2-bis(trifluoromethyl)oxirane dissolved in 3.2 mL of tetrahydrofuran, was slowly added thereto. The inside of a container in which the 2,2-bis(trifluoromethyl)oxirane was contained, was washed twice with 0.5 mL of tetrahydrofuran, and the washing solution was also added to the Schlenk flask. The mixture was stirred at room temperature for 2 hours. Then, the solvent was completely removed from the mixture by distillation. A solid thus obtained was refined by silica gel column chromatography (the hexane/ dichloromethane ratio of the developing solvent was changed from 15/1 to 10/1 and then 2/1) in air, thereby obtaining 245 mg of a solid.

Next, 3.6 mL of methanol was added to 245 mg of the solid. After the temperature of the mixture was increased to 60°C, the mixture was stirred for 5 hours and 30 minutes. Then, the solvent was completely removed therefrom by distillation, and the residue was refined by silica gel column chromatography, thereby obtaining a light pink liquid. While heating the liquid at 65°C, it was vacuum-dried for 9 hours, thereby obtaining 131 mg of a solid. The purity of AL-70, which was determined by $^{31}$P-NMR, was 99% or more.

$^{1}$H NMR (400 MHz, $CDCl_3$) δ: 6.80 (d, J = 8.0 Hz, 1H), 6.33 (dd, J = 8.8, 3.6 Hz, 1H), 5.95 (d, J = 1.6 Hz, 1H), 5.87 (d, J = 1.2 Hz, 1H), 4.47 (d, J = 9.2 Hz, 1H), 3.78 (s, 3H), 3.69 (dd, J = 16.0, 1.2 Hz, 1H), 2.06 (ddd, J = 16.0, 1.2, 1.2 Hz, 1H), 1.10 (d, J = 14.0 Hz, 9H)
$^{19}$F NMR (376 MHz, $CDCl_3$) δ: -77.0 (q, J = 12.8 Hz), -77.9 (q, J = 12.9 Hz)
$^{31}$P{$^{1}$H} NMR (162 MHz, $CDCl_3$) δ: -29.7-(-30.5) (m)

[Chem. 81]

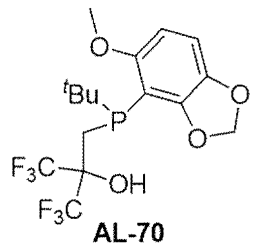

**AL-70**

(Synthesis Example II-10: Synthesis of AL-72)

(1) Synthesis of 8-trimethylsilyl-2,2,6,6-tetramethylbenzo[1,2-d:5,4-d']bis([1,3]dioxole)

First, 2,2,6,6-tetramethylbenzo[1,2-d:5,4-d']bis([1,3]dioxole) (1 g, 4.5 mmol, 1 eq) was dissolved in 20 mL of tetrahydrofuran. A solution thus produced was cooled to 0°C; n-BuLi (2.5 M, 2.1 mL, 5.3 mmol, 1.2 eq) was slowly added thereto in a dropwise manner; and the mixture was stirred at 0°C for 30 minutes. While keeping a solution thus produced at 0°C, chlorotrimethylsilane (0.98 g, 9.0 mmol, 1.1 mL, 2 eq) was slowly added thereto in a dropwise manner. The mixture was stirred at 0°C for 30 minutes, thereby obtaining a yellow solution. To the solution, 50 mL of a sodium hydrogen carbonate aqueous solution was added to terminate the reaction. A generated product was extracted with ethyl acetate (50 mL × 3). Organic layers were collected and dried with sodium sulfate. Then, the solid was removed therefrom by filtration, and the filtrate was concentrated, thereby obtaining a crude product in the form of a yellow solid. The crude product was refined by silica gel chromatography (the petroleum ether/ethyl acetate ratio of the developing solvent was 50/1), thereby obtaining 1 g (3.40 mmol) of a target compound in the form of a light yellow solid.
$^{1}$H NMR (400 MHz, $CDCl_3$) δ: 6.30 (s, 1H), 1.61 (s, 12H), 0.31 (s, 9H)

[Chem. 82]

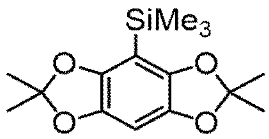

(2) Synthesis of bis(8-trimethylsilyl-2,2,6,6-tetramethylbenzo[1,2-d:5,4-d']bis([1,3]dioxole)-4-yl)chlorophosphine

First, 8-trimethylsilyl-2,2,6,6-tetramethylbenzo[1,2-d:5,4-d']bis([1,3]dioxole) (5.5 g, 18.7 mmol, 1 eq) was dissolved in 55 mL of tetrahydrofuran. A solution thus produced was cooled to 0°C; n-BuLi (2.5 M, 8.2 mL, 20.5 mmol, 1.1 eq) was slowly added thereto in a dropwise manner; and the mixture was stirred at 0°C for 2.5 hours, thereby obtaining a yellow solution. The solution was added to a solution (8 mL) of $PCl_3$ (1.15 g, 8.4 mmol, 735 μL, 0.45 eq) in tetrahydrofuran, which was cooled to -78°C. The mixture was stirred at 0°C for 1.5 hours, thereby obtaining a yellow suspension. The suspension was dried, thereby obtaining 12.2 g of a yellow solid. The obtained compound was used in the subsequent synthesis, without refinement.

[Chem. 83]

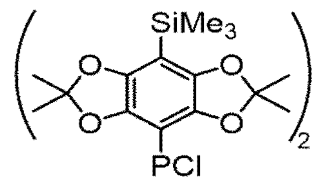

(3) Synthesis of bis(8-trimethylsilyl-2,2,6,6-tetramethylbenzo[1,2-d:5,4-d']bis([1,3]dioxole)-4-yl)phosphine

First, the bis(8-trimethylsilyl-2,2,6,6-tetramethylbenzo[1,2-d:5,4-d']bis([1,3]dioxole)-4-yl)chlorophosphine (6.1 g) obtained in the above (2) was dissolved in 60 mL of tetrahydrofuran. A solution thus produced was cooled to 0°C; lithium aluminum hydride (2.5 M, 5.6 mL, 14.0 mmol) was added thereto; the temperature of the mixture was slowly increased to 20°C; and then the mixture was stirred for 12 hours, thereby obtaining a yellow solution. The solution was cooled to 0°C. Next, 1 mL of water, 1 mL of a 10% sodium hydroxide aqueous solution, and 3 mL of water were added thereto in this order. The mixture thus produced was stirred at 20°C for 30 minutes to terminate the reaction. The mixture was filtered, and the filtrate was dried by evaporation, thereby obtaining a yellow solid. The obtained solid was refined by silica gel chromatography, thereby obtaining 5.7 g (9.21 mmol, 49%) of a target compound in the form of a white solid.

$^1H$ NMR (400 MHz, $CDCl_3$) δ: 5.13 (d, J = 241 Hz, 1H), 1.54 (s, 24H), 0.26 (s, 18H)
$^{31}P\{^1H\}$ NMR (162 MHz, $CDCl_3$) δ: -126.5 (s)

[Chem. 84]

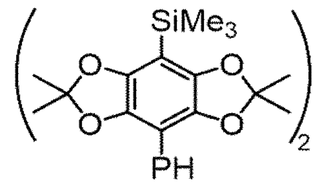

(4) Synthesis of AL-72

First, 300 mg (0.485 mmol) of the bis (8-trimethylsilyl-2,2,6,6-tetramethylbenzo[1,2-d:5,4-d']bis([1,3]dioxole)-4-yl)phosphine obtained in the above (3) was weighed out and put in a Schlenk flask. Next, 10 mL of tetrahydrofuran was added thereto. After a solution thus produced was cooled to -78°C, 1.05 mL (0.630 mmol) of a solution of 0.6 M potassium hexamethyldisilazide in toluene was slowly added thereto in a dropwise manner. After the dropwise addition was completed, the temperature of the mixture was increased to 0°C; 2 mL of tetrahydrofuran was added thereto: and then the mixture was stirred for one hour. To the mixture, 60.0 μL(0.549 mmol) of 2,2-bis(trifluoromethyl)oxirane was added; the temperature of the mixture was increased to room temperature; and then the mixture was stirred for 2 and a half hours. After the mixture was stirred at 0°C for 20 minutes, 5 mL (1.45 mmol) of 0.3 M hydrochloric acid was slowly added thereto in a dropwise manner. To the mixture, 5 mL of dichloromethane and 5 mL of water were added, and an organic layer was separated. Next, an operation to add 5 mL of dichloromethane to an aqueous layer and extract an organic layer was repeated three times. The organic layers were collected and dried with sodium sulfate. Then, the sodium sulfate was removed therefrom by filtration, and the residue was washed three times with 3 mL of dichloromethane. After the filtrate was dried by evaporation, a solid thus obtained was refined by silica gel column chromatography (the hexane/acetone ratio of the developing solvent was 5/1) in air, thereby obtaining 249 mg of a solid.

$^1H$ NMR (400 MHz, $CDCl_3$) δ: 5.07 (s, 1H), 3.24 (s, 2H), 1.53 (s, 12H), 1.51 (s, 12H), 0.26 (s, 18H)
$^{19}F$ NMR (376 MHz, $CDCl_3$) δ: -76.8 (d, J = 22.0 Hz)
$^{31}P\{^1H\}$ NMR (162 MHz, $CDCl_3$) δ: -60.8 (septet, J = 24.8 Hz)

[Chem. 85]

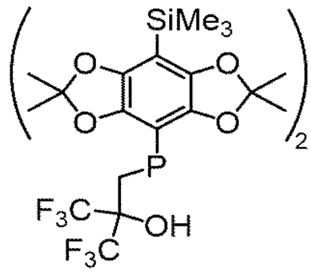

**AL-72**

(Synthesis Example II-11: Synthesis of AL-73)

(1) Synthesis of 5-methoxy-2,2-dimethyl-1,3-benzodioxole

With reference to Organic & Biomolecular Chemistry, 2021, 19, 1555-1564, a compound represented by the following chemical formula was synthesized.

[Chem. 86]

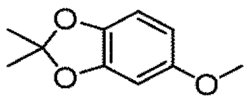

(2) Synthesis of tert-butyl(5-methoxy-2,2-dimethyl-1,3-benzodioxole-4-yl)chlorophosphine

First, n-BuLi (2.5 M, 12.2 mL, 30.5 mmol) was added to a solution (40 mL) of 5-methoxy-2,2-dimethyl-1,3-benzodioxole (5 g, 28 mmol) in THF, which was cooled to 0°C. The mixture thus obtained was stirred at 25°C for 2 hours. The mixture was cooled to -78°C, and a solution (5 mL) of tert-butyldichlorophosphine (4.85 g, 30.5 mmol) in THF, was quickly added to the mixture. The mixture was stirred at 25°C for one hour, thereby obtaining a white suspension. The solvent was removed therefrom by distillation, thereby obtaining a crude product in the form of a yellow solid.
$^{31}P\{^1H\}$ NMR (202 MHz, $CDCl_3$) δ: 100.8 (s, integrated intensity ratio 100%)

[Chem. 87]

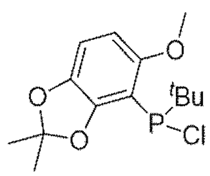

(3) Synthesis of tert-butyl(5-methoxy-2,2-dimethyl-1,3-benzodioxole-4-yl)phosphine borane

First, lithium aluminum hydride (2.5 M, 13.7 mL, 34.3 mmol) was added to a solution (45 mL) of tert-butyl(5-methoxy-2,2-dimethyl-1,3-benzodioxole-4-yl)chlorophosphine (8.4 g, 28 mmol) in THF, which was cooled to 0°C. The mixture thus obtained was stirred at 25°C for 16 hours, thereby obtaining a yellow solution. To the solution, dimethyl sulfide borane (10 M, 5.6 mL, 56 mmol) was added at 0°C, and the mixture thus produced was stirred at 25°C for 16 hours, thereby obtaining a colorless solution. To the solution, water (1.5 mL), a 15% sodium hydroxide aqueous solution (1.5 mL), and then water (4.5 mL) were slowly added. The mixture thus produced was stirred at room temperature for 30 minutes and

filtered. The filtrate was concentrated, thereby obtaining a colorless oily substance. The oily substance was refined by silica gel chromatography (the petroleum ether/ethyl acetate ratio of the developing solvent was 20/1), thereby obtaining 1.8 g (6.4 mmol) of a target compound in the form of a white solid.

$^{1}H$ NMR (400 MHz, $CDCl_3$) δ: 6.74 (d, J = 7.6 Hz, 1H), 6.29 (br, 1H), 5.41 (d, J = 376 Hz, 1H), 3.77 (s, 3H), 1.67 (br, 6H), 1.23 (d, J = 15.2 Hz, 9H), 1.00-0.20 (br, 3H)
$^{31}P\{^{1}H\}$ NMR (162 MHz, $CDCl_3$) δ: 4.0-(-3.0) (br)

[Chem. 88]

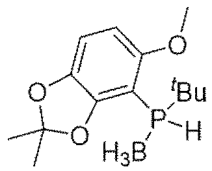

(4) Synthesis of AL-73

First, 250 mg (0.89 mmol) of the tert-butyl(5-methoxy-2,2-dimethyl-1,3-benzodioxole-4-yl)phosphine borane obtained in the above (3) was weighed out and put in a Schlenk flask. Next, 12 mL of tetrahydrofuran was added thereto. A solution thus produced was cooled to -78°C, and 1.6 mL (0.98 mmol) of a solution of potassium hexamethyldisilazane in toluene was slowly added thereto in a dropwise manner. After the dropwise addition was completed, the mixture was stirred at -78°C for one hour. Then, the temperature of the mixture was increased to 0°C, and 97 μL (0.89 mmol) of 2,2-bis(trifluoromethyl)oxirane dissolved in 3.3 mL of tetrahydrofuran, was slowly added thereto. The mixture was stirred at room temperature for 1 hour and 30 minutes. Then, the solvent was completely removed from the mixture by distillation. A solid thus obtained was refined by silica gel column chromatography (the hexane/ dichloromethane ratio of the developing solvent was changed from 4/1 to 2/1) in air, thereby obtaining 134 mg of a solid.

Next, 1.9 mL of methanol was added to 134 mg of the solid. After the temperature of the mixture was increased to 60°C, the mixture was stirred for 5 hours and 30 minutes. Then, the solvent was completely removed therefrom by distillation, thereby obtaining 116 mg of a solid. The purity of AL-73, which was determined by $^{31}P$-NMR was 98%.

$^{1}H$ NMR (400 MHz, $CDCl_3$) δ: 6.70 (d, J = 8.4 Hz, 1H), 6.28 (dd, J = 8.8, 3.6 Hz, 1H), 4.55 (d, J = 9.2 Hz, 1H), 3.76 (s, 3H), 3.71 (dd, J = 16.0, 1.6 Hz, 1H), 2.04 (d, J = 16.0 Hz, 1H), 1.66 (s, 3H), 1.63 (s, 3H), 1.09 (d, J = 14.0 Hz, 9H)
$^{19}F$ NMR (376 MHz, $CDCl_3$) δ: -76.9 (q, J = 12.8 Hz), -77.8 (q, J = 11.0 Hz)
$^{31}P\{^{1}H\}$ NMR (162 MHz, $CDCl_3$) δ: -30.5 (m)

[Chem. 89]

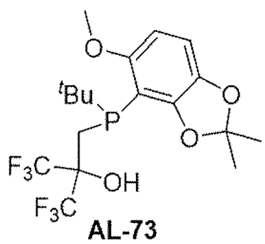

**AL-73**

Autoclaves used in the following polymerization experiments were dried sufficiently, and subjected to a nitrogen purge before use.

[Example II-1]

First, 68.3 mg (0.25 mmol) of $Ni(cod)_2$ was weighed out, put in a flask and dissolved in 25 mL of toluene. Also, 13.3 mg (0.020 mmol) of AL-39 obtained in Synthesis Example II-1 was weighed out and put in another flask. Then, 20 mL of the solution of $Ni(cod)_2$ in toluene was weighed out and put in the flask containing AL-39. A catalyst composition was thus produced in the solution, and the solution was heated in a water bath at 40°C and stirred for 15 minutes, thereby obtaining a

catalyst composition solution (hereinafter, it is referred to as "catalyst solution". AL-39 concentration: about 1 mM).

Next, 94 mL of toluene was put in a 0.2 L autoclave, and the temperature was increased to 90°C. Then, nitrogen was added to the autoclave so as to obtain an autoclave internal pressure of 0.5 MPa. Then, ethylene was added to the autoclave so as to obtain an autoclave internal pressure of 3.0 MPa. Then, 0.1 mL of the catalyst solution was injected into a catalyst cylinder. In addition, 3 mL of toluene was very slowly added thereto. Then, the obtained catalyst solution was injected into the autoclave by high-pressure nitrogen. This point of time was determined as reaction starting time. Next, 0.4 mL of the catalyst solution was injected into a catalyst cylinder. In addition, 2 mL of toluene was very slowly added thereto. After a lapse of 5 minutes from the start of the reaction, the obtained catalyst solution was added to the autoclave by high-pressure nitrogen. In addition, 0.5 mL of the catalyst solution was injected into the catalyst cylinder, and 3 mL of toluene was very slowly added thereto. After a lapse of 11 minutes from the start of the reaction, the obtained catalyst solution was added to the autoclave by high-pressure nitrogen. After a lapse of 12 minutes from the start of the reaction, the catalyst cylinder was washed with 3 mL of toluene, and the washing solution was also added to the autoclave by high-pressure nitrogen. After a lapse of 45 minutes from the start of the reaction, 3 mL of a solution (0.2 M) of 1,2-butanediol in toluene was added to terminate the reaction. The ethylene was depressurized. The temperature of the autoclave was returned to room temperature, and 100 mL of acetone was added thereto. A solid thus precipitated was recovered by filtration, washed twice with 100 mL of acetone, and dried under reduced pressure. A polymer thus obtained was 3.17 g.

[Example II-2]

First, 10 mL of a catalyst solution (AL-39 concentration: about 2 mM) was prepared in the same manner as Example II-1, except for the following: the amount of $Ni(cod)_2$ was changed to 68.9 mg (0.25 mmol); the amount of toluene was changed to 12 mL; the amount of AL-39 was changed to 13.7 mg (0.020 mmol); and the amount of the solution of $Ni(cod)_2$ in toluene, which was added to AL-39, was changed to 10 mL.

Next, 90 mL of toluene (hereinafter, it is referred to as "toluene") was put in a 0.2 L autoclave. Then, 0.3 mL (2.1 mmol) of tBA (hereinafter, it is referred to as "comonomer and its addition amount") and 0.3 mL of a solution (0.1 M) of TNOA in toluene (hereinafter, it is referred to as "TNOA addition amount") were injected. The temperature inside of the autoclave was increased to 90°C, and nitrogen was added to the autoclave so as to obtain an autoclave internal pressure of 0.5 MPa (hereinafter, it is referred to as "nitrogen pressure"). Then, ethylene was added to the autoclave so as to obtain an autoclave internal pressure of 3.0 MPa (hereinafter, it is referred to as "ethylene pressure"). Then, 2 mL of the catalyst solution (hereinafter, it is referred to as "initial catalyst") was injected into the catalyst cylinder and then added to the autoclave by high-pressure nitrogen. This point of time was determined as reaction starting time. After a lapse of 3 minutes from the start of the reaction, the catalyst cylinder was washed with 3 mL of toluene, and the washing solution was added to the autoclave by high-pressure nitrogen (hereinafter, it is referred to as "initial washing and its time"). After a lapse of 60 minutes from the start of the reaction (hereinafter, it is referred to as "reaction time"), 3 mL of a solution (0.2 M) of 1,2-butanediol in toluene (hereinafter, it is referred to as "reaction terminator") was added to terminate the reaction, and the ethylene was depressurized. The temperature of the autoclave was returned to room temperature, and 100 mL of acetone was added thereto. A solid thus precipitated was recovered by filtration, washed twice with 100 mL of acetone (hereinafter it is referred to as refining method) and dried under reduced pressure. A polymer thus obtained was 0.83 g.

[Example II-3]

First, 6 mL of a catalyst solution (AL-39 concentration: about 4 mM) was prepared in the same manner as Example II-1, except for the following: the amount of $Ni(cod)_2$ was changed to 87.6 mg (0.32 mmol); the amount of toluene was changed to 8 mL; the amount of AL-39 was changed to 15.9 mg (0.024 mmol); and the amount of the solution of $Ni(cod)_2$ in toluene, which was added to AL-39, was changed to 6 mL.

Next, polymerization was carried out in the same manner as Example II-2, except for the following: the catalyst solution prepared above was used; the catalyst addition was carried out as described below; and the polymerization condition was changed as follows. As a result, 2.85 g of a polymer was obtained.

Toluene: 87 mL
Comonomer and its addition amount: tBA (1.2 mL, 8.3 mmol)
TNOA addition amount: 1.0 mL (0.10 mmol)
Initial catalyst: Catalyst solution 3 mL

Catalyst addition: After a lapse of 15 minutes from the start of the reaction, 2 mL of the catalyst solution was injected into the catalyst cylinder and then added to the autoclave by high-pressure nitrogen. After a lapse of 17 minutes from the start of the reaction, the catalyst cylinder was washed with 3 mL of toluene, and the washing solution was added to the autoclave by high-pressure nitrogen.

[Example II-4]

First, 6 mL of a catalyst solution (AL-39 concentration: about 4 mM) was prepared in the same manner as Example II-1, except for the following: the amount of $Ni(cod)_2$ was changed to 87.9 mg (0.32 mmol); the amount of toluene was changed to 8 mL; the amount of AL-39 was changed to 16.0 mg (0.024 mmol); and the amount of the solution of $Ni(cod)_2$ in toluene, which was added to AL-39, was changed to 6 mL.

Next, polymerization was carried out in the same manner as Example II-2, except for the following: the catalyst solution prepared above was used; the catalyst addition was carried out as described below; and the polymerization condition was changed as follows. As a result, 3.06 g of a polymer was obtained.

Toluene: 88 mL
Comonomer and its addition amount: tBA (2.2 mL, 15 mmol)
TNOA addition amount: 1.0 mL (0.10 mmol)
Initial catalyst: Catalyst solution 2.5 mL
Initial washing and its time: None

Catalyst addition: After a lapse of 3 minutes from the start of the reaction, 2.5 mL of the catalyst solution was injected into the catalyst cylinder and then added to the autoclave by high-pressure nitrogen. After a lapse of 5 minutes from the start of the reaction, the catalyst cylinder was washed with 3 mL of toluene, and the washing solution was added to the autoclave by high-pressure nitrogen.

[Example II-5]

First, 4 mL of a catalyst solution (AL-39 concentration: about 4 mM) was prepared in the same manner as Example II-1, except for the following: the amount of $Ni(cod)_2$ was changed to 65.8 mg (0.24 mmol); the amount of toluene was changed to 6 mL; the amount of AL-39 was changed to 10.5 mg (0.016 mmol); and the amount of the solution of $Ni(cod)_2$ in toluene, which was added to AL-39, was changed to 4 mL.

Next, polymerization was carried out in the same manner as Example II-2, except for the following: the catalyst solution prepared above was used, and the polymerization condition was changed as follows. As a result, 1.04 g of a polymer was obtained.

Toluene: 90 mL
Comonomer and its addition amount: tBA (3.6 mL, 25 mmol)
TNOA addition amount: 0.5 mL (0.050 mmol)
Initial catalyst: Catalyst solution 2.5 mL
Initial washing and its time: After a lapse of 2 minutes from the start of the reaction, the catalyst cylinder was washed with 3 mL of toluene.
Refining method: The polymer was precipitated with 100 mL of acetone. Then, 100 mL of acetone and 1 mL of a hydrochloric acid aqueous solution (10 wt. %) were added to the polymer, and the polymer was stored overnight in a refrigerator. Then, the polymer was washed twice with 100 mL of acetone.

[Example II-6]

First, 5 mL of a catalyst solution (AL-39 concentration: about 4 mM) was prepared in the same manner as Example II-1, except for the following: the amount of $Ni(cod)_2$ was changed to 77.0 mg (0.28 mmol); the amount of toluene was changed to 7 mL; the amount of AL-39 was changed to 13.4 mg (0.020 mmol); and the amount of the solution of $Ni(cod)_2$ in toluene, which was added to AL-39, was changed to 5 mL.

Next, polymerization was carried out in the same manner as Example II-2, except for the following: the catalyst solution prepared above was used; the catalyst addition was carried out as described below; and the polymerization condition was changed as follows. As a result, 2.46 g of a polymer was obtained.

Toluene: 93 mL
Comonomer and its addition amount: MA (0.9 mL, 10 mmol)
TNOA addition amount: 0.5 mL (0.050 mmol)
Initial catalyst: Catalyst solution 2.5 mL

Catalyst addition: After a lapse of 15 minutes from the start of the reaction, 1.5 mL of the catalyst solution was injected into the catalyst cylinder and then added to the autoclave by high-pressure nitrogen. After a lapse of 19 minutes

from the start of the reaction, the catalyst cylinder was washed with 3 mL of toluene, and the washing solution was added to the autoclave by high-pressure nitrogen.

Refining method: The polymer was precipitated with 100 mL of acetone. Then, 100 mL of acetone and 1 mL of a hydrochloric acid aqueous solution (10 wt. %) were added to the polymer, and the polymer was stored overnight in a refrigerator. Then, the polymer was washed twice with 100 mL of acetone.

[Example II-7]

First, 6 mL of a catalyst solution (AL-39 concentration: about 5 mM) was prepared in the same manner as Example II-1, except for the following: 10.7 mg (0.04 mmol) of $Ni(acac)_2$ was used instead of $Ni(cod)_2$; the amount of toluene was changed to 8 mL; the amount of AL-39 was changed to 19.7 mg (0.03 mmol); and the amount of the solution of the metal complex in toluene, which was added to AL-39, was changed to 6 mL.

Next, polymerization was carried out in the same manner as Example II-2, except for the following: the catalyst solution prepared above was used, and the polymerization condition was changed as follows. As a result, 1.30 g of a polymer was obtained.

Toluene: 93 mL
Comonomer and its addition amount: MA (0.9 mL, 10 mmol)
TNOA addition amount: 0.5 mL (0.050 mmol)
Initial catalyst: Catalyst solution 2 mL
Initial washing and its time: After a lapse of 5 minutes from the start of the reaction, the catalyst cylinder was washed with 3 mL of toluene.

Reaction terminator: Instead of the solution of 1,2-butanediol in toluene, 1.0 mL of a solution (2 M) of deuterated acetic acid in toluene was added.

[Example II-8]

First, 3 mL of a catalyst solution (AL-39 concentration: about 5 mM) was prepared in the same manner as Example II-7, except for the following: the amount of $Ni(acac)_2$ was changed to 10.3 mg (0.04 mmol); the amount of toluene was changed to 8 mL; the amount of AL-39 was changed to 9.9 mg (0.015 mmol); and the amount of the solution of $Ni(acac)_2$ in toluene, which was added to AL-39, was changed to 3 mL.

Next, polymerization was carried out in the same manner as Example II-2, except for the following: the catalyst solution prepared above was used, and the polymerization condition was changed as follows. As a result, 1.33 g of a polymer was obtained.

Toluene: 94 mL
Comonomer and its addition amount: MA (0.9 mL, 10 mmol)
TNOA addition amount: 0.3 mL (0.030 mmol)
Reaction temperature: 100°C
Initial catalyst: Catalyst solution 1.2 mL
Initial washing and its time: After a lapse of 2 minutes from the start of the reaction, the catalyst cylinder was washed with 3 mL of toluene.

Reaction terminator: Instead of the solution of 1,2-butanediol in toluene, 0.3 mL of a solution (2 M) of deuterated acetic acid in toluene was added.

[Example II-9]

First, 20 mL of a catalyst solution (AL-39 concentration: about 1 mM) was prepared in the same manner as Example II-1, except for the following: the amount of $Ni(cod)_2$ was changed to 68.4 mg (0.25 mmol), and the amount of AL-39 was changed to 13.2 mg (0.02 mmol).

Next, polymerization was carried out in the same manner as Example II-2, except for the following: the catalyst solution prepared above was used; the catalyst addition was carried out as described below; and the polymerization condition was changed as follows. As a result, 0.55 g of a polymer was obtained.

Toluene: 64 mL
Comonomer and its addition amount: VC (about 9.9 mL, 13.5 g, 157 mmol)

TNOA addition amount: 0.5 mL (0.050 mmol)
Nitrogen pressure: 0 MPa
Ethylene pressure: 2.5 MPa
Initial catalyst: Catalyst solution 1 mL
Initial washing and its time: After a lapse of 2.5 minutes from the start of the reaction, the catalyst cylinder was washed with 3 mL of toluene.

Catalyst addition: After a lapse of 7 minutes from the start of the reaction, 2 mL of the catalyst solution was injected into the catalyst cylinder and then added to the autoclave by high-pressure nitrogen. After a lapse of 10 minutes, 14 minutes and 16 minutes from the start of the reaction, 3 mL of the catalyst solution was injected into the catalyst cylinder and then added to the autoclave by high-pressure nitrogen each. After a lapse of 19 minutes from the start of the reaction, the catalyst cylinder was washed with 3 mL of toluene, and the washing solution was added to the autoclave by high-pressure nitrogen.

Reaction time: 35 Minutes

[Example II-10]

First, 20 mL of a catalyst solution (AL-40 concentration: about 1 mM) was prepared in the same manner as Example II-1, except for the following: the amount of $Ni(cod)_2$ was changed to 66.0 mg (0.24 mmol); the amount of toluene was changed to 24 mL; 12.9 mg (0.02 mmol) of AL-40, which was obtained in Synthesis Example II-2, was used instead of AL-39; and the amount of the solution of $Ni(cod)_2$ in toluene, which was added to AL-40, was changed to 20 mL.

Next, polymerization was carried out in the same manner as Example II-2, except for the following: the catalyst solution prepared above was used; the catalyst addition was carried out as described below; and the polymerization condition was changed as follows. As a result, 3.17 g of a polymer was obtained.

Toluene: 96 mL
Comonomer and its addition amount: tBA (0.3 mL, 2.1 mmol)
TNOA addition amount: 0.1 mL (0.010 mmol)
Initial catalyst: Catalyst solution 1 mL

Catalyst addition: After a lapse of 17 minutes from the start of the reaction, 1 mL of the catalyst solution was injected into the catalyst cylinder and then added to the autoclave by high-pressure nitrogen. After a lapse of 19 minutes from the start of the reaction, the catalyst cylinder was washed with 3 mL of toluene, and the washing solution was added to the autoclave by high-pressure nitrogen.

Reaction time: 42 Minutes

[Example II-11]

First, 10 mL of a catalyst solution (AL-40 concentration: about 2 mM) was prepared in the same manner as Example II-10, except for the following: the amount of $Ni(cod)_2$ was changed to 65.7 mg (0.24 mmol); the amount of toluene was changed to 12 mL; the amount of AL-40 was changed to 13.6 mg(0.02 mmol); and the amount of the solution of $Ni(cod)_2$ in toluene, which was added to AL-40, was changed to 10 mL.

Next, polymerization was carried out in the same manner as Example II-2, except for the following: the catalyst solution prepared above was used, and the polymerization condition was changed as follows. As a result, 2.83 g of a polymer was obtained.

Toluene: 92 mL
Comonomer and its addition amount: tBA (1.2 mL, 8.3 mmol)
TNOA addition amount: 0.3 mL (0.030 mmol)
Initial catalyst: Catalyst solution 3 mL
Initial washing and its time: After a lapse of 2 minutes from the start of the reaction, the catalyst cylinder was washed with 3 mL of toluene.
Reaction time: 21 Minutes

[Example II-12]

First, 8 mL of a catalyst solution (AL-40 concentration: about 2 mM) was prepared in the same manner as Example II-10, except for the following: the amount of $Ni(cod)_2$ was changed to 55.3 mg (0.20 mmol); the amount of toluene was changed to 10 mL; the amount of AL-40 was changed to 10.0 mg (0.016 mmol); and the amount of the solution of $Ni(cod)_2$ in toluene, which was added to AL-40, was changed to 8 mL.

Next, polymerization was carried out in the same manner as Example II-2, except for the following: the catalyst solution prepared above was used, and the polymerization condition was changed as follows. As a result, 2.42 g of a polymer was obtained.

Toluene: 91 mL
Comonomer and its addition amount: tBA (3.5 mL, 24 mmol)
TNOA addition amount: 0.25 mL (0.025 mmol)
Initial catalyst: Catalyst solution 2.5 mL
Initial washing and its time: After a lapse of 2 minutes from the start of the reaction, the catalyst cylinder was washed with 3 mL of toluene.

[Example II-13]

First, 8 mL of a catalyst solution (AL-40 concentration: about 2 mM) was prepared in the same manner as Example II-10, except for the following: the amount of $Ni(cod)_2$ was changed to 54.7 mg (0.20 mmol); the amount of toluene was changed to 10 mL; the amount of AL-40 was changed to 10.6 mg (0.016 mmol); and the amount of the solution of $Ni(cod)_2$ in toluene, which was added to AL-40, was changed to 8 mL.

Next, polymerization was carried out in the same manner as Example II-2, except for the following: the catalyst solution prepared above was used, and the polymerization condition was changed as follows. As a result, 1.85 g of a polymer was obtained.

Toluene: 87 mL
Comonomer and its addition amount: tBA (7.0 mL, 49 mmol)
TNOA addition amount: 0.25 mL (0.025 mmol)
Initial catalyst: Catalyst solution 2.5 mL
Initial washing and its time: After a lapse of 2 minutes from the start of the reaction, the catalyst cylinder was washed with 3 mL of toluene.

Refining method: The polymer was precipitated with 100 mL of acetone. Then, 100 mL of acetone and 1 mL of a hydrochloric acid aqueous solution (10 wt. %) were added to the polymer, and the polymer was stirred at room temperature for 30 minutes. Then, the polymer was washed twice with 100 mL of acetone.

[Example II-14]

First, 8 mL of a catalyst solution (AL-40 concentration: about 2 mM) was prepared in the same manner as Example II-10, except for the following: the amount of $Ni(cod)_2$ was changed to 54.8 mg (0.20 mmol); the amount of toluene was changed to 10 mL; the amount of AL-40 was changed to 10.6 mg (0.016 mmol); and the amount of the solution of $Ni(cod)_2$ in toluene, which was added to AL-40, was changed to 8 mL.

Next, polymerization was carried out in the same manner as Example II-2, except for the following: the catalyst solution prepared above was used, and the polymerization condition was changed as follows. As a result, 2.44 g of a polymer was obtained.

Toluene: 92 mL
Comonomer and its addition amount: MA (1.6 mL, 18 mmol)
TNOA addition amount: 0.3 mL (0.030 mmol)
Initial catalyst: Catalyst solution 3 mL
Initial washing and its time: After a lapse of 2 minutes from the start of the reaction, the catalyst cylinder was washed with 3 mL of toluene.

Refining method: The polymer was precipitated with 100 mL of acetone. Then, 100 mL of acetone and 1 mL of a hydrochloric acid aqueous solution (10 wt. %) were added to the polymer, and the polymer was stored overnight in a refrigerator. Then, the polymer was washed twice with 100 mL of acetone.

[Example II-15]

First, 3 mL of a catalyst solution (AL-40 concentration: about 5 mM) was prepared in the same manner as Example II-10, except for the following: 10.3 mg (0.04 mmol) of $Ni(acac)_2$ was used instead of $Ni(cod)_2$; the amount of toluene was changed to 8 mL; the amount of AL-40 was changed to 9.7 mg (0.015 mmol); and the amount of the solution of the metal complex in toluene, which was added to AL-40, was changed to 3 mL.
Next, polymerization was carried out in the same manner as Example II-2, except for the following: the catalyst solution prepared above was used, and the polymerization condition was changed as follows. As a result, 1.99 g of a polymer was obtained.

Toluene: 94 mL
Comonomer and its addition amount: MA (1.6 mL, 18 mmol)
TNOA addition amount: 0.3 mL (0.030 mmol)
Initial catalyst: Catalyst solution 1.2 mL

Reaction terminator: Instead of the solution of 1,2-butanediol in toluene, 0.3 mL of a solution (2 M) of deuterated acetic acid in toluene was added.

Reaction time: 43 Minutes

[Example II-16]

First, 16 mL of a catalyst solution (AL-40 concentration: about 1 mM) was prepared in the same manner as Example II-10, except for the following: the amount of $Ni(cod)_2$ was changed to 55.7 mg (0.20 mmol); the amount of toluene was changed to 20 mL; the amount of AL-40 was changed to 10.4 mg (0.016 mmol); and the amount of the solution of $Ni(cod)_2$ in toluene, which was added to AL-40, was changed to 16 mL.
Next, polymerization was carried out in the same manner as Example II-2, except for the following: the catalyst solution prepared above was used; the catalyst addition was carried out as described below; and the polymerization condition was changed as follows. As a result, 1.01 g of a polymer was obtained.

Toluene: 90 mL
Comonomer and its addition amount: A solution of NB in toluene (about 3.9 mL, 3.64 g, 0.753 g/g, 29 mmol)
TNOA: None
Nitrogen pressure: 0.2 MPa
Ethylene pressure: 0.8 MPa (Inner pressure 1.0 MPa)

Initial catalyst: First, 1 mL of the catalyst solution was injected. In addition, 2 mL of toluene was very slowly added. Then, the obtained catalyst solution was added to the autoclave by high-pressure nitrogen.
Initial washing and its time: After a lapse of 4 minutes from the start of the reaction, the catalyst cylinder was washed with 3 mL of toluene.
Catalyst addition: After a lapse of 15 minutes and 18 minutes from the start of the reaction, 2 mL of the catalyst solution was injected into the catalyst cylinder and then added to the autoclave by high-pressure nitrogen each. After a lapse of 20 minutes from the start of the reaction, the catalyst cylinder was washed with 3 mL of toluene, and the washing solution was added to the autoclave by high-pressure nitrogen. In addition, after a lapse of 26 minutes and 29 minutes from the start of the reaction, 3 mL of the catalyst solution was injected into the catalyst cylinder and then added to the autoclave by high-pressure nitrogen each. After a lapse of 33 minutes from the start of the reaction, the catalyst cylinder was washed with 3 mL of toluene, and the washing solution was added to the autoclave by high-pressure nitrogen.

Reaction time: 48 Minutes

[Example II-17]

First, 6 mL of a catalyst solution (AL-40 concentration: about 4 mM) was prepared in the same manner as Example II-10, except for the following: the amount of $Ni(cod)_2$ was changed to 88.1 mg (0.32 mmol); the amount of toluene was changed to 8 mL; the amount of AL-40 was changed to 15.7 mg (0.024 mmol); and the amount of the solution of $Ni(cod)_2$ in toluene, which was added to AL-40, was changed to 6 mL.
Next, polymerization was carried out in the same manner as Example II-2, except for the following: the catalyst solution prepared above was used, and the polymerization condition was changed as follows. As a result, 2.82 g of a

polymer was obtained.

Toluene: 64 mL
Comonomer and its addition amount: VC (about 9.7 mL, 13.2 g, 153 mmol)
TNOA: 0.5 mL (0.05 mmol)
Nitrogen pressure: 0 MPa
Ethylene pressure: 2.5 MPa
Initial catalyst: Catalyst solution 2.5 mL
Initial washing and its time: None
Reaction time: One minute

[Example II-18]

First, 13.1 mg (0.015 mmol) of AL-40/NiArPy obtained in Synthesis Example II-8, was weighed out. Next, 3 mL of toluene was added thereto, thereby preparing a metal complex solution (hereinafter, it is referred to as "catalyst solution") (AL-40 concentration: about 5 mM).
Next, a polymerization operation was carried out in the same manner as Example II-2, except for the following: the catalyst solution prepared above was used, and the polymerization condition was changed as follows. As a result, 2.48 g of a polymer was obtained.

Toluene: 94 mL
Comonomer and its addition amount: MA (1.6 mL, 18 mmol)
Initial catalyst: Catalyst solution 1.2 mL
Initial washing and its time: After a lapse of 2 minutes from the start of the reaction, the catalyst cylinder was washed with 3 mL of toluene.
Reaction time: 48 Minutes

[Example II-19]

First, 4 mL of a catalyst solution (AL-58 concentration: about 10 mM) was prepared in the same manner as Example II-1, except for the following: 15.1 mg (0.06 mmol) of $Ni(acac)_2$ was used instead of $Ni(cod)_2$; the amount of toluene was changed to 6 mL; 19.0 mg (0.04 mmol) of AL-58, which was obtained in Synthesis Example II-3, was used instead of AL-39; and the amount of the solution of $Ni(acac)_2$ in toluene, which was added to AL-58, was changed to 4 mL.
Next, a polymerization operation was carried out in the same manner as Example II-2, except for the following: the catalyst solution prepared above was used; the catalyst addition was carried out as described below; and the polymerization condition was changed as follows. As a result, 0.17 g of a polymer was obtained.

Toluene: 93 mL
Comonomer and its addition amount: MA (1.6 mL, 18 mmol)
TNOA addition amount: 1.0 mL (0.10 mmol)
Initial catalyst: Catalyst solution 1.0 mL
Initial washing and its time: After a lapse of 2 minutes from the start of the reaction, the catalyst cylinder was washed with 3 mL of toluene.

Catalyst addition: After a lapse of 23 minutes from the start of the reaction, 2 mL of the catalyst solution was injected into the catalyst cylinder and then added to the autoclave by high-pressure nitrogen. After a lapse of 26 minutes from the start of the reaction, the catalyst cylinder was washed with 3 mL of toluene, and the washing solution was added to the autoclave by high-pressure nitrogen.

[Example II-20]

First, 4 mL of a catalyst solution (AL-59 concentration: about 10 mM) was prepared in the same manner as Example II-1, except for the following: 15.6 mg (0.06 mmol) of $Ni(acac)_2$ was used instead of $Ni(cod)_2$; the amount of toluene was changed to 6 mL; 19.6 mg (0.04 mmol) of AL-59, which was obtained in Synthesis Example II-4, was used instead of AL-39; and the amount of the solution of $Ni(acac)_2$ in toluene, which was added to AL-59, was changed to 4 mL.
Next, a polymerization operation was carried out in the same manner as Example II-2, except for the following: the catalyst solution prepared above was used, and the polymerization condition was changed as follows. As a result, 1.64 g of a polymer was obtained.

Toluene: 93 mL
Comonomer and its addition amount: MA (1.6 mL, 18 mmol)
TNOA addition amount: 1.0 mL (0.10 mmol)
Initial catalyst: Catalyst solution 1.0 mL
Initial washing and its time: After a lapse of 2 minutes from the start of the reaction, the catalyst cylinder was washed with 3 mL of toluene.

[Example II-21]

First, 3 mL of a catalyst solution (AL-63 concentration: about 5 mM) was prepared in the same manner as Example II-1, except for the following: 10.2 mg (0.04 mmol) of $Ni(acac)_2$ was used instead of $Ni(cod)_2$; the amount of toluene was changed to 8 mL; 11.2 mg (0.015 mmol) of AL-63, which was obtained in Synthesis Example II-5, was used instead of AL-39; and the amount of the solution of $Ni(acac)_2$ in toluene, which was added to AL-63, was changed to 3 mL.

Next, a polymerization operation was carried out in the same manner as Example II-2, except for the following: the catalyst solution prepared above was used, and the polymerization condition was changed as follows. As a result, 3.79 g of a polymer was obtained.

Toluene: 94 mL
Comonomer and its addition amount: MA (1.6 mL, 18 mmol)
Initial catalyst: Catalyst solution 1.2 mL
Initial washing and its time: After a lapse of 2 minutes from the start of the reaction, the catalyst cylinder was washed with 3 mL of toluene.

[Example II-22]

First, 4 mL of a catalyst solution (AL-64 concentration: about 10 mM) was prepared in the same manner as Example II-1, except for the following: 15.4 mg (0.06 mmol) of $Ni(acac)_2$ was used instead of $Ni(cod)_2$; the amount of toluene was changed to 6 mL; 23.8 mg (0.04 mmol) of AL-64, which was obtained in Synthesis Example II-6, was used instead of AL-39; and the amount of the solution of $Ni(acac)_2$ in toluene, which was added to AL-64, was changed to 4 mL.

Next, a polymerization operation was carried out in the same manner as Example II-2, except for the following: the catalyst solution prepared above was used, and the polymerization condition was changed as follows. As a result, 4.80 g of a polymer was obtained.

Toluene: 94 mL
TNOA addition amount: 1.0 mL (0.10 mmol)
Initial washing and its time: After a lapse of 2 minutes from the start of the reaction, the catalyst cylinder was washed with 3 mL of toluene.
Reaction time: 45 Minutes

[Example II-23]

First, 4 mL of a catalyst solution (AL-66 concentration: about 10 mM) was prepared in the same manner as Example II-1, except for the following: 15.6 mg (0.060 mmol) of $Ni(acac)_2$ was used instead of $Ni(cod)_2$; the amount of toluene was changed to 6 mL; 21.9 mg (0.040 mmol) of AL-66, which was obtained in Synthesis Example II-7, was used instead of AL-39; and the amount of the solution of $Ni(acac)_2$ in toluene, which was added to AL-66, was changed to 4 mL.

Next, a polymerization operation was carried out in the same manner as Example II-2, except for the following: the catalyst solution prepared above was used, and the polymerization condition was changed as follows. As a result, 3.11 g of a polymer was obtained.

Toluene: 94 mL
TNOA addition amount: 0.5 mL (0.05 mmol)
Comonomer and its addition amount: MA (0.9 mL, 10 mmol)
Initial catalyst: Catalyst solution 1.0 mL
Initial washing and its time: After a lapse of 2 minutes from the start of the reaction, the catalyst cylinder was washed with 3 mL of toluene.
Reaction terminator: Instead of 1,2-butanediol, 0.5 mL of deuterated acetic acid was added.
Reaction time: 43 Minutes

[Example II-24]

First, 4 mL of a catalyst solution (AL-70 concentration: about 10 mM) was prepared in the same manner as Example II-1, except for the following: 15.4 mg (0.060 mmol) of $Ni(acac)_2$ was used instead of $Ni(cod)_2$; the amount of toluene was changed to 6 mL; 16.9 mg (0.040 mmol) of AL-70, which was obtained in Synthesis Example II-9, was used instead of AL-39; and the amount of the solution of $Ni(acac)_2$ in toluene, which was added to AL-70, was changed to 4 mL.
Next, a polymerization operation was carried out in the same manner as Example II-2, except for the following: the catalyst solution prepared above was used, and the polymerization condition was changed as follows. As a result, 0.25 g of a polymer was obtained.

Toluene: 94 mL
TNOA addition amount: 1.0 mL (0.10 mmol)
Comonomer and its addition amount: MA (0.3 mL, 3.3 mmol)
Initial catalyst: Catalyst solution 1.0 mL
Initial washing and its time: After a lapse of 2 minutes from the start of the reaction, the catalyst cylinder was washed with 3 mL of toluene.
Reaction terminator: Instead of 1,2-butanediol, 0.5 mL of deuterated acetic acid was added.

[Example II-25]

First, 3 mL of a catalyst solution (AL-72 concentration: about 5 mM) was prepared in the same manner as Example II-1, except for the following: 10.3 mg (0.040 mmol) of $Ni(acac)_2$ was used instead of $Ni(cod)_2$; the amount of toluene was changed to 8 mL; 12.4 mg (0.015 mmol) of AL-72, which was obtained in Synthesis Example II-10, was used instead of AL-39; and the amount of the solution of $Ni(acac)_2$ in toluene, which was added to AL-72, was changed to 3 mL.
Next, a polymerization operation was carried out in the same manner as Example II-2, except for the following: the catalyst solution prepared above was used, and the polymerization condition was changed as follows. As a result, 2.29 g of a polymer was obtained.

Toluene: 94 mL
Comonomer and its addition amount: MA (1.6 mL, 18 mmol)
Initial catalyst: Catalyst solution 1.2 mL
Initial washing and its time: After a lapse of 2 minutes from the start of the reaction, the catalyst cylinder was washed with 3 mL of toluene.
Reaction terminator: Instead of 1,2-butanediol, 0.3 mL of deuterated acetic acid was added.

[Example II-26]

First, 4 mL of a catalyst solution (AL-73 concentration: about 10 mM) was prepared in the same manner as Example II-1, except for the following: 15.1 mg (0.060 mmol) of $Ni(acac)_2$ was used instead of $Ni(cod)_2$; the amount of toluene was changed to 6 mL; 17.6 mg (0.040 mmol) of AL-73, which was obtained in Synthesis Example II-11, was used instead of AL-39; and the amount of the solution of $Ni(acac)_2$ in toluene, which was added to AL-73, was changed to 4 mL.
Next, a polymerization operation was carried out in the same manner as Example II-2, except for the following: the catalyst solution prepared above was used; the catalyst addition was carried out as described below; and the polymerization condition was changed as follows. As a result, 2.72 g of a polymer was obtained.

Toluene: 95 mL
Comonomer and its addition amount: MA (0.3 mL, 3.3 mmol)
TNOA addition amount: 1.0 mL (0.10 mmol)
Initial catalyst: Catalyst solution 1.0 mL
Initial washing and its time: After a lapse of 2 minutes from the start of the reaction, the catalyst cylinder was washed with 3 mL of toluene.

Catalyst addition: After a lapse of 9 minutes from the start of the reaction, 1 mL of the catalyst solution was injected into the catalyst cylinder and then added to the autoclave by high-pressure nitrogen. After a lapse of 14 minutes from the start of the reaction, the catalyst cylinder was washed with 3 mL of toluene, and the washing solution was added to the autoclave by high-pressure nitrogen.

Reaction time: 39 Minutes

[Example II-27]

First, 4 mL of a catalyst solution (AL-58 concentration: about 10 mM) was prepared in the same manner as Example II-1, except for the following: the amount of $Ni(cod)_2$ was changed to 16.8 mg (0.060 mmol); the amount of toluene was changed to 6 mL; 19.8 mg (0.040 mmol) of AL-58, which was obtained in Synthesis Example II-3, was used instead of AL-39; and the amount of the solution of $Ni(cod)_2$ in toluene, which was added to AL-58, was changed to 4 mL.

Next, 50 mL of toluene was put in a 0.2 L autoclave. Then, 25 g of propylene was added. The temperature inside of the autoclave was increased to 50°C. Next, 2 mL of the catalyst solution (hereinafter, it is referred to as initial catalyst-2) was injected into the catalyst cylinder and then added to the autoclave by high-pressure nitrogen. This point of time was determined as reaction starting time. After a lapse of 3 minutes from the start of the reaction, the catalyst cylinder was washed with 3 mL of toluene, and the washing solution was added to the autoclave by high-pressure nitrogen (hereinafter, it is referred to as initial washing and its time-2). After a lapse of 60 minutes from the start of the reaction (hereinafter, it is referred to as reaction time-2), 3 mL of a solution (0.2 M) of 1,2-butanediol in toluene was added to terminate the reaction, and the propylene was depressurized.

Refining method: The toluene solution was recovered and concentrated, thereby obtaining a yellow oily polymer. Then, the polymer was dissolved in 10 mL of heptane, and 100 mg of ISOLUTE (registered trademark) SCX-2 (manufactured by Biotage Japan Ltd.) was added thereto. The mixture was stirred at 80°C for one hour. The SCX-2 was removed therefrom by filtration, and the filtrate was concentrated by an evaporator, thereby obtaining a colorless and transparent polymer. The polymer was vacuum-dried at 80°C for 3 hours or more, thereby obtaining 0.03 g of a polymer.

[Example II-28]

First, 4 mL of a catalyst solution (AL-59 concentration: about 10 mM) was prepared in the same manner as Example II-1, except for the following: the amount of $Ni(cod)_2$ was changed to 16.4 mg (0.060 mmol); the amount of toluene was changed to 6 mL; 19.9 mg (0.040 mmol) of AL-59, which was obtained in Synthesis Example II-4, was used instead of AL-39; and the amount of the solution of $Ni(cod)_2$ in toluene, which was added to AL-59, was changed to 4 mL.

Next, a polymerization operation was carried out in the same manner as Example II-27, except for the following: the catalyst solution prepared above was used, and the polymerization condition was changed as follows. As a result, 6.11 g of a polymer was obtained.

Initial washing and its time-2: After a lapse of 5 minutes from the start of the reaction, the catalyst cylinder was washed with 3 mL of toluene.

[Example II-29]

First, 3 mL of a catalyst solution (AL-59 concentration: about 10 mM) was prepared in the same manner as Example II-1, except for the following: the amount of $Ni(cod)_2$ was changed to 16.3 mg (0.060 mmol); the amount of toluene was changed to 6 mL; 14.9 mg (0.030 mmol) of AL-59, which was obtained in Synthesis Example II-4, was used instead of AL-39; and the amount of the solution of $Ni(cod)_2$ in toluene, which was added to AL-59, was changed to 3 mL.

Next, 43 mL of toluene was put in a 0.2 L autoclave. Then, 2.2 mL (10 mmol) of MU and 0.2 mL of a solution (0.1 M) of $Al(OiPr)_3$ in toluene were added through a reagent inlet. Then, 25 g of propylene was added. The temperature inside of the autoclave was increased to 50°C. Next, 2 mL of the catalyst solution was injected into the catalyst cylinder and then added to the autoclave by high-pressure nitrogen. This point of time was determined as reaction starting time. After a lapse of 2 minutes from the start of the reaction, the catalyst cylinder was washed with 3 mL of toluene, and the washing solution was added to the autoclave by high-pressure nitrogen. After a lapse of 60 minutes from the start of the reaction, 3 mL of a solution (0.2 M) of 1,2-butanediol in toluene was added to terminate the reaction, and the propylene was depressurized.

Refining method: The toluene solution was recovered and concentrated, thereby obtaining a yellow oily liquid. The liquid was heated to 120°C and vacuum-dried for 20 minutes. Next, the polymer was heated to 150°C and vacuum-dried for 40 minutes. Then, 10 mL of heptane was added thereto, and 100 mg of ISOLUTE (registered trademark) SCX-2 (manufactured by Biotage Japan Ltd.) was added thereto. The mixture was stirred at 80°C for one hour. The SCX-2 was removed therefrom by filtration, and the filtrate was concentrated by an evaporator, thereby obtaining a colorless and transparent polymer. The liquid was dried at 80°C for 3 hours or more, thereby obtaining 0.57 g of a polymer (residual MU amount: 0 mol %).

[Example II-30]

First, 3 mL of a catalyst solution (AL-63 concentration: about 10 mM) was prepared in the same manner as Example II-1, except for the following: the amount of $Ni(cod)_2$ was changed to 13.8 mg (0.050 mmol); the amount of toluene was changed to 5 mL; 23.0 mg (0.030 mmol) of AL-63, which was obtained in Synthesis Example II-5, was used instead of

AL-39; and the amount of the solution of Ni(cod)$_2$ in toluene, which was added to AL-63, was changed to 3 mL.

Next, a polymerization operation was carried out in the same manner as Example II-27, except for the following: the catalyst solution prepared above was used, and the polymerization condition was changed as follows. As a result, 4.80 g of a polymer was obtained.

Initial catalyst-2: 1.0 mL

Initial washing and its time-2: After a lapse of 2 minutes from the start of the reaction, the catalyst cylinder was washed with 3 mL of toluene.

Reaction time-2: 6 Minutes

[Example II-31]

First, 3 mL of a catalyst solution (AL-64 concentration: about 10 mM) was prepared in the same manner as Example II-1, except for the following: the amount of Ni(cod)$_2$ was changed to 13.8 mg (0.050 mmol); the amount of toluene was changed to 5 mL; 17.9 mg (0.030 mmol) of AL-64, which was obtained in Synthesis Example II-6, was used instead of AL-39; and the amount of the solution of Ni(cod)$_2$ in toluene, which was added to AL-64, was changed to 3 mL.

Next, a polymerization operation was carried out in the same manner as Example II-27, except for the following: the catalyst solution prepared above was used, and the polymerization condition was changed as follows. As a result, 6.87 g of a polymer was obtained.

Initial catalyst-2: 1.0 mL

Initial washing and its time-2: After a lapse of 2 minutes from the start of the reaction, the catalyst cylinder was washed with 3 mL of toluene.

[Example II-32]

First, 3 mL of a catalyst solution (AL-66 concentration: about 10 mM) was prepared in the same manner as Example II-1, except for the following: the amount of Ni(cod)$_2$ was changed to 13.8 mg (0.050 mmol); the amount of toluene was changed to 5 mL; 16.3 mg (0.030 mmol) of AL-66, which was obtained in Synthesis Example II-7, was used instead of AL-39; and the amount of the solution of Ni(cod)$_2$ in toluene, which was added to AL-66, was changed to 3 mL.

Next, a polymerization operation was carried out in the same manner as Example II-27, except for the following: the catalyst solution prepared above was used, and the polymerization condition was changed as follows. As a result, 6.30 g of a polymer was obtained.

Initial catalyst-2: 1.0 mL

Initial washing and its time-2: After a lapse of 2 minutes from the start of the reaction, the catalyst cylinder was washed with 3 mL of toluene.

[Example II-33]

First, 4 mL of a catalyst solution (AL-70 concentration: about 10 mM) was prepared in the same manner as Example II-1, except for the following: the amount of Ni(cod)$_2$ was changed to 16.9 mg (0.060 mmol); the amount of toluene was changed to 6 mL; 17.2 mg (0.040 mmol) of AL-70, which was obtained in Synthesis Example II-9, was used instead of AL-39; and the amount of the solution of Ni(cod)$_2$ in toluene, which was added to AL-70, was changed to 4 mL.

Next, a polymerization operation was carried out in the same manner as Example II-27, except for the following: the catalyst solution prepared above was used, and the polymerization condition was changed as follows. As a result, 1.11 g of a polymer was obtained.

Initial catalyst-2: 1.0 mL

The polymerization conditions of Examples II-1 to II-26 are shown in Table 8, and the results thus obtained are shown in Table 9. The polymerization conditions of Examples II-27 to II-33 are shown in Table 10, and the results thus obtained are shown in Table 11. In the following tables, "n.m." means "not measured" (i.e., a sufficient amount of sample for measurement was not obtained), and "n.d." means "not detected" (i.e., below the detection limit).

[Table 8]

Table 8

| Example | Ligand | | Transition metal compound | Catalyst composition or metal complex | Ethylene | Comonomer | | TNOA | Temperature | Type |
|---|---|---|---|---|---|---|---|---|---|---|
| | Type | mmol | mmol | | MPa | Type | mmol | mmol | °C | min |
| II-1 | AL-39 | 0.001 | 0.010 | AL-39/Ni(cod)$_2$ | 2.5 | - | - | - | 90 | 45 |
| II-2 | AL-39 | 0.004 | 0.040 | AL-39/Ni(cod)$_2$ | 2.5 | tBA | 2.1 | 0.03 | 90 | 60 |
| II-3 | AL-39 | 0.020 | 0.200 | AL-39/Ni(cod)$_2$ | 2.5 | tBA | 8.3 | 0.10 | 90 | 60 |
| II-4 | AL-39 | 0.020 | 0.200 | AL-39/Ni(cod)$_2$ | 2.5 | tBA | 15 | 0.10 | 90 | 60 |
| II-5 | AL-39 | 0.010 | 0.100 | AL-39/Ni(cod)$_2$ | 2.5 | tBA | 25 | 0.05 | 90 | 60 |
| II-6 | AL-39 | 0.016 | 0.160 | AL-39/Ni(cod)$_2$ | 2.5 | MA | 10 | 0.05 | 90 | 60 |
| II-7 | AL-39 | 0.010 | 0.010 | AL-39/Ni(acac)$_2$ | 2.5 | MA | 10 | 0.05 | 90 | 60 |
| II-8 | AL-39 | 0.006 | 0.006 | AL-39/Ni(acac)$_2$ | 2.5 | MA | 10 | 0.03 | 100 | 60 |
| II-9 | AL-39 | 0.012 | 0.120 | AL-39/Ni(cod)$_2$ | 2.5 | VC | 157 | 0.05 | 90 | 35 |
| II-10 | AL-40 | 0.002 | 0.020 | AL-40/Ni(cod)$_2$ | 2.5 | tBA | 2.1 | 0.01 | 90 | 42 |
| II-11 | AL-40 | 0.006 | 0.060 | AL-40/Ni(cod)$_2$ | 2.5 | tBA | 8.3 | 0.03 | 90 | 21 |
| II-12 | AL-40 | 0.005 | 0.050 | AL-40/Ni(cod)$_2$ | 2.5 | tBA | 24 | 0.025 | 90 | 60 |
| II-13 | AL-40 | 0.005 | 0.050 | AL-40/Ni(cod)$_2$ | 2.5 | tBA | 49 | 0.025 | 90 | 60 |
| II-14 | AL-40 | 0.006 | 0.060 | AL-40/Ni(cod)$_2$ | 2.5 | MA | 18 | 0.03 | 90 | 60 |
| II-15 | AL-40 | 0.006 | 0.006 | AL-40/Ni(acac)$_2$ | 2.5 | MA | 18 | 0.03 | 90 | 43 |
| II-16 | AL-40 | 0.011 | 0.110 | AL-40/Ni(cod)$_2$ | 0.8 | NB | 29 | - | 90 | 48 |
| II-17 | AL-40 | 0.010 | 0.100 | AL-40/Ni(cod)$_2$ | 2.5 | VC | 153 | 0.05 | 90 | 1 |
| II-18 | AL-40 | 0.006 | 0.006 | AL-40/NiArPy | 2.5 | MA | 18 | 0.03 | 90 | 48 |
| II-19 | AL-58 | 0.030 | 0.030 | AL-58/Ni(acac)$_2$ | 2.5 | MA | 18 | 0.10 | 90 | 60 |
| II-20 | AL-59 | 0.010 | 0.010 | AL-59/Ni(acac)$_2$ | 2.5 | MA | 18 | 0.10 | 90 | 60 |
| II-21 | AL-63 | 0.006 | 0.006 | AL-63/Ni(acac)$_2$ | 2.5 | MA | 18 | 0.03 | 90 | 60 |
| II-22 | AL-64 | 0.020 | 0.020 | AL-64/Ni(acac)$_2$ | 2.5 | tBA | 2.1 | 0.10 | 90 | 45 |
| II-23 | AL-66 | 0.010 | 0.010 | AL-66/Ni(acac)$_2$ | 2.5 | MA | 10 | 0.05 | 90 | 43 |
| II-24 | AL-70 | 0.010 | 0.010 | AL-70/Ni(acac)$_2$ | 2.5 | MA | 3.3 | 0.10 | 90 | 60 |

(continued)

| Example | Ligand | | Transition metal compound | Catalyst composition or metal complex | Ethylene | Comonomer | | TNOA | Temperature | Type |
|---|---|---|---|---|---|---|---|---|---|---|
| | Type | mmol | mmol | | MPa | Type | mmol | mmol | °C | min |
| II-25 | AL-72 | 0.006 | 0.006 | AL-72/Ni(acac)$_2$ | 2.5 | MA | 18 | 0.03 | 90 | 60 |
| II-26 | AL-73 | 0.020 | 0.020 | AL-73/Ni(acac)$_2$ | 2.5 | MA | 3.3 | 0.10 | 90 | 39 |

[Table 9]

Table 9

| Example | Ligand | Polymer yield | Activity | Mw | Mw/Mn | Methyl branching | Comonomer content |
|---|---|---|---|---|---|---|---|
| | | g | kg/mol/h | × $10^3$ | | Number of methyl branches per 1000 carbon atoms | mol % |
| II-1 | AL-39 | 3.17 | 4200 | 163 | 2.0 | n.m. | - |
| II-2 | AL-39 | 0.83 | 210 | 142 | 3.0 | 0.6 | 0.4 |
| II-3 | AL-39 | 2.85 | 140 | 104 | 2.7 | 0.5 | 1.8 |
| II-4 | AL-39 | 3.06 | 150 | 105 | 2.1 | 0.6 | 3.6 |
| II-5 | AL-39 | 1.04 | 100 | 88 | 2.2 | 0.3 | 5.4 |
| II-6 | AL-39 | 2.46 | 150 | 76 | 2.1 | 0.3 | 5.1 |
| II-7 | AL-39 | 1.30 | 130 | 71 | 2.2 | 0.5 | 6.4 |
| II-8 | AL-39 | 1.33 | 220 | 61 | 2.2 | 0.5 | 6.2 |
| II-9 | AL-39 | 0.55 | 79 | 81 | 2.9 | 0.7 | 1.9 |
| II-10 | AL-40 | 3.17 | 2300 | 70 | 2.2 | 0.7 | 0.3 |
| II-11 | AL-40 | 2.83 | 1300 | 50 | 2.2 | 0.7 | 1.1 |
| II-12 | AL-40 | 2.42 | 480 | 39 | 2.0 | 0.6 | 3.1 |
| II-13 | AL-40 | 1.85 | 370 | 27 | 2.0 | 0.5 | 5.8 |
| II-14 | AL-40 | 2.44 | 410 | 32 | 2.0 | 0.5 | 5.8 |
| II-15 | AL-40 | 1.99 | 460 | 32 | 2.0 | 0.4 | 6.0 |
| II-16 | AL-40 | 1.01 | 110 | 59 | 3.4 | n.d. | 15.3 |
| II-17 | AL-40 | 2.82 | 17000 | 30 | 2.1 | 1.3 | 1.9 |
| II-18 | AL-40 | 2.48 | 520 | 34 | 2.0 | 0.4 | 5.7 |
| II-19 | AL-58 | 0.17 | 5.7 | 14 | 5.6 | 0.5 | 4.9 |
| II-20 | AL-59 | 1.64 | 160 | 2.7 | 1.7 | 0.6 | 3.6 |
| II-21 | AL-63 | 3.79 | 640 | 47 | 2.0 | 0.3 | 4.9 |
| II-22 | AL-64 | 4.80 | 320 | 103 | 2.2 | 0.8 | 0.7 |
| II-23 | AL-66 | 3.11 | 430 | 22 | 2.0 | 0.9 | 3.6 |
| II-24 | AL-70 | 0.25 | 25 | 3.4 | 1.9 | 1.9 | 1.6 |
| II-25 | AL-72 | 2.29 | 370 | 33 | 2.3 | 0.4 | 5.8 |
| II-26 | AL-73 | 2.72 | 210 | 4.6 | 1.8 | 1.8 | 0.9 |

[Table 10]

Table 10

| Example | Ligand | | Transition metal compound | Catalyst composition or metal complex | Propylene | Comonomer | | Al(OiPr)3 | Temperature | Time |
|---|---|---|---|---|---|---|---|---|---|---|
| | Type | mmol | mmol | | g | Type | mmol | mmol | °C | min |
| II-27 | AL-58 | 0.020 | 0.020 | AL-58/Ni(cod)$_2$ | 25 | - | - | - | 50 | 60 |
| II-28 | AL-59 | 0.020 | 0.020 | AL-59/Ni(cod)$_2$ | 25 | - | - | - | 50 | 60 |
| II-29 | AL-59 | 0.020 | 0.020 | AL-59/Ni(cod)$_2$ | 25 | MU | 10 | 0.020 | 50 | 60 |
| II-30 | AL-63 | 0.010 | 0.010 | AL-63/Ni(cod)$_2$ | 25 | - | - | - | 50 | 6 |
| II-31 | AL-64 | 0.010 | 0.010 | AL-64/Ni(cod)$_2$ | 25 | - | - | - | 50 | 60 |
| II-32 | AL-66 | 0.010 | 0.010 | AL-66/Ni(cod)$_2$ | 25 | - | - | - | 50 | 60 |
| II-33 | AL-70 | 0.010 | 0.010 | AL-70/Ni(cod)$_2$ | 25 | - | - | - | 50 | 60 |

[Table 11]

Table 11

| Example | Ligand | Polymer yield | Activity | Mw | Mw/Mn | Comonomer content | Regularity | | |
|---|---|---|---|---|---|---|---|---|---|
| | | g | kg/mol/h | $\times 10^3$ | | mol % | mm | mr | rr |
| II-27 | AL-58 | 0.03 | 1.5 | 12 | 9.9 | - | n.m. | n.m. | n.m. |
| II-28 | AL-59 | 6.11 | 300 | 1.0 | 1.6 | - | 26 | 45 | 29 |
| II-29 | AL-59 | 0.57 | 28 | 1.3 | 1.4 | 1.0 | 27 | 45 | 28 |
| II-30 | AL-63 | 4.80 | 4700 | 0.6 | 1.3 | - | 8 | 39 | 53 |
| II-31 | AL-64 | 6.87 | 690 | 1.1 | 1.6 | - | 11 | 42 | 47 |
| II-32 | AL-66 | 6.30 | 630 | 0.5 | 1.3 | - | 12 | 40 | 48 |
| II-33 | AL-70 | 1.11 | 110 | 1.2 | 1.5 | - | 49 | 33 | 18 |

The examples of the second embodiment of the present invention can be also compared to Comparative Examples 1 to 3 described under "Example I series".

A comparison between the examples of the second embodiment of the present invention and the comparative examples, revealed the following: the novel compound configured to be used as the ligand of the second embodiment of the present invention, the metal complex, olefin polymerization catalyst composition and olefin polymerization catalyst using the novel compound, and the olefin-based polymer production method using the catalyst, can be used for polymerization or copolymerization of olefins while achieving improved catalytic performance such as activity and molecular weight, and they can be used for, especially, copolymerization of an acyclic olefin and at least one kind of monomer selected from the group consisting of a polar group-containing monomer and a cyclic olefin.

## Claims

1. A compound represented by the following general formula (A) :

[Chem. 1]

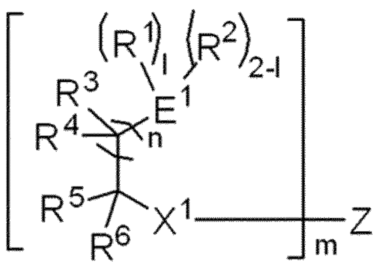

Formula (A)

[where

X$^1$ represents an oxygen atom or a sulfur atom;
E$^1$ represents a nitrogen atom, a phosphorus atom, an arsenic atom or an antimony atom;
Z represents a hydrogen atom, a leaving group or a cation having a valence of 1 or more and 4 or less;
m is an integer more than or equal to 1 and less than or equal to a valence of Z;
n is 0, 1, 2, 3 or 4, and when n is 0, E$^1$ is directly bound to a carbon atom to which X$^1$, R$^5$ and R$^6$ are bound;
R$^1$ represents a hydrocarbon group represented by the following general formula (B) or (C);
R$^2$ represents a hydrocarbon group containing 1 to 20 carbon atoms and optionally containing at least one heteroatom, which is different from the hydrocarbon group represented by the following general formula (B) or (C);
l is 1 or 2, and when l is 2, R$^2$ is absent;
R$^3$, R$^4$, R$^5$ and R$^6$ each independently represent an atom or group selected from the group consisting of the

following (i) to (iv):

(i) a hydrogen atom
(ii) a halogen atom
(iii) a hydrocarbon group containing 1 to 30 carbon atoms and optionally containing at least one heteroatom
(iv) $OR^b$, $C(O)OR^b$, $C(O)OM'$, $C(O)N(R^a)_2$, $C(O)R^b$, $OC(O)R^b$, $SR^b$, $S(O)_2R^b$, $S(O)R^b$, $OS(O)_2R^b$, $SF_5$, $P(O)(OR^b)_{2-y}(R^a)_y$, CN, $N(H)R^a$, $N(R^b)_2$, $Si(OR^a)_{3-x}(R^a)_x$, $OSi(OR^a)_{3-x}(R^a)_x$, $NO_2$, $S(O)_2OM'$, $P(O)(OM')_2$, $P(O)(OR^b)_2M'$ or an epoxy-containing group (where each $R^a$ independently represents a hydrogen atom or a hydrocarbon group containing 1 to 20 carbon atoms; each $R^b$ independently represents a hydrocarbon group containing 1 to 20 carbon atoms; M' represents an alkaline metal, an alkaline earth metal, an ammonium, a quaternary ammonium or a phosphonium; x represents 0, 1, 2 or 3; and y represents 0, 1 or 2); and $R^3$, $R^4$, $R^5$ and $R^6$ are optionally bound to adjacent substituents to form a 5- to 8-membered alicyclic ring or a 5- to 8-membered heterocyclic ring containing at least one heteroatom selected from the group consisting of an oxygen atom, a nitrogen atom and a sulfur atom]

[Chem. 2]

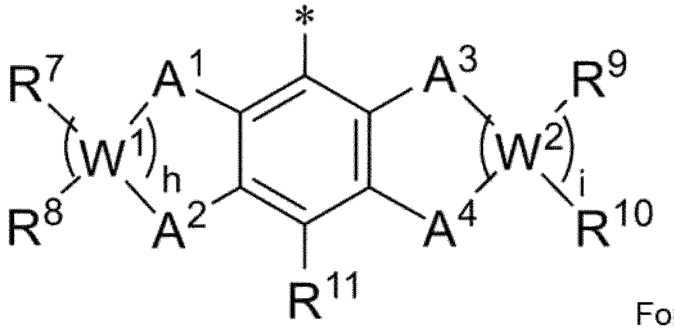

Formula (B)

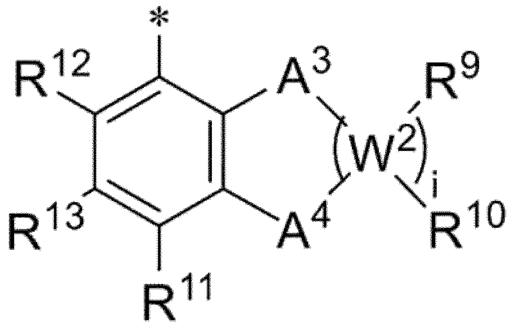

Formula (C)

[where

* represents a bond with $E^1$;
$R^7$, $R^8$, $R^9$, $R^{10}$, $R^{11}$, $R^{12}$ and $R^{13}$ each independently represent the atom or group selected from the group consisting of the above (i) to (iv) defined in the above formula (A), and $R^7$, $R^8$, $R^9$ and $R^{10}$ are optionally bound to adjacent substituents to form a 5-to 8-membered alicyclic ring, a 5- to 8-membered aromatic ring, or a 5- to 8-membered heterocyclic ring containing at least one heteroatom selected from the group consisting of an oxygen atom, a nitrogen atom and a sulfur atom;
$A^1$, $A^2$, $A^3$ and $A^4$ each independently represent an oxygen atom, a sulfur atom, $-C(R)_2-$, -S(O)-, $-S(O)_2-$, -N(R)-, -P(R)- or - P(O) (R)- (where each R independently represents a hydrogen atom or a hydrocarbon group containing 1 to 20 carbon atoms and optionally containing at least one heteroatom);
in the formula (B), at least two selected from the group consisting of $A^1$, $A^2$, $A^3$ and $A^4$ are $-C(R)_2-$;
in the formula (C), at least one selected from the group consisting of $A^3$ and $A^4$ is $-C(R)_2-$ and at least one selected from the group consisting of $R^{12}$ and $R^{13}$ is the atom or group selected from the group consisting of the above (i) and (iii), or in the formula (C), both $A^3$ and $A^4$ are other than $-C(R)_2-$ and both $R^{12}$ and $R^{13}$ are the atom or group selected from the group consisting of the above (i) and (iii);
$W^1$ and $W^2$ each independently represent a carbon atom, a silicon atom, a nitrogen atom, a phosphorus

atom, a boron atom, an oxygen atom, -P(O)- or $-S(O)_2-$, and when it is a nitrogen atom, a phosphorus atom, a boron atom or -P(O)-, $R^8$ and $R^{10}$ are absent,
and when it is an oxygen atom or $-S(O)_2-$, $R^7$ and $R^8$ are absent, as well as $R^9$ and $R^{10}$;
h and i are each independently an integer from 1 to 6, and when two or more $W^1$s, $W^2$s, $R^7$s, $R^8$s, $R^9$s or $R^{10}$s are each present, they may be the same or different from each other.]

**2.** A metal complex represented by the following general formula (D):

[Chem. 3]

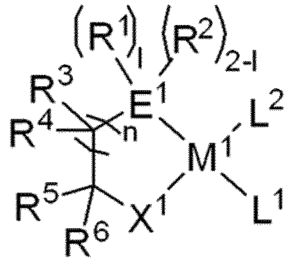

Formula (D)

[where

$X^1$ represents an oxygen atom or a sulfur atom;
$E^1$ represents a nitrogen atom, a phosphorus atom, an arsenic atom or an antimony atom;
n is 0, 1, 2, 3 or 4, and when n is 0, $E^1$ is directly bound to a carbon atom to which $X^1$, $R^5$ and $R^6$ are bound;
$R^1$ represents a hydrocarbon group represented by the following general formula (B) or (C);
$R^2$ represents a hydrocarbon group containing 1 to 20 carbon atoms and optionally containing at least one heteroatom, which is different from the hydrocarbon group represented by the following general formula (B) or (C);
l is 1 or 2, and when l is 2, $R^2$ is absent;
$R^3$, $R^4$, $R^5$ and $R^6$ each independently represent an atom or group selected from the group consisting of the following (i) to (iv):

(i) a hydrogen atom
(ii) a halogen atom
(iii) a hydrocarbon group containing 1 to 30 carbon atoms and optionally containing at least one heteroatom
(iv) $OR^b$, $C(O)OR^b$, C(O)OM', $C(O)N(R^a)_2$, $C(O)R^b$, $OC(O)R^b$, $SR^b$, $S(O)_2R^b$, $S(O)R^b$, OS $(O)_2R^b$, $SF_5$, $P(O)(OR^b)_{2-y}(R^a)_y$, CN, $N(H)R^a$, $N(R^b)_2$, $Si(OR^a)_{3-x}(R^a)_x$, OSi $(OR^a)_{3-x}(R^a)_x$, $NO_2$, $S(O)_2OM'$, $P(O)(OM')_2$, $P(O)(OR^b)_2M'$ or an epoxy-containing group (where each $R^a$ independently represents a hydrogen atom or a hydrocarbon group containing 1 to 20 carbon atoms; each $R^b$ independently represents a hydrocarbon group containing 1 to 20 carbon atoms; M' represents an alkaline metal, an alkaline earth metal, an ammonium, a quaternary ammonium or a phosphonium; x represents 0, 1, 2 or 3; and y represents 0, 1 or 2);

$R^3$, $R^4$, $R^5$ and $R^6$ are optionally bound to adjacent substituents to form a 5- to 8-membered alicyclic ring or a 5- to 8-membered heterocyclic ring containing at least one heteroatom selected from the group consisting of an oxygen atom, a nitrogen atom and
a sulfur atom;
$M^1$ represents a nickel atom or a palladium atom;
$L^1$ and $L^2$ each independently represent a ligand coordinated to $M^1$; and
$L^1$ and $L^2$ are optionally bound to each other to form a ring containing $M^1$]

[Chem. 4]

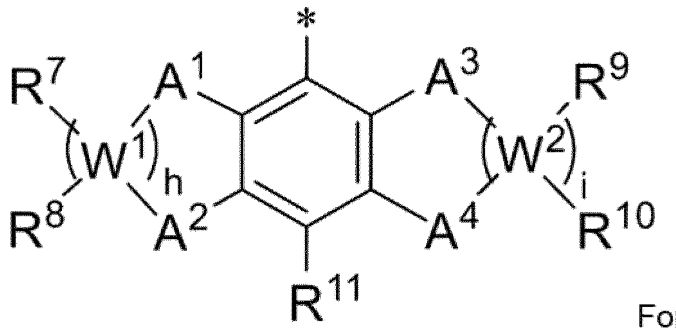

Formula (B)

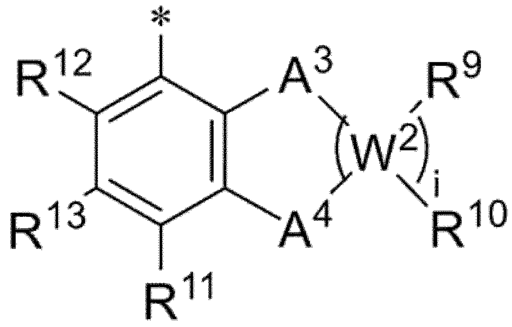

Formula (C)

[where

* represents a bond with $E^1$;
$R^7$, $R^8$, $R^9$, $R^{10}$, $R^{11}$, $R^{12}$ and $R^{13}$ each independently represent the atom or group selected from the group consisting of the above (i) to (iv) defined in the above formula (A);
$R^7$, $R^8$, $R^9$ and $R^{10}$ are optionally bound to adjacent substituents to form a 5- to 8-membered alicyclic ring, a 5- to 8-membered aromatic ring, or a 5- to 8-membered heterocyclic ring containing at least one heteroatom selected from the group consisting of an oxygen atom, a nitrogen atom and a sulfur atom;
$A^1$, $A^2$, $A^3$ and $A^4$ each independently represent an oxygen atom, a sulfur atom, $-C(R)_2-$, -S(O)-, $-S(O)_2-$, -N(R)-, -P(R)- or - P(O) (R)- (where each R independently represents a hydrogen atom or a hydrocarbon group containing 1 to 20 carbon atoms and optionally containing at least one heteroatom);
in the formula (B), at least two selected from the group consisting of $A^1$, $A^2$, $A^3$ and $A^4$ are $-C(R)_2-$;
in the formula (C), at least one selected from the group consisting of $A^3$ and $A^4$ is $-C(R)_2-$ and at least one selected from the group consisting of $R^{12}$ and $R^{13}$ is the atom or group selected from the group consisting of the above (i) and (iii), or in the formula (C), both $A^3$ and $A^4$ are other than $-C(R)_2-$ and both $R^{12}$ and $R^{13}$ are the atom or group selected from the group consisting of the above (i) and (iii);
$W^1$ and $W^2$ each independently represent a carbon atom, a silicon atom, a nitrogen atom, a phosphorus atom, a boron atom, an oxygen atom, -P(O)- or $-S(O)_2-$, and when it is a nitrogen atom, a phosphorus atom, a boron atom or -P(O)-, $R^8$ and $R^{10}$ are absent, and when it is an oxygen atom or $-S(O)_2-$, $R^7$ and $R^8$ are absent, as well as $R^9$ and $R^{10}$;
h and i are each independently an integer from 1 to 6, and when two or more $W^1$s, $W^2$s, $R^7$s, $R^8$s, $R^9$s or $R^{10}$s are each present, they may be the same or different from each other.]

**3.** An olefin polymerization catalyst composition comprising the compound represented by the general formula (A) defined by Claim 1 and a transition metal compound represented by the following general formula (E) or (F):

[Chem. 5]

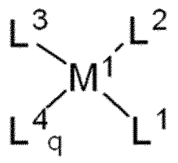

Formula (E)

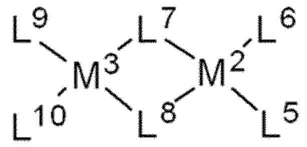

Formula (F)

[where

$M^1$ represents a nickel atom or a palladium atom;
$L^1$ and $L^2$ each independently represent a ligand coordinated to $M^1$;
$L^1$ and $L^2$ are optionally bound to each other to form a ring containing $M^1$;
$M^2$ and $M^3$ each independently represent a nickel atom or a palladium atom;
$L^3$, $L^4$, $L^5$, $L^6$, $L^9$ and $L^{10}$ each independently represent a ligand coordinated to $M^1$, $M^2$ or $M^3$, and $L^7$ and $L^8$ each independently represent a ligand coordinated to $M^2$ and $M^3$;
q is 0, 1 or 2;
$L^3$ and $L^4$ are optionally bound to each other to form a ring containing $M^1$;
$L^5$ and $L^6$ are optionally bound to each other to form a ring containing $M^2$; and
$L^9$ and $L^{10}$ are optionally bound to each other to form a ring containing $M^3$.]

**4.** The compound according to Claim 1, wherein at least one selected from the group consisting of $R^5$ and $R^6$ is the atom or group selected from the group consisting of the above (i), (iii) and (iv).

**5.** The metal complex according to Claim 2, wherein at least one selected from the group consisting of $R^5$ and $R^6$ is the atom or group selected from the group consisting of the above (i), (iii) and (iv).

**6.** The olefin polymerization catalyst composition according to Claim 3, wherein at least one selected from the group consisting of $R^5$ and $R^6$ is the atom or group selected from the group consisting of the above (i), (iii) and (iv).

**7.** The compound according to Claim 1, wherein $R^5$ is the atom or group selected from the group consisting of the above (i) and (iii), and $R^6$ is the atom or group selected from the group consisting of the above (i), the above (iii), $C(O)OR^b$, $C(O)N(R^a)_2$, $C(O)R^b$, $S(O)_2R^b$ and $P(O)(OR^b)_{2-y}(R^a)_y$ (where $R^a$, $R^b$ and y are as defined above in Claim 1).

**8.** The metal complex according to Claim 2, wherein $R^5$ is the atom or group selected from the group consisting of the above (i) and (iii), and $R^6$ is the atom or group selected from the group consisting of the above (i), the above (iii), $C(O)OR^b$, $C(O)N(R^a)_2$, $C(O)R^b$, $S(O)_2R^b$ and $P(O)(OR^b)_{2-y}(R^a)_y$ (where $R^a$, $R^b$ and y are as defined above in Claim 2).

**9.** The olefin polymerization catalyst composition according to Claim 3, wherein $R^5$ is the atom or group selected from the group consisting of the above (i) and (iii), and $R^6$ is the atom or group selected from the group consisting of the above (i), the above (iii), $C(O)OR^b$, $C(O)N(R^a)_2$, $C(O)R^b$, $S(O)_2R^b$ and $P(O)(OR^b)_{2-y}(R^a)_y$ (where $R^a$, $R^b$ and y are as defined above in Claim 1).

**10.** The compound according to any one of Claims 1, 4 and 7, wherein at least one selected from the group consisting of $R^3$ and $R^4$ is the atom or group selected from the group consisting of the above (i), (iii) and (iv).

**11.** The metal complex according to any one of Claims 2, 5 and **8,** wherein at least one selected from the group consisting of $R^3$ and $R^4$ is the atom or group selected from the group consisting of the above (i), (iii) and (iv).

**12.** The olefin polymerization catalyst composition according to any one of Claims 3, 6 and 9, wherein at least one selected from the group consisting of $R^3$ and $R^4$ is the atom or group selected from the group consisting of the above (i), (iii) and

(iv) .

**13.** An olefin polymerization catalyst comprising the olefin polymerization catalyst composition defined by Claim 3.

**14.** An olefin polymerization catalyst comprising the metal complex defined by Claim 2.

**15.** A method for producing an olefin-based polymer, wherein an olefin is polymerized or copolymerized in the presence of the olefin polymerization catalyst defined by Claim 13 or 14.

**16.** A method for producing the olefin-based polymer according to Claim 15, wherein an acyclic olefin is copolymerized with at least one kind of monomer selected from the group consisting of a polar group-containing monomer and a cyclic olefin.

**17.** A compound represented by the following general formula (A):

[Chem. 6]

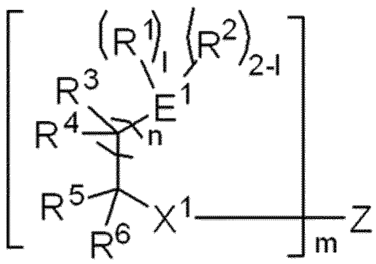

Formula (A)

[where

$X^1$ represents an oxygen atom or a sulfur atom;
$E^1$ represents a nitrogen atom, a phosphorus atom, an arsenic atom or an antimony atom;
Z represents a hydrogen atom, a leaving group or a cation having a valence of 1 or more and 4 or less;
m is an integer more than or equal to 1 and less than or equal to a valence of Z;
n is 0, 1, 2, 3 or 4, and when n is 0, $E^1$ is directly bound to a carbon atom to which $X^1$, $R^5$ and $R^6$ are bound;
$R^1$ represents a hydrocarbon group represented by the following general formula (B) or (C);
$R^2$ represents a hydrocarbon group containing 1 to 20 carbon atoms and optionally containing at least one heteroatom, which is different from the hydrocarbon group represented by the following general formula (B) or (C);
1 is 1 or 2, and when l is 2, $R^2$ is absent;
$R^3$, $R^4$, $R^5$ and $R^6$ each independently represent an atom or group selected from the group consisting of the following (i) to (iv):

(i) a hydrogen atom
(ii) a halogen atom
(iii) a hydrocarbon group containing 1 to 30 carbon atoms and optionally containing at least one heteroatom
(iv) $OR^b$, $C(O)OR^b$, $C(O)OM'$, $C(O)N(R^a)_2$, $C(O)R^b$, $OC(O)R^b$, $SR^b$, $S(O)_2R^b$, $S(O)R^b$, $OS(O)_2R^b$, $SF_5$, $P(O)(OR^b)_{2-y}(R^a)_y$, CN, $N(H)R^a$, $N(R^b)_2$, $Si(OR^a)_{3-x}(R^a)_x$, $OSi(OR^a)_{3-x}(R^a)_x$, $NO_2$, $S(O)_2OM'$, $P(O)(OM')_2$, $P(O)(OR^b)_2M'$ or an epoxy-containing group (where each $R^a$ independently represents a hydrogen atom or a hydrocarbon group containing 1 to 20 carbon atoms; each $R^b$ independently represents a hydrocarbon group containing 1 to 20 carbon atoms; M' represents an alkaline metal, an alkaline earth metal, an ammonium, a quaternary ammonium or a phosphonium; x represents 0, 1, 2 or 3; and y represents 0, 1 or 2); and $R^3$, $R^4$, $R^5$ and $R^6$ are optionally bound to adjacent substituents to form a 5- to 8-membered alicyclic ring or a 5- to 8-membered heterocyclic ring containing at least one heteroatom selected from the group consisting of an oxygen atom, a nitrogen atom and a sulfur atom]

[Chem. 7]

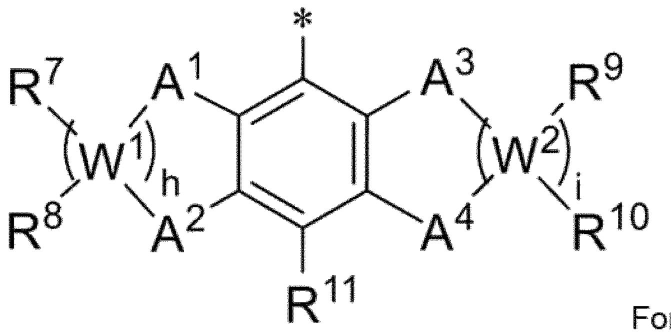

Formula (B)

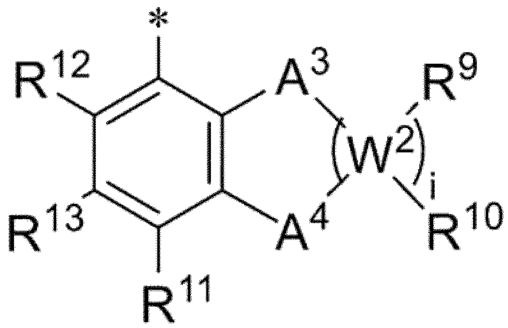

Formula (C)

[where

* represents a bond with $E^1$;
$R^7$, $R^8$, $R^9$, $R^{10}$, $R^{11}$, $R^{12}$ and $R^{13}$ each independently represent the atom or group selected from the group consisting of the above (i) to (iv) defined in the above formula (A), and $R^7$, $R^8$, $R^9$ and $R^{10}$ are optionally bound to adjacent substituents to form a 5-to 8-membered alicyclic ring, a 5- to 8-membered aromatic ring, or a 5- to 8-membered heterocyclic ring containing at least one heteroatom selected from the group consisting of an oxygen atom, a nitrogen atom and a sulfur atom;
$A^1$, $A^2$, $A^3$ and $A^4$ each independently represent an oxygen atom, a sulfur atom, $-C(R)_2-$, -S(O)-, $-S(O)_2-$, -N(R)-, -P(R)- or - P(O)(R)- (where each R independently represents a hydrogen atom or a hydrocarbon group containing 1 to 20 carbon atoms and optionally containing at least one heteroatom);
in the formula (B), at least three selected from the group consisting of $A^1$, $A^2$, $A^3$ and $A^4$ are other than $-C(R)_2-$;
in the formula (C), both $A^3$ and $A^4$ are other than $-C(R)_2-$, and at least one selected from the group consisting of $R^{12}$ and $R^{13}$ is the atom or group selected from the group consisting of the above (ii) and (iv) (except for the epoxy-containing group);
$W^1$ and $W^2$ each independently represent a carbon atom, a silicon atom, a nitrogen atom, a phosphorus atom, a boron atom, an oxygen atom, -P(O)- or $-S(O)_2-$, and when it is a nitrogen atom, a phosphorus atom, a boron atom or -P(O)-, $R^8$ and $R^{10}$ are absent, and when it is an oxygen atom or $-S(O)_2-$, $R^7$ and $R^8$ are absent, as well as $R^9$ and $R^{10}$;
h and i are each independently an integer from 1 to 6, and when two or more $W^1$s, $W^2$s, $R^7$s, $R^8$s, $R^9$s or $R^{10}$s are each present, they may be the same or different from each other.]

**18.** A metal complex represented by the following general formula (D):

[Chem. 8]

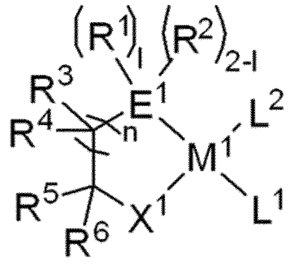

Formula (D)

[where

$X^1$ represents an oxygen atom or a sulfur atom;
$E^1$ represents a nitrogen atom, a phosphorus atom, an arsenic atom or an antimony atom;
n is 0, 1, 2, 3 or 4, and when n is 0, $E^1$ is directly bound to a carbon atom to which $X^1$, $R^5$ and $R^6$ are bound;
$R^1$ represents a hydrocarbon group represented by the following general formula (B) or (C);
$R^2$ represents a hydrocarbon group containing 1 to 20 carbon atoms and optionally containing at least one heteroatom, which is different from the hydrocarbon group represented by the following general formula (B) or (C);
l is 1 or 2, and when l is 2, $R^2$ is absent;
$R^3$, $R^4$, $R^5$ and $R^6$ each independently represent an atom or group selected from the group consisting of the following (i) to (iv):

(i) a hydrogen atom
(ii) a halogen atom
(iii) a hydrocarbon group containing 1 to 30 carbon atoms and optionally containing at least one heteroatom
(iv) $OR^b$, $C(O)OR^b$, $C(O)OM'$, $C(O)N(R^a)_2$, $C(O)R^b$, $OC(O)R^b$, $SR^b$, $S(O)_2R^b$, $S(O)R^b$, $OS(O)_2R^b$, $SF_5$, $P(O)(OR^b)_{2-y}(R^a)_y$, CN, $N(H)R^a$, $N(R^b)_2$, $Si(OR^a)_{3-x}(R^a)_x$, $OSi(OR^a)_{3-x}(R^a)_x$, $NO_2$, $S(O)_2OM'$, $P(O)(OM')_2$, $P(O)(OR^b)_2M'$ or an epoxy-containing group (where each $R^a$ independently represents a hydrogen atom or a hydrocarbon group containing 1 to 20 carbon atoms; each $R^b$ independently represents a hydrocarbon group containing 1 to 20 carbon atoms; M' represents an alkaline metal, an alkaline earth metal, an ammonium, a quaternary ammonium or a phosphonium; x represents 0, 1, 2 or 3; and y represents 0, 1 or 2);

$R^3$, $R^4$, $R^5$ and $R^6$ are optionally bound to adjacent substituents to form a 5- to 8-membered alicyclic ring or a 5- to 8-membered heterocyclic ring containing at least one heteroatom selected from the group consisting of an oxygen atom, a nitrogen atom and
a sulfur atom;
$M^1$ represents a nickel atom or a palladium atom;
$L^1$ and $L^2$ each independently represent a ligand coordinated to $M^1$; and
$L^1$ and $L^2$ are optionally bound to each other to form a ring containing $M^1$]

[Chem. 9]

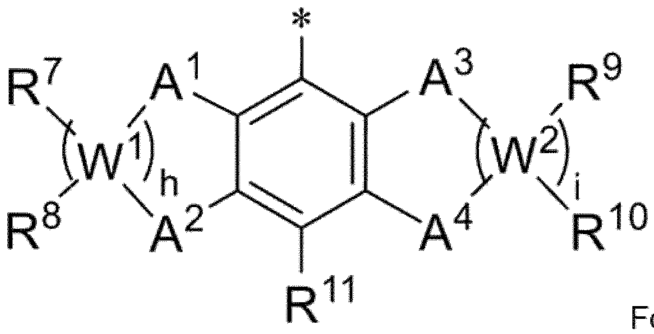

Formula (B)

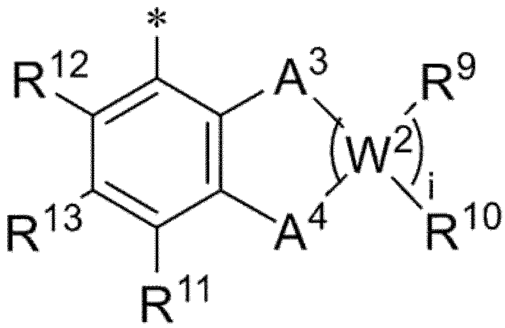

Formula (C)

[where

* represents a bond with $E^1$;
$R^7$, $R^8$, $R^9$, $R^{10}$, $R^{11}$, $R^{12}$ and $R^{13}$ each independently represent the atom or group selected from the group consisting of the above (i) to (iv) defined in the above formula (A);
$R^7$, $R^8$, $R^9$ and $R^{10}$ are optionally bound to adjacent substituents to form a 5- to 8-membered alicyclic ring, a 5- to 8-membered aromatic ring, or a 5- to 8-membered heterocyclic ring containing at least one heteroatom selected from the group consisting of an oxygen atom, a nitrogen atom and a sulfur atom;
$A^1$, $A^2$, $A^3$ and $A^4$ each independently represent an oxygen atom, a sulfur atom, $-C(R)_2-$, -S(O)-, $-S(O)_2-$, -N(R)-, -P(R)- or - P(O)(R)- (where each R independently represents a hydrogen atom or a hydrocarbon group containing 1 to 20 carbon atoms and optionally containing at least one heteroatom);
in the formula (B), at least three selected from the group consisting of $A^1$, $A^2$, $A^3$ and $A^4$ are other than $-C(R)_2-$;
in the formula (C), both $A^3$ and $A^4$ are other than $-C(R)_2-$, and at least one selected from the group consisting of $R^{12}$ and $R^{13}$ is the atom or group selected from the group consisting of the above (ii) and (iv) (except for the epoxy-containing group);
$W^1$ and $W^2$ each independently represent a carbon atom, a silicon atom, a nitrogen atom, a phosphorus atom, a boron atom, an oxygen atom, -P(O)- or $-S(O)_2-$, and when it is a nitrogen atom, a phosphorus atom, a boron atom or -P(O)-, $R^8$ and $R^{10}$ are absent, and when it is an oxygen atom or $-S(O)_2-$, $R^7$ and $R^8$ are absent, as well as $R^9$ and $R^{10}$;
h and i are each independently an integer from 1 to 6, and when two or more $W^1$s, $W^2$s, $R^7$s, $R^8$s, $R^9$s or $R^{10}$s are each present, they may be the same or different from each other.]

**19.** An olefin polymerization catalyst composition comprising the compound represented by the general formula (A) defined by Claim 17 and a transition metal compound represented by the following general formula (E) or (F):

[Chem. 10]

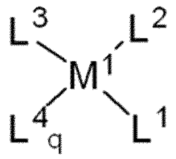

Formula (E)

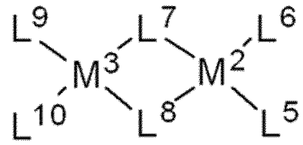

Formula (F)

[where

$M^1$ represents a nickel atom or a palladium atom;
$L^1$ and $L^2$ each independently represent a ligand coordinated to $M^1$;
$L^1$ and $L^2$ are optionally bound to each other to form a ring containing $M^1$;
$M^2$ and $M^3$ each independently represent a nickel atom or a palladium atom;
$L^3$, $L^4$, $L^5$, $L^6$, $L^9$ and $L^{10}$ each independently represent a ligand coordinated to $M^1$, $M^2$ or $M^3$, and $L^7$ and $L^8$ each independently represent a ligand coordinated to $M^2$ and $M^3$;
q is 0, 1 or 2;
$L^3$ and $L^4$ are optionally bound to each other to form a ring containing $M^1$;
$L^5$ and $L^6$ are optionally bound to each other to form a ring containing $M^2$; and
$L^9$ and $L^{10}$ are optionally bound to each other to form a ring containing $M^3$.]

**20.** The compound according to Claim 17, wherein at least one selected from the group consisting of $R^5$ and $R^6$ is the atom or group selected from the group consisting of the above (i), (iii) and (iv).

**21.** The metal complex according to Claim 18, wherein at least one selected from the group consisting of $R^5$ and $R^6$ is the atom or group selected from the group consisting of the above (i), (iii) and (iv).

**22.** The olefin polymerization catalyst composition according to Claim 19, wherein at least one selected from the group consisting of $R^5$ and $R^6$ is the atom or group selected from the group consisting of the above (i), (iii) and (iv).

**23.** The compound according to Claim 17, wherein $R^5$ is the atom or group selected from the group consisting of the above (i) and (iii), and $R^6$ is the atom or group selected from the group consisting of the above (i), the above (iii), $C(O)OR^b$, $C(O)N(R^a)_2$, $C(O)R^b$, $S(O)_2R^b$ and $P(O)(OR^b)_{2-y}(R^a)_y$ (where $R^a$, $R^b$ and y are as defined above in Claim 17).

**24.** The metal complex according to Claim 18, wherein $R^5$ is the atom or group selected from the group consisting of the above (i) and (iii), and $R^6$ is the atom or group selected from the group consisting of the above (i), the above (iii), $C(O)OR^b$, $C(O)N(R^a)_2$, $C(O)R^b$, $S(O)_2R^b$ and $P(O)(OR^b)_{2-y}(R^a)_y$ (where $R^a$, $R^b$ and y are as defined above in Claim 18).

**25.** The olefin polymerization catalyst composition according to Claim 19, wherein $R^5$ is the atom or group selected from the group consisting of the above (i) and (iii), and $R^6$ is the atom or group selected from the group consisting of the above (i), the above (iii), $C(O)OR^b$, $C(O)N(R^a)_2$, $C(O)R^b$, $S(O)_2R^b$ and $P(O)(OR^b)_{2-y}(R^a)_y$ (where $R^a$, $R^b$ and y are as defined above in Claim 17).

**26.** The compound according to any one of Claims 17, 20 and 23, wherein at least one selected from the group consisting of $R^3$ and $R^4$ is the atom or group selected from the group consisting of the above (i), (iii) and (iv).

**27.** The metal complex according to any one of Claims 18, 21 and 24, wherein at least one selected from the group consisting of $R^3$ and $R^4$ is the atom or group selected from the group consisting of the above (i), (iii) and (iv).

**28.** The olefin polymerization catalyst composition according to any one of Claims 19, 22 and 25, wherein at least one selected from the group consisting of $R^3$ and $R^4$ is the atom or group selected from the group consisting of the above (i),

(iii) and (iv) .

**29.** An olefin polymerization catalyst comprising the olefin polymerization catalyst composition defined by Claim 19.

**30.** An olefin polymerization catalyst comprising the metal complex defined by Claim 18.

**31.** A method for producing an olefin-based polymer, wherein an olefin is polymerized or copolymerized in the presence of the olefin polymerization catalyst defined by Claim 29 or 30.

**32.** A method for producing the olefin-based polymer according to Claim 31, wherein an acyclic olefin is copolymerized with at least one kind of monomer selected from the group consisting of a polar group-containing monomer and a cyclic olefin.

**Amended claims under Art. 19.1 PCT**

**1.** A compound represented by the following general formula (A):

[Chem. 1]

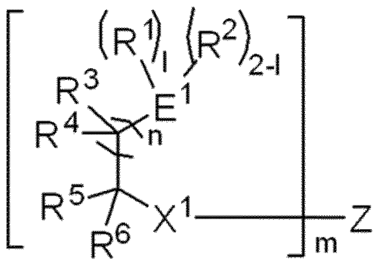

Formula (A)

[where

$X^1$ represents an oxygen atom or a sulfur atom;
$E^1$ represents a phosphorus atom, an arsenic atom or an antimony atom;
Z represents a hydrogen atom, a leaving group or a cation having a valence of 1 or more and 4 or less;
m is an integer more than or equal to 1 and less than or equal to a valence of Z;
n is 0, 1, 2, 3 or 4, and when n is 0, $E^1$ is directly bound to a carbon atom to which $X^1$, $R^5$ and $R^6$ are bound;
$R^1$ represents a hydrocarbon group represented by the following general formula (B) or (C);
$R^2$ represents a hydrocarbon group containing 1 to 20 carbon atoms and optionally containing at least one heteroatom, which is different from the hydrocarbon group represented by the following general formula (B) or (C);
l is 1 or 2, and when l is 2, $R^2$ is absent;
$R^3$, $R^4$, $R^5$ and $R^6$ each independently represent an atom or
group selected from the group consisting of the following (i) to (iv) :

(i) a hydrogen atom
(ii) a halogen atom
(iii) a hydrocarbon group containing 1 to 30 carbon atoms and optionally containing at least one heteroatom
(iv) $OR^b$, $C(O)OR^b$, C(O)OM', $C(O)N(R^a)_2$, $C(O)R^b$, $OC(O)R^b$, $SR^b$, $S(O)_2R^b$, $S(O)R^b$, $OS(O)_2R^b$, $SF_5$, $P(O)(OR^b)_{2-y}(R^a)_y$, CN, $N(H)R^a$, $N(R^b)_2$, $Si(OR^a)_{3-x}(R^a)_x$, $OSi(OR^a)_{3-x}(R^a)_x$, $NO_2$, $S(O)_2OM'$, $P(O)(OM')_2$, $P(O)(OR^b)_2M'$ or an epoxy-containing group (where each $R^a$ independently represents a hydrogen atom or a hydrocarbon group containing 1 to 20 carbon atoms; each $R^b$ independently represents a hydrocarbon group containing 1 to 20 carbon atoms; M' represents an alkaline metal, an alkaline earth metal, an ammonium, a quaternary ammonium or a phosphonium; x represents 0, 1, 2 or 3; and y represents 0, 1 or 2); and $R^3$, $R^4$, $R^5$ and $R^6$ are optionally bound to adjacent substituents to form a 5- to 8-membered alicyclic ring or a 5- to 8-membered heterocyclic ring containing at least one heteroatom selected from the group consisting of an oxygen atom, a nitrogen atom and a sulfur atom]

[Chem. 2]

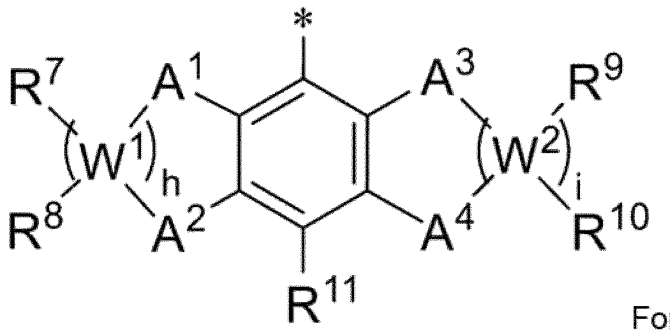

Formula (B)

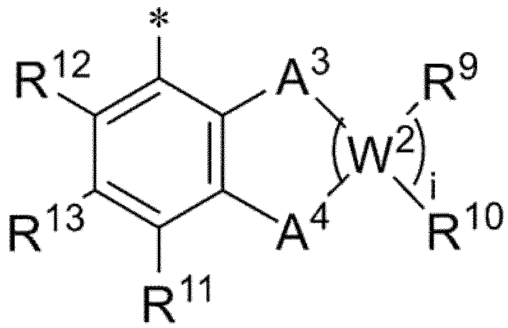

Formula (C)

[where

* represents a bond with $E^1$;
$R^7$, $R^8$, $R^9$, $R^{10}$, $R^{11}$, $R^{12}$ and $R^{13}$ each independently represent the atom or group selected from the group consisting of the above (i) to (iv) defined in the above formula (A), and $R^7$, $R^8$, $R^9$ and $R^{10}$ are optionally bound to adjacent substituents to form a 5- to 8-membered alicyclic ring, a 5- to 8-membered aromatic ring, or a 5- to 8-membered heterocyclic ring containing at least one heteroatom selected from the group consisting of an oxygen atom, a nitrogen atom and a sulfur atom;
$A^1$, $A^2$, $A^3$ and $A^4$ each independently represent an oxygen atom, a sulfur atom, $-C(R)_2-$, -S(O)-, $-S(O)_2-$, -N(R)-, -P(R)- or - P(O) (R)- (where each R independently represents a hydrogen atom or a hydrocarbon group containing 1 to 20 carbon atoms and optionally containing at least one heteroatom);
in the formula (B), at least two selected from the group consisting of $A^1$, $A^2$, $A^3$ and $A^4$ are $-C(R)_2-$;
in the formula (C), at least one selected from the group consisting of $A^3$ and $A^4$ is $-C(R)_2-$ and at least one selected from the group consisting of $R^{12}$ and $R^{13}$ is the atom or group selected from the group consisting of the above (i) and (iii), or in the formula (C), both $A^3$ and $A^4$ are other than $-C(R)_2-$ and both $R^{12}$ and $R^{13}$ are the atom or group selected from the group consisting of the above (i) and (iii);
$W^1$ and $W^2$ each independently represent a carbon atom, a silicon atom, a nitrogen atom, a phosphorus atom, a boron atom, an oxygen atom, -P(O)- or $-S(O)_2-$, and when it is a nitrogen atom, a phosphorus atom, a boron atom or -P(O)-, $R^8$ and $R^{10}$ are absent, and when it is an oxygen atom or $-S(O)_2-$, $R^7$ and $R^8$ are absent, as well as $R^9$ and $R^{10}$;
h and i are each independently an integer from 1 to 6, and when two or more $W^1$s, $W^2$s, $R^7$s, $R^8$s, $R^9$s or $R^{10}$s are each present, they may be the same or different from each other.]

**2.** A metal complex represented by the following general formula (D):

[Chem. 3]

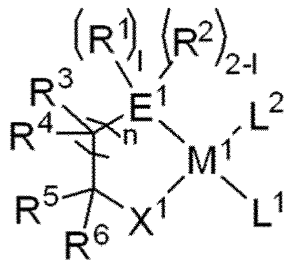

Formula (D)

[where

$X^1$ represents an oxygen atom or a sulfur atom;
$E^1$ represents a nitrogen atom, a phosphorus atom, an arsenic atom or an antimony atom;
n is 0, 1, 2, 3 or 4, and when n is 0, $E^1$ is directly bound to a carbon atom to which $X^1$, $R^5$ and $R^6$ are bound;
$R^1$ represents a hydrocarbon group represented by the following general formula (B) or (C);
$R^2$ represents a hydrocarbon group containing 1 to 20 carbon atoms and optionally containing at least one heteroatom, which is different from the hydrocarbon group represented by the following general formula (B) or (C);
1 is 1 or 2, and when l is 2, $R^2$ is absent;
$R^3$, $R^4$, $R^5$ and $R^6$ each independently represent an atom or group selected from the group consisting of the following (i) to (iv):

(i) a hydrogen atom
(ii) a halogen atom
(iii) a hydrocarbon group containing 1 to 30 carbon atoms and optionally containing at least one heteroatom
(iv) $OR^b$, $C(O)OR^b$, C(O)OM', $C(O)N(R^a)_2$, $C(O)R^b$, $OC(O)R^b$, $SR^b$, $S(O)_2R^b$, $S(O)R^b$, $OS(O)_2R^b$, $SF_5$, $P(O)(OR^b)_{2-y}(R^a)_y$, CN, $N(H)R^a$, $N(R^b)_2$, $Si(OR^a)_{3-x}(R^a)_x$, $OSi(OR^a)_{3-x}(R^a)_x$, $NO_2$, $S(O)_2OM'$, $P(O)(OM')_2$, $P(O)(OR^b)_2M'$ or an epoxy-containing group (where each $R^a$ independently represents a hydrogen atom or a hydrocarbon group containing 1 to 20 carbon atoms; each $R^b$ independently represents a hydrocarbon group containing 1 to 20 carbon atoms; M' represents an alkaline metal, an alkaline earth metal, an ammonium, a quaternary ammonium or a phosphonium; x represents 0, 1, 2 or 3; and y represents 0, 1 or 2);

$R^3$, $R^4$, $R^5$ and $R^6$ are optionally bound to adjacent substituents to form a 5- to 8-membered alicyclic ring or a 5- to 8-membered heterocyclic ring containing at least one heteroatom selected from the group consisting of an oxygen atom, a nitrogen atom and a sulfur atom;
$M^1$ represents a nickel atom or a palladium atom;
$L^1$ and $L^2$ each independently represent a ligand coordinated to $M^1$; and
$L^1$ and $L^2$ are optionally bound to each other to form a ring containing $M^1$]

[Chem. 4]

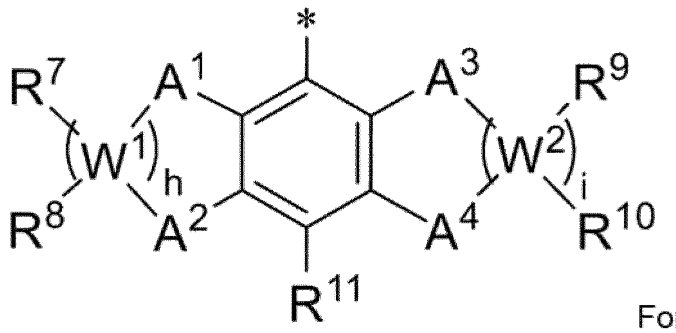

Formula (B)

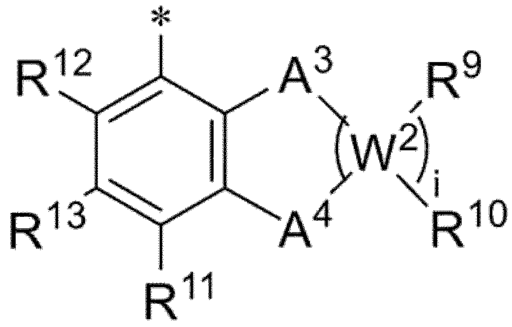

Formula (C)

[where

* represents a bond with $E^1$;
$R^7$, $R^8$, $R^9$, $R^{10}$, $R^{11}$, $R^{12}$ and $R^{13}$ each independently represent the atom or group selected from the group consisting of the above (i) to (iv) defined in the above formula (A);
$R^7$, $R^8$, $R^9$ and $R^{10}$ are optionally bound to adjacent substituents to form a 5- to 8-membered alicyclic ring, a 5- to 8-membered aromatic ring, or a 5- to 8-membered heterocyclic ring containing at least one heteroatom selected from the group consisting of an oxygen atom, a nitrogen atom and a sulfur atom;
$A^1$, $A^2$, $A^3$ and $A^4$ each independently represent an oxygen atom, a sulfur atom, $-C(R)_2-$, -S(O)-, $-S(O)_2-$, -N(R)-, -P(R)- or - P(O)(R)- (where each R independently represents a hydrogen atom or a hydrocarbon group containing 1 to 20 carbon atoms and optionally containing at least one heteroatom);
in the formula (B), at least two selected from the group consisting of $A^1$, $A^2$, $A^3$ and $A^4$ are $-C(R)_2-$;
in the formula (C), at least one selected from the group consisting of $A^3$ and $A^4$ is $-C(R)_2-$ and at least one selected from the group consisting of $R^{12}$ and $R^{13}$ is the atom or group selected from the group consisting of the above (i) and (iii), or in the formula (C), both $A^3$ and $A^4$ are other than $-C(R)_2-$ and both $R^{12}$ and $R^{13}$ are the atom or group selected from the group consisting of the above (i) and (iii);
$W^1$ and $W^2$ each independently represent a carbon atom, a silicon atom, a nitrogen atom, a phosphorus atom, a boron atom, an oxygen atom, -P(O)- or $-S(O)_2-$, and when it is a nitrogen atom, a phosphorus atom, a boron atom or -P(O)-, $R^8$ and $R^{10}$ are absent, and when it is an oxygen atom or $-S(O)_2-$, $R^7$ and $R^8$ are absent, as well as $R^9$ and $R^{10}$;
h and i are each independently an integer from 1 to 6, and when two or more $W^1$s, $W^2$s, $R^7$s, $R^8$s, $R^9$s or $R^{10}$s are each present, they may be the same or different from each other.]

**3.** An olefin polymerization catalyst composition comprising the compound represented by the following general formula (A) and a transition metal compound represented by the following general formula (E) or (F):

[Chem. 5]

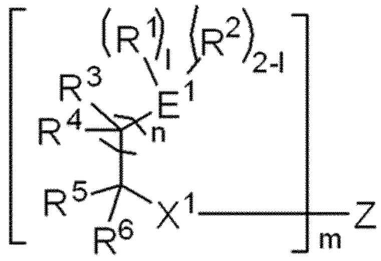

Formula (A)

[where

$X^1$ represents an oxygen atom or a sulfur atom;
$E^1$ represents a nitrogen atom, a phosphorus atom, an arsenic atom or an antimony atom;
Z represents a hydrogen atom, a leaving group or a cation having a valence of 1 or more and 4 or less;
m is an integer more than or equal to 1 and less than or equal to a valence of Z;
n is 0, 1, 2, 3 or 4, and when n is 0, $E^1$ is directly bound to a carbon atom to which $X^1$, $R^5$ and $R^6$ are bound;
$R^1$ represents a hydrocarbon group represented by the following general formula (B) or (C);
$R^2$ represents a hydrocarbon group containing 1 to 20 carbon atoms and optionally containing at least one heteroatom, which is different from the hydrocarbon group represented by the following general formula (B) or (C);
1 is 1 or 2, and when l is 2, $R^2$ is absent;
$R^3$, $R^4$, $R^5$ and $R^6$ each independently represent an atom or group selected from the group consisting of the following (i) to (iv):

(i) a hydrogen atom
(ii) a halogen atom
(iii) a hydrocarbon group containing 1 to 30 carbon atoms and optionally containing at least one heteroatom
(iv) $OR^b$, $C(O)OR^b$, C(O)OM', $C(O)N(R^a)_2$, $C(O)R^b$, $OC(O)R^b$, $SR^b$, $S(O)_2R^b$, $S(O)R^b$, $OS(O)_2R^b$, $SF_5$, $P(O)(OR^b)_{2-y}(R^a)_y$, CN, $N(H)R^a$, $N(R^b)_2$, $Si(OR^a)_{3-x}(R^a)_x$, $OSi(OR^a)_{3-x}(R^a)_x$, $NO_2$, $S(O)_2OM'$, $P(O)(OM')_2$, $P(O)(OR^b)_2M'$ or an epoxy-containing group (where each $R^a$ independently represents a hydrogen atom or a hydrocarbon group containing 1 to 20 carbon atoms; each $R^b$ independently represents a hydrocarbon group containing 1 to 20 carbon atoms; M' represents an alkaline metal, an alkaline earth metal, an ammonium, a quaternary ammonium or a phosphonium; x represents 0, 1, 2 or 3; and y represents 0, 1 or 2); and $R^3$, $R^4$, $R^5$ and $R^6$ are optionally bound to adjacent substituents to form a 5- to 8-membered alicyclic ring or a 5- to 8-membered heterocyclic ring containing at least one heteroatom selected from the group consisting of an oxygen atom, a nitrogen atom and a sulfur atom]

[Chem. 6]

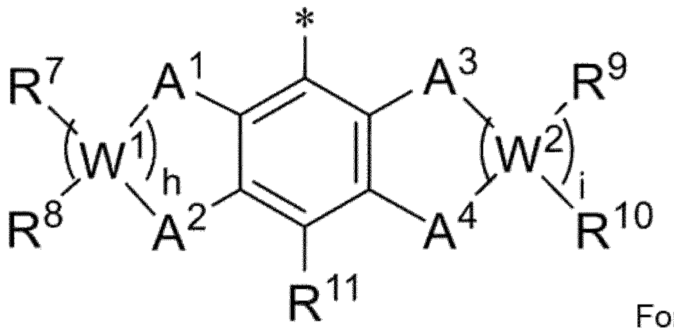

Formula (B)

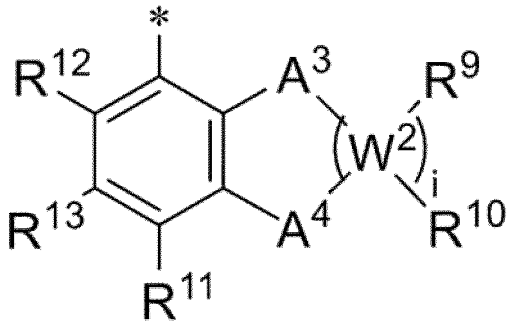

Formula (C)

[where

* represents a bond with $E^1$;
$R^7$, $R^8$, $R^9$, $R^{10}$, $R^{11}$, $R^{12}$ and $R^{13}$ each independently represent the atom or group selected from the group consisting of the above (i) to (iv) defined in the above formula (A), and $R^7$, $R^8$, $R^9$ and $R^{10}$ are optionally bound to adjacent substituents to form a 5- to 8-membered alicyclic ring, a 5- to 8-membered aromatic ring, or a 5- to 8-membered heterocyclic ring containing at least one heteroatom selected from the group consisting of an oxygen atom, a nitrogen atom and a sulfur atom;
$A^1$, $A^2$, $A^3$ and $A^4$ each independently represent an oxygen atom, a sulfur atom, $-C(R)_2-$, -S(O)-, $-S(O)_2-$, -N(R)-, -P(R)- or - P(O)(R)- (where each R independently represents a hydrogen atom or a hydrocarbon group containing 1 to 20 carbon atoms and optionally containing at least one heteroatom);
in the formula (B), at least two selected from the group consisting of $A^1$, $A^2$, $A^3$ and $A^4$ are $-C(R)_2-$;
in the formula (C), at least one selected from the group consisting of $A^3$ and $A^4$ is $-C(R)_2-$ and at least one selected from the group consisting of $R^{12}$ and $R^{13}$ is the atom or group selected from the group consisting of the above (i) and (iii), or in the formula (C), both $A^3$ and $A^4$ are other than $-C(R)_2-$ and both $R^{12}$ and $R^{13}$ are the atom or group selected from the group consisting of the above (i) and (iii);
$W^1$ and $W^2$ each independently represent a carbon atom, a silicon atom, a nitrogen atom, a phosphorus atom, a boron atom, an oxygen atom, -P(O)- or $-S(O)_2-$, and when it is a nitrogen atom, a phosphorus atom, a boron atom or -P(O)-, $R^8$ and $R^{10}$ are absent, and when it is an oxygen atom or $-S(O)_2-$, $R^7$ and $R^8$ are absent, as well as $R^9$ and $R^{10}$;
h and i are each independently an integer from 1 to 6, and when two or more $W^1$s, $W^2$s, $R^7$s, $R^8$s, $R^9$s or $R^{10}$s are each present, they may be the same or different from each other.]

[Chem. 7]

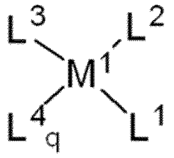

Formula (E)

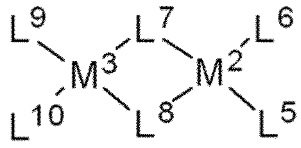

Formula (F)

[where

$M^1$ represents a nickel atom or a palladium atom;
$L^1$ and $L^2$ each independently represent a ligand coordinated to $M^1$;
$L^1$ and $L^2$ are optionally bound to each other to form a ring containing $M^1$;
$M^2$ and $M^3$ each independently represent a nickel atom or a palladium atom;
$L^3$, $L^4$, $L^5$, $L^6$, $L^9$ and $L^{10}$ each independently represent a ligand coordinated to $M^1$, $M^2$ or $M^3$, and $L^7$ and $L^8$ each independently represent a ligand coordinated to $M^2$ and $M^3$;
q is 0, 1 or 2;
$L^3$ and $L^4$ are optionally bound to each other to form a ring containing $M^1$;
$L^5$ and $L^6$ are optionally bound to each other to form a ring containing $M^2$; and
$L^9$ and $L^{10}$ are optionally bound to each other to form a ring containing $M^3$.]

**4.** The compound according to Claim 1, wherein at least one selected from the group consisting of $R^5$ and $R^6$ is the atom or group selected from the group consisting of the above (i), (iii) and (iv).

**5.** The metal complex according to Claim 2, wherein at least one selected from the group consisting of $R^5$ and $R^6$ is the atom or group selected from the group consisting of the above (i), (iii) and (iv).

**6.** The olefin polymerization catalyst composition according to Claim 3, wherein at least one selected from the group consisting of $R^5$ and $R^6$ is the atom or group selected from the group consisting of the above (i), (iii) and (iv).

**7.** The compound according to Claim 1, wherein $R^5$ is the atom or group selected from the group consisting of the above (i) and (iii), and $R^6$ is the atom or group selected from the group consisting of the above (i), the above (iii), $C(O)OR^b$, $C(O)N(R^a)_2$, $C(O)R^b$, $S(O)_2R^b$ and $P(O)(OR^b)_{2-y}(R^a)_y$ (where $R^a$, $R^b$ and y are as defined above in Claim 1).

**8.** The metal complex according to Claim 2, wherein $R^5$ is the atom or group selected from the group consisting of the above (i) and (iii), and $R^6$ is the atom or group selected from the group consisting of the above (i), the above (iii), $C(O)OR^b$, $C(O)N(R^a)_2$, $C(O)R^b$, $S(O)_2R^b$ and $P(O)(OR^b)_{2-y}(R^a)_y$ (where $R^a$, $R^b$ and y are as defined above in Claim 2).

**9.** The olefin polymerization catalyst composition according to Claim 3, wherein $R^5$ is the atom or group selected from the group consisting of the above (i) and (iii), and $R^6$ is the atom or group selected from the group consisting of the above (i), the above (iii), $C(O)OR^b$, $C(O)N(R^a)_2$, $C(O)R^b$, $S(O)_2R^b$ and $P(O)(OR^b)_{2-y}(R^a)_y$ (where $R^a$, $R^b$ and y are as defined above in Claim 1).

**10.** The compound according to any one of Claims 1, 4 and 7, wherein at least one selected from the group consisting of $R^3$ and $R^4$ is the atom or group selected from the group consisting of the above (i), (iii) and (iv).

**11.** The metal complex according to any one of Claims 2, 5 and 8, wherein at least one selected from the group consisting of $R^3$ and $R^4$ is the atom or group selected from the group consisting of the above (i), (iii) and (iv).

**12.** The olefin polymerization catalyst composition according to any one of Claims 3, 6 and 9, wherein at least one selected from the group consisting of $R^3$ and $R^4$ is the atom or group selected from the group consisting of the above (i), (iii) and (iv).

**13.** An olefin polymerization catalyst comprising the olefin polymerization catalyst composition defined by Claim 3.

**14.** An olefin polymerization catalyst comprising the metal complex defined by Claim 2.

**15.** A method for producing an olefin-based polymer, wherein an olefin is polymerized or copolymerized in the presence of the olefin polymerization catalyst defined by Claim 13 or 14.

**16.** A method for producing the olefin-based polymer according to Claim 15, wherein an acyclic olefin is copolymerized with at least one kind of monomer selected from the group consisting of a polar group-containing monomer and a cyclic olefin.

**17.** A compound represented by the following general formula (A):

[Chem. 8]

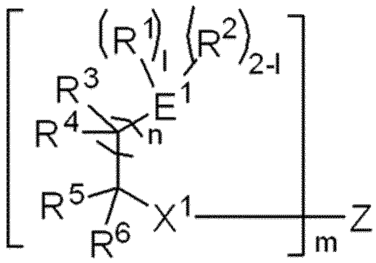

Formula (A)

[where

$X^1$ represents an oxygen atom or a sulfur atom;
$E^1$ represents a phosphorus atom, an arsenic atom or an antimony atom;
Z represents a hydrogen atom, a leaving group or a cation having a valence of 1 or more and 4 or less;
m is an integer more than or equal to 1 and less than or equal to a valence of Z;
n is 0, 1, 2, 3 or 4, and when n is 0, $E^1$ is directly bound to a carbon atom to which $X^1$, $R^5$ and $R^6$ are bound;
$R^1$ represents a hydrocarbon group represented by the following general formula (B) or (C);
$R^2$ represents a hydrocarbon group containing 1 to 20 carbon atoms and optionally containing at least one heteroatom, which is different from the hydrocarbon group represented by the following general formula (B) or (C);
1 is 1 or 2, and when l is 2, $R^2$ is absent;
$R^3$, $R^4$, $R^5$ and $R^6$ each independently represent an atom or group selected from the group consisting of the following (i) to (iv):

(i) a hydrogen atom
(ii) a halogen atom
(iii) a hydrocarbon group containing 1 to 30 carbon atoms and optionally containing at least one heteroatom
(iv) $OR^b$, $C(O)OR^b$, $C(O)OM'$, $C(O)N(R^a)_2$, $C(O)R^b$, $OC(O)R^b$, $SR^b$, $S(O)_2R^b$, $S(O)R^b$, $OS(O)_2R^b$, $SF_5$, $P(O)(OR^b)_{2-y}(R^a)_y$, CN, $N(H)R^a$, $N(R^b)_2$, $Si(OR^a)_{3-x}(R^a)_x$, $OSi(OR^a)_{3-x}(R^a)_x$, $NO_2$, $S(O)_2OM'$, $P(O)(OM')_2$, $P(O)(OR^b)_2M'$ or an epoxy-containing group (where each $R^a$ independently represents a hydrogen atom or a hydrocarbon group containing 1 to 20 carbon atoms; each $R^b$ independently represents a hydrocarbon group containing 1 to 20 carbon atoms; M' represents an alkaline metal, an alkaline earth metal, an ammonium, a quaternary ammonium or a phosphonium; x represents 0, 1, 2 or 3; and y represents 0, 1 or 2); and $R^3$, $R^4$, $R^5$ and $R^6$ are optionally bound to adjacent substituents to form a 5- to 8-membered alicyclic ring or a 5- to 8-membered heterocyclic ring containing at least one heteroatom selected from the group consisting of an oxygen atom, a nitrogen atom and a sulfur atom]

[Chem. 9]

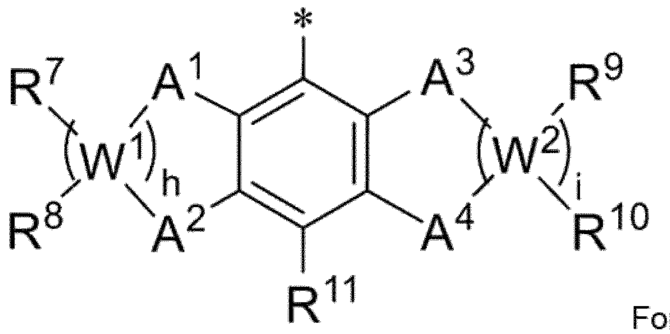

Formula (B)

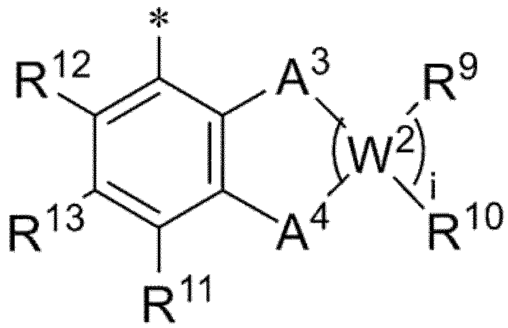

Formula (C)

[where

* represents a bond with $E^1$;
$R^7$, $R^8$, $R^9$, $R^{10}$, $R^{11}$, $R^{12}$ and $R^{13}$ each independently represent the atom or group selected from the group consisting of the above (i) to (iv) defined in the above formula (A), and $R^7$, $R^8$, $R^9$ and $R^{10}$ are optionally bound to adjacent substituents to form a 5- to 8-membered alicyclic ring, a 5- to 8-membered aromatic ring, or a 5- to 8-membered heterocyclic ring containing at least one heteroatom selected from the group consisting of an oxygen atom, a nitrogen atom and a sulfur atom;
$A^1$, $A^2$, $A^3$ and $A^4$ each independently represent an oxygen atom, a sulfur atom, $-C(R)_2-$, -S(O)-, $-S(O)_2-$, -N(R)-, -P(R)- or - P(O) (R)- (where each R independently represents a hydrogen atom or a hydrocarbon group containing 1 to 20 carbon atoms and optionally containing at least one heteroatom);
in the formula (B), at least three selected from the group consisting of $A^1$, $A^2$, $A^3$ and $A^4$ are other than $-C(R)_2-$;
in the formula (C), both $A^3$ and $A^4$ are other than $-C(R)_2-$, and at least one selected from the group consisting of $R^{12}$ and $R^{13}$ is the atom or group selected from the group consisting of the above (ii) and (iv) (except for the epoxy-containing group);
$W^1$ and $W^2$ each independently represent a carbon atom, a silicon atom, a nitrogen atom, a phosphorus atom, a boron atom, an oxygen atom, -P(O)- or $-S(O)_2-$, and when it is a nitrogen atom, a phosphorus atom, a boron atom or -P(O)-, $R^8$ and $R^{10}$ are absent, and when it is an oxygen atom or $-S(O)_2-$, $R^7$ and $R^8$ are absent, as well as $R^9$ and $R^{10}$;
h and i are each independently an integer from 1 to 6, and when two or more $W^1$s, $W^2$s, $R^7$s, $R^8$s, $R^9$s or $R^{10}$s are each present, they may be the same or different from each other.]

**18.** A metal complex represented by the following general formula (D):

[Chem. 10]

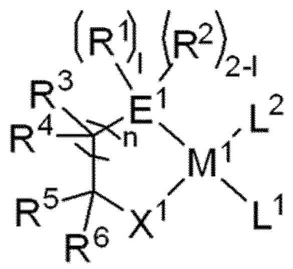

Formula (D)

[where

$X^1$ represents an oxygen atom or a sulfur atom;
$E^1$ represents a nitrogen atom, a phosphorus atom, an arsenic atom or an antimony atom;
n is 0, 1, 2, 3 or 4, and when n is 0, $E^1$ is directly bound to a carbon atom to which $X^1$, $R^5$ and $R^6$ are bound;
$R^1$ represents a hydrocarbon group represented by the following general formula (B) or (C);
$R^2$ represents a hydrocarbon group containing 1 to 20 carbon atoms and optionally containing at least one heteroatom, which is different from the hydrocarbon group represented by the following general formula (B) or (C);
1 is 1 or 2, and when l is 2, $R^2$ is absent;
$R^3$, $R^4$, $R^5$ and $R^6$ each independently represent an atom or group selected from the group consisting of the following (i) to (iv):

(i) a hydrogen atom
(ii) a halogen atom
(iii) a hydrocarbon group containing 1 to 30 carbon atoms and optionally containing at least one heteroatom
(iv) $OR^b$, $C(O)OR^b$, C(O)OM', $C(O)N(R^a)_2$, $C(O)R^b$, $OC(O)R^b$, $SR^b$, $S(O)_2R^b$, $S(O)R^b$, $OS(O)_2R^b$, $SF_5$, $P(O)(OR^b)_{2-y}(R^a)_y$, CN, $N(H)R^a$, $N(R^b)_2$, $Si(OR^a)_{3-x}(R^a)_x$, $OSi(OR^a)_{3-x}(R^a)_x$, $NO_2$, $S(O)_2OM'$, $P(O)(OM')_2$, $P(O)(OR^b)_2M'$ or an epoxy-containing group (where each $R^a$ independently represents a hydrogen atom or a hydrocarbon group containing 1 to 20 carbon atoms; each $R^b$ independently represents a hydrocarbon group containing 1 to 20 carbon atoms; M' represents an alkaline metal, an alkaline earth metal, an ammonium, a quaternary ammonium or a phosphonium; x represents 0, 1, 2 or 3; and y represents 0, 1 or 2);

$R^3$, $R^4$, $R^5$ and $R^6$ are optionally bound to adjacent substituents to form a 5- to 8-membered alicyclic ring or a 5- to 8-membered heterocyclic ring containing at least one heteroatom selected from the group consisting of an oxygen atom, a nitrogen atom and a sulfur atom;
$M^1$ represents a nickel atom or a palladium atom;
$L^1$ and $L^2$ each independently represent a ligand coordinated to $M^1$; and
$L^1$ and $L^2$ are optionally bound to each other to form a ring containing $M^1$]

[Chem. 11]

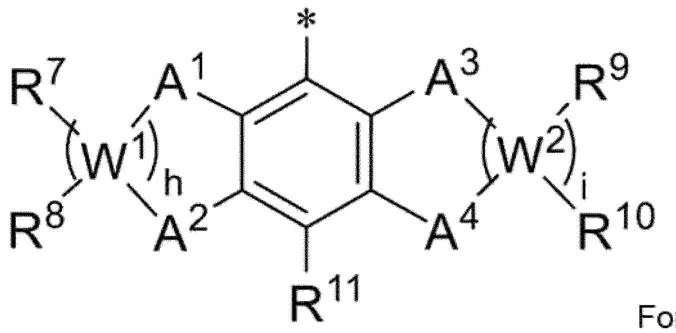

Formula (B)

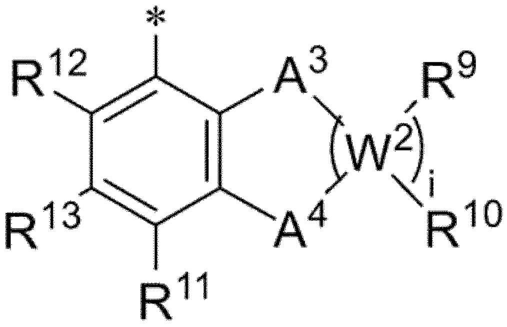

Formula (C)

[where

* represents a bond with $E^1$;
$R^7$, $R^8$, $R^9$, $R^{10}$, $R^{11}$, $R^{12}$ and $R^{13}$ each independently represent the atom or group selected from the group consisting of the above (i) to (iv) defined in the above formula (A);
$R^7$, $R^8$, $R^9$ and $R^{10}$ are optionally bound to adjacent substituents to form a 5- to 8-membered alicyclic ring, a 5- to 8-membered aromatic ring, or a 5- to 8-membered heterocyclic ring containing at least one heteroatom selected from the group consisting of an oxygen atom, a nitrogen atom and a sulfur atom;
$A^1$, $A^2$, $A^3$ and $A^4$ each independently represent an oxygen atom, a sulfur atom, $-C(R)_2-$, -S(O)-, $-S(O)_2-$, -N(R)-, -P(R)- or - P(O)(R)- (where each R independently represents a hydrogen atom or a hydrocarbon group containing 1 to 20 carbon atoms and optionally containing at least one heteroatom);
in the formula (B), at least three selected from the group consisting of $A^1$, $A^2$, $A^3$ and $A^4$ are other than $-C(R)_2-$;
in the formula (C), both $A^3$ and $A^4$ are other than $-C(R)_2-$, and at least one selected from the group consisting of $R^{12}$ and $R^{13}$ is the atom or group selected from the group consisting of the above (ii) and (iv) (except for the epoxy-containing group);
$W^1$ and $W^2$ each independently represent a carbon atom, a silicon atom, a nitrogen atom, a phosphorus atom, a boron atom, an oxygen atom, -P(O)- or $-S(O)_2-$, and when it is a nitrogen atom, a phosphorus atom, a boron atom or -P(O)-, $R^8$ and $R^{10}$ are absent, and when it is an oxygen atom or $-S(O)_2-$, $R^7$ and $R^8$ are absent, as well as $R^9$ and $R^{10}$;
h and i are each independently an integer from 1 to 6, and when two or more $W^1$s, $W^2$s, $R^7$s, $R^8$s, $R^9$s or $R^{10}$s are each present, they may be the same or different from each other.]

**19.** An olefin polymerization catalyst composition comprising the compound represented by the following general formula (A) and a transition metal compound represented by the following general formula (E) or (F):

[Chem. 12]

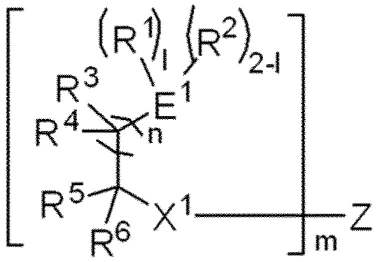

Formula (A)

[where

$X^1$ represents an oxygen atom or a sulfur atom;
$E^1$ represents a nitrogen atom, a phosphorus atom, an arsenic atom or an antimony atom;
Z represents a hydrogen atom, a leaving group or a cation having a valence of 1 or more and 4 or less;
m is an integer more than or equal to 1 and less than or equal to a valence of Z;
n is 0, 1, 2, 3 or 4, and when n is 0, $E^1$ is directly bound to a carbon atom to which $X^1$, $R^5$ and $R^6$ are bound;
$R^1$ represents a hydrocarbon group represented by the following general formula (B) or (C);
$R^2$ represents a hydrocarbon group containing 1 to 20 carbon atoms and optionally containing at least one heteroatom, which is different from the hydrocarbon group represented by the following general formula (B) or (C);
1 is 1 or 2, and when l is 2, $R^2$ is absent;
$R^3$, $R^4$, $R^5$ and $R^6$ each independently represent an atom or group selected from the group consisting of the following (i) to (iv):

(i) a hydrogen atom
(ii) a halogen atom
(iii) a hydrocarbon group containing 1 to 30 carbon atoms and optionally containing at least one heteroatom
(iv) $OR^b$, $C(O)OR^b$, C(O)OM', $C(O)N(R^a)_2$, $C(O)R^b$, $OC(O)R^b$, $SR^b$, $S(O)_2R^b$, $S(O)R^b$, $OS(O)_2R^b$, $SF_5$, $P(O)(OR^b)_{2-y}(R^a)_y$, CN, $N(H)R^a$, $N(R^b)_2$, $Si(OR^a)_{3-x}(R^a)_x$, $OSi(OR^a)_{3-x}(R^a)_x$, $NO_2$, $S(O)_2OM'$, $P(O)(OM')_2$, $P(O)(OR^b)_2M'$ or an epoxy-containing group (where each $R^a$ independently represents a hydrogen atom or a hydrocarbon group containing 1 to 20 carbon atoms; each $R^b$ independently represents a hydrocarbon group containing 1 to 20 carbon atoms; M' represents an alkaline metal, an alkaline earth metal, an ammonium, a quaternary ammonium or a phosphonium; x represents 0, 1, 2 or 3; and y represents 0, 1 or 2); and $R^3$, $R^4$, $R^5$ and $R^6$ are optionally bound to adjacent substituents to form a 5- to 8-membered alicyclic ring or a 5- to 8-membered heterocyclic ring containing at least one heteroatom selected from the group consisting of an oxygen atom, a nitrogen atom and a sulfur atom]

[Chem. 13]

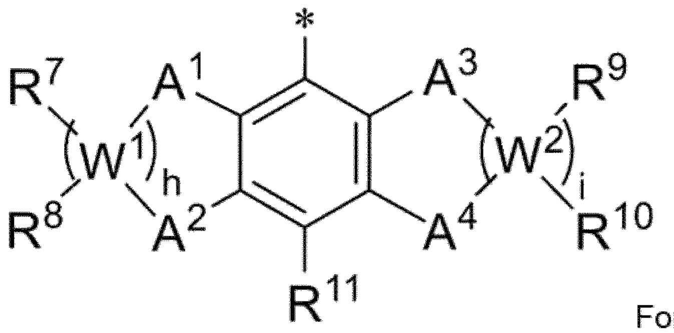

Formula (B)

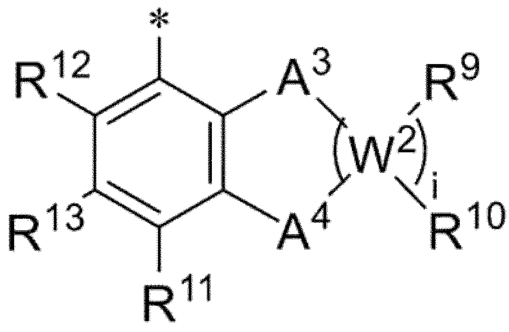

Formula (C)

[where

* represents a bond with $E^1$;

$R^7$, $R^8$, $R^9$, $R^{10}$, $R^{11}$, $R^{12}$ and $R^{13}$ each independently represent the atom or group selected from the group consisting of the above (i) to (iv) defined in the above formula (A), and $R^7$, $R^8$, $R^9$ and $R^{10}$ are optionally bound to adjacent substituents to form a 5- to 8-membered alicyclic ring, a 5- to 8-membered aromatic ring, or a 5- to 8-membered heterocyclic ring containing at least one heteroatom selected from the group consisting of an oxygen atom, a nitrogen atom and a sulfur atom;

$A^1$, $A^2$, $A^3$ and $A^4$ each independently represent an oxygen atom, a sulfur atom, $-C(R)_2-$, -S(O)-, $-S(O)_2-$, -N(R)-, -P(R)- or - P(O)(R)- (where each R independently represents a hydrogen atom or a hydrocarbon group containing 1 to 20 carbon atoms and optionally containing at least one heteroatom);

in the formula (B), at least three selected from the group consisting of $A^1$, $A^2$, $A^3$ and $A^4$ are other than $-C(R)_2-$;

in the formula (C), both $A^3$ and $A^4$ are other than $-C(R)_2-$, and at least one selected from the group consisting of $R^{12}$ and $R^{13}$ is the atom or group selected from the group consisting of the above (ii) and (iv) (except for the epoxy-containing group);

$W^1$ and $W^2$ each independently represent a carbon atom, a silicon atom, a nitrogen atom, a phosphorus atom, a boron atom, an oxygen atom, -P(O)- or $-S(O)_2-$, and when it is a nitrogen atom, a phosphorus atom, a boron atom or -P(O)-, $R^8$ and $R^{10}$ are absent, and when it is an oxygen atom or $-S(O)_2-$, $R^7$ and $R^8$ are absent, as well as $R^9$ and $R^{10}$;

h and i are each independently an integer from 1 to 6, and when two or more $W^1$s, $W^2$s, $R^7$s, $R^8$s, $R^9$s or $R^{10}$s are each present, they may be the same or different from each other.]

[Chem. 14]

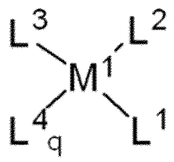

Formula (E)

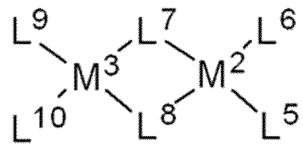

Formula (F)

[where

$M^1$ represents a nickel atom or a palladium atom;
$L^1$ and $L^2$ each independently represent a ligand coordinated to $M^1$;
$L^1$ and $L^2$ are optionally bound to each other to form a ring containing $M^1$;
$M^2$ and $M^3$ each independently represent a nickel atom or a palladium atom;
$L^3$, $L^4$, $L^5$, $L^6$, $L^9$ and $L^{10}$ each independently represent a ligand coordinated to $M^1$, $M^2$ or $M^3$, and $L^7$ and $L^8$ each independently represent a ligand coordinated to $M^2$ and $M^3$;
q is 0, 1 or 2;
$L^3$ and $L^4$ are optionally bound to each other to form a ring containing $M^1$;
$L^5$ and $L^6$ are optionally bound to each other to form a ring containing $M^2$; and
$L^9$ and $L^{10}$ are optionally bound to each other to form a ring containing $M^3$.]

**20.** The compound according to Claim 17, wherein at least one selected from the group consisting of $R^5$ and $R^6$ is the atom or group selected from the group consisting of the above (i), (iii) and (iv).

**21.** The metal complex according to Claim 18, wherein at least one selected from the group consisting of $R^5$ and $R^6$ is the atom or group selected from the group consisting of the above (i), (iii) and (iv).

**22.** The olefin polymerization catalyst composition according to Claim 19, wherein at least one selected from the group consisting of $R^5$ and $R^6$ is the atom or group selected from the group consisting of the above (i), (iii) and (iv).

**23.** The compound according to Claim 17, wherein $R^5$ is the atom or group selected from the group consisting of the above (i) and (iii), and $R^6$ is the atom or group selected from the group consisting of the above (i), the above (iii), $C(O)OR^b$, $C(O)N(R^a)_2$, $C(O)R^b$, $S(O)_2R^b$ and $P(O)(OR^b)_{2-y}(R^a)_y$ (where $R^a$, $R^b$ and y are as defined above in Claim 17).

**24.** The metal complex according to Claim 18, wherein $R^5$ is the atom or group selected from the group consisting of the above (i) and (iii), and $R^6$ is the atom or group selected from the group consisting of the above (i), the above (iii), $C(O)OR^b$, $C(O)N(R^a)_2$, $C(O)R^b$, $S(O)_2R^b$ and $P(O)(OR^b)_{2-y}(R^a)_y$ (where $R^a$, $R^b$ and y are as defined above in Claim 18).

**25.** The olefin polymerization catalyst composition according to Claim 19, wherein $R^5$ is the atom or group selected from the group consisting of the above (i) and (iii), and $R^6$ is the atom or group selected from the group consisting of the above (i), the above (iii), $C(O)OR^b$, $C(O)N(R^a)_2$, $C(O)R^b$, $S(O)_2R^b$ and $P(O)(OR^b)_{2-y}(R^a)_y$ (where $R^a$, $R^b$ and y are as defined above in Claim 17).

**26.** The compound according to any one of Claims 17, 20 and 23, wherein at least one selected from the group consisting of $R^3$ and $R^4$ is the atom or group selected from the group consisting of the above (i), (iii) and (iv).

**27.** The metal complex according to any one of Claims 18, 21 and 24, wherein at least one selected from the group consisting of $R^3$ and $R^4$ is the atom or group selected from the group consisting of the above (i), (iii) and (iv).

**28.** The olefin polymerization catalyst composition according to any one of Claims 19, 22 and 25, wherein at least one selected from the group consisting of $R^3$ and $R^4$ is the atom or group selected from the group consisting of the above (i),

(iii) and (iv).

**29.** An olefin polymerization catalyst comprising the olefin polymerization catalyst composition defined by Claim 19.

**30.** An olefin polymerization catalyst comprising the metal complex defined by Claim 18.

**31.** A method for producing an olefin-based polymer, wherein an olefin is polymerized or copolymerized in the presence of the olefin polymerization catalyst defined by Claim 29 or 30.

**32.** A method for producing the olefin-based polymer according to Claim 31, wherein an acyclic olefin is copolymerized with at least one kind of monomer selected from the group consisting of a polar group-containing monomer and a cyclic olefin.

## INTERNATIONAL SEARCH REPORT

International application No.
**PCT/JP2023/035766**

**A. CLASSIFICATION OF SUBJECT MATTER**

***C07F 9/6561***(2006.01)i; ***C07F 15/04***(2006.01)i; ***C07F 19/00***(2006.01)i; ***C08F 4/70***(2006.01)i; ***C08F 4/80***(2006.01)i; ***C08F 10/00***(2006.01)i; ***C08F 210/00***(2006.01)i
FI: C07F9/6561 Z CSP; C08F10/00 510; C08F210/00; C08F4/80; C08F4/70; C07F15/04; C07F19/00

According to International Patent Classification (IPC) or to both national classification and IPC

**B. FIELDS SEARCHED**

Minimum documentation searched (classification system followed by classification symbols)

C07F9/6561; C07F15/04; C07F19/00; C08F4/70; C08F4/80; C08F10/00; C08F210/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | US 2020/0276102 A1 (L'OREAL) 03 September 2020 (2020-09-03) p. 9, compound (34) | 1, 4, 7, 10 |
| A | | 2-3, 5-6, 8-9, 11-32 |
| X | Organic Letters, 2017, vol. 20, no. 1, pp. 100-103, DOI: 10.1021/acs.orglett.7b03458 p. 101, fig. 2., compound P10 | 1, 4, 7, 10 |
| A | | 2-3, 5-6, 8-9, 11-32 |
| X | Tetrahedron Letters, 2013, vol. 54, no. 32, pp. 4330-4332, DOI: 10.1016/j.tetlet.2013.06.026 table 4, compound 9e | 1, 4, 7, 10 |
| A | | 2-3, 5-6, 8-9, 11-32 |
| X | JP 2007-529553 A (WYETH) 25 October 2007 (2007-10-25) p. 11, scheme 1, compound 3 | 1, 4, 7, 10 |
| A | | 2-3, 5-6, 8-9, 11-32 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 December 2023** | **26 December 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2023/035766**

**C. DOCUMENTS CONSIDERED TO BE RELEVANT**

| Category* | Citation of document, with indication, where appropriate, of the relevant passages | Relevant to claim No. |
|---|---|---|
| X<br>A | US 6924313 B1 (PFIZER INC.) 02 August 2005 (2005-08-02)<br>table 8, Inhibitor Number 26+221N, 63+222N, 46+222N, 57+222N | 1, 4, 7, 10<br>2-3, 5-6, 8-9, 11-32 |
| X<br>A | JP 9-508924 A (PHARMACIA S. P. A.) 09 September 1997 (1997-09-09)<br>claims, example 1, 3-[(4-diethanolamino-5, 6, 7, 8-tetrahydronaphth-1-yl)methylene]-7-azaoxindole | 1, 4, 7, 10<br>2-3, 5-6, 8-9, 11-32 |
| X<br>A | Bioorganic & Medicinal Chemistry Letters, 2010, vol. 20, no. 21, pp. 6242-6245, DOI: 10.1016/j.bmcl.2010.08.100<br>table 1, compound 14 | 17, 20, 23, 26<br>1-16, 18-19, 21-22, 24-25, 27-32 |
| X<br>A | WO 2007/085833 A2 (ASTRAZENECA AB) 02 August 2007 (2007-08-02)<br>pp. 138-151, table 5, compounds 237-245 | 17, 20, 23, 26<br>1-16, 18-19, 21-22, 24-25, 27-32 |
| A | WO 2018/021446 A1 (UNIVERSITY OF TOKYO) 01 February 2018 (2018-02-01)<br>entire text | 1-32 |
| P, A | WO 2022/211091 A1 (JAPAN POLYCHEM CORP.) 06 October 2022 (2022-10-06)<br>entire text | 1-32 |

Form PCT/ISA/210 (second sheet) (January 2015)

**INTERNATIONAL SEARCH REPORT**
**Information on patent family members**

International application No.
**PCT/JP2023/035766**

| Patent document cited in search report | Publication date (day/month/year) | Patent family member(s) | Publication date (day/month/year) |
|---|---|---|---|
| US 2020/0276102 A1 | 03 September 2020 | WO 2019/072697 A1<br>p. 28, compound (34)<br>EP 3694485 A1 | |
| JP 2007-529553 A | 25 October 2007 | US 2005/0209245 A1<br>paragraph [0007], compound 3<br>WO 2005/092883 A1<br>EP 1725547 A1 | |
| US 6924313 B1 | 02 August 2005 | (Family: none) | |
| JP 9-508924 A | 09 September 1997 | US 5719135 A<br>claims, example 1<br>WO 1996/016964 A1 | |
| WO 2007/085833 A2 | 02 August 2007 | US 2011/0046108 A1<br>pp. 65-73, table 5, compounds 237-245<br>EP 1981856 A2 | |
| WO 2018/021446 A1 | 01 February 2018 | US 2019/0263945 A1<br>entire text<br>EP 3476858 A1<br>CN 109601002 A | |
| WO 2022/211091 A1 | 06 October 2022 | JP 2022-159228 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4698403 A
- US 20070049712
- WO 2010050256 A
- WO 2001092342 A
- JP 2021113174 A


### Non-patent literature cited in the description


- **MECKING, S.** ; **JOHNSON, L. K** ; **WANG, L** ; **BROOKHART, M**. *J. Am. Chem. Soc.*, 1998, vol. 120, 888-899
- **ITTEL, S. D.** ; **JOHNSON, L. K.** ; **BROOKHART, M.** *Chem. Rev.*, 2000, vol. 100, 1169-1203
- **GIBSON, V. C** ; **TOMOV, A** ; **WHITE, A. J. P** ; **WILLIAMS, D. J**. *Chem. Commun.*, 2001, 719-720
- **DRENT, E.** ; **VAN DIJK, R.** ; **VAN GINKEL, R** ; **VAN OORT, B** ; **PUGH, R. I**. *Chem. Commun.*, 2002, 744-745
- **KOCHI, T.** ; **YOSHIMURA, K.** ; **NOZAKI, K**. *Dalton Trans.*, 2006, 25-27
- **XIN. B. S.** ; **SATO, N.** ; **TANNA, A.** ; **OISHI, Y.** ; **KONISHI, Y.** ; **SHIMIZU, F**. *J. Am. Chem. Soc.*, 2017, vol. 139, 3611-3614
- **MUELLER, U.** ; **KEIM, W.** ; **KRUEGER, C.** ; **BETZ, P**. *Angew. Chem. Int. Ed. Engl*, 1989, vol. 28, 1011-1013
- **H. -F. KLEIN et al.** *Inorganica Chimica Acta*, 2005, vol. 358, 4394-4402
- *Journal of Fluorine Chemistry*, 2002, vol. 117, 121-129
- *RSC Advances*, 2014, vol. 4, 16312-16319
- *Bioorg. Med. Chem. Lett*, 2014, vol. 24, 2379-2382
- *Chem. Eur. J*, 2013, vol. 19, 17349-17357
- *Org. Biomol. Chem.*, 2018, vol. 16, 8976-8983
- *Bioorg. Med. Chem. Lett.*, 2014, vol. 24, 2379-2382
- *Tetrahedron*, 2005, vol. 61, 4805-4810
- *Organic Letters*, 2011, vol. 13, 4974-4976
- *Organic & Biomolecular Chemistry*, 2021, vol. 19, 1555-1564